(19) **Europäisches Patentamt / European Patent Office / Office européen des brevets**

(11) **EP 2 525 339 A1**

(12) **EUROPEAN PATENT APPLICATION**
published in accordance with Art. 153(4) EPC

(43) Date of publication:
**21.11.2012 Bulletin 2012/47**

(21) Application number: **10843027.3**

(22) Date of filing: **13.01.2010**

(51) Int Cl.:
**G09C 1/00** (2006.01)   **G06F 17/30** (2006.01)
**G06F 21/24** (2006.01)

(86) International application number:
**PCT/JP2010/050249**

(87) International publication number:
**WO 2011/086668 (21.07.2011 Gazette 2011/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Mitsubishi Electric Corporation Tokyo 100-8310 (JP)**

(72) Inventors:
• **HATTORI, Mitsuhiro**
  **Tokyo 100-8310 (JP)**
• **MORI, Takumi**
  **Tokyo 100-8310 (JP)**
• **ITO, Takashi**
  **Tokyo 100-8310 (JP)**
• **MATSUDA, Nori**
  **Tokyo 100-8310 (JP)**
• **TAKASHIMA, Katsuyuki**
  **Tokyo 100-8310 (JP)**
• **YONEDA, Takeshi**
  **Tokyo 100-8310 (JP)**

(74) Representative: **Pfenning, Meinig & Partner GbR Patent- und Rechtsanwälte Theresienhöhe 13 80339 München (DE)**

(54) **SECRET RETRIEVAL SYSTEM, PUBLIC PARAMETER GENERATION DEVICE, ENCRYPTION DEVICE, USER SECRET KEY GENERATION DEVICE, QUERY ISSUE DEVICE, RETRIEVAL DEVICE, COMPUTER PROGRAM, SECRET RETRIEVAL METHOD, PUBLIC PARAMETER GENERATION METHOD, ENCRYPTION METHOD, USER SECRET KEY GENERATION METHOD, QUERY ISSUE METHOD, AND RETRIEVAL METHOD**

(57)    In a secure search system to be used by a plurality of users, the size of a ciphertext is reduced and the need to generate a new ciphertext when a new user is added is eliminated. A public parameter generation device 100 generates a pair of a public parameter and a master secret key. Using the public parameter, an encryption device 400 encrypts a keyword and generates a ciphertext. Using the master secret key, a user secret key generation device 200 generates a user secret key of a query issuing device 300. Using the user secret key, the query issuing device 300 generates a query for searching for the keyword. Based on the ciphertext and the query, a search device 500 determines whether a hit is obtained for searching.

Fig. 1

EP 2 525 339 A1

**Description**

**Technical Field**

This invention relates to a secure search system that performs searching by keywords as they remain encrypted.

**Background Art**

There is a searchable public key encryption technology that can perform searching by keywords as they remain encrypted. In a conventional searchable public key encryption technology, a keyword is encrypted by using a user public key corresponding to a user secret key.
In an ID-based public key encryption method using an identifier for identifying a user as a public key, there is a wildcard ID-based public key encryption technology in which only a part of a user identifier is specified and a ciphertext can be decrypted by a plurality of users having different secret keys.

**Citation List**

**Patent Literature**

Patent Literature 1: U.S. Patent No. 4,405,829

**Non-Patent Literature**

Non-Patent Literature 1: D. Boneh, G. D. Crescenzo, R. Ostrovsky, G. Persiano "Public Key Encryption with Keyword Search" Eurocrypt 2004, pages 506-522, 2004.
Non-Patent Literature 2: Y. H. Hwang, P. J. Lee "Public Key Encryption with Conjunctive Keyword Search And Its Extension to a Multi-user System" Pairing 2007, pages 2-22, 2007.
Non-Patent Literature 3: J. Birkett, A. W. Dent, G. Neven, J. C. N. Schuldt "Efficient Chosen-Ciphertext Secure Identify-Based Encryption with Wildcards" ACISP 2007, LNCS4586, pages 274-292, 2007.

**Disclosure of Invention**

**Technical Problem**

In the conventional conventional searchable public key encryption technology, when there are a plurality of users, a keyword must be encrypted by using public keys of the respective users. For this reason, the size of a ciphertext is proportional to the number of search users. To add a new user, a new ciphertext must be generated by using a public key of that user.
This invention is made to solve the above-described problems, for example. It is an object of this invention to provide a secure search system in which the size of a ciphertext is reduced and in which there is no need to generate a new ciphertext when a new user is added, thereby facilitating addition of a user.

**Solution to Problem**

A secure search system according to this invention is a secure search system that encrypts a keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the secure search system comprising:
a public parameter generation device; an encryption device; a user secret key generation device; a query issuing device; and a search device, wherein
the public parameter generation device has a processing device that processes data, a random number $\omega$ selection unit, a random number $\alpha$ selection unit, a random number $\beta$ selection unit, a random number $\theta$ selection unit, a public element computation unit, a public element a computation unit, and a public element b computation unit, a secret element w computation unit, a secret element a computation unit, a secret element b computation unit, a secret element y computation unit, a public parameter output unit, and a master secret key output unit;

the random number $\omega$ selection unit, using the processing device, randomly selects an integer $\omega$ out of integers from 1 to less than p;

the random number $\alpha$ selection unit, using the processing device, randomly selects (D+2) number of integers $\alpha_n$ (n being an integer from 0 to D+1) out of integers from 1 to less than p;

the random number $\beta$ selection unit, using the processing device, randomly selects (D+2) number of integers $\beta_n$ out of integers from 1 to less than p;

the random number $\theta$ selection unit, using the processing device, randomly selects (D+2)×(D+1) number of integers $\theta_{n,1}$ (1 being an integer from 0 to D) out of integers from 1 to less than p;

the public element a computation unit, using the processing device and based on a generator $g_1$ of a multiplicative group G1 of an order of the prime number p, the (D+2) number of integers $\alpha_n$ selected by the random number $\alpha$ selection unit, and the (D+2)×(D+1) number of integers $\theta_{n,1}$ selected by the random number $\theta$ selection unit, calculates the generator $g_1$ raised to a power of $(\alpha_n \times \theta_{n,1})$ for each of (D+2)×(D+1) number of combinations (n,1) which are combinations of (D+2) number of integers n from 0 to (D+1) and (D+1) number of integers 1 from 0 to D, thereby computing (D+2)×(D+1) number of elements $a_{n,1}$ which are elements of the multiplicative group G1;

the public element b computation unit, using the processing device and based on the generator $g_1$ of the multiplicative group G1, the (D+2) number of integers ($\beta_n$ selected by the random number $\beta$ selection unit, and the (D+2)×(D+1) number of integers $\theta_{n,1}$ selected by the random number $\theta$ selection unit, calculates the generator $g_1$ raised to a power of $(\beta_n \times \theta_{n,1})$ for each of the (D+2)×(D+1) number of combinations (n,1) which are combinations of the (D+2) number of integers n from 0 to (D+1) and the (D+1) number of integers 1 from 0 to D, thereby computing (D+2)×(D+1) number of elements $b_{n,1}$ which are elements of the multiplicative group G1;

the secret element w computation unit, using the processing device and based on a generator $g_2$ of a multiplicative group G2 of an order of the prime number p and the integer $\omega$ selected by the random number $\omega$ selection unit, calculates the generator $g_2$ raised to a power of $\omega$, thereby computing an element w' which is an element of the multiplicative group G2;

the public element $\Omega$ computation unit, using the processing device and based on a generator $g_3$ of a multiplicative group G3 of an order p and the integer $\omega$ selected the random number $\omega$ selection unit, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3;

the secret element a computation unit, using the processing device and based on the generator $g_2$ of the multiplicative group G2 and the (D+2) number of integers an selected by the random number $\alpha$ selection unit, calculates the generator $g_2$ raised to a power of $\alpha_n$ for each of the (D+2) number of integers n from 0 to (D+1), thereby computing (D+2) number of elements $a'_n$ which are elements of the multiplicative group G2;

the secret element b computation unit, based on the generator $g_2$ of the multiplicative group G2 and the (D+2) number of integers $\beta_n$ selected by the random number $\beta$ selection unit, calculates the generator $g_2$ raised to a power of $\beta_n$ for each of the (D+2) number of integers n from 0 to (D+1), thereby computing (D+2) number of elements $b'_n$ which are elements of the multiplicative group G2;

the secret element y computation unit, using the processing device and based on the generator $g_2$ of the multiplicative group G2, the (D+2) number of integers $\alpha_n$ selected by the random number $\alpha$ selection unit, the (D+2) number of integers $\beta_n$ selected by the random number $\beta$ selection unit, and the (D+2)×(D+1) of integers $\theta_{n,1}$ selected by the random number $\theta$ selection unit, calculates the generator $g_2$ raised to a power of $(\alpha_n \times (\beta_n \times \theta_{n,1}))$ for each of the (D+2)×(D+1) number of combinations (n,1) which are combinations of the (D+2) number of integers n from 0 to (D+1) and the (D+2) number of integers 1 from 0 to D, thereby computing (D+2)×(D+1) number of elements $y'_{n,1}$ which are elements of the multiplicative group G2;

the public parameter output unit, using the processing device and as a public parameter in the secure search system, outputs the element $\Omega$ computed by the public element $\Omega$ computation unit, the (D+2)×(D+1) number of elements $a_{n,1}$ computed by the public element a computation unit, and the (D+2)×(D+1) number of elements $b_{n,1}$ computed by the public element b computation unit;

the master secret key output unit, using the processing device and as a master secret key in the secure search system, outputs the element w' computed by the secret element w computation unit, the (D+2) number of elements $a'_n$ computed by the secret element a computation unit, the (D+2) number of elements $b'_n$ computed by the secret element b computation unit, and the (D+2)×(D+1) number of elements $y'_{n,1}$ computed by the secret element y computation unit;

the encryption device has a storage device that stores data, a processing device that processes data, a public element $\Omega$ storage unit, a public element a storage unit, a public element b storage unit, an embedded keyword input unit, an authorization range input unit, a random number r selection unit, a secondary random number r selection unit, a random element selection unit, a verification element computation unit, a cipher element computation unit, a cipher element a computation unit, a cipher element b computation unit, a cipher partial element a computation unit, a cipher partial element b computation unit, and a ciphertext output unit;

the public element $\Omega$ storage unit, using the storage device, stores the element $\Omega$ output as the public parameter by the public parameter generation device;

the public element a storage unit, using the storage device, stores the $(D+2)\times(D+1)$ number of elements $a_{n,1}$ output as the public parameter by the public parameter generation device;

the public element b storage unit, using the storage device, stores the $(D+2)\times(D+1)$ number of elements $b_{n,1}$ output as the public parameter by the public parameter generation device;

the embedded keyword input unit, using the processing device and as the keyword to be encrypted, inputs an integer W' from 0 to less than p;

the authorization range input unit, using the processing device and as data specifying a range of query issuing devices having an authorization to search for the keyword, inputs an integer L' (L' being an arbitrary integer from 1 to less than D) and L" number of integers $l'_j$ (L" being an integer from 0 to L', j being L" number of integers arbitrarily selected out of integers from 1 to L', and $l'_j$ being an integer from 0 to less than p);

the random number r selection unit, using the processing device, randomly selects an integer r out of integers from 0 to less than p;

the secondary random number r selection unit, using the processing device, randomly selects $(D+2)$ number of integers $r_n$ out of integers from 0 to less than p;

the random element selection unit, using the processing device, randomly selects an element R out of elements of the multiplicative group G3;

the verification element computation unit, using the processing device and based on the element $\Omega$ stored by the public element $\Omega$ storage unit, the integer r selected by the random number r selection unit, and the element R selected by the random element selection unit, calculates a product of the element $\Omega$ raised to a power of $(-r)$ and the element R, thereby computing an element E which is an element of the multiplicative group G3;

the cipher element computation unit, using the processing device and based on the generator $g_1$ of the multiplicative group G1 and the integer r selected by the random number r selection unit, calculates the generator $g_1$ raised to a power of r, thereby computing an element $c_0$ which is an element of the multiplicative group G1;

the cipher element a computation unit, using the processing device and based on the integer L' and the L" number of integers $l'_j$ input by the authorization range input unit, $(D+2)$ number of elements $b_{n,0}$, $(D+2)\times L"$ number of elements $b_{n,1'}$, and $(D+2)$ number of elements $b_{n,\lambda'}$ (A' being an integer selected out of integers from more than L' to D) out of the $(D+2)\times(D+1)$ number of elements $b_{n,1}$ stored by the public element b storage unit, the integer W' input by the embedded keyword input unit, and the $(D+2)$ number of integers $r_n$ selected by the secondary random number r selection unit, calculates the element $b_{n,j}$ raised to a power of $l_j$ for each of $(D+2)\times L"$ number of combinations (n,j) which are combinations of the $(D+2)$ number of integers n from 0 to $(D+1)$ and subscripts j of the L" number of integers $l'_j$, calculates the element $b_{n,\Lambda'}$ raised to a power of W' for each of the $(D+2)$ number of integers n from 0 to $(D+1)$, calculates a total product $\Pi_{B,n}$ of the element $b_{n,0}$, the L" number of elements $b_{n,j}$ raised to the power of $l'_j$, and the element $b_{n,\Lambda'}$ raised to the power of W' for each of the $(D+2)$ number of integers n from 0 to $(D+1)$, and calculates the calculated total product $\Pi_B$," raised to a power of $r_n$ for each of the $(D+2)$ number of integers n from 0 to $(D+1)$, thereby computing $(D+2)$ number of elements $c_{n,(a)}$ which are elements of the multiplicative group G1;

the cipher element b computation unit, using the processing device and based on the integer L' and the L" number of integers $l'_j$ input by the authorization range input unit, $(D+2)$ number of elements $a_{n,0}$, $(D+2)\times L"$ number of elements $a_{n,j'}$, and $(D+2)$ number of elements $a_{n,\Lambda'}$ out of the $(D+2)\times(D+1)$ number of elements $a_{n,1}$ stored by the public element a storage unit, the integer W' input by the embedded keyword input unit, the integer r selected by the random number r selection unit, and the $(D+2)$ number of integers $r_n$ selected by the secondary random number r selection unit, calculates the element $a_{n,j}$ raised to a power of $l_j$ for each of the $(D+2)\times L"$ number of combinations (n,j) which are combinations of the $(D+2)$ number of integers n from 0 to $(D+1)$ and the subscripts j of the L" number of integers $l'_j$, calculates the element $a_{n,\lambda'}$ raised to a power of W' for each of the $(D+2)$ number of integers n from 0 to $(D+1)$, calculates a total product $\Pi_{A,n}$ of the element $a_{n,0}$, the L" number of elements $a_{n,j}$ raised to the power of $l'_j$, and the element $a_{n,\Lambda'}$ raised to the power of W' for each of the $(D+2)$ number of integers n from 0 to $(D+1)$, and calculates the calculated total product $\Pi_{A,n}$ raised to a power of $(r-r_n)$ for each of the $(D+2)$ number of integers n from 0 to $(D+1)$, thereby computing $(D+2)$ number of elements $C_{n,(b)}$ which are elements of the multiplicative group G1;

the cipher partial element a computation unit, using the processing device and based on the integer L' and the subscripts j of the L" number of integers $l_j$ input by the authorization range input unit, $(D+2)\times(L'-L")$ number of elements $b_{n,j'}$ (j' being $(L'-L")$ number of integers other than the L" number of subscripts j out of integers from 1 to L') out of the $(D+2)\times(D+1)$ number of elements $b_{n,1}$ stored by the public element b storage unit, and the $(D+2)$ number of integers $r_n$ selected by the secondary random number r selection unit, calculates the element $b_{n,j'}$ raised to a power of $r_n$ for each of $(D+2)\times(L'-L")$ number of combinations (n,j') which are combinations of the $(D+2)$ number of integers n from 0 to $(D+1)$ and $(L'-L")$ number of integers j' other than the L" number of subscripts j out of integers from 1 to L', thereby computing $(D+2)\times(L'-L")$ number of elements $C_{n,j',(a)}$ which are elements of the multiplicative group G1;

the cipher partial element b computation unit, using the processing device and based on the integer L' and the subscripts j of the L" number of integers $l'_j$ input by the authorization range input unit, $(D+2)\times(L'-L")$ number of elements $a_{n,j'}$ out of the $(D+2)\times(D+1)$ number of elements $a_{n,1}$ stored by the public element a storage unit, the integer r selected by the random number r selection unit, and the $(D+2)$ number of integers $r_n$ selected by the secondary random number r selection unit, calculates the element $b_{n,j'}$ raised to a power of $(r-r_n)$ for each of the $(D+2)\times(L'-L")$ number of combinations $(n,j')$ which are combinations of the $(D+2)$ number of integers n from 0 to $(D+1)$ and the $(L'-L")$ number of integers j' other than the L" number of subscripts j out of integers from 1 to less than L', thereby computing $(D+2)\times(L'-L")$ number of elements $C_{n,j',(b)}$ which are elements of the multiplicative group G1;

the ciphertext output unit, using the processing device and as a ciphertext in which the integer W' is embedded as the keyword, outputs the element R selected by the random element selection unit, the element E computed by the verification element computation unit, the element $c_0$ computed by the cipher element computation unit, the $(D+2)$ number of elements $C_{n,(a)}$ computed by the cipher element a computation unit, the $(D+2)$ number of elements $C_{n,(b)}$ computed by the cipher element b computation unit, the $(D+2)\times(L'-L")$ number of elements $c_{n,j',(a)}$ computed by the cipher partial element a computation unit, and the $(D+2)\times(L'-L")$ number of elements $C_{n,j',(b)}$ computed by the cipher partial element b computation unit;

the user secret key generation device has a storage device that stores data, a processing device that processes data, a secret element w storage unit, a secret element a storage unit, a secret element b storage unit, a secret element y storage unit, a user identifier input unit, a random number $\rho$ selection unit, a secondary random number $\rho$ selection unit, a total product element Y computation unit, a search element computation unit, a search element a computation unit, a search element b computation unit, a derangement element computation unit, a derangement element a computation unit, a derangement element b computation unit, a delegation element computation unit, a secondary delegation element computation unit, and a user secret key output unit;

the secret element w storage unit, using the storage device, stores the element w' output as the master secret key by the public parameter generation device;

the secret element a storage unit, using the storage device, stores the $(D+2)$ number of elements $a'_n$ output as the master secret key by the public parameter generation device;

the secret element b storage unit, using the storage device, stores the $(D+2)$ number of elements $b'_n$ output as the master secret key by the public parameter generation device;

the secret element y storage unit, using the storage device, stores the $(D+2)\times(D+1)$ number of elements $y'_{n,1}$ output as the master secret key by the public parameter generation device;

the user identifier input unit, using the processing device and for a query issuing device requesting generation of a user secret key out of the plurality of the query issuing devices, inputs L number of integers $l_i$ as a user identifier of the query issuing device;

the random number $\rho$ selection unit, using the processing device, randomly selects $(D+2)$ number of integers $\rho_n$ out of integers from 0 to less than p;

the secondary random number $\rho$ selection unit, using the processing device, randomly selects $(D+2)\times(D+2)$ number of integers $\rho_{n,m}$ (m being an integer from 0 to $D+1$) out of integers from 0 to less than p;

the total product element Y computation unit, using the processing device and based on the L number of integers $l_i$ input by the user identifier input unit and $(D+2)$ number of elements $y'_{n,0}$ and $(D+2)\times L$ number of elements $y'_{n,i}$ out of the $(D+2)\times(D+1)$ number of elements $y'_{n,1}$ stored by the secret element y storage unit, calculates the element $y'_{n,1}$ raised to a power of $l_i$ for each of $(D+2)\times(D+1)$ number of combinations $(n,i)$ which are combinations of the $(D+2)$ number of integers n from 0 to $(D+1)$ and $(D+1)$ number of integers i from 1 to L, and calculates a total product of the element $y'_{n,0}$ and the L number of elements $y'_{n,i}$ raised to the power of $l_i$ for each of the $(D+2)$ number of integers n from 0 to $(D+1)$, thereby computing $(D+2)$ number of elements $\Pi_{Y,n}$ which are elements of the multiplicative group G2;

the search element computation unit, using the processing device and based on the element w' stored by the secret element w storage unit, the $(D+2)$ number of integers $\rho_n$ selected by the random number $\rho$ selection unit, and the $(D+2)$ number of elements $\Pi_{Y,n}$ computed by the total product element Y computation unit, calculates the element $\Pi_{Y,n}$ raised to a power of $\rho_n$ for each of the $(D+2)$ number of integers n from 0 to $(D+1)$, and calculates a total product of the element w' and the $(D+2)$ number of elements $\Pi_{Y,n}$ raised to the power of $\rho_n$, thereby computing an element $k_0$ which is an element of the multiplicative group G2;

the search element a computation unit, using the processing device and based on the $(D+2)$ number of elements $a'_n$ stored by the secret element a storage unit and the $(D+2)$ number of integers $\rho_n$ selected by the random number $\rho$ selection unit, calculates the element $a'_n$ raised to a power of $(-\rho_n)$ for each of the $(D+2)$ number of integers n from 0 to $(D+1)$, thereby computing $(D+2)$ number of elements $k_{n,(a)}$ which are elements of the multiplicative group G2;

the search element b computation unit, using the processing device and based on the $(D+2)$ number of elements $b'_n$ stored by the secret element b storage unit and the $(D+2)$ number of integers $\rho_n$ selected by the random number $\rho$ selection unit, calculates the element $b'_n$ raised to a power of $(-\rho_n)$ for each of the $(D+2)$ number of integers n from 0 to $(D+1)$, thereby computing $(D+2)$ number of elements $k_{n,(b)}$ which are elements of the multiplicative group G2;

the derangement element computation unit, using the processing device and based on the $(D+2)\times(D+2)$ number of

integers $\rho_{n,m}$ selected by the secondary random number $\rho$ selection unit and the (D+2) number of elements $\Pi_{Y,n}$ computed by the total product element Y computation unit, calculates the element $\Pi_{Y,n}$ raised to a power of $\rho_{n,m}$ for each of (D+2) x(D+2) number of combinations (n,m) which are combinations of the (D+2) number of integers n from 0 to (D+1) and (D+2) number of integers m from 0 to (D+1), and calculates a total product of the (D+2) number of elements $\Pi_{Y,n}$ raised to the power of $\rho_{n,m}$ for each of the (D+2) number of integers m from 0 to (D+1), thereby computing (D+2) number of elements $f_{m,0}$ which are elements of the multiplicative group G2;

the derangement element a computation unit, using the processing device and based on the (D+2) number of elements $a'_n$ stored by the secret element a storage unit and the (D+2)×(D+2) number of integers $\rho_{n,m}$ selected by the secondary random number $\rho$ selection unit, calculates the element $a'_n$ raised to a power of $(-\rho_{n,m})$ for each of the (D+2)×(D+2) number of combinations (n,m) which are combinations of the (D+2) number of integers n from 0 to (D+1) and the (D+2) number of integers m from 0 to (D+1), thereby computing (D+2)×(D+2) number of elements $f_{m,n,(a)}$ which are elements of the multiplicative group G2;

the derangement element b computation unit, using the processing device and based on the (D+2) number of elements $b'_n$ stored by the secret element b storage unit and the (D+2)×(D+2) number of integers $\rho_{n,m}$ selected the secondary random number $\rho$ selection unit, calculates the element $b'_n$ raised to a power of $(-\rho_{n,m})$ for each of the (D+2)×(D+2) number of combinations (n,m) which are combinations of the (D+2) number of integers n from 0 to (D+1) and the (D+2) number of integers m from 0 to (D+1), thereby computing (D+2)×(D+2) number of elements $f_{m,n,(b)}$ which are elements of the multiplicative group G2;

the delegation element computation unit, using the processing device and based on (D+2) number of elements $y'_{n,\Lambda}$ (A being an integer selected out of integers from more than L to D) out of the (D+2)× (D+1) number of elements $y'_{n,1}$ stored by the secret element y storage unit and the (D+2) number of integers $\rho_n$ selected by the random number $\rho$ selection unit, calculates the element $y'_{n,\lambda}$ raised to a power of $\rho_n$ for each of the (D+2) number of integers n from 0 to (D+1), and calculates a total product of the (D+2) number of elements $y'_{n,j}$ raised to the power of $\rho_n$, thereby computing an element $h_\Lambda$ which is an element of the multiplicative group G2;

the secondary delegation element computation unit, using the processing device and based on (D+2) number of elements $y'_{n\Lambda}$ out of the (D+2)×(D+1) number of elements $y'_{n,1}$ stored by the secret element y storage unit and the (D+2)×(D+2) number of integers $\rho_{n,m}$ selected by the secondary random number $\rho$ selection unit, calculates the element $y'_{n,\lambda}$ raised to a power of $\rho_{n,m}$ for each of the (D+2)×(D+2) number of combinations (n,m) which are combinations of the (D+2) number of integers n from 0 to (D+1) and the (D+2) number of integers m from 0 to (D+1), and calculates a total product of the (D+2) number of elements $y'_{n,\Lambda}$ raised to the power of $\rho_{n,m}$ for each of the (D+2) number of integers m from 0 to (D+1), thereby computing (D+2) number of elements $h_{m,\Lambda}$ which are elements of the multiplicative group G2;

the user secret key output unit, using the processing device and as the user secret key of the query issuing device, outputs a combination of the element $k_0$ computed by the search element computation unit, the (D+2) number of elements $k_{n,(a)}$ computed by the search element a computation unit, the (D+2) number of elements $k_{n,(b)}$ computed by the search element b computation unit, the (D+2) number of elements $f_{m,0}$ computed by the derangement element computation unit, the (D+2)×(D+2) number of elements $f_{m,n,(a)}$ computed by the derangement element a computation unit, the (D+2) ×(D+2) number of elements $f_{m,n,(b)}$ computed by the derangement element b computation unit, the element $h_\Lambda$ computed the delegation element computation unit, and the (D+2) number of elements $h_{m,A}$ computed by the secondary delegation element computation unit;

the query issuing device has a storage device that stores data, a processing device that processes data, a user identifier storage unit, a search element storage unit, a search element a storage unit, a search element b storage unit, a derangement element storage unit, a derangement element a storage unit, a derangement element b storage unit, a delegation element storage unit, a secondary delegation element storage unit, a search keyword input unit, a random number $\pi$ selection unit, an inquiry element computation unit, an inquiry element a computation unit, an inquiry element b computation unit, and a query output unit;

the user identifier storage unit, using the storage device and as the user identifier of the query issuing device, stores the L number of integers $I_i$;

the search element storage unit, using the storage device, stores the element $k_0$ output as the user secret key of the query issuing device by the user secret key generation device;

the search element a storage unit, using the storage device, stores the (D+2) number of elements $k_{n,(a)}$ (n being an integer from 0 to D+1) output as the user secret key of the query issuing device by the user secret key generation device;

the search element b storage unit, using the storage device, stores the (D+2) number of elements $k_{n,(b)}$ output as the user secret key of the query issuing device by the user secret key generation device;

the derangement element storage unit, using the storage device, stores the (D+2) number of elements $f_{m,0}$ (m being an integer from 0 to D+1) output as the user secret key of the query issuing device by the user secret key generation device;

the derangement element a storage unit, using the storage device, stores the (D+2)×(D+2) number of elements $f_{m,n,(a)}$ output as the user secret key of the query issuing device by the user secret key generation device;

the derangement element b storage unit, using the storage device, stores the (D+2)×(D+2) number of elements $f_{m,n,(b)}$

output as the user secret key of the query issuing device by the user secret key generation device;

the delegation element storage unit, using the storage device, stores the element $h_\Lambda$ output as the user secret key of the query issuing device by the user secret key generation device;

the secondary delegation element storage unit, using the storage device, stores the (D+2) number of elements $h_{m,\Lambda}$ output as the user secret key of the query issuing device by the user secret key generation device;

the search keyword input unit, using the processing device and as a keyword to be searched for, inputs an integer W from 0 to less than p;

the random number $\pi$ selection unit, using the processing device, randomly selects (D+2) number of integers $\pi_m$ out of integers from 0 to less than p;

the inquiry element computation unit, using the processing device and based on the element $k_0$ stored by the search element storage unit, the (D+2) number of elements $f_{m,0}$ stored by the derangement element storage unit, the element $h_\Lambda$ stored by the delegation element storage unit, the (D+2) number of elements $h_{m,\Lambda}$ stored by the secondary delegation element storage unit, the integer W input by the search keyword input unit, and the (D+2) number of integers $\pi_m$ selected by the random number $\pi$ selection unit, calculates the element $h_{m,\Lambda}$ raised to a power of $\pi_m$ for each of the (D+2) number of integers m from 0 to (D+1), calculates a total product $\Pi_H$ of the element $h_\Lambda$ and the (D+2) number of elements $h_{m,\Lambda}$ raised to the power of $\pi_m$, calculates the element $f_{m,0}$ raised to a power of $\pi_m$ for each of the (D+2) number of integers m from 0 to (D+1), calculates the total product $\Pi_H$ raised to a power of W, and calculates a total product of the element $k_0$, the (D+2) number of elements $f_{m,0}$ raised to the power of $\pi_m$, and the total product $\Pi_H$ raised to the power of W, thereby computing an element $k'_0$ which is an element of the multiplicative group G2;

the inquiry element a computation unit, using the processing device and based on the (D+2) number of elements $k_{n,(a)}$ stored by the search element a storage unit, the (D+2)×(D+2) number of elements $f_{m,n,(a)}$ stored by the derangement element a storage unit, and the (D+2) number of integers $\pi_m$ selected by the random number $\pi$ selection unit, calculates the element $f_{m,n,(a)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2;

the inquiry element b computation unit, using the processing device and based on the (D+2) number of elements $k_{n,(b)}$ stored by the search element b storage unit, the (D+2)×(D+2) number of elements $f_{m,n,(b)}$ stored by the derangement element b storage unit, and the (D+2) number of integers $\pi_m$ selected by the random number $\pi$ selection unit, calculates the element $f_{m,n,(b)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $f_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2;

the query output unit, using the processing device and as a query for searching with the integer W as the keyword, outputs a combination of the L number of integers $l_i$ stored by the user identifier storage unit, the element $k'_0$ computed by the inquiry element computation unit, the (D+2) number of elements $k'_{n,(a)}$ computed by the inquiry element a computation unit, and the (D+2) number of elements $k'_{n,(b)}$ computed by the inquiry element b computation unit;

the search device has a storage device that stores data, a processing device that processes data, a ciphertext storage unit, a query input unit, a pairing element computation unit, a pairing element A computation unit, a pairing element B computation unit, a comparison element computation unit, and a comparison unit;

the ciphertext storage unit, using the storage device and as the ciphertext in which the keyword is embedded, stores a combination of the element R, the element E, the element $c_0$, the (D+2) number of elements $c_{n,(a)}$, the (D+2) number of elements $C_{n,(b)}$, the (D+2)×(L'-L") number of elements $c_{n,j',(a)}$, and the (D+2)×(L'-L") number of elements $C_{n,j',(b)}$ included in the ciphertext output by the encryption device;

the query input unit, using the processing device and as the query for searching for the keyword, inputs the combination of the L number of integers $l_i$, the element $k'_0$, the (D+2) number of elements $k'_{n,(a)}$, and the (D+2) number of elements $k'_{n,(b)}$ output by the query issuing device;

the pairing element computation unit, using the processing device and based on the element $c_0$ included in the ciphertext stored by the ciphertext storage unit and the element $k'_0$ included in the query input by the query input unit, maps a pair of the element $c_0$ and the element $k'_0$ by the bilinear pairing e, thereby computing an element $e_0$ which is an element of the multiplicative group G3;

the pairing element A computation unit, using the processing device and based on the (D+2) number of elements $c_{n,(a)}$ and the (D+2)×(L'-L") number of elements $c_{c,j',(a)}$ included in the ciphertext stored by the ciphertext storage unit and the L number of integers $l_i$ and the (D+2) number of elements $k'_{n,(a)}$ included in the query input by the query input unit, calculates the element $c_{n,i',(a)}$ raised to a power of $l_{-i'}$ for each of (D+2)×$L_A$ number of combinations (n,i') which are combinations of the (D+2) number of integers n from 0 to (D+1) and $L_A$ number of integers i' from 1 to L out of the (L'-L") number of integers j' which are subscripts of the $(D+2)\times(L'-L")$ number of elements $c_{n,j',(a)}$, calculates a total product $\Pi_{A',n}$ of the element $c_{n,(a)}$ and the $L_\Lambda$ number of elements $C_{n,i',(a)}$ raised to the power of $I_{-i'}$ for each of the $(D+2)$ number of integers n from 0 to $(D+1)$, and maps a pair of the total product $\Pi_{A',n}$ and the element $k'_{n,(a)}$ by the bilinear pairing e for each of the $(D+2)$ number of integers n from 0 to $(D+1)$, thereby computing $(D+2)$ number of elements $e_{A,n}$ which are elements of the multiplicative group G3;

the pairing element B computation unit, using the processing device and based on the $(D+2)$ number of elements $c_{n,(b)}$ and the $(D+2)\times(L'-L")$ number of elements $c_{n,j',(b)}$ included in the ciphertext stored by the ciphertext storage unit and the L number of integers $I_i$ and the $(D+2)$ number of elements $k'_{n,(b)}$ included in the query input by the query input unit, calculates the element $c_{n,i',(b)}$ raised to a power of $I_{-i'}$ for each of the $(D+2)\times L_\Lambda$ number of combinations (n,i') which are combinations of the $(D+2)$ number of integers n from 0 to $(D+1)$ and the $L_\Lambda$ number of integers i' from 1 to L out of the $(L'-L")$ number of integers j' which are the subscripts of the $(D+2)\times(L'-L")$ number of elements $c_{n,j',(b)}$, calculates a total product $\Pi_{B',n}$ of the element $c_{n,(b)}$ and the $L_\Lambda$ number of elements $c_{n,i',(b)}$ raised to the power of $I_{-i'}$ for each of the $(D+2)$ number of integers n from 0 to $(D+1)$, and maps a pair of the total product $\Pi_{B',n}$ and the element $k'_{n,(b)}$ by the bilinear pairing e for each of the $(D+2)$ number of integers n from 0 to $(D+1)$, thereby computing $(D+2)$ number of elements $e_{B,n}$ which are elements of the multiplicative group G3;

the comparison element computation unit, using the processing device and based on the element E included in the ciphertext stored by the ciphertext storage unit, the element $e_0$ computed by the pairing element computation unit, the $(D+2)$ number of elements $e_{A,n}$ computed by the pairing element A computation unit, and the $(D+2)$ number of elements $e_{B,n}$ computed by the pairing element B computation unit, calculates a total product of the element E, the element $e_0$, the $(D+2)$ number of elements $e_{A,n}$, and the $(D+2)$ number of elements $e_{B,n}$, thereby computing an element R' which is an element of the multiplicative group G3; and

the comparison unit, using the processing device, compares the element R included in the ciphertext stored by the ciphertext storage unit and the element R' computed by the comparison element computation unit and determines a hit for searching if the element R matches the element R'.

The secure search system according to this invention is further characterized in that:

the delegation element computation unit, using the processing device and based on $(D+2)\times(D'-L)$ number (D' being an integer from more than L to D) of elements $y'_{n,\lambda}$ ($\lambda$ being an integer from more than L to D') out of the $(D+2)\times(D+1)$ number of elements $y'_{n,1}$ stored by the secret element y storage unit and the $(D+2)$ number of integers $\rho_n$ selected by the random number $\rho$ selection unit, calculates the element $y'_{n,\lambda}$ raised to a power of $\rho_n$ for each of $(D+2)\times(D'-L)$ number of combinations (n,$\lambda$) which are combinations of the $(D+2)$ number of integers n from 0 to $(D+1)$ and $(D'-L)$ number of integers $\lambda$ from more than L to D', and calculates a total product of the $(D+2)$ number of elements $y'_{n,\lambda}$ raised to the power of $\rho_n$ for each of the $(D'-L)$ number of integers $\lambda$ from more than L to D', thereby computing $(D'-L)$ number of elements $h_\lambda$ which are elements of the multiplicative group G2;

the secondary delegation element computation unit, using the processing device and based on $(D+2)\times(D'-L)$ number of elements $y'_{n,\lambda}$ out of the $(D+2)\times(D+1)$ number of elements $y'_{n,1}$ stored by the secret element y storage unit and the $(D+2)\times(D+2)$ number of integers $\rho_{n,m}$ selected by the secondary random number $\rho$ selection unit, calculates the element $y'_{n,\lambda}$ raised to a power of $\rho_{n,m}$ for each of $(D+2)\times(D+2)\times(D'-L)$ number of combinations (n,m,$\lambda$) which are combinations of the $(D+2)$ number of integers n from 0 to $(D+1)$, the $(D+2)$ number of integers m from 0 to $(D+1)$, and the $(D'-L)$ number of integers $\lambda$ from more than L to D', and calculates a total product of the $(D+2)$ number of elements $y'_{n,\lambda}$ raised to the power of $\rho_{n,m}$ for each of $(D+2)\times(D'-L)$ number of combinations (m,$\lambda$) which are combinations of the $(D+2)$ number of integers m from 0 to $(D+1)$ and the $(D'-L)$ number of integers $\lambda$ from more than L to D', thereby computing $(D+2)\times(D'-L)$ number of elements $h_{m,\lambda}$ which are elements of the multiplicative group G2;

the user secret key output unit, using the processing device and as the user secret key of the query issuing device, outputs a combination of the element $k_0$ computed by the search element computation unit, the $(D+2)$ number of elements $k_{n,(a)}$ computed by the search element a computation unit, the $(D+2)$ number of elements $k_{n,(b)}$ computed by the search element b computation unit, the $(D+2)$ number of elements $f_{m,0}$ computed by the derangement element computation unit, the $(D+2)\times(D+2)$ number of elements $f_{m,n,(a)}$ computed by the derangement element a computation unit, the $(D+2)\times(D+2)$ number of elements $f_{m,n,(b)}$ computed by the derangement element b computation unit, the $(D'-L)$ number of elements $h_\lambda$ computed by the delegation element computation unit, and the $(D+2)\times(D'-L)$ number of elements $h_{m,\lambda}$ computed by the secondary delegation element computation unit;

the query issuing device further has a child user identifier input unit, a secondary random number $\pi$ selection unit, a child search element computation unit, a child derangement element computation unit, a child derangement element a computation unit, a child derangement element b computation unit, a child delegation element computation unit, a child secondary delegation element computation unit, and a child user secret key output unit;

the delegation element storage unit, using the storage device, stores the $(D'-L)$ number of elements $h_\lambda$ output as the user secret key of the query issuing device by the user secret key generation device;

the secondary delegation element storage unit, using the storage device, stores the $(D+2)\times(D'-L)$ number of elements $h_{m,\lambda}$ output as the user secret key of the query issuing device by the user secret key generation device;

the child user identifier input unit, using the processing device, inputs an integer $l_{L+1}$ from 0 to less than p;

the secondary random number $\pi$ selection unit, using the processing device, randomly selects $(D+2)\times(D+2)$ number of integers $\pi_{m,m'}$-(m' being an integer from 0 to D+1)- out of integers from 0 to less than p;

the child search element computation unit, using the processing device and based on the element $k_0$ stored by the search element storage unit, the (D+2) number of elements $f_{-m,0}$ stored by the derangement element storage unit, an element $h_{L+1}$ out of the (D'-L) number of elements $h_\lambda$ stored by the delegation element storage unit, (D+2) number of elements $h_{m,L+1}$ out of the $(D+2)\times(D'-L)$ number of elements $h_{m,\lambda}$ stored by the secondary delegation element storage unit, the (D+2) number of integers $\pi_m$-selected by the random number $\pi$ selection unit, and the integer $l_{L+1}$ input by the child user identifier input unit, calculates the element $h_{m,L+1}$ raised to a power of $\pi_m$ for each of the (D+2) number of integers m from 0 to (D+1), calculates a total product $II_H$ of the element $h_{L+1}$ and the (D+2) number of elements $h_{m,L+1}$ raised to the power of $\pi_m$, calculates the element $f_{-m,0}$ raised to a power of $\pi_m$ for each of the (D+2) number of integers m from 0 to (D+1), calculates the total product $II_H$ raised to a power of $l_{L+1}$, and calculates a total product of the element $k_0$, the (D+2) number of elements $f_{-m,0}$ raised to the power of $\pi_m$, and the total product $II_H$ raised to the power of $l_{L+1}$, thereby computing an element $k''_0$ which is an element of the multiplicative group G2;

the child derangement element computation unit, using the processing device and based on the (D+2) number of elements $f_{m,0}$ stored by the derangement element storage unit, (D+2) number of elements $h_{m,L+1}$ out of the $(D+2)\times(D'-L)$ number of elements $h_{m,\pi}$ stored by the secondary delegation element storage unit, and the $(D+2)\times(D+2)$ number of integers $\pi_{m,m'}$ selected by the secondary random number $\pi$ selection unit, calculates the element $f_{m,0}$ raised to a power of $\pi_{m,m'}$ and the element $h_{m',L+1}$ raised to a power of $\pi_{m,m'}$ for each of $(D+2)\times(D+2)$ number of combinations (m,m') which are combinations of the (D+2) number of integers m from 0 to (D+1) and (D+2) number of integers m' from 0 to (D+1), calculates a total product $\Pi_{H,m'}$ of the (D+2) number of elements $h_{m,L+1}$ raised to the power of $\pi_{m,m'}$ for each of the (D+2) number of integers m' from 0 to (D+1), and calculates a total product of the (D+2) number of elements $f_{m,0}$ raised to the power of $\pi_{m,m'}$ and the total product $\Pi_{H,m'}$ raised to the power of $l_{L+1}$ for each of the (D+2) number of integers m' from 0 to (D+1), thereby computing (D+2) number of elements $f_{m',0}$ which are elements of the multiplicative group G2;

the child derangement element a computation unit, using the processing device and based on the $(D+2)\times(D+2)$ number of elements $f_{m,n,(a)}$ stored by the derangement element a storage unit and the $(D+2)\times(D+2)$ number of integers $\pi_{m,m'}$ selected by the secondary random number $\pi$ selection unit, calculates the element $f_{m,n,(a)}$ raised to a power of $\pi_{m,m'}$ for each of $(D+2)\times(D+2)\times(D+2)$ number of (n,m,m') which are combinations of the (D+2) number of integers n from 0 to (D+1), the (D+2) number of integers m from 0 to (D+1), and the (D+2) number of integers m' from 0 to (D+1), and calculates a total product of the (D+2) number of elements $f_{m,n,(a)}$ raised to the power of $\pi_{m,m'}$ for each of $(D+2)\times(D+2)$ number of (n,m') which are combinations of the (D+2) number of integers n from 0 to (D+1) and the (D+2) number of integers m' from 0 to (D+1), thereby computing $(D+2)\times(D+2)$ number of elements $f'_{m',n,(a)}$ which are elements of the multiplicative group G2;

the child derangement element b computation unit, using the processing device and based on the $(D+2)\times(D+2)$ number of elements $f_{m,n,(b)}$ stored by the derangement element b storage unit and the $(D+2)\times(D+2)$ number of integers $\pi_{m,m'}$ selected by the secondary random number $\pi$ selection unit, calculates the element $f_{m,n,(b)}$ raised to a power of $\pi_{m,m'}$ for each of the $(D+2)\times(D+2)\times(D+2)$ number of (n,mm') which are combinations of the (D+2) number of integers n from 0 to (D+1), the (D+2) number of integers m from 0 to (D+1), and the (D+2) number of integers m' from 0 to (D+1), and calculates a total product of the (D+2) number of elements $f_{m,n,(b)}$ raised to the power of $\pi_{m,m'}$ for each of the $(D+2)\times(D+2)$ number of (n,m') which are combinations of the (D+2) number of integers n from 0 to (D+1) and the (D+2) number of integers m' from 0 to (D+1), thereby computing $(D+2)\times(D+2)$ number of elements $f_{m',n,(b)}$ which are elements of the multiplicative group G2;

the child delegation element computation unit, using the processing device and based on (D''-L-1) number (D'' being an integer from more than (L+1) to D') of elements $h_{\lambda'}$ ($\lambda'$ being an integer from more than (L+1) to D'') out of the (D'-L) number of elements $h_\lambda$ stored by the delegation element storage unit, $(D+2)\times(D''-L-1)$ number of elements $h_{m,\lambda'}$ out of the $(D+2)\times(D'-L)$ number of elements $h_{m,\lambda}$ stored by the secondary delegation element storage unit, and the (D+2) number of integers $\pi_m$ selected by the random number $\pi$ selection unit, calculates the element $h_{m,\lambda'}$ raised to a power of $\pi_m$ for each of $(D+2)\times(D''-L-1)$ number of combinations $(m,\lambda')$ which are combinations of the (D+2) number of integers m from 0 to (D+1) and (D''-L-1) number of integers $\lambda'$ from more than (L+1) to D'', and calculates a total product of the element $h_{\lambda'}$ and the (D+2) number of elements $h_{m,\lambda'}$ raised to the power of $\pi_m$ for each of the (D''-L-1) number of integers $\lambda'$ from more than (L+1) to D'', thereby computing (D''-L-1) number of elements $h'_{\lambda'}$ which are elements of the multiplicative group G2;

the child secondary delegation element computation unit, using the processing device and based on $(D+2)\times(D''-L-1)$ number of elements $h_{m,\lambda'}$ out of the $(D+2)\times(D'-L)$ number of elements $h_{m,\lambda}$ stored by the secondary delegation element storage unit and the $(D+2)\times(D+2)$ number of integers $\pi_{m,m'}$ selected by the secondary random number $\pi$ selection unit, calculates the elements $h_{m,\lambda'}$ raised to a power of $\pi_{m,m'}$ for each of $(D+2)\times(D+2)\times(D''-L-1)$ number of combinations (m, m',$\lambda'$) which are combinations of the (D+2) number of integers m from 0 to (D+1), the (D+2) number of integers m' from 0 to (D+1), and the (D''-L-1) number of integers j' from more than L to D'', and calculates a total product of the (D+2) number of elements $h_{m,\lambda'}$ raised to the power of $\pi_{m,m'}$ for each of (D+2)×(D"-L-1) number of combinations (m,m',λ') which are combinations of the (D+2) number of integers m' from 0 to (D+1) and the (D"-L-1) number of integers λ' from more than L to D", thereby computing (D+2)×(D"-L-1) number of elements $h'_{m',\lambda'}$ which are elements of the multiplicative group G2; and

the child user secret key output unit, as a user secret key of another query issuing device having as a user identifier the L number of integers $I_i$ stored by the user identifier storage unit and the integer $I_{L+1}$ input by the child user identifier input unit, outputs a combination of the element $k''_0$ computed by the child search element computation unit, the (D+2) number of elements $k'_{n,(a)}$ computed by the inquiry element a computation unit, the (D+2) number of elements $k'_{n,(b)}$ computed by the inquiry element b computation unit, the (D+2) number of elements $f'_{m',0}$ computed by the child derangement element computation unit, the (D+2)×(D+2) number of elements $f_{m',n,(a)}$ computed by the child derangement element a computation unit, the (D+2)×(D+2) number of elements $f_{m',n,(b)}$ computed by the child derangement element b computation unit, the (D"-L-1) number of elements $h'_{\lambda'}$ computed by the child delegation element computation unit, and the (D+2)×(D"-L-1) number of elements $h'_{m',\lambda'}$ computed by the child secondary delegation element computation unit.

**Advantageous Effects of Invention**

According to this invention, a ciphertext can be generated by specifying only a part of a user identifier, and a query that can search for this ciphertext can be generated by a plurality of users having the matching specified part. As a result, the size of a ciphertext can be reduced, and there is no need to generate a new ciphertext even if a new user is added.

**Brief Description of Drawings**

Fig. 1 is a system configuration diagram showing an example of an overall configuration of a secure search system 800 in a first embodiment;
Fig. 2 is a diagram showing an example of user IDs 600a to 600n in the first embodiment;
Fig. 3 is a diagram showing an example of a method for specifying an authorization range 610 in the first embodiment;
Fig. 4 is an axonometric view showing an example of appearance of a public parameter generation device 100, a user secret key generation device 200, a query issuing device 300, an encryption device 400, and a search device 500 in the first embodiment;
Fig. 5 is a diagram showing an example of hardware resources of the public parameter generation device 100, the user secret key generation device 200, the query issuing device 300, the encryption device 400, and the search device 500 in the first embodiment;
Fig. 6 is a block configuration diagram showing an example of a configuration of functional blocks of the public parameter generation device 100 in the first embodiment;
Fig. 7 is a flowchart showing an example of a flow of a public parameter generation process S630 in the first embodiment;
Fig. 8 is a block configuration diagram showing an example of a configuration of functional blocks of the user secret key generation device 200 in the first embodiment;
Fig. 9 is a flowchart showing an example of a user secret key generation process S660 in the first embodiment;
Fig. 10 is a block configuration diagram showing an example of a configuration of functional blocks of the query issuing device 300 in the first embodiment;
Fig. 11 is a detailed block diagram showing an example of a detailed block configuration of a user secret key storage unit 320, a common processing unit 330, and a query generation unit 350 of the query issuing device 300 in the first embodiment;
Fig. 12 is a flowchart showing an example of a flow of a common process S710 in the first embodiment;
Fig. 13 is a flowchart showing an example of a flow of a query generation process S730 in the first embodiment;
Fig. 14 is a detailed block diagram showing an example of a detailed block configuration of a child user secret key generation unit 370 of the query issuing device 300 in the first embodiment;
Fig. 15 is a flowchart showing an example of a flow of a child user secret key generation process S740 in the first embodiment;
Fig. 16 is a block configuration diagram showing an example of a configuration of functional blocks of the encryption device 400 in the first embodiment;
Fig. 17 is a detailed block diagram showing an example of a detailed configuration of a public parameter storage unit 420, an authorization range storage unit 430, and a ciphertext generation unit 450 of the encryption device 400 in the first embodiment;

Fig. 18 is a flowchart showing an example of a flow of a ciphertext generation process S850 in the first embodiment;

Fig. 19 is a block configuration diagram showing an example of a configuration of functional blocks of the search device 500 in the first embodiment;

Fig. 20 is a detailed block diagram showing an example of a detailed configuration of a ciphertext storage unit 530, a query storage unit 540, and a search unit 550 of the search device 500 in the first embodiment;

Fig. 21 is a flowchart showing an example of a comparison element generation process S880 in the first embodiment;

Fig. 22 is a system configuration diagram showing an example of an overall configuration of the secure search system 800 in a second embodiment;

Fig. 23 is a block configuration diagram showing an example of a configuration of functional blocks of the query issuing device 300 in the second embodiment;

Fig. 24 is a block configuration diagram showing an example of a configuration of functional blocks of the encryption device 400 in the second embodiment;

Fig. 25 is a detailed block diagram showing an example of a detailed configuration of functional blocks of the public parameter storage unit 420 and the ciphertext generation unit 450 of the encryption device 400 in the second embodiment; and

Fig. 26 is a detailed block diagram showing an example of a detailed configuration of functional blocks of the public parameter storage unit 420 and the ciphertext generation unit 450 of the search device 500 in the second embodiment.

**Description of Preferred Embodiments**

First Embodiment

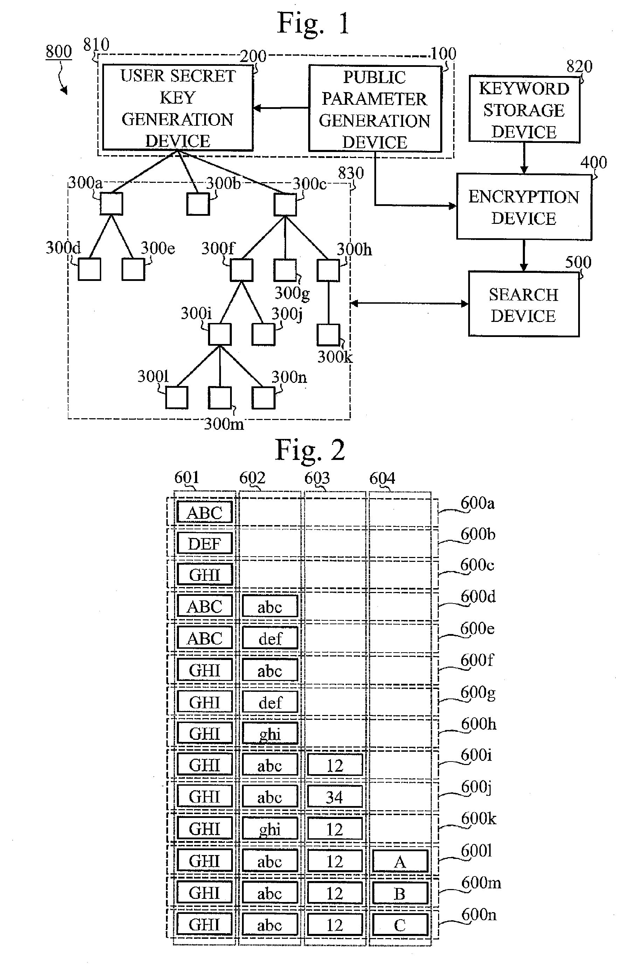

A first embodiment will be described with reference to Figs. 1 to 21.

Fig. 1 is a system configuration diagram showing an overall configuration of a secure search system 800 in this embodiment.

The secure search system 800 is a system for searching for data, such as encrypted data, the content of which cannot be directly viewed. The secure search system 800 searches for a keyword associated with data, instead of directly searching for the content of the data. A single keyword or a plurality of keywords may be associated with one data. In the secure search system 800, a ciphertext is generated in advance by encrypting a keyword. A user generates a query by encrypting a keyword to be searched for. The secure search system 800 determines whether or not the keyword embedded in the ciphertext matches the keyword specified by the user without decrypting the ciphertext or the query. Thus, in the process of searching, the keyword associated with the data and the keyword being searched for by the user remain unknown.

The secure search system 800 has a plurality of users. Each user has a different user identifier (to be hereinafter referred to as a "user ID"). When encrypting a keyword, the secure search system 800 can limit the range of users who have an authorization to search for this keyword. When a query is received from a user who does not have an authorization to search, even if a keyword being searched for matches a keyword embedded in a ciphertext, the secure search system 800 determines that no keyword match is found.

The secure search system 800 has a group public key generation device 810, a keyword storage device 820, a query issuing device group 830, an encryption device 400, and a search device 500.

The group public key generation device 810 generates a secret key, a public parameter such as a public key, and so on of cryptography to be used in the secure search system 800. The group public key generation device 810 has a public parameter generation device 100 and a user secret key generation device 200.

The keyword storage device 820 stores a keyword to be encrypted. The keyword storage device 820 may store not only the keyword but also the main body of data associated with the keyword or information representing a location of the data associated with the keyword.

The encryption device 400 generates a ciphertext by using the public parameter such as the public key generated by the group public key generation device 810 and encrypting the keyword stored by the keyword storage device 820.

The search device 500 stores the ciphertext generated by the encryption device 400. The search device 500 receives a query from a query issuing device 300, searches the stored ciphertext, and returns the result to the query issuing device 300.

The secure search system 800 may have a plurality of the encryption devices 400 and a plurality of the search devices 500.

The query issuing device group 830 comprises a plurality of the query issuing devices 300. The plurality of the query issuing devices 300 are grouped hierarchically. To distinguish the plurality of the query issuing devices 300 from one another, each device may be referred to with a lowercase alphabetical letter, such as "query issuing device 300a" and "query issuing device 300b".

Each user has its own query issuing device 300. When a single user has a plurality of user IDs, the user may have a plurality of the query issuing devices 300 corresponding to the plurality of the user IDs. Alternatively, one physical query issuing device 300 may be virtually used as a plurality of the query issuing devices 300 by switching from one user ID to another user ID.

A user ID is composed of a plurality of segments. Each segment of the user ID represents a hierarchical group structure of the user. Hereinafter, the number of segments (segment count) of the user ID will be represented as L. L is an integer of 1 or greater.

The segment count L of the user ID may vary with each user ID. The segment count L of each user ID represents a level of each query issuing device 300 in the hierarchical structure. The smaller the segment count L of the user ID, the higher in the hierarchical structure the corresponding query issuing device 300 is located. Conversely, the larger the segment count of the user ID, the lower in the hierarchical structure the corresponding query issuing device 300 is located.

Fig. 2 is a diagram showing an example of user IDs 600a to 600n in this embodiment.

The user ID 600a is the user ID of a user of a query issuing device 300a. The query issuing device 300a is at the first level of the hierarchical structure. Accordingly, the user ID 600a is composed of one segment 601 "ABC".

The user ID 600d is the user ID of a user of a query issuing device 300d. The query issuing device 300d is at the second level of the hierarchical structure. Accordingly, the user ID 600d is divided into two segments 601 "ABC" and 602 "abc". The query issuing device 300d is located under the query issuing device 300a. Thus, the first segment 601 of the user ID 600d is identical with the first segment 601 of the user ID 600a.

In this way, the segment count L of each user ID represents at which level of the hierarchical structure the corresponding query issuing device 300 is located. The user ID of the query issuing device 300 located at a lower level of the hierarchical structure includes the entirety of the user ID of the query issuing device 300 located above it.

The fourteen query issuing devices 300 in this example are broadly divided into three groups. The first group is a group in which the first segment 601 of the user ID is "ABC". The first group includes three query issuing devices 300a, 300d, and 600e. The second group is a group in which the first segment 601 of the user ID is "DEF". The second group includes one query issuing device 300b. The third group is a group in which the first segment 601 of the user ID is "GHI". The third group includes ten query issuing devices 300c and 300f to 300n.

The ten query issuing devices 300c and 300f to 300n belonging to the third group are further divided into three subgroups. The first subgroup is a group in which the second segment 602 of the user ID is "abc". The first subgroup includes six query issuing devices 300f, 300i, 300j, and 3001 to 300n. The second subgroup is a group in which the second segment 602 of the user ID is "def". The second subgroup includes one query issuing device 300g. The third subgroup is a group in which the second segment 602 of the user ID is "ghi". The third subgroup includes two query issuing devices 300h and 300k.

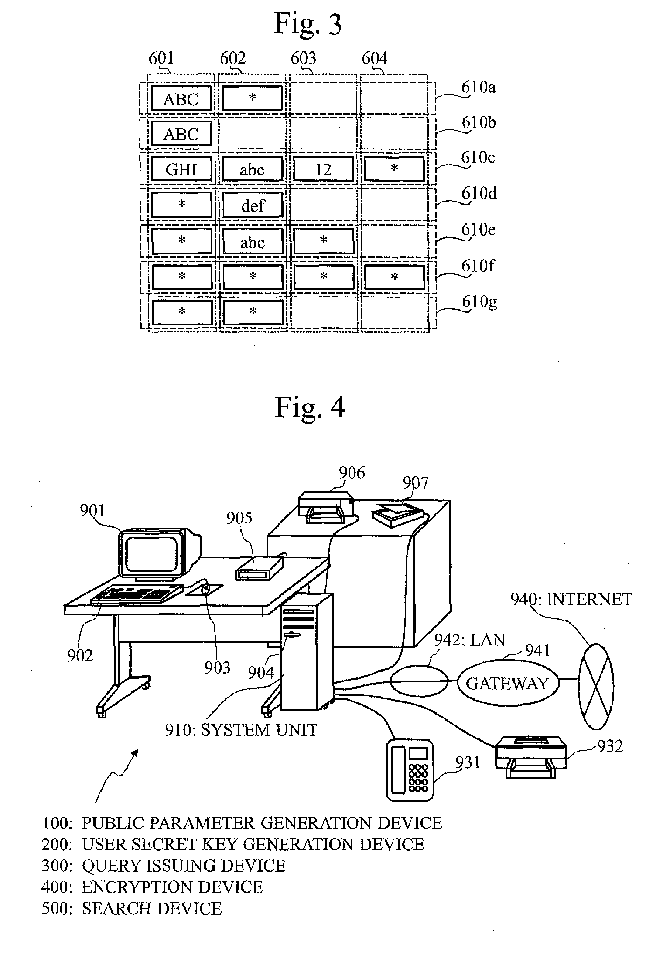

Fig. 3 is a diagram showing an example of a method of specifying an authorization range 610 in this embodiment. The authorization range 610 is specified by specifying the entirety or a part of the user ID. In this example, "*" is a special value called a wildcard. The wildcard denotes that a segment represented by the wildcard in the user ID can be any value. For example, an authorization range 610a signifies that an authorization to search is given to the query issuing device 300 having a user ID in which the first segment 601 is "ABC" and the segment count L is 2. The authorization range 610a gives an authorization to search to two query issuing devices 300d and 300e.

An authorization range 610b signifies that an authorization to search is given to the query issuing device 300 having a user ID in which the first segment 601 is "ABC" and the segment count L is 1. The authorization range 610b gives an authorization to search to one query issuing device 300a.

An authorization range 610c signifies that an authorization to search is given to the query issuing device 300 having a user ID in which the first segment 601 is "GHI", the second segment 602 is "abc", the third segment 603 is "12", and the segment count L is 4. The authorization range 610c gives an authorization to search to three query issuing devices 3001 to 300n.

An authorization range 610d signifies that an authorization to search is given to the query issuing device 300 having a user ID in which the second segment 602 is "def" and the segment count L is 2. The authorization range 610d gives an authorization to search to two query issuing devices 300e and 300g. By thus specifying only a middle segment of the user ID, an authorization can be given across the group.

An authorization range 610e signifies that an authorization to search is given to the query issuing device 300 having a user ID in which the second segment 602 is "abc" and the segment count L is 3. The authorization range 610e gives an authorization to search to two query issuing devices 300i and 300j.

An authorization range 610f signifies that an authorization to search is given to the query issuing device 300 having a user ID in which the segment count L is 4. The authorization range 610f gives an authorization to search to three query issuing devices 3001 to 300n.

An authorization range 610g signifies that an authorization to search is given to the query issuing device 300 having a user ID in which the segment count L is 2. The authorization range 610g gives an authorization to search to five query issuing devices 300d to 300h.

Fig. 4 is an axonometric view showing an example of appearance of the public parameter generation device 100, the user secret key generation device 200, the query issuing device 300, the encryption device 400, and the search device 500 in this embodiment.

The public parameter generation device 100, the user secret key generation device 200, the query issuing device 300, the encryption device 400, and the search device 500 each include hardware resources such as a system unit 910, a display device 901 having a display screen such as a CRT (cathode ray tube) and an LCD (liquid crystal display), a keyboard 902 (K/B), a mouse 903, an FDD 904 (flexible disk drive), a compact disk device 905 (CDD), a printer device 906, and a scanner device 907. These hardware resources are connected with a cable or a signal line.

The system unit 910 is a computer connected with a facsimile machine 932 and a telephone 931 with a cable, and also connected with an Internet 940 through a local area network 942 (LAN) and a gateway 941.

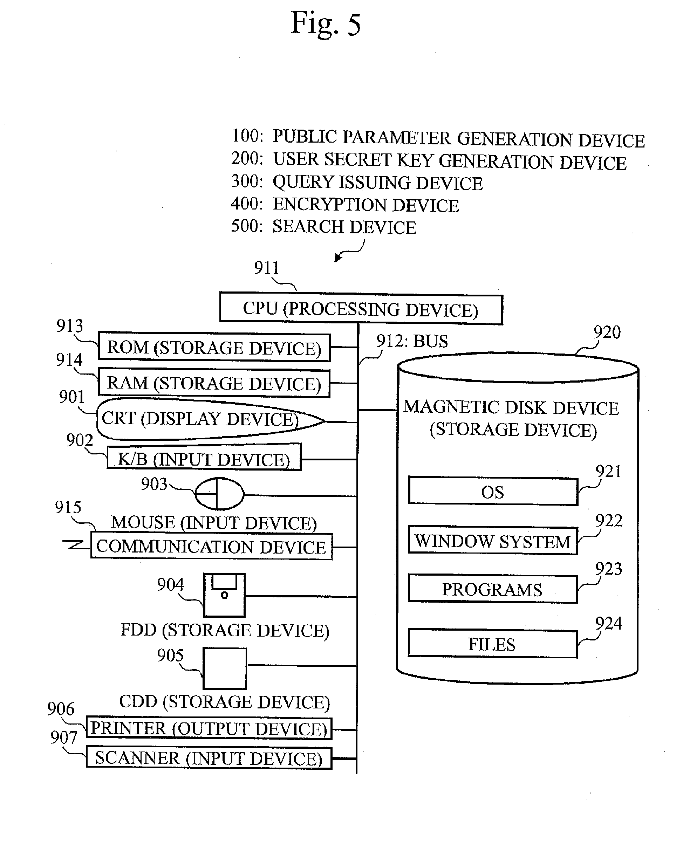

Fig. 5 is a diagram showing an example of the hardware resources of the public parameter generation device 100, the user secret key generation device 200, the query issuing device 300, the encryption device 400, and the search device 500 in this embodiment.

The public parameter generation device 100, the user secret key generation device 200, the query issuing device 300, the encryption device 400, and the search device 500 each include a CPU 911 (central processing unit, also called a central processor, a processing device, an arithmetic device, a microprocessor, a microcomputer, or a processor). The CPU 911 is connected through a bus 912 with a ROM 913, a RAM 914, a communication device 915, the display device 901, the keyboard 902, the mouse 903, the FDD 904, the CDD 905, the printer device 906, the scanner device 907, and a magnetic disk device 920, and controls these hardware devices. The magnetic disk device 920 may be replaced with a storage device such as an optical disk device or a memory card read/write device.

The RAM 914 is an example of a volatile memory. Storage media of the ROM 913, the FDD 904, the CDD 905, and the magnetic disk device 920 are examples of a nonvolatile memory. These are examples of a storage device or a storage unit. The communication device 915, the keyboard 902, the scanner device 907, the FDD 904, and so on are examples of an input unit or an input device.

The communication device 915, the display device 901, the printer device 906, and so on are examples of an output unit or an output device.

The communication device 915 is connected with the facsimile machine 932, the telephone 931, the LAN 942, and so on. The communication device 915 may be connected not only with the LAN 942 but also with the Internet 940, a WAN (wide area network) such as ISDN, or the like. When it is connected with the Internet 940 or the WAN such as ISDN, the gateway 941 is not required.

The magnetic disk device 920 stores an operating system 921 (OS), a window system 922, programs 923, and files 924. The programs 923 are executed by the CPU 911, the operating system 921, and the window system 922.

The programs 923 store programs for executing a function described hereinafter as a "--- unit". The programs are read and executed by the CPU 911.

The files 924 store, as each item of a "--- file" and a "--- database", information, data, signal values, variable values, and parameters described as a "result of determination by ---", a "result of computation by ---" , and a "result of processing by ---" in the description of embodiments to be discussed hereinafter. The "--- file" and "--- database" are stored in a storage device such a disk or memory The information, data, signal values, variable values, and parameters stored in the storage device such as the disk or memory are read by the CPU 911 through a read/write circuit to a main memory or a cache memory, and are used for operations of the CPU 911 such as extraction, search, reference, comparison, calculation, computation, processing, output, printing, and display. The information, data, signal values, variable values, and parameters are temporarily stored in the main memory, the cache memory, or a buffer memory during the operations of the CPU 911 such as extraction, search, reference, comparison, calculation, computation, processing, output, printing, and display.

In the flowcharts to be described in the embodiments to be discussed hereinafter, an arrow mainly represents an input/output of data or a signal, and data and signal values are stored in storage media such as a memory of the RAM 914, a flexible disk of the FDD 904, a compact disk of the CDD 905, a magnetic disk of the magnetic disk device 920, an optical disk, a mini disk, and a DVD (digital versatile disk). The data and signals are transferred online through the bus 912, a signal line, a cable, or other types of transfer medium.

In the description of embodiments to be discussed hereinafter, what is described as a "--- unit" may be a "--- circuit", a "--- device", or a "--- tool", and may also be a "--- step", a "--- procedure", or a "--- process". That is, what is described as a "--- unit" may be implemented by firmware stored in the ROM 913. Alternatively, the "--- unit" may be implemented solely by software, or solely by hardware such as elements, devices, boards, and wiring, or by a combination of software and hardware, or by a combination including firmware. Firmware or software is stored as a program in a storage medium such as a magnetic disk, a flexible disk, an optical disk, a compact disk, a mini disk, or a DVD. The program is read by the CPU 911 and executed by the CPU 911. That is, the program causes a computer to function as a "--- unit" to be described hereinafter. Alternatively, the program causes the computer to execute a procedure or a method of a "--- unit" to be described hereinafter.

Symbols and terms to be used in the following description will now be described.

A set of integers from a to b will be expressed as "[a,b]". For example, "[1,4]" signifies "{1, 2, 3, 4}". A set where a is 0 is specifically expressed as "[b]". For example, "[2]" signifies "{0, 1, 2}".

A set $(A_0, A_1, ..., A_x)$ of $(x+1)$ number of $A_i$ (i is an integer from 0 to x) will be expressed as "$(A_i)_{i \in [x]}$".

A mathematical "group" refers to a pair of a set and a binary operation having the following properties: (1) the binary operation maps a pair of two elements to one element, (2) the binary operation satisfies the associative law, (3) there exists an identity element, and (4) there exists an inverse element for every element.

When reference is made to a "binary operation" of a group, symbols and terms related to multiplication will be used. For example, an element obtained by mapping a pair of an element a and an element b by a binary operation will be referred to as a "product of a and b" and will be expressed by using one of the following symbols.

[Formula 11]

$$a\,b \qquad a \cdot b \qquad a \times b$$

An identity element of a group will be expressed as "1". The inverse element of the element a will be expressed by using one of the following symbols.

[Formula 12]

$$1/a \qquad a^{-1} \qquad a^{\wedge}(-1)$$

An element obtained as a result of mapping a pair of the element a and the inverse element of the element b will be referred to as a "quotient of dividing a by b", and will be expressed by using one of the following symbols.

[Formula 13]

$$a/b \qquad \frac{a}{b}$$

An element obtained by repeatedly mapping n number of the same elements a by a binary operation will be referred to as "a raised to the power of n" and will be expressed by using one of the following symbols.

[Formula 14]

$$a^n \qquad a^{\wedge}n$$

For example, "a raised to the power of 2" represents "a·a", and "a raised to the power of 4" represents "a·a·a·a".

An element obtained by repeatedly mapping n number of elements $a_1$ to $a_n$ by a binary operation will be referred to as a "total product of $a_i$" and will be expressed by using one of the following symbols.

[Formula 15]

$$\prod_{i=1}^{n} a_i \qquad \prod_{i \in [1,n]} a_i \qquad \prod_{i=1}^{n} a_i \qquad \prod_{i \in [1,n]} a_i$$

For example, a "total product of $a_1$ to $a_4$" represents "$a_1.a_2.a_3.a_4$". A "total product of a, b, and c" or a "product of a, b, and c" represents "a·b·c".

The term "multiplicative group" is an expression emphasizing that the binary operation of the group is expressed by using symbols and terms related to multiplication. The "multiplicative group" is synonymous with the "group" and is not in any way more restrictive than the "group".

A "pairing" refers to a map where a pair of an element of a multiplicative group G1 and an element of a multiplicative group G2 is mapped to an element of a multiplicative group G3. The three multiplicative groups G1, G2, and G3 may be respectively different, or two or all of the multiplicative groups G1, G2, and G3 may be the same group. An element of the multiplicative group G3 obtained by mapping an element g1 of the multiplicative group G1 and an element g2 of the multiplicative group G2 by a pairing will be referred to as a "pairing of g1 and g2".

A "bilinear pairing" refers to a pairing having the following properties:

(1) Bilinearity: A pairing of the element g1 of the multiplicative group G1 raised to the power of a and the element g2 of the multiplicative group G2 raised to the power of b is equal to a pairing of the element g1 and the element g2 raised to the power of $(a \times b)$.

(2) Non-degeneracy: If a pairing of the element $g_1$ and the element $g_2$ is the identity element of the multiplicative group G3, then the element $g_1$ is the identity element of the multiplicative group G1 and the element $g_2$ is the identity element of the multiplicative group G2.

The secure search system 800 uses three multiplicative groups G1, G2, and G3. The three multiplicative groups G1, G2, and G3 have the same order, namely a prime number p. The prime number p is extremely large and is larger than 2 raised to the power of 160, for example. The three multiplicative groups G1, G2, and G3 should be groups where there exists an algorithm that allows a computer to compute a binary operation in polynomial time. The secure search system 800 can actually compute a binary operation of a group in practical time. To secure security, the three multiplicative groups G1, G2, and G3 should be groups where it is difficult to solve a discrete logarithm problem.
The secure search system 800 uses a bilinear pairing e that maps a pair of an element of the multiplicative group G1 and an element of the multiplicative group G2 to an element of the multiplicative group G3. The bilinear pairing e should be a pairing where there exists an algorithm that is computable by a computer in polynomial time. The secure search system 800 can actually compute the bilinear pairing e in practical time. To secure security, the bilinear pairing e should be a pairing where it is difficult to solve a Decisional Bilinear Diffie-Hellman Problem.

As such a multiplicative group, a group of points on an elliptic curve or other algebraic curve is known, for example. However, other types of group may also be used. As such a bilinear pairing, the Weil pairing, the Tate pairing, and so on are known, for example. However, other types of pairing may also be used.

In the following description, unless otherwise specified, the four basic operations of integers signify the four basic operations on a finite field Zp composed of residue classes modulo the prime number p. Addition, subtraction, or multiplication is computed by performing the same operation as normal addition, subtraction, or multiplication of integers and then obtaining a remainder by dividing the result by the divisor p. Division is computed by multiplying by a reciprocal in the finite field Zp and then obtaining a remainder by dividing the result by the divisor p.

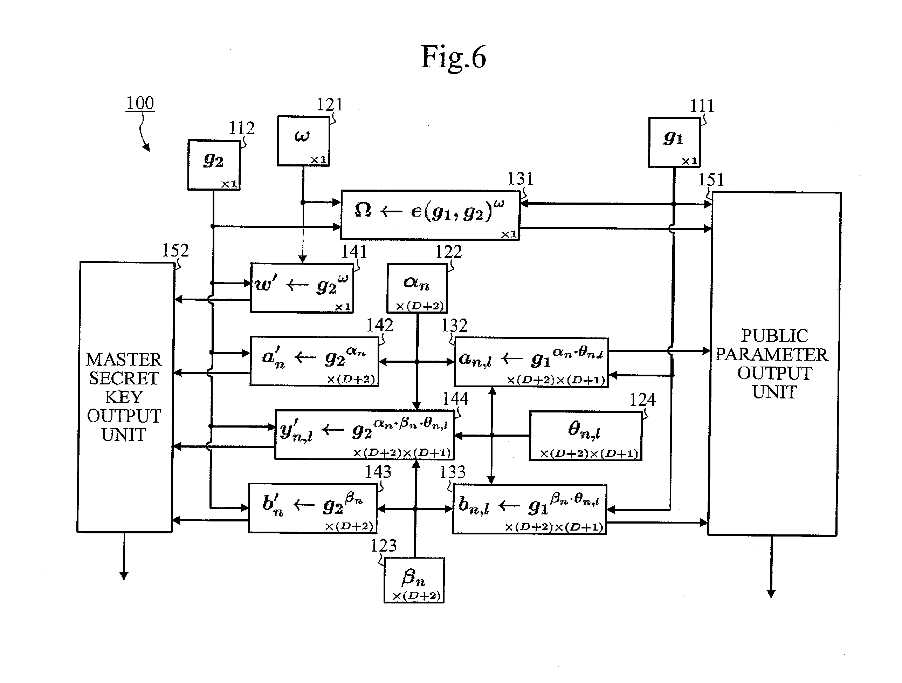

Fig. 6 is a block configuration diagram showing an example of a configuration of functional blocks of the public parameter generation device 100 in this embodiment.
The public parameter generation device 100 generates a public key/master secret key pair to be used in the secure search system 800. The public key is used by the encryption device 400 to encrypt a keyword. The public key is information that can be disclosed to a third party, and is made public. The master secret key is used by the user secret key generation device 200 to generate a user secret key. The master secret key is information that should not be disclosed to a third party, and is stored in secret.
The public parameter generation device 100 has a first generator selection unit 111, a second generator selection unit 112, a random number ω selection unit 121, a random number α selection unit 122, a random number β selection unit 123, a random number θ selection unit 124, a public element Ω computation unit 131, a public element a computation unit 132, a public element b computation unit 133, a secret element w computation unit 141, a secret element a computation unit 142, a secret element b computation unit 143, and a secret element y computation unit 144.

The first generator selection unit 111, using the CPU 911, uniformly randomly selects a generator out of generators of the multiplicative group G1. The generator selected by the first generator selection unit 111 will hereinafter be referred to as "$g_1$". The first generator selection unit 111, using the RAM 914, stores data representing the selected generator $g_1$.

The second generator selection unit 112, using the CPU 911, uniformly randomly selects a generator out of generators of the multiplicative group G2. The generator selected by the second generator selection unit 112 will hereinafter be referred to as "$g_2$". The second generator selection unit 112, using the RAM 914, stores data representing the selected generator $g_2$.

The random number ω selection unit 121, using the CPU 911, uniformly randomly selects an integer out of integers from 1 to less than p. The integer selected by the random number ω selection unit 121 will hereinafter be referred

to as "$\omega$". The random number $\omega$ selection unit 121, using the RAM 914, stores data representing the selected integer $\omega$.

The random number $\alpha$ selection unit 122, using the CPU 911, uniformly randomly selects (D+2) number of integers out of integers from 1 to less than p, where D is an integer obtained by adding one to the maximum segment count L of user IDs. The (D+2) number of integers selected by the random number $\alpha$ selection unit 122 will hereinafter be referred to as "$\alpha_n$", where n is an integer from 0 to (D+1). The random number $\alpha$ selection unit 122, using the RAM 914, stores data representing the (D+2) number of selected integers $a_n$.

For example, when the user IDs shown in Fig. 2 are used, the maximum segment count L of the user IDs is 4, so that D is 5. Thus, the random number $\alpha$ selection unit 122 selects seven integers $\alpha_0, \alpha_1, \alpha_2, ..., \alpha_6$.

The random number $\beta$ selection unit 123, using the CPU 911, uniformly randomly selects (D+2) number of integers out of integers from 1 to less than p. The (D+2) number of integers selected by the random number $\beta$ selection unit 123 will hereinafter be referred to as "$\beta_n$", where n is an integer from 0 to (D+1). The random number $\beta$ selection unit 123, using the RAM 914, stores data representing the (D+2) number of selected integers $b_n$.

The random number $\theta$ selection unit 124, using the CPU 911, uniformly randomly selects (D+2)×(D+1) number of integers out of integers from 1 to less than p. The (D+2)×(D+1) number of integers selected by the random number $\theta$ selection unit 124 will hereinafter be referred to as "$\theta_{n,1}$", where n is an integer from 0 to (D+1) and 1 (alphabet 1) is an integer from 0 to D. For example, when D is 5, the random number $\theta$ selection unit 124 selects 7×6=42 integers $\theta_{0,0}$, $\theta_{0,1}$, $\theta_{0,2}$, $\theta_{0,3}$, $\theta_{0,4}$, $\theta_{0,5}$, $\theta_{1,0}$, $\theta_{1,1}$, ..., $\theta_{6,5}$.

The public element $\Omega$, computation unit 131, using the CPU 911, inputs the data representing the generator $g_1$ stored by the first generator selection unit 111, the data representing the generator $g_2$ stored by the second generator selection unit 112, and the data representing the integer $\omega$ stored by the random number $\omega$ selection unit 121. The public element $\Omega$ computation unit 131, using the CPU 911 and by the bilinear pairing e, calculates a pairing of the generator $g_1$ of the multiplicative group G1 and the generator $g_2$ of the multiplicative group G2. The pairing computed by the public element $\Omega$ computation unit 131 will hereinafter be referred to as "$g_3$". $g_3$ is a generator of the multiplicative group G3. The public element $\Omega$ computation unit 131, using the CPU 911, calculates the generator $g_3$ of the multiplicative group G3 raised to the power of $\omega$. The element "g3^$\omega$" computed by the public element $\Omega$ computation unit 131 will hereinafter be referred to as "$\Omega$". $\Omega$ is an element of the multiplicative group G3. The public element $\Omega$ computation unit 131, using the RAM 914, stores data representing the computed element $\Omega$.

The public element a computation unit 132, using the CPU 911, inputs the data representing the generator $g_1$ stored by the first generator selection unit 111, the data representing the (D+2) number of integers $\alpha_n$ stored by the random number $\alpha$ selection unit 122, and the data representing the (D+2)×(D+1) number of integers $\theta_{n,1}$ stored by the random number $\theta$ selection unit 124.

The public element a computation unit 132, using the CPU 911 and for each integer $\alpha_n$, calculates products "$\alpha_n \cdot \theta_{n,1}$" of the integer $\alpha_n$ and each of (D+1) number of integers $\theta_{n,1}$ having the same n as $\alpha_n$. There are (D+2) number of integers $\alpha_n$, so that the public element a computation unit 132 computes a total of (D+2)×(D+1) number of products "$\alpha_n.\theta_{n,1}$".

The public element a computation unit 132, using the CPU 911, calculates the generator $g_1$ of the multiplicative group $G_1$ raised to the power of "$\alpha_n \cdot \theta_{n,1}$" for each of the (D+2)×(D+1) number of products "$\alpha_n \cdot \theta_{n,1}$". The element "$g_1^\wedge(\alpha_n \cdot \theta_{n,1})$" computed by the public element a computation unit 132 will hereinafter be referred to as "$a_{n,1}$", where n is an integer from 0 to (D+1) and 1 (alphabet 1) is an integer from 0 to D. $a_{n,1}$ is an element of the multiplicative group G1. For example, an element $a_{0,0}$ is an element "gi^$(\alpha_0.\theta_{0,0})$". An element $a_{0,1}$ is an element "$g_1^\wedge(\alpha_0 \cdot \theta_{0,1})$". An element $a_{1,0}$ is an element "$g_1^\wedge(\alpha_1 \theta_{1,0})$". The public element a computation unit 132, using the RAM 914, stores data representing the (D+2)×(D+1) number of computed elements $a_{n,1}$.

The public element b computation unit 133, using the CPU 911, inputs the data representing the generator $g_1$ stored by the first generator selection unit 111, the data representing the (D+2) number of integers $\beta_n$ stored by the random number $\beta$ selection unit 123, and the data representing the (D+2)×(D+1) number of integers $\theta_{n,1}$ stored by the random number $\theta$ selection unit 124.

The public element b computation unit 133, using the CPU 911 and for each integer $\beta_n$, calculates products "$\beta_n \cdot \theta_{n,1}$" of the integer $\beta_n$ and each of (D+1) number of integers $\theta_{n,1}$ having the same n as $\beta_n$. The public element b computation unit 133 computes a total of (D+1) number of products "$\beta_n \cdot \theta_{n,1}$".

The public element b computation unit 133, using the CPU 911, calculates the generator $g_1$ of the multiplicative group G1 raised to the power of "$\beta_n \cdot \theta_{n,1}$" for each of the (D+2)×(D+1) number of computed products "$\beta_n \cdot \beta_{n,1})$". The element "g1^$(\beta_n \cdot \beta_{n,1})$" computed by the public element b computation unit 133 will hereinafter be referred to as "$b_{n,1}$", where n is an integer from 0 to (D+1) and 1 (alphabet 1) is an integer from 0 to D. $b_{n,1}$ is an element of the multiplicative group G1. The public element b computation unit 133, using the RAM 914, stores data representing the (D+2)×(D+1) number of computed elements $b_{n,1}$.

The secret element w computation unit 141, using the CPU 911, inputs the data representing the generator $g_2$ stored by the second generator selection unit 112 and the data representing the integer $\omega$ stored by the random number $\omega$ selection unit 121. The secret element w computation unit 141, using the CPU 911, calculates the generator $g_2$ of the multiplicative group G2 raised to the power of $\omega$. The element "$g_2^\wedge\omega$" computed by the secret element w computation unit 141 will hereinafter be referred to as "w'". w' is an element of the multiplicative group G2. The secret element w computation unit 141, using the RAM 914, stores data representing the computed element w'.

The secret element a computation unit 142, using the CPU 911, inputs the data representing the generator $g_2$ stored by the second generator selection unit 112 and the data representing the (D+2) number of integers $\alpha_n$ stored by the random number $\alpha$ selection unit 122. The secret element a computation unit 142, using the CPU 911, calculates the generators $g_2$ raised to the power of $\alpha_n$ for each of the (D+2) number of integers $\alpha_n$. The element "$g_2 {}^\wedge \alpha_n$" computed by the secret element a computation unit 142 will hereinafter be referred to as "$a'_n$", where n is an integer from 0 to (D+1). For example, an element $a'_0$ is the generator $g_2$ raised to the power of $\alpha_0$. An element $a'_1$, is the generator $g_2$ raised to the power of $\alpha_1$. The secret element a computation unit 142 computes (D+2) number of elements $a'_0$. The secret element a computation unit 142, using the RAM 914, stores data representing the (D+2) number of computed elements $a'_n$.

The secret element b computation unit 143, using the CPU 911, inputs the data representing the generator $g_2$ stored by the second generator selection unit 112 and the data representing the (D+2) number of integers $\beta_n$ stored by the random number $\beta$ selection unit 123. The secret element a computation unit 142, using the CPU 911, calculates the generator $g_2$ raised to the power of $\beta_n$ for each of the (D+2) number of integers $\beta_n$. The element "$g_2 {}^\wedge \beta_n$" computed by the secret element b computation unit 143 will hereinafter be referred to as "$b'_n$", where n is an integer from 0 to (D+1). $b'_n$ is an element of the multiplicative group G2. The secret element b computation unit 143 computes (D+2) number of elements $b'_n$. The secret element b computation unit 143, using the RAM 914, stores data representing the (D+2) number of computed elements $b'_n$.

The secret element y computation unit 144, using the CPU 911, inputs the data representing the generator $g_2$ stored by the second generator selection unit 112, the data representing the (D+2) number of integers $\alpha_n$ stored by the random number $\alpha$ selection unit 122, the data representing the (D+2) number of integers $\beta_n$ stored by the random number $\beta$ selection unit 123, and the data representing the (D+2)×(D+1) number of integers $\theta_{n,1}$ stored by the random number $\theta$ selection unit 124.

The secret element y computation unit 144, using the CPU 911 and for each of the (D+2) number of integers $\alpha_n$, calculate a product "$\alpha_n \cdot \beta_n$" of the integer $\alpha_n$ and the integer $\beta_n$ having the same n as $\alpha_n$. The secret element y computation unit 144 computes a total of (D+2) number of products "$\alpha_n \cdot \beta_n$". The secret element y computation unit 144, using the CPU 911 and for each product "$\alpha_n \cdot \beta_n$", calculates products "$\alpha_n \cdot \beta_n \cdot \theta_{n,1}$" of the product "$\alpha_n \cdot \beta_n$" and each of (D+1) number of integers $\theta_{n,1}$ having the same n as "$\alpha_n \cdot \beta_n$". The secret element y computation unit 144 computes (D+2) number of products "$\alpha_n \cdot \beta_n$", so that the secret element y computation unit 144 computes a total of (D+2)×(D+1) number of products "$\alpha_n \cdot \beta_n \cdot \theta_{n,1}$".

The secret element y computation unit 144, using the CPU 911, calculates the generator $g_2$ raised to the power of "$\alpha_n \cdot \beta_n \cdot \theta_{n,1}$" for each of the (D+2)×(D+1) number of computed products "$\alpha_n \cdot \beta_n \cdot \theta_{n,1}$". The element "$g_2 {}^\wedge(\alpha_n \cdot \beta_n \cdot \theta_{n,1})$" computed by the secret element y computation unit 144 will be referred to as "$y'_{n,1}$", where n is an integer from 0 to (D+1) and 1 (alphabet 1) is an integer from 0 to D. $y'_{n,1}$ is an element of the multiplicative group G2. The secret element y computation unit 144 computes (D+2)×(D+1) number of elements y'n,1. The secret element y computation unit 144, using the RAM 914, stores data representing the (D+2)×(D+1) number of computed elements $y'_{n,1}$.

A public parameter output unit 151, using the CPU 911, inputs the data representing the generator $g_1$ stored by the first generator selection unit 111, the data representing the element $\Omega$ stored by the public element $\Omega$ computation unit 131, the data representing the (D+2)×(D+1) number of elements $a_{n,1}$ stored by the public element a computation unit 132, and the data representing the (D+2)×(D+1) number of elements $b_{n,1}$ stored by the public element b computation unit 133. The public parameter output unit 151, using the CPU 911, outputs the generator $g_1$, the element $\Omega$, the (D+2)×(D+1) number of elements $a_{n,1}$, and the (D+2)×(D+1) number of elements $b_{n,1}$, as a public parameter. The public parameter output by the public parameter output unit 151 is made public, for example.

A master secret key output unit 152, using the CPU 911, inputs the data representing the element w' stored by the secret element w computation unit 141, the data representing the (D+2) number of elements $a'_n$ stored by the secret element a computation unit 142, the data representing the (D+2) number of elements $b'_n$ stored by the secret element b computation unit 143, and the data representing the (D+2)×(D+1) number of elements $y'_{n,1}$ stored by the secret element y computation unit 144. The master secret key output unit 152, using the CPU 911, outputs data including the data representing the element w', the (D+2) number of elements $a'_n$, the (D+2) number of elements $b'_n$, and the (D+2)×(D+1) number of elements y'n,1, as a master secret key. The master secret key output by the master secret key output unit 152 is secretly notified to the user secret key generation device 200.

Once the public parameter and the master secret key have been generated, the generator $g_1$ stored by the first generator selection unit 111, the generator $g_2$ stored by the second generator selection unit 112, the integer $\omega$ stored by the random number $\omega$ selection unit 121, the integers $\alpha_n$ stored by the random number $\alpha$ selection unit 122, and the integers $\beta_n$ stored by the random number $\beta$ selection unit 123 will not be subsequently used, and thus may be erased. In particular, the integers $\omega$, $\alpha_n$, and $\beta_n$ are information that must not be leaked to the outside, so that it is desirable to completely erase them.

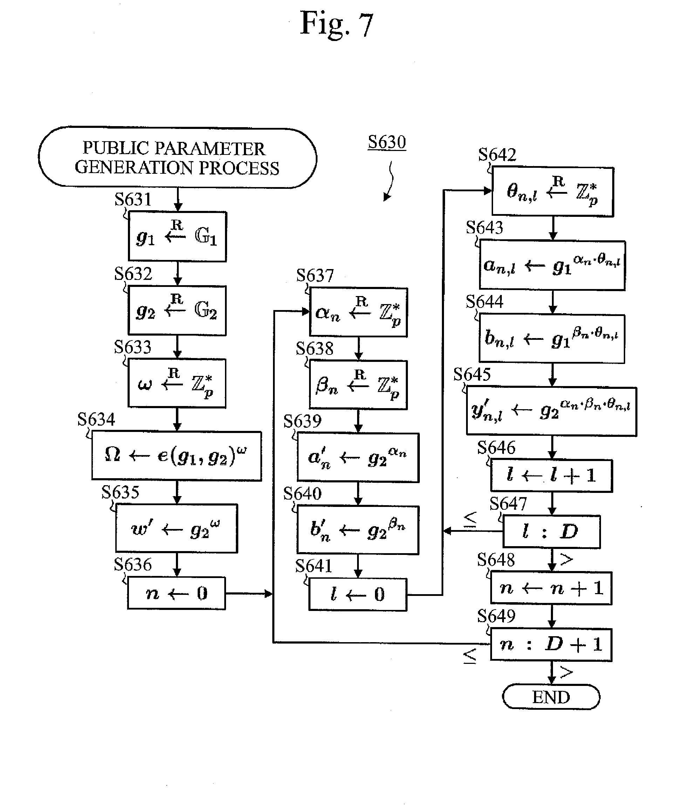

Fig. 7 is a flowchart showing an example of a flow of a public parameter generation process S630 in this embodiment.

In the public parameter generation process S630, the public parameter generation device 100 generates a public key/master secret key pair. A specific procedure for computing a public key and a master secret key will be described here. However, the calculation procedure is not limited to the procedure described here and may be different from the procedure described here, provided that mathematically equivalent results can be obtained.

The public parameter generation process S630 has a first generator selection step S631, a second generator selection step S632, a random number $\omega$ selection step S633, a public element $\Omega$ computation step S634, a secret element w computation step S635, an n initialization step S636, a random number $\alpha$ selection step S637, a random number $\beta$ selection step S638, a secret element a computation step S639, a secret element b computation step S640, an 1 (alphabet 1) initialization step S641, a random number $\theta$ selection step S642, a public element a computation step S643, a public element b computation step S644, a secret element y computation step S645, an 1 (alphabet 1) increment step S646, an 1 (alphabet 1) determination step S647, an n increment step S648, and an n determination step S649.

In the first generator selection step S631, the first generator selection unit 111, using the CPU 911, uniformly randomly selects a generator $g_1$ out of generators of the multiplicative group G1.

In the second generator selection step S632, the second generator selection unit 112, using the CPU 911, uniformly randomly selects a generator $g_2$ out of generators of the multiplicative group G2.

In the random number $\omega$ selection step S633, the random number $\omega$ selection unit 121, using the CPU 911, uniformly randomly selects an integer $\omega$ out of integers from 1 to less than p.

In the public element $\Omega$ computation step S634, based on the generator $g_1$ selected by the first generator selection unit 111 in the first generator selection step S631 and the generator $g_2$ selected by the second generator selection unit 112 in the second generator selection step S632, the public element $\Omega$ computation unit 131, using the CPU 911, calculates a pairing of the generator $g_1$ and the generator $g_2$ by the bilinear pairing e and obtains a generator $g_3$ which is an element of the multiplicative group G3. Based on the computed generator $g_3$ and the integer $\omega$ selected by the random number $\omega$ selection unit 121 in the random number $\omega$ selection step S633, the public element computation unit 131, using the CPU 911, calculates the generator $g_3$ raised to the power of $\omega$ and obtains an element $\Omega$ which is an element of the multiplicative group G3.

In the secret element w computation step S635, based on the generator $g_2$ selected by the second generator selection unit 112 in the second generator selection step S632 and the integer $\omega$ selected by the random number $\omega$ selection unit 121 in the random number $\omega$ selection step S633, the secret element w computation unit 141, using the CPU 911, calculates the generator $g_2$ raised to the power of $\omega$ and obtains an element w' which is an element of the multiplicative group G2.

In the n initialization step S636, the random number $\alpha$ selection unit 122, using the CPU 911, sets the value of a variable n to 0.

In the random number $\alpha$ selection step S637, the random number $\alpha$ selection unit 122, using the CPU 911, uniformly randomly selects an integer $\alpha_n$ out of integers from 1 to less than p.

In the random number $\beta$ selection step S638, the random number $\beta$ selection unit 123, using the CPU 911, uniformly randomly selects an integer $\beta_n$ out of integers from 1 to less than p.

In the secret element a computation step S639, based on the generator $g_2$ selected by the second generator selection unit 112 in the second generator selection step S632 and the integer $\alpha_n$ selected by the random number $\alpha$ selection unit 122 in the random number $\alpha$ selection step S637, the secret element a computation unit 142, using the CPU 911, calculates the generator $g_2$ raised to the power of $\alpha_n$ and obtains an element $a'_n$ which is an element of the multiplicative group G2.

In the secret element b computation step S640, based on the generator $g_2$ selected by the second generator selection unit 112 in the second generator selection step S632 and the integer $\beta_n$ selected by the random number $\beta$ selection unit 123 in the random number $\beta$ selection step S638, the secret element b computation unit 143, using the CPU 911, calculates the generator $g_2$ raised to the power of $\beta_n$ and obtains an element $b'_n$ which is an element of the multiplicative group G2.

In the 1 (alphabet 1) initialization step S641, the random number $\theta$ selection unit 124, using the CPU 911, sets the value of a variable 1 to 0.

In the random number $\theta$ selection step S642, the random number $\theta$ selection unit 124, using the CPU 911, uniformly randomly selects an integer $\theta_{n,1}$ out of integers from 1 to less than p.

In the public element a computation step S643, based on the integer $\alpha_n$ selected by the random number $\alpha$ selection unit 122 in the random number $\alpha$ selection step S637 and the integer $\theta_{n,1}$ selected by the random number $\theta$ selection unit 124 in the random number $\theta$ selection step S642, the public element a computation unit 132, using the CPU 911, computes a product "$\alpha_n \cdot \theta_{n,1}$" of the integer $\alpha_n$ and the integer $\theta_{n,1}$. Based on the computed product "$\alpha_n \cdot \theta_{n,1}$" and the generator $g_1$ selected by the first generator selection unit 111 in the first generator selection step S631, the public element a computation unit 132, using the CPU 911, calculates the generator $g_1$ raised to the power of "$\alpha_n \cdot \theta_{n,1}$" and obtains an element $a_{n,1}$ which is an element of the multiplicative group G1.

In the public element b computation step S644, based on the integer $\beta_n$ selected by the random number $\beta$ selection unit 123 in the random number $\beta$ selection step S638 and the integer $\theta_{n,1}$ selected by the random number $\theta$ selection unit 124 in the random number $\theta$ selection step S642, the public element b computation unit 133, using the CPU 911, computes a product "$\beta_n \cdot \theta_{n,1}$" of the integer $\beta_n$ and the integer $\theta_{n,1}$. Based on the computed product "$\beta_n \cdot \theta_{n,1}$" and the generator $g_1$ selected by the first generator selection unit 111 in the first generator selection step S631, the public element b computation unit 133 calculates the generator $g_1$ raised to the power of "$\beta_n \cdot \theta_{n,1}$" and obtains an element $b_{n,1}$ which is an element of the multiplicative group G1.

In the secret element y computation step S645, based on the element $a'_n$ computed by the secret element a computation unit 142 in the secret element a computation step S639 and the product "$B_n \cdot \theta_{n,1}$" computed by the public element b computation unit 133 in the public element b computation step S644, the secret element y computation unit 144, using the CPU 911, calculates the element $a'_n$ raised to the power of "$\beta_n \cdot \theta_{n,1}$" and obtains an element $y'_{n,1}$ which is an element of the multiplicative group G2.

In the 1 (alphabet 1) increment step S646, the random number $\theta$ selection unit 124, using the CPU 911, increments the value of the variable 1 by one.

In the 1 (alphabet 1) determination step S647, the random number $\theta$ selection unit 124, using the CPU 911, compares the value of the variable 1 and an integer D.

If the value of the variable 1 is not greater than the integer D, the random number $\theta$ selection unit 124, using the CPU 911, returns to the random number $\theta$ selection step S642 and selects a next integer $\theta_{n,1}$.

If the value of the variable 1 is greater than the integer D, the random number $\theta$ selection unit 124, using the CPU 911, proceeds to the n increment step S648.

In the n increment step S648, the random number $\alpha$ selection unit 122, using the CPU 911, increments the value of the variable n by one.

In the n determination step S649, the random number a selection unit 122, using the CPU 911, compares the value of the variable n and the value (D+1) obtained by adding one to the integer D.

If the value of the variable n is not greater than the value (D+1), the random number $\alpha$ selection unit 122, using the CPU 911, returns to the random number $\alpha$ selection step S637 and selects a next integer $\alpha_n$.

If the value of the variable n is greater than the value (D+1), the random number $\alpha$ selection unit 122 fmishes the public parameter generation process S630.

In this way, the steps from the random number $\alpha$ selection step S637 to the n determination step S649 are repeated (D+2) number of times. Thus, the random number $\alpha$ selection unit 122 executes the random number $\alpha$ selection step S637 (D+2) number of times and selects (D+2) number of integers $\alpha_n$. The random number $\beta$ selection unit 123 executes the random number $\beta$ selection step S638 (D+2) number of times and selects (D+2) number of integers $\beta_n$. The secret element a computation unit 142 executes the secret element a computation step S639 (D+2) number of times and computes (D+2) number of elements $a'_n$. The secret element b computation unit 143 executes the secret element b computation step S640 (D+2) number of times and computes (D+2) number of elements $b'_n$.

The steps from the random number $\theta$ selection step S642 to the 1 (alphabet 1) determination step S647 are repeated (D+1) number of times for each repeat of the variable n. Thus, the public element a computation unit 132 executes the public element a computation step S643 (D+2)×(D+1) number of times and computes (D+2)×(D+1) number of elements $a_{n,1}$. The public element b computation unit 133 executes the public element b computation step S644 (D+2)×(D+1) number of times and computes (D+2)×(D+1) number of elements $b_{n,1}$. The secret element y computation unit 144 executes the secret element y computation step S645 (D+2)×(D+1) number of times and computes (D+2)×(D+1) number of elements $y'_{n,1}$.

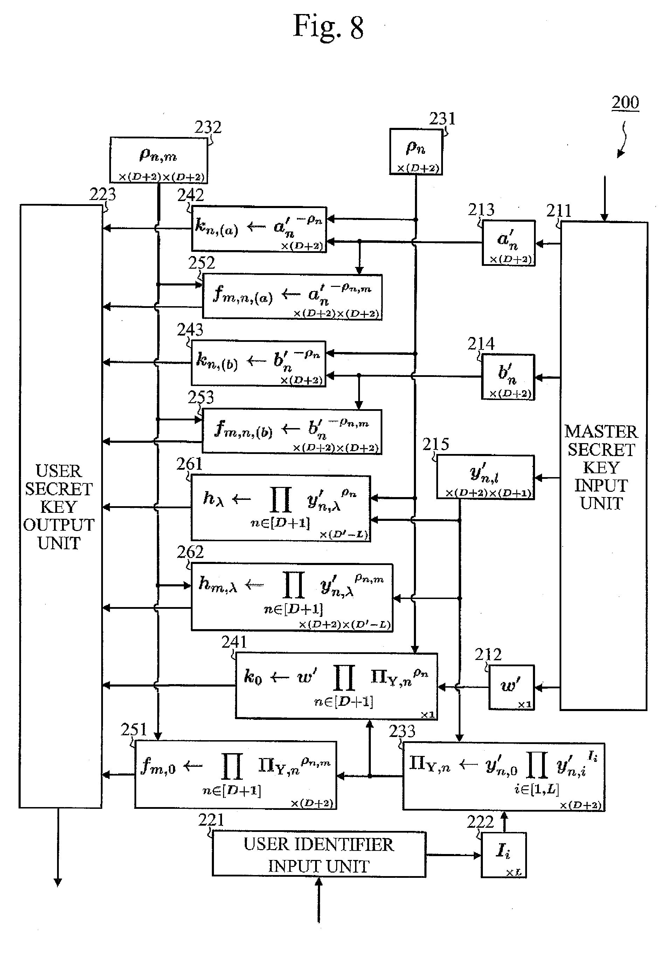

Fig. 8 is a block configuration diagram showing an example of a configuration of functional blocks of the user secret key generation device 200 in this embodiment.

Based on the master secret key generated by the public parameter generation device 100, the user secret key generation device 200 generates a user secret key to be provided to each query issuing device 300.

The user secret key generation device 200 has a master secret key input unit 211, a secret element w storage unit 212, a secret element a storage unit 213, a secret element b storage unit 214, a secret element y storage unit 215, a user identifier input unit 221, an identifier storage unit 222, a random number p selection unit 231, a secondary random number $\rho$ selection unit 232, a total product element Y computation unit 233, a search element computation unit 241, a search element a computation unit 242, a search element b computation unit 243, a derangement element computation unit 251, a derangement element a computation unit 252, a derangement element b computation unit 253, a delegation element computation unit 261, a secondary delegation element computation unit 262, and a user secret key output unit 223.

The master secret key input unit 211, using the CPU 911, inputs the master secret key output by the public parameter generation device 100. The master secret key includes data representing an element w' which is an element of the multiplicative group G2, (D+2) number of elements $a'_n$ which are elements of the multiplicative group G2, (D+2) number of elements $b'_n$ which are elements of the multiplicative group G2, and (D+2)×(D+1) number of elements $y'_{n,1}$

which are elements of the multiplicative group G2.

The secret element w storage unit 212, using the CPU 911, inputs data representing the element w' out of the master secret key input by the master secret key input unit 211. The secret element w storage unit 212, using the magnetic disk device 920, stores the data representing the element w'.

The secret element a storage unit 213, using the CPU 911, inputs data representing the (D+2) number of elements $a'_n$ out of the master secret key input by the master secret key input unit 211. The secret element a storage unit 213, using the magnetic disk device 920, stores the data representing the (D+2) number of elements $a'_n$.

The secret element b storage unit 214, using the CPU 911, inputs data representing the (D+2) number of elements $b'_n$ out of the master secret key input by the master secret key input unit 211. The secret element b storage unit 214, using the magnetic disk device 920, stores the data representing the (D+2) number of elements $b'_n$.

The secret element y storage unit 215, using the CPU 911, inputs data representing the $(D+2)\times(D+1)$ number of elements $y'_{n,1}$ out of the master secret key input by the master secret key input unit 211. The secret element y storage unit 215, using the magnetic disk device 920, stores the data representing the $(D+2)\times(D+1)$ number of elements $y'_{n,1}$.

The user identifier input unit 221, using the CPU 911, inputs data representing L number of integers $I_i$ as a user ID of the query issuing device 300 requesting generation of a user secret key, where i is an integer from 1 to L. $I_i$ is an integer from 0 to less than p. Each integer $I_i$ corresponds to each segment of the user ID. An integer $I_1$ corresponds to the first segment of L number of segments of the user ID. An integer $I_2$ corresponds to the second segment of the L number of segments of the user ID. An integer $I_L$ corresponds to the last segment of the L number of segments of the user ID.

When the user ID is a character string, it is necessary to convert each segment of the user ID, which is a character string, into an integer from 0 to less than p. The user identifier input unit 221 may be configured to interpret a bit string that represents each segment of the user ID, which is a character string, internally in the computer as a bit string representing an integer. Alternatively, the user identifier input unit 221 may be configured to convert each segment of the user ID into an integer by using a hash function that converts a character string of an arbitrary length into an integer from 0 to less than p.

The identifier storage unit 222, using the RAM 914, stores data representing the L number of integers $I_i$ input by the user identifier input unit 221.

The random number $\rho$ selection unit 231, using the CPU 911, uniformly randomly selects (D+2) number of integers out of integers from 0 to less than p. The integers selected by the random number $\rho$ selection unit 231 will hereinafter be referred to as "$\rho_n$", where n is an integer from 0 to (D+1). The random number $\rho$ selection unit 231, using the RAM 914, stores data representing the (D+2) number of selected integers $\rho_n$.

The secondary random number $\rho$ selection unit 232, using the CPU 911, uniformly randomly selects $(D+2)\times(D+2)$ number of integers out of integers from 0 to less than p. The integers selected by the secondary random number p selection unit 232 will hereinafter be referred to as "$\rho_{n,m}$", where n is an integer from 0 to (D+1) and m is an integer from 0 to (D+1).

The total product element Y computation unit 233, using the CPU 911, inputs the data representing the $(D+2)\times(D+1)$ number of elements $y'_{n,1}$ stored by the secret element y storage unit 215 and the data representing the L number of integers $I_i$ stored by the identifier storage unit 222.

The total product element Y computation unit 233, using the CPU 911 and for each integer $I_i$, calculates each of L(D+2) number of elements $y'_{n,i}$ raised to the power of $I_i$, where the elements $y'_{n,i}$ are elements $y'_{n,1}$ having 1 (alphabet 1) equal to i out of the $(D+2)\times(D+1)$ number of elements $y'_{n,1}$. There are L number of integers $I_i$, so that the total product element Y computation unit 233 computes a total of $(D+2)\times L$ number of elements "$y'_{n,i}{}^{\wedge}I_i$". The element "$y'_{n,i}{}^{\wedge}I_i$" computed by the total product element Y computation unit 233 is an element of the multiplicative group G2.

Based on (D+2) number of elements $y'_{n,0}$ having 1 (alphabet 1) equal to 0 out of the $(D+2)\times(D+1)$ number of elements $y'_{n,1}$ and the $(D+2)\times L$ number of computed elements "$y'_{n,i}{}^{\wedge}I_i$", the total product element Y computation unit 233, using the CPU 911 and for each element $y'_{n,0}$, calculates a total product of a total of (L+1) number of elements which are the element $y'_{n,0}$ and L number of elements "$y'_{n,1}{}^{\wedge}I_i$" having the same n as $y'_{n,0}$. The total product computed by the total product element Y computation unit 233 will hereinafter be referred to as "$\Pi_{Y,n}$", where n is an integer from 0 to (D+1). $\Pi_{Y,n}$ is an element of the multiplicative group G2. There are (D+2) number of elements $y'_{n,0}$, so that the total product element Y computation unit 233 computes a total of (D+2) number of elements $\Pi_{Y,n}$. The total product element Y computation unit 233, using the RAM 914, stores data representing the (D+2) number of computed elements $\Pi_{Y,n}$.

The search element computation unit 241, using the CPU 911, inputs the data representing the element w' stored by the secret element w storage unit 212, the data representing the (D+2) number of integers $\rho_n$ stored by the random number $\rho$ selection unit 231, and the data representing the (D+2) number of elements $\Pi_{Y,n}$ stored by the total product element Y computation unit 233.

The search element computation unit 241, using the CPU 911 and for each of the (D+2) number of integers $\rho_n$, calculates the element $\Pi_{Y,n}$ raised to the power of $\rho_n$, where the element $\Pi_{Y,n}$ has the same n as $\rho_n$. The (D+2) number of elements "$\Pi_{Y,n}{}^{\wedge}\rho_n$" computed by the search element computation unit 241 are elements of the multiplicative group G2.

The search element computation unit 241, using the CPU 911, calculates a total product of a total of (D+3) number of elements which are the (D+2) number of computed elements "$H_{Y,n}{}^{\wedge}\rho_n$" and the element w'. The total product computed by the search element computation unit 241 will hereinafter be referred to as "$k_0$". $k_0$ is an element of the multiplicative group G2. The search element computation unit 241, using the RAM 914, stores data representing the computed element $k_0$.

The search element a computation unit 242, using the CPU 911, inputs the data representing the (D+2) number of elements $a'_n$ stored by the secret element a storage unit 213 and the data representing the (D+2) number of integers $\rho_n$ stored by the random number $\rho$ selection unit 231. The search element a computation unit 242, using the CPU 911 and for each of the (D+2) number of integers $\rho_n$, calculates the element $a'_n$ raised to the power of "$-\rho_n$", where the element $a'_n$ has the same n as $\rho_n$. The element "$a'_n{}^{\wedge}(-\rho_n)$" computed by the search element a computation unit 242 will hereinafter be referred to as "$k_{n,(a)}$", where n is an integer from 0 to (D+1). $k_{n,(a)}$ is an element of the multiplicative group G2. The search element a computation unit 242, using the RAM 914, stores data representing the (D+2) number of computed elements $k_{n,(a)}$.

The search element b computation unit 243, using the CPU 911, inputs the data representing the (D+2) number of elements $b'_n$ stored by the secret element b storage unit 214 and the data representing the (D+2) number of integers $\rho_n$ stored by the random number $\rho$ selection unit 231. The search element b computation unit 243, using the CPU 911 and for each of the (D+2) number of integers $\rho_n$, calculates the element $b'_n$ raised to the power of "$-\rho_n$", where the element $b'_n$ has the same n as $\rho_n$. The element "$b'_n{}^{\wedge}(-\rho_n)$" computed by the search element b computation unit 243 will hereinafter be referred to as "$k_{n,(b)}$", where n is an integer from 0 to (D+1). $k_{n,(b)}$ is an element of the multiplicative group G2. The search element b computation unit 243, using the RAM 914, stores data representing the (D+2) number of computed elements $k_{n,(b)}$.

The derangement element computation unit 251, using the CPU 911, inputs the data representing the (D+2) $\times$(D+2) number of integers $\rho_{n,m}$ stored by the secondary random number $\rho$ selection unit 232 and the data representing the (D+2) number of elements $H_{Y,n}$ stored by the total product element Y computation unit 233. The derangement element computation unit 251, using the CPU 911 and for each of the (D+2)$\times$(D+2) number of integers $\rho_{n,m}$, calculates the element $\Pi_{Y,n}$ raised to the power of $\rho_{n,m}$, where the element $\Pi_{Y,n}$ has the same n as $\rho_{n,m}$. The (D+2)$\times$(D+2) number of elements "$\Pi_{Y,n}{}^{\wedge}\rho_{n,m}$" computed by the derangement element computation unit 251 are elements of the multiplicative group G2.

The derangement element computation unit 251, using the CPU 911, divides the (D+2)$\times$(D+2) number of computed elements "$\Pi_{Y,n}{}^{\wedge}\rho_{n,m}$" into groups of (D+2) number of elements having the same value as m and varying values as n, and calculates a total product of each group of (D+2) number of elements "$\Pi_{Y,n}{}^{\wedge}\rho_{n,m}$". The total product computed by the derangement element computation unit 251 will hereinafter be referred to as "$f_{m,0}$", where m is an integer from 0 to (D+1). $f_{m,0}$ is an element of the multiplicative group G2. When the (D+2)$\times$ (D+2) number of elements "$\Pi_{Y,n}{}^{\wedge}\rho_{n,m}$" are divided into groups of (D+2) number of elements having the same value as m and varying values as n, (D+2) number of groups are generated. Thus, the derangement element computation unit 251 computes (D+2) number of elements $f_{m,0}$. The derangement element computation unit 251, using the RAM 914, stores data representing the (D+2) number of computed elements $f_{m,0}$.

The derangement element a computation unit 252, using the CPU 911, inputs the data representing the (D+2) number of elements $a'_n$ stored by the secret element a storage unit 213 and the data representing the (D+2)$\times$(D+2) number of integers $\rho_{n,m}$ stored by the secondary random number $\rho$ selection unit 232. The derangement element a computation unit 252, using the CPU 911 and for each of the (D+2)$\times$(D+2) number of integers $\rho_{n,m}$, calculates the element $a'_n$ raised to the power of "$-\rho_{n,m}$", where the element $a'_n$ has the same n as $\rho_{n,m}$, The element "$a'_n{}^{\wedge}\rho_{n,m}$" computed by the derangement element a computation unit 252 will hereinafter be referred to as "$f_{m,n,(a)}$", where m is an integer from 0 to (D+1) and n is an integer from 0 to (D+1). $f_{m,n,(a)}$ is an element of the multiplicative group G2. The derangement element a computation unit 252, using the RAM 914, stores data representing the (D+2)$\times$(D+2) number of computed elements $f_{m,n,(a)}$.

The derangement element b computation unit 253, using the CPU 911, inputs the data representing the (D+2) number of elements $b'_n$ stored by the secret element b storage unit 214 and the data representing the (D+2)$\times$(D+2) number of integers $\rho_{n,m}$ stored by the secondary random number $\rho$ selection unit 232. The derangement element b computation unit 253, using the CPU 911 and for each of the (D+2)$_X$(D+2) number of integers $\rho_{n,m}$, calculates the element $b'_n$ raised to the power of "$-\rho_{n,m}$", where the element $b'_n$ has the same n as $\rho_{n,m}$. The element "$b'_n{}^{\wedge}(-\rho_{n,m})$" computed by the derangement element b computation unit 253 will hereinafter be referred to as "$f_{m,n,(b)}$", where m is an integer from 0 to (D+1) and n is an integer from 0 to (D+1). $f_{m,n,(b)}$ is an element of the multiplicative group G2. The derangement element b computation unit 253, using the RAM 914, stores data representing the (D+2)$\times$(D+2) number of computed elements $f_{m,n,(b)}$.

The delegation element computation unit 261, using the CPU 911, inputs the data representing the (D+2)$\times$ (D+1) number of elements $y'_{n,1}$ stored by the secret element y storage unit 215 and the data representing the (D+2) number of integers $\rho_n$ stored by the random number $\rho$ selection unit 231. Although not illustrated, the delegation element computation unit 261, using the CPU 911, inputs data representing an integer D' indicating an authorization to be given to the query issuing device 300 having the user ID input by the user identifier input unit 221.

The integer D' is an integer from (L+1) to D. The integer D' indicates whether to give the query issuing device 300 only an authorization to search or also an authorization to generate a user secret key of another query issuing device 300 in a subgroup under its own group. When an authorization to generate a user secret key is given, the integer D' indicates how many levels of generation authorization is to be given.

When the integer D' is equal to (L+1), this means that the said query issuing device 300 is given only an authorization to search using its own user secret key without being given an authorization to generate a user secret key of another query issuing device 300 in a subgroup under its own group.

When the integer D' is equal to (L+2), this means that the said query issuing device 300 is given not only an authorization to search using its own user secret key but also an authorization to generate a user secret key of another query issuing device 300 at sub level 1. The query issuing device 300 at sub level 1 refers to a query issuing device 300 whose user ID has (L+1) number of segments of which L number of segments from the first to the L-th segments are identical with those of the said query issuing device 300. The query issuing device 300 at sub level 1 will hereinafter be referred to as a "child query issuing device". In the example shown in Figs. 1 and 2, the query issuing device 300a has two child query issuing devices, namely the query issuing devices 300d and 300e. The query issuing device 300f has two child query issuing devices, namely the query issuing devices 300i and 300j. A user secret key of a child query issuing device will be referred to as a "child user secret key".

When the integer D' is equal to (L+3), this means that the said query issuing device 300 is given an authorization to generate a user secret key of another query issuing device 300 at sub level 2. The query issuing device 300 at sub level 2 refers to a query issuing device 300 whose user ID has (L+2) number of segments of which L number of segments from the first to the L-th segments are identical with those of the said query issuing device 300. The query issuing device 300 at sub level 2 will hereinafter be referred to as a "grandchild query issuing device". In the example shown in Figs. 1 and 2, the query issuing device 300c has three grandchild query issuing devices, namely the query issuing devices 300i to 300k. The query issuing device 300f has three grandchild query issuing devices, namely the query issuing devices 300l to 300n. A user secret key of a grandchild query issuing device will be referred to as a "grandchild user secret key". Likewise, when the integer D' is equal to (L+x+1), this means that an authorization is given to generate a user secret key of another query issuing device 300 at sub level x. The query issuing device 300 at sub level x refers to a query issuing device 300 whose user ID has (L+x) number of segments of which L number of segments from the first to the L-th segments are identical with those of the said query issuing device 300.

When the integer D' is (L+2) or greater, an authorization is given to further give an authorization to another query issuing device 300 in a subgroup under its own group to generate a user secret key by using a user secret key generated by the said query issuing device. However, each query issuing device 300 cannot give a greater authorization than its own authorization to query issuing device in a subgroup under its own group. For example, when the said query issuing device 300 is given an authorization to generate a child user secret key and a grandchild user secret key, the said query issuing device 300 can give to a child query issuing device an authorization to generate a child user secret key (a grandchild user secret key in relation to the said query issuing device 300). However, the said query issuing device 300 cannot give to a child query issuing device an authorization to generate a grandchild user secret key (a great-grandchild user secret key in relation to the said query issuing device 300).

The integer D' may be a predetermined constant, or may be input on each occasion by an administrator of the secure search system 800. Alternatively, the user secret key generation device 200 may be configured to compute the integer D' according to a predetermined rule.

The delegation element computation unit 261, using the CPU 911 and for each integers $\rho_n$, calculates each of (D'-L) number of elements $y'_{n,\lambda}$ raised to the power of $\rho_n$, where the elements $y'_{n,\lambda}$ are elements $y'_{n,1}$ having 1 (alphabet 1) equal to the integer $\lambda$, from (L+1) to D' out of (D+1) number of elements $y'_{n,1}$ having the same n as $\rho_n$. The element "$y'_{n,\lambda}{}^{\wedge}\rho_n$" computed by the delegation element computation unit 261 is an element of the multiplicative group G2. There are (D+2) number of integers $\rho_n$, so that the delegation element computation unit 261 computes $(D+2)\times(D'-L)$ number of elements "$y'_{n,\lambda}{}^{\wedge}\rho_n$".

The delegation element computation unit 261, using the CPU 911, divides the $(D+2)\times(D'-L)$ number of computed elements "$y'_{n,\lambda}{}^{\wedge}\rho_n$" into groups of (D+2) number of elements having the same value as $\lambda$ and varying values as n, and calculates a total product of (D+2) number of grouped elements "$y'_{n,\lambda}{}^{\wedge}\rho_n$". The total product computed by the delegation element computation unit 261 will hereinafter be referred to as "$h_\lambda$", where $\lambda$ is an integer from (L+1) to (D'-L). $h_\lambda$ is an element of the multiplicative group G2. When the $(D+2)\times(D'-L)$ number of elements "$y_{n,\lambda}{}^{\wedge}\rho_n$" are divided into groups of (D+2) number of elements having the same value as $\lambda$ and varying values as n, (D'-L) number of groups are generated. Thus, the delegation element computation unit 261 computes (D'-L) number of elements $h_\lambda$. The delegation element computation unit 261, using the RAM 914, stores data representing the (D'-L) number of computed elements $h_\lambda$.

The secondary delegation element computation unit 262, using the CPU 911, inputs the data representing the integer D', the data representing the (D+2)x(D+1) number of elements $y'_{n,1}$ stored by the secret element y storage unit 215, and the data representing the $(D+2) \times (D+2)$ number of integers $\rho_{n,m}$ stored by the secondary random number $\rho$ selection unit 232.

The secondary delegation element computation unit 262, using the CPU 911 and for each integer $\rho_{n,m}$, calculates each of $(D'-L)$ number of elements $y'_{n,\lambda}$ raised to the power of $\rho_{n,m}$, where the elements $y'_{n,\lambda}$ are elements $y'_{n,1}$ having 1 (alphabet 1) equal to the integer $\lambda$ from $(L+1)$ to $D'$ out of $(D+1)$ number of elements $y'_{n,1}$ having the same n as $\rho_{n,m}$. The element "$y'_{n,\lambda}{}^{\wedge}\rho_{n,m}$" computed by the secondary delegation element computation unit 262 is an element of the multiplicative group G2. There are $(D+2) \times (D+2)$ number of integers $\rho_{n,m}$, so that the secondary delegation element computation unit 262 computes a total of $(D+2) \times (D+2) \times (D'-L)$ number of elements "$y'n,\lambda{}^{\wedge}\rho_{n,m}$".

The secondary delegation element computation unit 262, using the CPU 911, divides the $(D+2) \times (D+2) \times (D'-L)$ number of computed elements "$y'_{n,\lambda}{}^{\wedge}\rho_{n,m}$" into groups of $(D+2)$ number of elements having the same value as m, the same value as $\lambda$, and varying values as n, and calculates a total product of $(D+2)$ number of grouped elements "$y'_{n,\lambda}{}^{\wedge}\rho_{n,m}$". The total product computed by the secondary delegation element computation unit 262 will hereinafter be referred to as "$h_{m,\lambda}$", where m is an integer from 0 to $(D+1)$ and $\lambda$ is an integer from $(L+1)$ to $D'$. $h_{n,k}$ is an element of the multiplicative group G2. When the $(D+2) \times (D+2) \times (D'-L)$ number of elements "$y'_{n,\lambda}{}^{\wedge}\rho_{n,m}$" are divided into groups of $(D+2)$ number of elements having the same value as m, the same value as $\lambda$, and varying values as n, $(D+2) \times (D'-L)$ number of groups are generated. Thus, the secondary delegation element computation unit 262 computes $(D+2) \times (D'-L)$ number of elements $h_{m,\lambda}$. The secondary delegation element computation unit 262, using the RAM 914, stores data representing the $(D+2) \times (D'-L)$ number of computed elements $h_{m,\lambda}$.

The user secret key output unit 223, using the CPU 911, inputs the data representing the element $k_0$ stored by the search element computation unit 241, the data representing the $(D+2)$ number of elements $k_{n,(a)}$ stored by the search element a computation unit 242, and the data representing the $(D+2)$ number of elements $k_{n,(b)}$ stored by the search element b computation unit 243. The user secret key output unit 223, using the CPU 911, also inputs the data representing the $(D+2)$ number of elements $f_{m,0}$ stored by the derangement element computation unit 251, the data representing the $(D+2) \times (D+2)$ number of elements $f_{m,n,(a)}$ stored by the derangement element a computation unit 252, and the data representing the $(D+2) \times (D+2)$ number of elements $f_{m,n,(b)}$ stored by the derangement element b computation unit 253. The user secret key output unit 223, using the CPU 911, also inputs the data representing the $(D'-L)$ number of elements $h_\lambda$ stored by the delegation element computation unit 261 1 and the data representing the $(D+2) \times (D'-L)$ number of elements $h_{m,\lambda}$ stored by the secondary delegation element computation unit 262.

The user secret key output unit 223, using the CPU 911, outputs data including the data representing the element ko, the $(D+2)$ number of elements $k_{n,(a)}$, the $(D+2)$ number of elements $k_{n,(b)}$, the $(D+2)$ number of elements $f_{m,0}$, the $(D+2) \times (D+2)$ number of elements $f_{m,n,(a)}$, the $(D+2) \times (D+2)$ number of elements $f_{m,n,(b)}$, the $(D'-L)$ number of elements $h_\lambda$, and the $(D+2) \times (D'-L)$ number of elements $h_{m,\lambda}$, as a user secret key. The user secret key output by the user secret key output unit 223 is secretly notified to the query issuing device 300 having the user ID input by the user identifier input unit 221.

Once the user secret key has been generated, the integers $\rho_n$ stored by the random number $\rho$ selection unit 231 and the integers $\rho_{n,m}$ stored by the secondary random number $\rho$ selection unit 232 will not be subsequently used and thus may be erased. If generation of a user secret key is requested again from the same query issuing device 300, integers $\rho_n$ and integers $\rho_{n,m}$ may be newly selected independently of the integers $\rho_n$ and the integers $\rho_{n,m}$ previously selected.

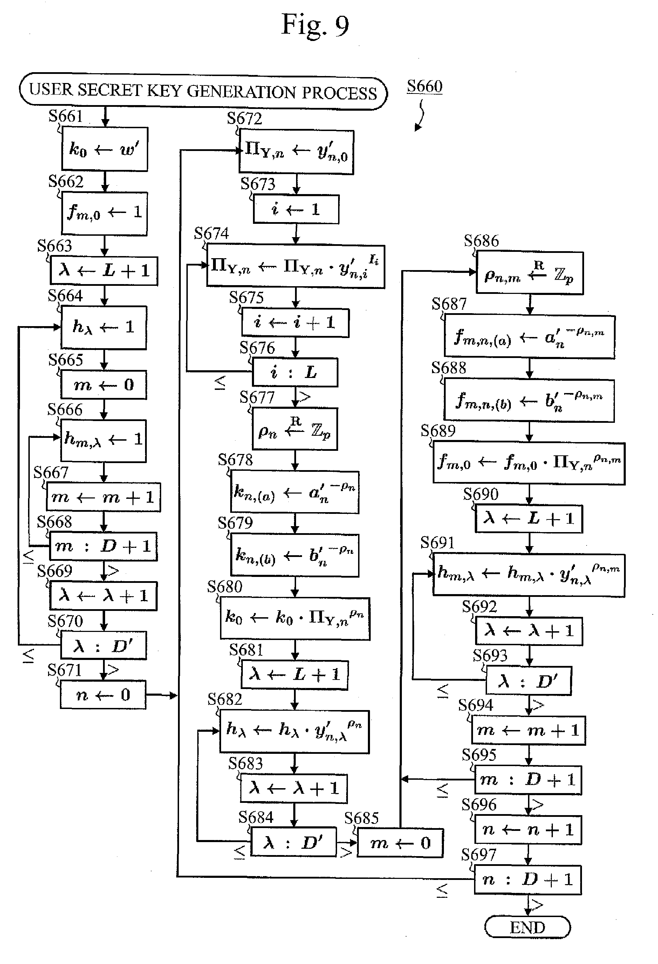

Fig. 9 is a flowchart showing an example of a flow of a user secret key generation process S660 in this embodiment.

In the user secret key generation process S660, the user secret key generation device 200 generates a user secret key. A specific procedure for computing a user secret key will be described here. However, the calculation procedure is not limited to the procedure described here and may be different from the procedure described here, provided that mathematically equivalent results can be obtained.

The user secret key generation process S660 has a search element initialization step S661, a derangement element initialization step S662, a $\lambda$ initialization step S663, a delegation element initialization step S664, an m initialization step S665, a secondary delegation element initialization step S666, an m increment step S667, an m determination step S668, a $\lambda$ increment step S669, a $\lambda$ determination step S670, an n initialization step S671, a total product element Y initialization step S672, an i initialization step S673, a total product element Y calculation step S674, an i increment step S675, an i comparison step S676, a $\rho$ selection step S677, a search element a computation step S678, a search element b computation step S679, a search element calculation step S680, a $\lambda$ initialization step S681, a delegation element calculation step S682, a $\lambda$ increment step S683, a $\lambda$ determination step S684, an m initialization step S685, a secondary random number $\rho$ selection step S686, a derangement element a computation step S687, a derangement element b computation step S688, a derangement element calculation step S689, a $\lambda$ initialization step S690, a secondary delegation element calculation step S691, a $\lambda$ increment step S692, a $\lambda$ determination step S693, an m increment step S694, an m determination step S695, an n increment step S696, and an n determination step S697.

In the search element initialization step S661, the search element computation unit 241, using the RAM 914, stores the element w' stored by the secret element w storage unit 212 as a first value for calculating an element $k_0$.

In the derangement element initialization step S662, the derangement element computation unit 251, using the RAM 914, stores the identity element 1 of the multiplicative group G2 as a first value for calculating an element $f_{m,0}$.

In the $\lambda$ initialization step S663, the delegation element computation unit 261, using the CPU 911, sets the value of a variable $\lambda$ to a value obtained by adding one to the integer L.

In the delegation element initialization step S664, the delegation element computation unit 261, using the RAM 914, stores the identity element 1 of the multiplicative group G2 as a first value for calculating an element $h_\lambda$.

In the m initialization step S665, the secondary delegation element computation unit 262, using the CPU 911, sets the value of a variable m to 0.

In the secondary delegation element initialization step S666, the secondary delegation element computation unit 262, using the RAM 914, stores the identity element 1 of the multiplicative group G2 as a first value for calculating an element $h_{m,\lambda}$.

In the m increment step S667, the secondary delegation element computation unit 262, using the CPU 911, increments the value of the variable m by one.

In the m determination step S668, the secondary delegation element computation unit 262, using the CPU 911, compares the value of the variable m and the value (D+1) obtained by adding one to the integer D.

If the value of the variable m is not greater than (D+1), the secondary delegation element computation unit 262, using the CPU 911, returns to the secondary delegation element initialization step S666 and sets a next element $h_{m,\lambda}$.

If the value of the variable m is greater than (D+1), the secondary delegation element computation unit 262, using the CPU 911, finishes the setting of (D+2) number of elements $h_{m,\lambda}$ and proceeds to the $\lambda$ increment step S669.

In the $\lambda$ increment step S669, the delegation element computation unit 261, using the CPU 911, increments the value of the variable $\lambda$ by one.

In the $\lambda$ determination step S670, the delegation element computation unit 261, using the CPU 911, compares the value of the variable $\lambda$ and the integer D'.

If the value of the variable $\lambda$ is not greater than D', the delegation element computation unit 261, using the CPU 911, returns to the delegation element initialization step S664 and sets a next element $h_\lambda$.

If the value of the variable $\lambda$ is greater than D', the delegation element computation unit 261, using the CPU 911, finishes the setting of (D'-L) number of elements $h_\lambda$ and (D+2)×(D'-L) number of elements $h_{m,\lambda}$ and proceeds to the n initialization step S671.

In this way, the steps from the delegation element initialization step S664 to the $\lambda$ determination step S670 are repeated (D'-L) number of times. Thus, the delegation element computation unit 261 executes the delegation element initialization step S664 (D'-L) number of times and stores the first value of the element $h_\lambda$ for each of (D'-L) number of integers $\lambda$ from (L+1) to D'. The delegation element computation unit 261 stores a total of (D'-L) number of elements $h_\lambda$. The steps from the secondary delegation element initialization step S666 to the m determination step S668 are repeated (D+2) number of times for each repeat of the variable $\lambda$. Thus, the secondary delegation element computation unit 262 executes the secondary delegation element initialization step S666 (D+2)×(D'-L) number of times and stores the first value of the element $h_{m,\lambda}$ for each of (D+2)×(D'-L) number of combinations (m,$\lambda$) which are combinations of (D+2) number of integers m from 0 to (D+1) and (D'-L) number of integers $\lambda$ from (L+1) to D'. The secondary delegation element computation unit 262 stores a total of (D+2)×(D'-L) number of elements $h_{m,\lambda}$.

In the n initialization step S671, the total product element Y computation unit 233, using the CPU 911, set the value of the variable n to 0.

In the total product element Y initialization step S672, the total product element Y computation unit 233, using the RAM 914, stores an element $y'_{n,0}$ having n equal to the value of the variable n and 1 (alphabet 1) equal to 0 out of the (D+2)×(D+1) number of elements $y'_{n,1}$ stored by the secret element y storage unit 215, as a first value for calculating an element $\Pi_{Y,n}$.

In the i initialization step S673, the total product element Y computation unit 233, using the CPU 911, sets the value of a variable i to one.

In the total product element Y calculation step S674, based on an element $y'_{n,1}$ having n equal to the value of the variable n and 1 (alphabet 1) equal to the value of the variable i out of the (D+2)×(D+1) number of elements $y'_{n,1}$ stored by the secret element y storage unit 215 and an integer $I_i$ having i equal to the value of the variable i out of the L number of integers $I_i$ stored by the identifier storage unit 222, the total product element Y computation unit 233, using the CPU 911, calculates the element $y'_{n,i}$ raised to the power of $I_i$. Based on the stored element $\Pi_{Y,n}$ and the calculated element "$y'_{n,i}{}^{\wedge}I_i$", the total product element Y computation unit 233, using the CPU 911, calculates a product "$\Pi_{Y,n} \cdot y'_{n,1}{}^{\wedge}I_i$" of the element $\Pi_{Y,n}$ and the element "$y'_{n,i}{}^{\wedge}I_i$". The total product element Y computation unit 233, using the RAM 914, stores the calculated product "$\Pi_{Y,n} \cdot y'_{n,1}{}^{\wedge}I_i$" as a new value of the element $\Pi_{Y,n}$.

In the i increment step S675, the total product element Y computation unit 233, using the CPU 911, increments the value of the variable i by one.

In the i comparison step S676, the total product element Y computation unit 233, using the CPU 911, compares the value of the variable i and the integer L.

If the value of the variable i is not greater than the integer L, the total product element Y computation unit 233, using the CPU 911, returns to the total product element Y calculation step S674 and continues with the calculation of the element $\Pi_{Y,n}$.

If the value of the variable i is greater than the integer L, the total product element Y computation unit 233, using the CPU 911, finishes the calculation of the element $\Pi_{Y,n}$ and proceeds to the $\rho$ selection step S677.

In the $\rho$ selection step S677, the random number p selection unit 231, using the CPU 911, uniformly randomly selects an integer $\rho_n$ out of integers from 0 to less than p.

In the search element a computation step S678, based on an element $a'_n$ having n equal to the variable n out of the (D+2) number of elements $a'_n$ stored by the secret element a storage unit 213 and the integer $\rho_n$ selected by the random number $\rho$ selection unit 231 in the $\rho$ selection step S677, the search element a computation unit 242, using the CPU 911, calculates the element $a'_n$ raised to the power of "$-\rho_n$" and obtains an element $k_{n,(a)}$ which is an element of the multiplicative group G2.

In the search element b computation step S679, based on an element $b'_n$ having n equal to the variable n out of the (D+2) number of elements $b'_n$ stored by the secret element b storage unit 214 and the integer $\rho_n$ selected by the random number $\rho$ selection unit 231 in the $\rho$ selection step S677, the search element b computation unit 243, using the CPU 911, calculates the element $b'_n$ raised to the power of "$-\rho_n$" and obtains an element $k_{n,(b)}$ which is an element of the multiplicative group G2.

In the search element calculation step S680, based on the element $\Pi_{Y,n}$ stored by the total product element Y computation unit 233 and the integer $\rho_n$ selected by the random number $\rho$ selection unit 231 in the $\rho$ selection step S677, the search element computation unit 241, using the CPU 911, calculates the element $\Pi_{Y,n}$ raised to the power of $\rho_n$. Based on the stored element $k_0$ and the calculated element "$\Pi_{Y,n}^{\wedge}\rho_n$", the search element computation unit 241, using the CPU 911, calculates a product of the element $k_0$ and the element "$\Pi_{Y,n}^{\wedge}\rho_n$". The search element computation unit 241, using the RAM 914, stores the calculated product "$k_0.\Pi_{Y,n}^{\wedge}\rho_n$" as a new value of the element $k_0$.

In the $\lambda$ initialization step S681, the delegation element computation unit 261, using the CPU 911, sets the value of the variable $\lambda$ to the value (L+1) obtained by adding one to the integer L.

In the delegation element calculation step S682, based on an element $y'_{n,\lambda}$ having n equal to the value of the variable n and 1 (alphabet 1) equal to the value of the variable $\lambda$ out of the (D+2)×(D+1) number of elements $y'_{n,1}$ stored by the secret element y storage unit 215 and the integer $\rho_n$ selected by the random number $\rho$ selection unit 231 in the $\rho$ selection step S677, the delegation element computation unit 261, using the CPU 911, calculates the element $y'_{n,\lambda}$ raised to the power of $\rho_n$. Based on an element $h_\lambda$ having $\lambda$ equal to the value of the variable $\lambda$ out of the (D'-L) number of stored elements $h_\lambda$ and the calculated element "$y'_{n,\lambda}^{\wedge}\rho_n$", the delegation element computation unit 261, using the CPU 911, calculates a product of the element $h_\lambda$ and the element "$y'_{n,\lambda}^{\wedge}\rho_n$". The delegation element computation unit 261, using the RAM 914, stores the calculated product "$h_\lambda \cdot y'_{n,\lambda}^{\wedge}\rho_n$" as a new value of the element $h_x$ having $\lambda$ equal to the value of the variable $\lambda$.

In the $\lambda$ increment step S683, the delegation element computation unit 261, using the CPU 911, increments the value of the variable $\lambda$ by one.

In the $\lambda$ determination step S684, the delegation element computation unit 261, using the CPU 911, compares the value of the variable $\lambda$ and the integer D'.

If the value of the variable $\lambda$ is not greater than the integer D', the delegation element computation unit 261, using the CPU 911, returns to the delegation element calculation step S682 and calculates a next element $h_\lambda$.

If the value of the variable $\lambda$ is greater than the integer D', the delegation element computation unit 261, using the CPU 911, proceeds to the m initialization step S685.

In the m initialization step S685, the secondary random number $\rho$ selection unit 232, using the CPU 911, sets the value of the variable m to 0.

In the secondary random number $\rho$ selection step S686, the secondary random number $\rho$ selection unit 232, using the CPU 911, uniformly randomly selects an integer $\rho_{n,m}$ out of integers from 0 to less than p.

In the derangement element a computation step S687, based on an element $a'_n$ having n equal to the value of the variable n out of the (D+2) number of elements $a'_n$ stored by the secret element a storage unit 213 and the integer $\rho_{n,m}$ selected by the secondary random number $\rho$ selection unit 232 in the secondary random number $\rho$ selection step S686, the derangement element a computation unit 252, using the CPU 911, calculates the element $a'_n$ raised to the power of "$-\rho_{n,m}$" and obtains an element $f_{m,n,(a)}$ which is an element of the multiplicative group G2.

In the derangement element b computation step S688, based on an element $b'_n$ having n equal to the value of the variable n out of the (D+2) number of elements $b'_n$ stored by the secret element b storage unit 214 and the integer $\rho_{n,m}$ selected by the secondary random number $\rho$ selection unit 232 in the secondary random number $\rho$ selection step S686, the derangement element b computation unit 253, using the CPU 911, calculates the element $b'_n$ raised to the power of "$-\rho_{n,m}$" and obtains an element $f_{m,n,(b)}$ which is an element of the multiplicative group G2.

In the derangement element calculation step S689, based on the element $\Pi_{Y,n}$ stored by the total product element Y computation unit 233 and the integer $\rho_{n,m}$ selected by the secondary random number $\rho$ selection unit 232 in the secondary random number $\rho$ selection step S686, the derangement element computation unit 251, using the CPU 911, calculates the element $\Pi_{Y,n}$ raised to the power of $\rho_{n,m}$. Based on the stored element $f_{m,0}$ and the calculated element "$\Pi_{Y,n}{}^{\wedge}\rho_{n,m}$", the derangement element computation unit 251, using the CPU 911, calculates a product of the element $f_{m,0}$ and the element "$\Pi_{Y,n}{}^{\wedge}\rho_{n,m}$". The derangement element computation unit 251, using the RAM 914, stores the calculated product "$f_{m,0} \cdot \Pi_{Y,n}{}^{\wedge}\rho_{n,m}$" as a new value of the element $f_{m,0}$.

In the $\lambda$ initialization step S690, the secondary delegation element computation unit 262, using the CPU 911, sets the value of the variable $\lambda$ to the value (L+1) obtained by adding one to the integer L.

In the secondary delegation element calculation step S691, based on an element $y'_{n,\lambda}$ having n equal to the value of the variable n and 1 equal to the value of the variable $\lambda$ out of the (D+2)×(D+1) number of elements $y'_{n,1}$ stored by the secret element y storage unit 215 and the integer $\rho_{n,m}$ selected by the secondary random number $\rho$ selection unit 232 in the secondary random number $\rho$ selection step S686, the secondary delegation element computation unit 262, using the CPU 911, calculates the element $y'_{n,\lambda}$ raised to the power of $\rho_{n,m}$. Based on an element $h_{m,\lambda}$ having m equal to the value of the variable m and $\lambda$ equal to the value of the variable $\lambda$ out of the (D+2)×(D'-L) number of stored elements $h_{m,\lambda}$ and the calculated element "$y'_{n,\lambda}{}^{\wedge}\rho_{n,m}$", the secondary delegation element computation unit 262, using the CPU 911, calculates a product of the element $h_{m,\lambda}$ and the element "$y'_{n\lambda}{}^{\wedge}\rho_{n,m}$". The secondary delegation element computation unit 262, using the RAM 914, stores the calculated product "$h_{m,\lambda} \cdot y'_{n,\lambda}{}^{\wedge}\rho_{n,m}$" as a new value of the element $h_{m,y}$ having m equal to the value of the variable m and $\lambda$ equal to the value of the variable $\lambda$.

In the $\lambda$ increment step S692, the secondary delegation element computation unit 262, using the CPU 911, increments the value of the variable $\lambda$ by one.

In the $\lambda$ determination step S693, the secondary delegation element computation unit 262, using the CPU 911, compares the value of the variable $\lambda$ and the integer D'.

If the value of the variable $\lambda$ is not greater than the integer D', the secondary delegation element computation unit 262, using the CPU 911, returns to the secondary delegation element calculation step S691 and calculates a next element $h_{m,\lambda}$.

If the value of the variable $\lambda$ is greater than the integer D', the secondary delegation element computation unit 262, using the CPU 911, proceeds to the m increment step S694.

In the m increment step S694, the secondary random number $\rho$ selection unit 232, using the CPU 911, increments the value of the variable m by one.

In the m determination step S695, using the CPU 911, the secondary random number $\rho$ selection unit 232 compares the value of the variable m and the value (D+1) obtained by adding one to the integer D.

If the value of the variable m is not greater than (D+1), the secondary random number $\rho$ selection unit 232, using the CPU 911, returns to the secondary random number p selection step S686 and selects a next integer $\rho_{n,m}$.

If the value of the variable m is greater than (D+1), the secondary random number p selection unit 232, using the CPU 911, proceeds to the n increment step S696.

In the n increment step S696, the total product element Y computation unit 233, using the CPU 911, increments the value of the variable n by one.

In the n determination step S697, the total product element Y computation unit 233, using the CPU 911, compares the value of the variable n and the value (D+1) obtained by adding one to the integer D.

If the value of the variable n is not greater than (D+1), the total product element Y computation unit 233, using the CPU 911, returns to the total product element Y initialization step S672 and computes a next element $\Pi_{Y,n}$.

If the value of the variable n is greater than (D+1), the total product element Y computation unit 233, using the CPU 911, finishes the user secret key generation process S660.

In this way, the steps from the total product element Y initialization step S672 to the n determination step S697 are repeated (D+2) number of times. The random number $\rho$ selection unit 231 executes the $\rho$ selection step S677 (D+2) number of times and selects (D+2) number of integers $\rho_n$. The search element a computation unit 242 executes the search element a computation step S678 (D+2) number of times and computes (D+2) number of elements $k_{n,(a)}$. The search element b computation unit 243 executes the search element b computation step S679 (D+2) number of times and computes (D+2) number of elements $k_{n,(b)}$.

The search element computation unit 241 executes the search element calculation step S680 (D+2) number of times and computes one element $k_0$.

The total product element Y computation unit 233 repeats the steps from the total product element Y calculation step S674 to the i comparison step S676 L number of times for each repeat of the variable n and computes one element $\Pi_{Y,n}$. By repeating this (D+2) number of times, the total product element Y computation unit 233 computes a total of (D+2) number of elements $\Pi_{Y,n}$.

The delegation element computation unit 261 repeats the steps from the delegation element calculation step S682 to the $\lambda$ determination step S684 (D'-L) number of times for each repeat of the variable n and proceeds with the calculation of (D'-L) number of elements $h_\lambda$. By repeating this (D+2) number of times, the delegation element computation unit 261 computes (D'-L) number of elements $h_\lambda$.

The steps from the secondary random number $\rho$ selection step S686 to the m determination step S695 are repeated (D+2) number of times for each repeat of the variable n. The derangement element a computation unit 252 executes the derangement element a computation step S687 (D+2)×(D+2) number of times and computes (D+2)×(D+2) number of elements $f_{m,n,(a)}$. The derangement element b computation unit 253 executes the derangement element b computation step S688 (D+2)×(D+2) number of times and computes (D+2)×(D+2) number of elements $f_{m,n,(b)}$. The derangement element computation unit 251 executes the derangement element calculation step S689 (D+2) number of times for each repeat of the variable n and proceeds with the calculation of (D+2) number of elements $f_{m,0}$. By repeating this (D+2) number of times, the derangement element computation unit 251 computes (D+2) number of elements $f_{m,0}$. The secondary delegation element computation unit 262 repeats the steps from the secondary delegation element calculation step S691 to the $\lambda$ determination step S693 (D'-L) number of times for each repeat of the variable m and proceeds with the calculation of (D'-L) number of elements $h_{m,\lambda}$. By repeating this (D+2) number of times for each repeat of the variable n, the secondary delegation element computation unit 262 proceeds with the calculation of (D+2)×(D'-L) number of elements $h_{m,\lambda}$. By further repeating this (D+2) number of times, the secondary delegation element computation unit 262 computes (D+2)×(D'-L) number of elements $h_{m,\lambda}$.

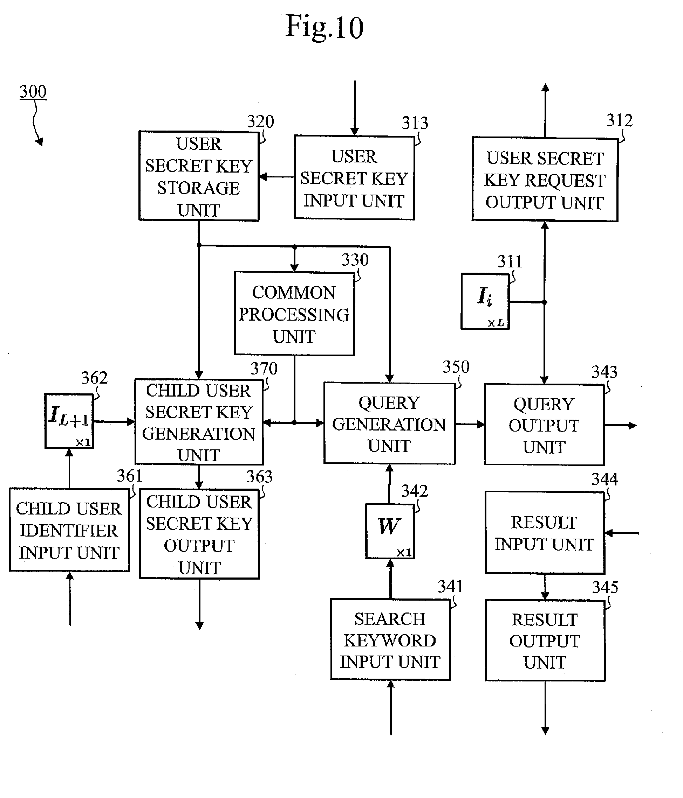

Fig. 10 is a block configuration diagram showing an example of a configuration of functional blocks of the query issuing device 300 in this embodiment.

The query issuing device 300 generates a query for searching for a search keyword by using the user secret key of the query issuing device 300 itself. When the query issuing device 300 has an authorization to generate a child user secret key, the query issuing device 300 generates a child user secret key by using the user secret key of the query issuing device 300 itself. When the query issuing device 300 has an authorization to generate a grandchild user secret key, the query issuing device 300 generates a child user secret key by using the user secret key of the query issuing device 300 itself and generates a grandchild user secret key by using the generated child user secret key The same also applies when the query issuing device 300 has an authorization to generate a user secret key of a further lower level.

The query issuing device 300 has a user identifier storage unit 311, a user secret key request output unit 312, a user secret key input unit 313, a user secret key storage unit 320, a common processing unit 330, a search keyword input unit 341, a search keyword storage unit 342, a query output unit 343, a result input unit 344, a result output unit 345, a query generation unit 350, a child user identifier input unit 361, a child user identifier storage unit 362, a child user secret key output unit 363, and a child user secret key generation unit 370.

The user identifier storage unit 311, using the magnetic disk device 920, stores the user ID of the query issuing device 300 itself in advance. When the user ID is a character string, the user identifier storage unit 311 may be configured to directly store the character string, which is the user ID, or L number of segment character strings divided from the character string, which is the user ID. Alternatively, the user identifier storage unit 311 may be configured to store L number of integers $I_i$ obtained by converting L number of segment character strings into integers from 0 to less than p, the L number of segment character strings being obtained by dividing the character string, which is the user ID.

The user secret key request output unit 312, using the CPU 911, generates a message to request generation of a user secret key to the user secret key generation device 200 or the query issuing device 300 at an upper level. The user secret key request output unit 312 notifies th user ID of the query issuing device 300 itself to the user secret key generation device 200 or the query issuing device 300 at an upper level by including in the message the user ID stored by the user identifier storage unit 311. The user secret key request output unit 312, using the CPU 911, outputs the generated message. The message output by the user secret key request output unit 312 is sent to the user secret key generation device 200 or the query issuing device 300 at an upper level.

The user secret key input unit 313, using the CPU 911, inputs the user secret key of the query issuing device 300 itself. The user secret key input by the user secret key input unit 313 has been generated by the user secret key generation device 200 or the query issuing device 300 at an upper level and has been secretly notified to the query issuing device 300 based on a request by a message generated by the user secret key request output unit 312 or the like. The user secret key includes data representing an element $k_0$, (D+2) number of elements $k_{n,(a)}$, (D+2) number of elements $k_{n,(b)}$, (D+2) number of elements $f_{m,0}$, (D+2)×(D+2) number of elements $f_{m,n,(a)}$, (D+2)×(D+2) number of elements $f_{m,n,(b)}$, (D'-L) number of elements $h_{\lambda}$, and (D+2)×(D'-L) number of elements $h_{m,\lambda}$.

The user secret key storage unit 320, using the magnetic disk device 920, stores the user secret key input by the user secret key input unit 313.

Based on the user secret key stored by the user secret key storage unit 320, the common processing unit 330, using the CPU 911, executes processing common to a process of generating a query and a process of generating a child user secret key.

The search keyword input unit 341, using the CPU 911, inputs an integer W as a keyword to be searched for, where W is an integer from 0 to less than p. When the keyword is a character string, the search keyword input unit 341 may be configured to interpret a bit string that represents the keyword, which is a character string, internally in the computer as a bit string representing an integer. Alternatively, the search keyword input unit 341 may be configured to convert the keyword into an integer by using a hash function that converts a character string of an arbitrary length into an integer from 0 to less than p.

The search keyword storage unit 342, using the RAM 914, stores data representing the integer W input by the search keyword input unit 341.

Based on the user secret key stored by the user secret key storage unit 320, the result of processing by the common processing unit 330, and the data representing the integer W stored by the search keyword storage unit 342, the query generation unit 350, using the CPU 911, generates a query for searching for the keyword.

The query output unit 343 outputs the query generated by the query generation unit 350. The query output by the query output unit 343 is notified to the search device 500.

The result input unit 344, using the CPU 911, inputs a message indicating the result of searching by the search device 500 as a response to the query output by the query output unit 343.

The result output unit 345, using the CPU 911, outputs the message input by the result input unit 344. The message output by the result output unit 345 is notified to the user of the query issuing device 300 by being displayed on the screen of the display device 901, for example.

The child user identifier input unit 361, using the CPU 911, inputs (L+1) number of integers which are L number of integers $I_i$ identical with those of the user ID of the query issuing device 300 itself and an integer $I_{L+1}$, as a user ID of a child query issuing device requesting generation of a child user secret key. The child user identifier input unit 361 compares L number of integers $I_i$ out of the (L+1) number of input integers against the user ID stored by the user identifier storage unit 311 so as to verify that the query issuing device requesting generation of a child user secret key is the child query issuing device.

When the user ID is a character string, the child user identifier input unit 361 may be configured to input the user ID, which is a character string. In this case, the child user identifier input unit 361 divides the input user ID into (L+1) number of segment character strings and converts the (L+1) number of divided segment character strings into integers.

The child user identifier storage unit 362, using the RAM 914, stores data representing the integer $I_{L+1}$ out of the (L+1) number of integers input by the child user identifier input unit 361.

Based on the user secret key stored by the user secret key storage unit 320 and the result of processing by the common processing unit 330, and the data representing the integer $I_{L+1}$ stored by the child user identifier storage unit 362, the child user secret key generation unit 370, using the CPU 911, generates a child user secret key.

The child user secret key output unit 363, using the CPU 911, outputs the child user secret key generated by the child user secret key generation unit 370. The child user secret key output by the child user secret key output unit 363 is secretly notified to the child query issuing device that has requested generation of a child user secret key.

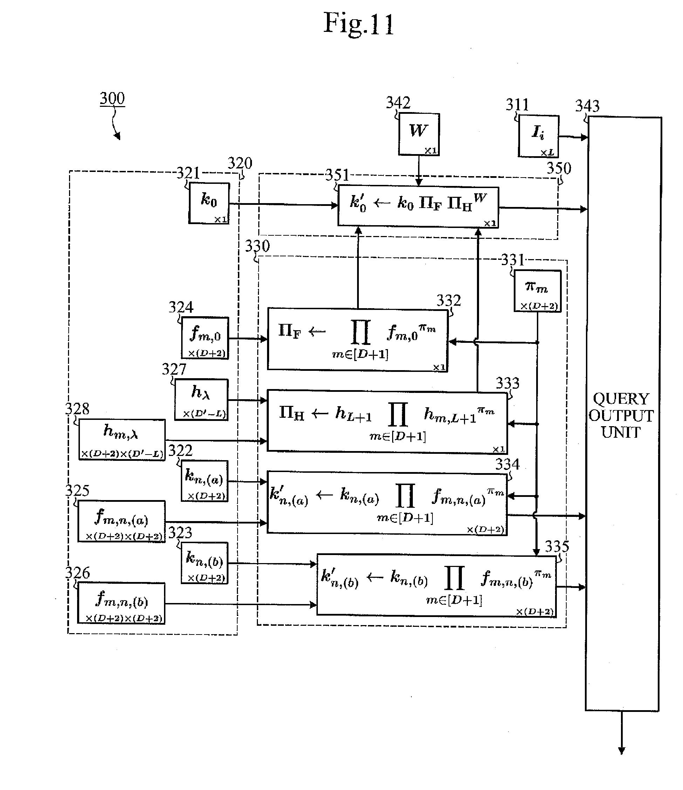

Fig. 11 is a detailed block diagram showing an example of a detailed block configuration of the user secret key storage unit 320, the common processing unit 330, and the query generation unit 350 of the query issuing device 300 in this embodiment.

The user secret key storage unit 320 has a search element storage unit 321, a search element a storage unit 322, a search element b storage unit 323, a derangement element storage unit 324, a derangement element a storage unit 325, a derangement element b storage unit 326, a delegation element storage unit 327, and a secondary delegation element storage unit 328.

The common processing unit 330 has a random number $\pi$ selection unit 331, a total product element F computation unit 332, a total product element H computation unit 333, an inquiry element a computation unit 334, and an inquiry element b computation unit 335.

The query generation unit 350 has an inquiry element computation unit 351.

The search element storage unit 321, using the magnetic disk device 920, stores data representing an element $k_0$ out of a user secret key. The element $k_0$ is an element of the multiplicative group G2.

The search element a storage unit 322, using the magnetic disk device 920, stores data representing (D+2) number of elements $k_{n,(a)}$ out of the user secret key. The elements $k_{n,(a)}$ are elements of the multiplicative group G2 , where n is an integer from 0 to (D+1).

The search element b storage unit 323, using the magnetic disk device 920, stores data representing (D+2) number of elements $k_{n,(b)}$ out of the user secret key The elements $k_{n,(b)}$ are elements of the multiplicative group G2, where n is an integer from 0 to (D+1).

The derangement element storage unit 324, using the magnetic disk device 920, stores data representing (D+2) number of elements $f_{m,0}$ out of the user secret key. The elements $f_{m,0}$ are elements of the multiplicative group G2, where m is an integer from 0 to (D+1).

The derangement element a storage unit 325, using the magnetic disk device 920, stores data representing (D+2) number of elements $f_{m,n,(a)}$ out of the user secret key. The elements $f_{m,n,(a)}$ are elements of the multiplicative group G2, where m is an integer from 0 to (D+1) and n is an integer from 0 to (D+1).

The derangement element b storage unit 326, using the magnetic disk device 920, stores data representing (D+2)$\times$(D+2) number of elements $f_{m,n,(b)}$ out of the user secret key. The elements $f_{m,n,(b)}$ are elements of the multiplicative group G2, where m is an integer from 0 to (D+1) and n is an integer from 0 to (D+1).

The delegation element storage unit 327, using the magnetic disk device 920, stores data representing (D'-L) number of elements $h_\lambda$ out of the user secret key. The elements $h_\lambda$ are elements of the multiplicative group G2, where $\lambda$ is an integer from (L+1) to D'.

The secondary delegation element storage unit 328, using the magnetic disk device 920, stores data representing (D+2) $\times$(D'-L) number of elements $h_{m,\lambda}$ out of the user secret key. The elements $h_{m,\lambda}$ are elements of the multiplicative group G2, where m is an integer from 0 to (D+1) and $\lambda$ is an integer from (L+1) to D'.

The random number $\pi$ selection unit 331, using the CPU 911, uniformly randomly selects (D+2) number of integers out of integers from 0 to less than p. The integers selected by the random number $\pi$ selection unit 331 will hereinafter be referred to as "$\pi_m$", where m is an integer from 0 to (D+1). The random number $\pi$ selection unit 331, using the RAM 914, stores data representing the (D+2) number of selected integers $\pi_m$.

The total product element F computation unit 332, using the CPU 911, inputs the data representing the (D+2) number of elements $f_{m,0}$ stored by the derangement element storage unit 324 and the data representing the (D+2) number of integers $\pi_m$ stored by the random number $\pi$ selection unit 331.

The total product element F computation unit 332, using the CPU 911 and for each of the (D+2) number of integers $\pi_m$, calculates the element $f_{m,0}$ raised to the power of $\pi_m$, where the element $f_{m,0}$ has the same m as $\pi_m$. The element "$f_{m,0}{}^{\wedge}\pi_m$" computed by the total product element F computation unit 332 is an element of the multiplicative group G2. The total product element F computation unit 332 computes a total of (D+2) number of elements "$f_{m,0}{}^{\wedge}\pi_m$",

The total product element F computation unit 332, using the CPU 911, calculates a total product of the (D+2) number of computed elements "$f_{m,0}{}^{\wedge}\pi_m$". The total product computed by the total product element F computation unit 332 will hereinafter be referred to as "$\Pi_F$". $\Pi_F$ is an element of the multiplicative group G2. The total product element F computation unit 332, using the RAM 914, stores data representing the computed total product $\Pi_F$.

The total product element H computation unit 333, using the CPU 911, inputs the data representing the (D'-L) number of elements $h_\lambda$ stored by the delegation element storage unit 327, the data representing the (D+2)$\times$(D'-L) number of elements $h_{m,\lambda}$ stored by the secondary delegation element storage unit 328, and the data representing the (D+2) number of integers $\pi_m$ stored by the random number $\pi$ selection unit 331.

Based on (D+2) number of elements $h_{m,L+1}$ having $\lambda$ equal to (L+1) out of the (D+2)$\times$(D'-L) number of elements $h_{m,\lambda}$ and the (D+2) number of integers $\pi_m$, the total product element H computation unit 333, using the CPU 911 and for each of the (D+2) number of integers $\pi_m$, calculates the element $h_{m,L+1}$ raised to the power of $\pi_m$, where the element $h_{m,L+1}$ has the same m as $\pi_m$.

Based on an element $h_{L+1}$ having $\lambda$ equal to (L+1) out of the (D'-L) number of elements $h_\lambda$ and the (D+2) number of computed elements "$h_{m,L+1}{}^{\wedge}\pi_m$", the total product element H computation unit 333, using the CPU 911, calculates a total product of a total of (D+3) number of elements which are the element $h_{L+1}$ and the (D+2) number of elements "$h_{m,L+1}{}^{\wedge}\pi_m$". The total product computed by the total product element H computation unit 333 will hereinafter be referred to as "$\Pi_H$". $\Pi_H$ is an element of the multiplicative group G2. The total product element H computation unit 333, using the RAM 914, stores data representing the computed element $\Pi_H$.

The inquiry element a computation unit 334, using the CPU 911, inputs the data representing the (D+2) number of elements $k_{n,(a)}$ stored by the search element a storage unit 322, the data representing the (D+2)$\times$(D+2) number of elements $f_{m,n,(a)}$ stored by the derangement element a storage unit 325, and the data representing the (D+2) number of integers $\pi_m$ stored by the random number $\pi$ selection unit 331.

The inquiry element a computation unit 334, using the CPU 911 and for each integer $\pi_m$, calculates each of (D+2) number of elements $f_{m,n,(a)}$ raised to the power of $\pi_m$, where the elements $f_{m,n,(a)}$ are elements $f_{m,n,(a)}$ having the same m as $\pi_m$ out of the (D+2)$\times$(D+2) number of elements $f_{m,n,(a)}$. The element "$f_{m,n,(a)}{}^{\wedge}\pi_m$" computed by the inquiry element a computation unit 334 is an element of the multiplicative group G2. There are (D+2) number of integers $\pi_m$, so that the inquiry element a computation unit 334 computes (D+2)$\times$(D+2) number of elements "$f_{m,n,(a)}{}^{\wedge}\pi_m$",

The inquiry element a computation unit 334, using the CPU 911 and for each element $k_{n,(a)}$, calculates a total product of a total of (D+3) number of elements which are the element $k_{n,(a)}$ and (D+2) number of elements "$f_{m,n,(a)}{}^{\wedge}\pi_m$" having the same n as the element $k_{n,(a)}$ out of the (D+2)$\times$(D+2) number of computed elements "$f_{m,n,(a)}{}^{\wedge}\pi_m$", ) The total product computed by the inquiry element a computation unit 334 will hereinafter be referred to as "$k'_{n,(a)}$", where n is an integer from 0 to (D+1). $k'_{n,(a)}$ is an element of the multiplicative group G2. The inquiry element a computation unit 334, using the RAM 914, stores data representing the (D+2) number of computed elements $k'_{n,(a)}$.

The inquiry element b computation unit 335, using the CPU 911, inputs the data representing the (D+2) number of elements $k'_{n,(b)}$ stored by the search element b storage unit 323, the data representing the (D+2)$\times$(D+2) number of elements $f_{m,n,(b)}$ stored by the derangement element b storage unit 326, and the data representing the (D+2) number of integers $\pi_m$ stored by the random number $\pi$ selection unit 331.

The inquiry element b computation unit 335, using the CPU 911 and for each integer $\pi_m$, calculates each of (D+2) number of elements $f_{m,n,(b)}$ raised to the power of $\pi_m$, where the elements $f_{m,n,(b)}$ are elements $f_{m,n,(b)}$ having the same m as $\pi_m$ out of the (D+2)$\times$(D+2) number of elements $f_{m,n,(b)}$. The element "$f_{m,n,(b)}{}^{\wedge}\pi_m$" computed by the inquiry element b computation unit 335 is an element of the multiplicative group G2. There are (D+2) number of integers $\pi_m$, so that the inquiry element b computation unit 335 computes $(D+2) \times (D+2)$ number of elements "$f_{m,n,(b)}{}^{\wedge}\pi_m$",
The inquiry element b computation unit 335, using the CPU 911 and for each element $k_{n,(b)}$, calculates a total product of a total of $(D+3)$ number of elements which are the element $k_{n,(b)}$ and $(D+2)$ number of elements "$f_{m,n,(b)}{}^{\wedge}\pi_m$" having the same n as the element $k_{n,(b)}$ out of the $(D+2) \times (D+2)$ number of computed elements "$f_{m,n,(b)}{}^{\wedge}\pi_m$". The total product computed by the inquiry element b computation unit 335 will hereinafter be referred to as "$k'_{n,(b)}$", where n is an integer from 0 to $(D+1)$. $k'_{n,(b)}$ is an element of the multiplicative group G2. The inquiry element b computation unit 335, using the RAM 914, stores data representing the $(D+2)$ number of computed elements $k'_{n,(b)}$.

The inquiry element computation unit 351, using the CPU 911, inputs the data representing the element $k_0$ stored by the search element storage unit 321, the data representing the integer W stored by the search keyword storage unit 342, the data representing the element $\Pi_F$ stored by the total product element F computation unit 332, and the data representing the element $\Pi_H$ stored by the total product element H computation unit 333. The inquiry element computation unit 351, using the CPU 911, calculates the element $\Pi_H$ raised to the power of W. The element "$\Pi_H{}^{\wedge}W$" computed by the inquiry element computation unit 351 is an element of the multiplicative group G2. The inquiry element computation unit 351, using the CPU 911, calculates a product "$k_0 \cdot \Pi_F \cdot \Pi_H{}^{\wedge}W$" of the element $k_0$, the element $\Pi_F$, and the computed element "$\Pi_H{}^{\wedge}W$". The product "$k_0 \cdot \Pi_F \cdot \Pi_H{}^{\wedge}W$" computed by the inquiry element computation unit 351 will hereinafter be referred to as "$k'_0$". $k'_0$ is an element of the multiplicative group G2. The inquiry element computation unit 351, using the RAM 914, stores data representing the computed element $k'_0$.

The query output unit 343, using the CPU 911, inputs the user ID stored by the user identifier storage unit 311, the data representing the element $k'_0$ stored by the inquiry element computation unit 351, the data representing the $(D+2)$ number of elements $k'_{n,(a)}$ stored by the inquiry element a computation unit 334, and the data representing the $(D+2)$ number of elements $k'_{n,(b)}$ stored by the inquiry element b computation unit 335. The query output unit 343, using the CPU 911, outputs data including the data representing the user ID, the element $k'_0$, the $(D+2)$ number of elements $k'_{n,(a)}$, and the $(D+2)$ number of elements $k'_{n,(b)}$, as a query.

As described above, out of the $(D'-L)$ number of elements $h_\lambda$ stored by the delegation element storage unit 327 and the $(D+2)\Pi_H(D'-L)$ number of elements $h_{m,\lambda}$ stored by the secondary delegation element storage unit 328, only the element $h_{L+1}$ and the $(D+2)$ number of elements $h_{m,L+1}$ both having $\lambda$ equal to $(L+1)$ are used for generating a query. $\lambda$ is an integer from $(L+1)$ to $D'$, so that the query issuing device 300 can generate a query whichever value from $(L+1)$ to D the integer $D'$ takes.

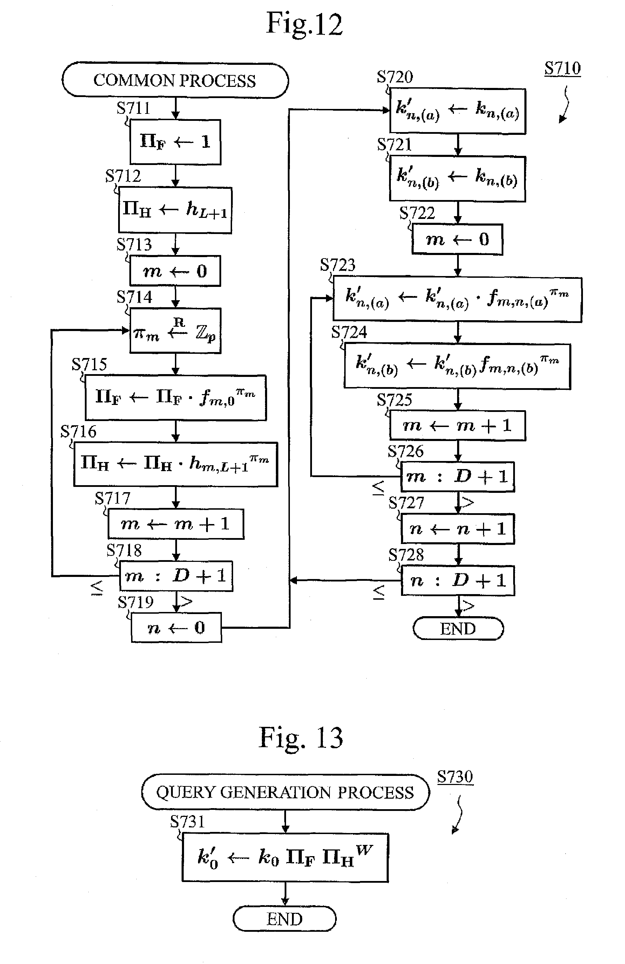

Fig. 12 is a flowchart showing an example of a flow of a common process S710 in this embodiment.
In the common process S710, the common processing unit 330 executes processing common to generation of a query and generation of an individual user secret key.
A specific procedure for generating a query or computing a child user secret key will be described here. However, the calculation procedure is not limited to the procedure described here and may be different from the procedure described here, provided that mathematically equivalent results can be obtained.

The common process S710 has a total product element F initialization step S711, a total product element H initialization step S712, an m initialization step S713, a random number $\pi$ selection step S714, a total product element F calculation step S715, a total product element H calculation step S716, an m increment step S717, an m determination step S718, an n initialization step S719, an inquiry element a initialization step S720, an inquiry element b initialization step S721, an m initialization step S722, an inquiry element a calculation step S723, an inquiry element b calculation step S724, an m increment step S725, an m determination step S726, an n increment step S727, and an n determination step S728.

In the total product element F initialization step S711, the total product element F computation unit 332, using the RAM 914, stores the identity element 1 of the multiplicative group G2 as a first value for calculating an element $\Pi_F$.

In the total product element H initialization step S712, the total product element H computation unit 333, using the RAM 914, stores an element $h_{L+1}$ having $\lambda$ equal to $(L+1)$ out of the $(D'-L)$ number of elements $h_\lambda$ stored by the delegation element storage unit 327 as a first value for calculating an element $\Pi_H$.

In the m initialization step S713, the random number $\pi$ selection unit 331, using the CPU 911, sets the value of the variable m to 0.

In the random number $\pi$ selection step S714, the random number $\pi$ selection unit 331, using the CPU 911, uniformly randomly selects an integer $\pi_m$ out of integers from 0 to less than p.

In the total product element F calculation step S715, based on an element $f_{m,0}$ having m equal to the variable m out of the $(D+2)$ number of elements $f_{m,0}$ stored by the derangement element storage unit 324 and the integer $\pi_m$ selected by the random number $\pi$ selection unit 331 in the random number $\pi$ selection step S714, the total product element F computation unit 332, using the CPU 911, calculates the element $f_{m,0}$ raised to the power of $\pi_m$. The total product element F computation unit 332, using the CPU 911, calculates a product "$\Pi_F \cdot f_{m,0}{}^{\wedge}\pi_m$" of the stored element $\Pi_F$ and the computed element "$f_{m,0}{}^{\wedge}\pi_m$". The total product element F computation unit 332, using the RAM 914, stores the computed product "$\Pi_F \cdot f_{m,0}{}^{\wedge}\pi_m$" as a new value of the element $\Pi_F$.

In the total product element H calculation step S716, based on an element $h_{m,L+1}$ having m equal to the variable

m and $\lambda$ equal to (L+1) out of the (D+2)×(D'-L) of the elements $h_{m,\lambda}$ stored by the secondary delegation element storage unit 328 and the integer $\pi_m$ selected by the random number $\pi$ selection unit 331 in the random number $\pi$ selection step S714, the total product element H computation unit 333, using the CPU 911, calculates the element $h_{m,L+1}$ raised to the power of $\pi_m$. The total product element H computation unit 333, using the CPU 911, calculates a product "$\Pi H \cdot f_{m,L+1}{}^\wedge \pi_m$" of the stored element $\Pi_H$ and the computed element "$f_{m,L+1}{}^\wedge \pi_m$". The total product element H computation unit 333, using the RAM 914, stores the computed product "$\Pi_H \cdot f_{m,L+1}{}^\wedge \pi_m$" as a new value of the element $\pi_H$.

In the m increment step S717, the random number $\pi$ selection unit 331, using the CPU 911, increments the value of the variable m by one.

In the m determination step S718, the random number $\pi$ selection unit 331, using the CPU 911, compares the value of the variable m and the value (D+1) obtained by adding one to the integer D.

If the value of the variable m is not greater than (D+1), the random number $\pi$ selection unit 331, using the CPU 911, returns to the random number $\pi$ selection step S714 and continues with the calculation of the element $\Pi_F$ and the element $\Pi_H$.

If the value of the variable m is greater than (D+1), the random number $\pi$ selection unit 331, using the CPU 911, fmishes the calculation of the element $\Pi_F$ and the element $\Pi_H$ and proceeds to the n initialization step S719.

In this way, the steps from the random number $\pi$ selection step S714 to the m determination step S718 are repeated (D+2) number of times. The random number $\pi$ selection unit 331 executes the random number $\pi$ selection step S714 (D+2) number of times and selects (D+2) number of integers $\pi_m$.
The total product element F computation unit 332 executes the total product element F calculation step S715 (D+2) number of times and computes one element $\Pi_F$. The total product element H computation unit 333 executes the total product element H calculation step S716 (D+2) number of times and computes one element $\Pi_H$.

In the n initialization step S719, the inquiry element a computation unit 334, using the CPU 911, sets the value of the variable n to 0.

In the inquiry element a initialization step S720, the inquiry element a computation unit 334, using the RAM 914, stores an element $k_{n,(a)}$ having n equal to the value of the variable n out of the (D+2) number of elements $k_{n,(a)}$ stored by the search element a storage unit 322 as a first value for calculating an element $k'_{n,(a)}$.

In the inquiry element b initialization step S721, the inquiry element b computation unit 335, using the RAM 914, stores an element $k_{n,(b)}$ having n equal to the value of the variable n out of the (D+2) number of elements $k_{n,(b)}$ stored by the search element b storage unit 323 as a first value for calculating an element $k'_{n,(b)}$.

In the m initialization step S722, the inquiry element a computation unit 334, using the CPU 911, sets the value of the variable m to 0.

In the inquiry element a calculation step S723, based on an element $f_{m,n,(a)}$ having m equal to the value of the variable m and n equal to the value of the variable n out of the (D+2)×(D+2) number of elements $4_{m,n,(a)}$ stored by the derangement element a storage unit 325 and an integer $\pi_m$ having m equal to the value of the variable m out of the (D+2) number of integers $\pi_m$ selected by the random number $\pi$ selection unit 331 in the random number $\pi$ selection step S714 executed (D+2) number of times, the inquiry element a computation unit 334, using the CPU 911, calculates the element $f_{m,n,(a)}$ raised to the power of $\pi_m$. The inquiry element a computation unit 334, using the CPU 911, calculates a product "$k_{n,(a)} \cdot f_{m,n,(a)}{}^\wedge \pi_m$" of the stored element $k'_{n,(a)}$ and the computed element "$f_{m,n,(a)}{}^\wedge \pi_m$". The inquiry element a computation unit 334, using the RAM 914, stores the computed product "$k'_{n,(a)} \cdot f_{m,n,(a)} \pi_m$" as a new value of the element $k'_{n,(a)}$.

In the inquiry element b calculation step S724, based on an element $f_{m,n,(b)}$ having m equal to the value of the variable m and n equal to the value of the variable n out of the (D+2)×(D+2) number of elements $f_{m,n,(b)}$ stored by the derangement element b storage unit 326 and an integer $\pi_m$ having m equal to the value of the variable m out of the (D+2) number of integers $\pi_m$ selected by the random number $\pi$ selection unit 331 in the random number $\pi$ selection step S714 executed (D+2) number of times, the inquiry element b computation unit 335, using the CPU 911, calculates the element $f_{m,n,(b)}$ raised to the power of $\pi_m$. The inquiry element b computation unit 335, using the CPU 911, calculates a product "$k'_{n,(b)} \cdot f_{m,n,(b)}{}^\wedge \pi_m$" of the stored element $k'_{n,(b)}$ and the computed element "$f_{m,n,(b)}{}^\wedge \pi_m$". The inquiry element b computation unit 335, using the RAM 914, stores the computed product "$k'_{n,(b)} \cdot f_{m,n,(b)}{}^\wedge \pi_m$" as a new value of the element $k'_{n,(b)}$.

In the m increment step S725, the inquiry element a computation unit 334, using the CPU 911, increments the value of the variable m by one.

In the m determination step S726, the inquiry element a computation unit 334, using the CPU 911, compares the value of the variable m and the value (D+1) obtained by adding one to the integer D.

If the value of the variable m is not greater than (D+1), the inquiry element a computation unit 334, using the CPU 911, returns to the inquiry element a calculation step S723 and continues with the calculation of the element $k'_{n,(a)}$ and the element $k'_{n,(b)}$.

If the value of the variable m is greater than (D+1), the inquiry element a computation unit 334, using the CPU 911, finishes the calculation of the element $k'_{n,(a)}$ and the element $k'_{n,(b)}$ and proceeds to the n increment step S727.

In the n increment step S727, the inquiry element a computation unit 334, using the CPU 911, increments the value of the variable n by one.

In the n determination step S728, the inquiry element a computation unit 334, using the CPU 911, compares the value of the variable n and the value (D+1) obtained by adding one to the integer D.

If the value of the variable n is not greater than (D+1), the inquiry element a computation unit 334, using the CPU 911, returns to the inquiry element a initialization step S720 and calculates a next element $k'_{n,(a)}$ and a next element $k'_{n,(b)}$.

If the value of the variable n is greater than (D+1), the inquiry element a computation unit 334, using the CPU 911, fmishes the common process S710.

In this way, the steps from the inquiry element a initialization step S720 to the n determination step S728 are repeated (D+2) number of times. The steps from the inquiry element a calculation step S723 to the m determination step S726 are repeated (D+2) number of times for each repeat of the variable n. The inquiry element a computation unit 334 executes the inquiry element a calculation step S723 (D+2) number of times for each repeat of the variable n and computes one element $k'_{n,(a)}$. The inquiry element a computation unit 334 computes a total of (D+2) number of elements $k'_{n,(a)}$. The inquiry element b computation unit 335 executes the inquiry element b calculation step S724 (D+2) number of times for each repeat of the variable n and computes one element $k'_{n,(b)}$. The inquiry element b computation unit 335 computes a total of (D+2) number of elements $k'_{n,(b)}$.

Fig. 13 is a flowchart showing an example of a flow of a query generation process S730 in this embodiment.

In the query generation process S730, the query generation unit 350 computes elements included in a query that are not generated by the common processing unit 330 in the common process S710.

The query generation process S730 has an inquiry element computation step S731.

In the inquiry element computation step S731, based on the element $\Pi_H$ computed by the total product element computation unit 333 in the common process S710 and the integer W stored by the search keyword storage unit 342, the inquiry element computation unit 351, using the CPU 911, calculates the element $\Pi_H$ raised to the power of W. The inquiry element computation unit 351 calculates a product of the element $k_0$ stored by the search element storage unit 321, the element $\Pi_H$ computed by the total product element F computation unit 332 in the common process S710, and the computed element "$\Pi_H{}^{\wedge}W$" and obtains an element $k'_0$ which is an element of the multiplicative group G2.

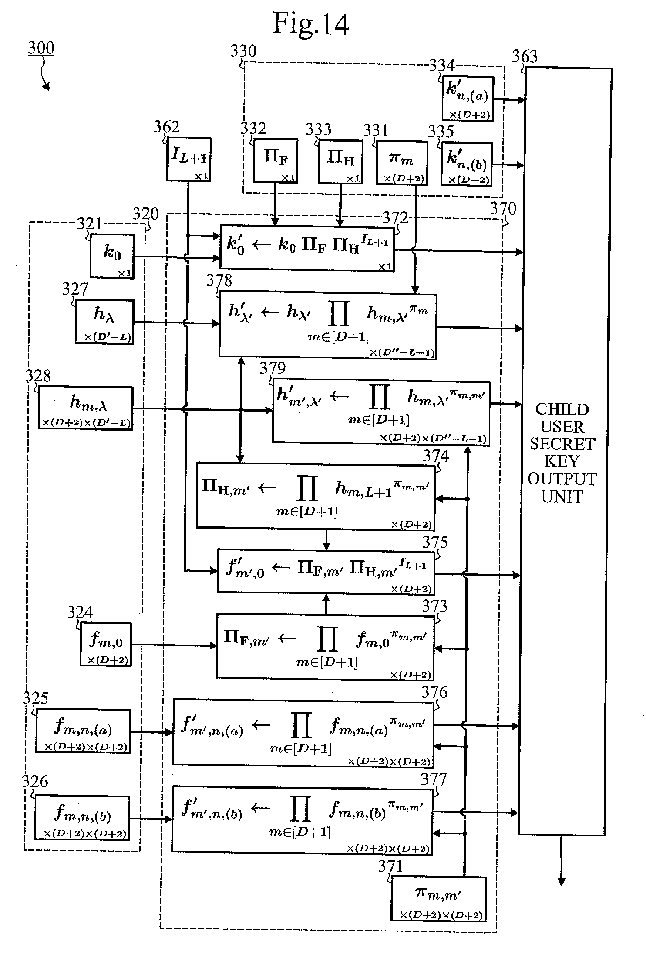

Fig. 14 is a detailed block diagram showing an example of a detailed block configuration of the child user secret key generation unit 370 of the query issuing device 300 in this embodiment.

The child user secret key generation unit 370 has a secondary random number $\pi$ selection unit 371, a child search element computation unit 372, a child total product element F computation unit 373, a child total product element H computation unit 374, a child derangement element computation unit 375, a child derangement element a computation unit 376, a child derangement element b computation unit 377, a child delegation element computation unit 378, and a child secondary delegation element computation unit 379.

The secondary random number $\pi$ selection unit 371, using the CPU 911, uniformly randomly selects (D+2)×(D+2) number of integers out of integers from 0 to less than p. The integers selected by the secondary random number × selection unit 371 will hereinafter be referred to as "$\pi_{m,m'}$", where m is an integer from 0 to (D+1) and m' is an integer from 0 to (D+1). The secondary random number $\pi$ selection unit 371, using the RAM 914, stores the (D+2)×(D+2) number of selected integers $\pi_{m,m'}$.

The child search element computation unit 372, using the CPU 911, inputs the data representing the element $k_0$ stored by the search element storage unit 321, the data representing the integer $l_{L+1}$ stored by the child user identifier storage unit 362, the data representing the element $\Pi_F$ stored by the total product element F computation unit 332, and the data representing the element $\Pi_H$ stored by the total product element H computation unit 333.

Based on the element $\Pi_H$ and the integer $l_{L+1}$, the child search element computation unit 372, using the CPU 911, calculates the element $\Pi_H$ raised to the power of $l_{L+1}$. The element "$\Pi_H{}^{\wedge}l_{L+1}$" computed by the child search element computation unit 372 is an element of the multiplicative group G2. The child search element computation unit 372 computes one element "$\Pi_H{}^{\wedge}l_{L+1}$".

The child search element computation unit 372 calculates a product "$k_0 \cdot \Pi_F \cdot \Pi_H{}^{\wedge}l_{L+1}$" of the element $k_0$, the element $\Pi_F$, and the computed element "$\Pi_H{}^{\wedge}l_{L+1}$". The product "$k_0 \cdot \Pi_F \cdot \Pi_H{}^{\wedge}l_{L+1}$" computed by the child search element computation unit 372 will hereinafter be referred to as "$k'_0$", in the same way as the element $k'_0$ computed by the inquiry element computation unit 351. $k'_0$ is an element of the multiplicative group G2. The child search element computation unit 372, using the RAM 914, stores data representing the computed element $k'_0$.

The child total product element F computation unit 373, using the CPU 911, inputs the data representing the (D+2) number of elements $f_{m,0}$ stored by the derangement element storage unit 324 and the data representing the (D+2)×(D+2) number of integers $\pi_{m,m'}$ stored by the secondary random number $\pi$ selection unit 371.

Based on the (D+2) number of elements $f_{m,0}$ and the (D+2)×(D+2) number of integers $\pi_{m,m'}$, the child total product element F computation unit 373, using the CPU 911 and for each of the (D+2)×(D+2) number of integers $\pi_{m,m'}$, calculates the element $f_{m,0}$ raised to the power of $\pi_{m,m'}$, where the element $f_{m,0}$ has the same m as $\pi_{m,m'}$. The element "$f_{m,0}{}^{\wedge}\pi_{m,m'}$" computed by the child total product element F computation unit 373 is an element of the multiplicative group G2. The child total product element F computation unit 373 computes $(D+2)\times(D+2)$ number of elements "$f_{m,0}{}^{\wedge}\pi_{m,m'}$".

The child total product element F computation unit 373, using the CPU 911, divides the $(D+2)\times(D+2)$ number of computed elements "$f_{m,0}{}^{\wedge}\pi_{m,m'}$" into groups of $(D+2)$ number of elements having the same value as m and varying values as m', and calculates a total product of $(D+2)$ number of grouped elements "$f_{m,0}{}^{\wedge}\pi_{m,m'}$". The total product computed by the child total product element F computation unit 373 will hereinafter be referred to as "$\Pi_{F,m'}$", where m' is an integer from 0 to $(D+1)$. $\Pi_{F,m'}$ is an element of the multiplicative group G2. When the $(D+2)\times(D+2)$ number of elements "$f_{m,0}{}^{\wedge}\pi_{m,m'}$" are divided into groups of $(D+2)$ number of elements having the same value as m and varying values as m', $(D+2)$ number of groups are generated. Thus, the child total product element F computation unit 373 computes $(D+2)$ number of elements $\Pi_{F,m'}$". The child total product element F computation unit 373, using the RAM 914, stores data representing the $(D+2)$ number of computed elements $\Pi_{F,m'}$.

The child total product element H computation unit 374, using the CPU 911, inputs the data representing the $(D+2)\times(D'-L)$ number of elements $h_{m,\lambda}$ stored by the secondary delegation element storage unit 328 and the data representing the $(D+2)\times(D+2)$ number of integers $\pi_{m,m'}$ stored by the secondary random number $\pi$ selection unit 371. Based on $(D+2)$ number of elements $h_{m,L+1}$ having $\lambda$ equal to $(L+1)$ out of the $(D+2)\times(D'-L)$ number of elements $h_{m,\lambda}$ and the $(D+2)\times(D+2)$ number of integers $\pi_{m,m'}$, the child total product element H computation unit 374, using the CPU 911 and for each of the $(D+2)\times(D+2)$ number of integers $\pi_{m,m'}$, calculates the element $h_{m,L+1}$ raised to the power of $\pi_{m,m'}$, where the element $h_{m,L+1}$ has the same m as $\pi_{m,m'}$. The element "$h_{m,L+1}{}^{\wedge}\pi_{m,m'}$" computed by the child total product element H computation unit 374 is an element of the multiplicative group G2. The child total product element H computation unit 374 computes $(D+2)\times(D+2)$ number of elements "$h_{m,L+1}{}^{\wedge}\pi_{m,m'}$".

The child total product element H computation unit 374, using the CPU 911, divides the $(D+2)\times(D+2)$ number of computed elements "$h_{m,L+1}{}^{\wedge}\pi_{m,m'}$" into groups of $(D+2)$ number of elements having the same value as m and varying values as m, and calculates a total product of $(D+2)$ number of grouped elements "$h_{m,L+1}{}^{\wedge}\pi_{m,m'}$". The total product computed by the child total product element H computation unit 374 will hereinafter be referred to as "$\Pi_{H,m'}$", where m' is an integer from 0 to $(D+1)$. $\Pi_{H,m'}$ is an element of the multiplicative group G2. When the $(D+2)\times(D+2)$ number of elements "$h_{m,L+1}{}^{\wedge}\pi_{m,m'}$" are divided into groups of $(D+2)$ number of elements having the same value as m and varying values as m', $(D+2)$ number of groups are generated. Thus, the child total product element H computation unit 374 computes $(D+2)$ number of elements $\Pi_{H,m'}$. The child total product element H computation unit 374, using the RAM 914, stores data representing the $(D+2)$ number of computed elements $\Pi_{H,m'}$.

The child derangement element computation unit 375, using the CPU 911, inputs the data representing the integer $I_{L+1}$ stored by the child user identifier storage unit 362, the data representing the $(D+2)$ number of elements $\Pi_{F,m'}$ stored by the child total product element F computation unit 373, and the data representing the $(D+2)$ number of elements $\Pi_{H,m'}$ stored by the child total product element H computation unit 374.

Based on the $(D+2)$ number of elements $\Pi_{H,m'}$ and the integer $I_{L+1}$, the child derangement element computation unit 375, using the CPU 911, calculates each of the $(D+2)$ number of elements $\Pi_{H,m'}$ raised to the power of $I_{L+1}$. The element "$\Pi_{H,m'}{}^{\wedge}I_{L+1}$" computed by the child derangement element computation unit 375 is an element of the multiplicative group G2. The child derangement element computation unit 375 computes $(D+2)$ number of elements "$\Pi_{H,m'}{}^{\wedge}I_{L+1}$".

Based on the $(D+2)$ number of elements $\Pi_{F,m'}$ and the $(D+2)$ number of computed elements "$\Pi_{H,m'}{}^{\wedge}I_{L+1}$", the child derangement element computation unit 375, using the CPU 911 and for each of the $(D+2)$ number of elements $\Pi_{F,m'}$, calculates a product "$\Pi_{F,m'}\cdot\Pi_{H,m'}{}^{\wedge}I_{L+1}$" of the element $\Pi_{F,m'}$ and the element "$\Pi_{H,m'}{}^{\wedge}I_{L+1}$" having the same m' as the element $\Pi_{F,m'}$. The product "$\Pi_{F,m'}\cdot\Pi_{H,m'}{}^{\wedge}I_{L+1}$" computed by the child derangement element computation unit 375 will hereinafter be referred to as "$f_{m',0}$", where m' is an integer from 0 to $(D+1)$. $f_{m',0}$ is an element of the multiplicative group G2. The child derangement element computation unit 375, using the RAM 914, stores data representing the $(D+2)$ number of computed elements $f_{m',0}$.

The child derangement element a computation unit 376, using the CPU 911, inputs the data representing the $(D+2)\times(D+2)$ number of elements $f_{m,n,(a)}$ stored by the derangement element a storage unit 325 and the data representing the $(D+2)\times(D+2)$ number of integers $\pi_{m,m'}$ stored by the secondary random number $\pi$ selection unit 371.

Based on the $(D+2)\times(D+2)$ number of elements $f_{m,n,(a)}$ and the $(D+2)\times(D+2)$ number of integers $\pi_{m,m'}$, the child derangement element a computation unit 376, using the CPU 911 and for each integer $\pi_{m,m'}$, calculates each of the $(D+2)$ number of elements $f_{m,n,(a)}$ raised to the power of $\pi_{m,m'}$, where each element $f_{m,n,(a)}$ has the same m as $\pi_{m,m'}$. The element "$f_{m,n,(a)}{}^{\wedge}\pi_{m,m'}$" computed by the child derangement element a computation unit 376 is an element of the multiplicative group G2. There are $(D+2)\times(D+2)$ number of integers $\pi_{m,m'}$, so that the child derangement element a computation unit 376 computes $(D+2)\times(D+2)\times(D+2)$ number of elements "$f_{m,n,(a)}{}^{\wedge}\pi_{m,m'}$".

The child derangement element a computation unit 376, using the CPU 911, divides the $(D+2)\times(D+2)\times(D+2)$ number of computed elements "$f_{m,n,(a)}{}^{\wedge}\pi_{m,m'}$" into groups of $(D+2)$ number of elements having the same value as m', the same value as n, and varying values as m, and calculates a total product of $(D+2)$ number of grouped elements "$f_{m,n,(a)}{}^{\wedge}\pi_{m,m'}$". The total product computed by the child derangement element a computation unit 376 will hereinafter be referred to as "$f_{m',n,(a)}$", where m' is an integer from 0 to $(D+1)$ and n is an integer from 0 to $(D+1)$. $f_{m',n,(a)}$ is an element of the multiplicative group G2. When the $(D+2)\times(D+2)\times(D+2)$ number of elements "$f_{m,n,(a)}{}^{\wedge}\pi_{m,m}$" are divided into groups of $(D+2)$ number of elements having the same value as m', the same value as n, and varying values as m, $(D+2)\times(D+2)$ number of groups are generated. Thus, the child derangement element a computation unit 376 computes $(D+2)\times(D+2)$ number of elements $f_{m',n,(a)}$. The child derangement element a computation unit 376, using the RAM 914, stores data representing the $(D+2)\times(D+2)$ number of computed elements $f_{m',n,(a)}$.

The child derangement element b computation unit 377, using the CPU 911, inputs the data representing the $(D+2)\times(D+2)$ number of elements $f_{m,n,(b)}$ stored by the derangement element b storage unit 326 and the data representing the $(D+2)\times(D+2)$ number of integers $\pi_{m,m'}$ stored by the secondary random number $\pi$ selection unit 371.

Based on the $(D+2)\times(D+2)$ number of elements $f_{m,n,(b)}$ and the $(D+2)\times(D+2)$ number of integers $\pi_{m,m'}$, the child derangement element b computation unit 377, using the CPU 911 and for each integer $\pi_{m,m'}$, calculates each of $(D+2)$ number of elements $f_{m,n,(b)}$ raised to the power of $\pi_{m,m'}$, where each element $f_{m,n,(b)}$ has the same m as $\pi_{m,m'}$. The element "$f_{m,n,(b)}{}^{\wedge}\pi_{m,m'}$" computed by the child derangement element b computation unit 377 is an element of the multiplicative group G2. There are $(D+2)\times(D+2)$ of integers $\pi_{m,m'}$, so that the child derangement element b computation unit 377 computes $(D+2)\times(D+2)\times(D+2)$ number of elements "$f_{m,n,(b)}{}^{\wedge}\pi_{m,m'}$".

The child derangement element b computation unit 377, using the CPU 911, divides the $(D+2)\times(D+2)\times(D+2)$ number of computed elements "$f_{m,n,(b)}{}^{\wedge}\pi_{m,m'}$" into groups of $(D+2)$ number of elements having the same value as m', the same value as n, and varying values as m, and calculates a total product of $(D+2)$ number of grouped elements "$f_{m,n,(b)}{}^{\wedge}\pi_{m,m'}$". The total product computed by the child derangement element b computation unit 377 will hereinafter be referred to as "$f_{m',n,(b)}$", where m' is an integer from 0 to $(D+1)$ and n is an integer from 0 to $(D+1)$. $f_{m',n,(b)}$ is an element of the multiplicative group G2. When the $(D+2)\times(D+2)\times(D+2)$ number of elements "$f_{m,n,(b)}{}^{\wedge}\pi_{m,m'}$" are divided into groups of $(D+2)$ number of elements having the same value as m', the same value as n, and varying values as m, $(D+2)\text{x}(D+2)$ number of groups are generated. Thus, the child derangement element b computation unit 377 computes $(D+2)\times(D+2)$ number of elements $f_{m',n,(b)}$. The child derangement element b computation unit 377, using the RAM 914, stores data representing the $(D+2)\text{x}(D+2)$ number of computed elements $f_{m',n,(b)}$.

The child delegation element computation unit 378, using the CPU 911, inputs the data representing the $(D'-L)$ number of elements $h_{\lambda}$ stored by the delegation element storage unit 327, the data representing the $(D+2)\times(D'-L)$ number of elements $h_{m,\lambda}$ stored by the secondary delegation element storage unit 328, and the data representing the $(D+2)$ number of integers $\pi_m$ stored by the random number $\pi$ selection unit 331. Although not illustrated, the child delegation element computation unit 378, using the CPU 911, inputs data representing an integer D" representing an authorization to be given to a child query issuing device. The integer D" is an integer from $(L+2)$ to D'. The meaning of the integer D" is the same as the meaning of the integer D'.

Based on $(D+2)\times(D''-L-1)$ number of elements $h_{m,\lambda'}$ having $\lambda$ equal to an integer $\lambda'$ from $(L+2)$ to D" out of the $(D+2)\times(D'-L)$ number of elements $h_{m,\lambda}$ and the $(D+2)$ number of integers $\pi_m$, the child delegation element computation unit 378, using the CPU 911 and for each integer $\pi_m$, calculates each of the $(D''-L-1)$ number of elements $h_{m,\lambda'}$ raised to the power of $\pi_m$, where each element $h_{m,\lambda'}$ has the same m as $\pi_m$. The element "$h_{m,\lambda'}{}^{\wedge}\pi_m$" computed by the child delegation element computation unit 378 is an element of the multiplicative group G2. There are $(D+2)$ number of integers $\pi_m$, so that the child delegation element computation unit 378 computes $(D+2)\times(D''-L-1)$ number of elements "$h_{m,\lambda'}{}^{\wedge}\pi_m$".

Based on $(D''-L-1)$ number of elements $h_{\lambda'}$ having $\lambda$ equal to the integer $\lambda'$ from $(L+2)$ to D" out of the $(D'-L)$ number of elements $h_{\lambda}$ and the $(D+2)\times(D''-L-1)$ number of computed elements "$h_{m,\lambda'}{}^{\wedge}\pi_m$", the child delegation element computation unit 378, using the CPU 911 and for each element $h_{\lambda'}$, calculates a total product of a total of $(D+3)$ number of elements which are the element $h_{\lambda'}$ and $(D+2)$ number of elements "$h_{m,\lambda'}{}^{\wedge}\pi_m$" having the same $\lambda'$ as the element $h_{\lambda'}$ out of the $(D+2)\times(D''-L-1)$ number of computed elements "$h_{m,\lambda'}{}^{\wedge}\pi_m$", The total product computed by the child delegation element computation unit 378 will hereinafter be referred to as "$h'_{\lambda'}$", where $\lambda'$ is an integer from $(L+2)$ to D". $h'_{\lambda'}$ is an element of the multiplicative group G2. There are $(D''-L-1)$ number of elements $h_{\lambda'}$, so that the child delegation element computation unit 378 computes $(D''-L-1)$ number of elements $h'_{\lambda'}$. The child delegation element computation unit 378, using the RAM 914, stores data representing the $(D''-L-1)$ number of computed elements $h'_{\lambda'}$.

The child secondary delegation element computation unit 379, using the CPU 911, inputs the data representing the integer D", the data representing the $(D+2)\times(D'-L)$ number of elements $h_{m,\lambda}$ stored by the secondary delegation element storage unit 328, and the data representing the $(D+2)\times(D+2)$ number of integers $\pi_{m,m'}$ stored by the secondary random number $\pi$ selection unit 371.

Based on $(D+2)\times(D''-L-1)$ number of elements $h_{m,\lambda'}$ having $\lambda$ equal to the integer $_{\lambda'}$ from $(L+2)$ to D" out of the $(D+2)\times(D'-L)$ number of elements $h_{m,\lambda}$ and the $(D+2)\times(D+2)$ number of integers $\pi_{m,m'}$, the child secondary delegation element computation unit 379, using the CPU 911 and for each integer $\pi_{m,m'}$, calculates each of the $(D''-L-1)$ number of elements $h_{m,\lambda'}$ raised to the power of $\pi_{m,m'}$, where the elements $h_{m,\lambda'}$ are elements $h_{m,\lambda'}$ having the same m as $\pi_{m,m'}$ out of the $(D+2)\times(D''-L-1)$ number of elements $h_{m,\lambda'}$. The element "$h_{m,\lambda'}{}^{\wedge}\pi_{m,m'}$" computed by the child secondary delegation element computation unit 379 is an element of the multiplicative group G2. There are $(D+2)\times(D+2)$ number of integers $\pi_{m,m'}$, so that the child secondary delegation element computation unit 379 computes $(D+2)\times(D+2)\times(D''-L-1)$ number of elements "$h_{m,\lambda'}{}^{\wedge}\pi_{m,m'}$".

The child secondary delegation element computation unit 379, using the CPU 911, divides the $(D+2)\times(D+2)\times(D''-L-1)$

number of computed elements "$h_{m,\lambda'}{}^{\wedge}\pi_{m,m'}$" into groups of (D+2) number of elements having the same value as m', the same value as $\lambda'$, and varying values as m, and calculates a total product of (D+2) number of grouped elements "$h_{m,\lambda'}{}^{\wedge}\pi_{m,m'}$". The total product computed by the child secondary delegation element computation unit 379 will be referred to as "$h'_{m',\lambda'}$", where m' is an integer from 0 to (D+1) and $\lambda'$ is an integer from (L+2) to D". $h'_{m',\lambda'}$ is an element of the multiplicative group G2. When the (D+2)×(D+2)×(D"-L-1) number of elements "$h_{m,\lambda'}{}^{\wedge}\pi_{m,m'}$" are divided into groups of (D+2) number of elements having the same value as m', the same value as $\lambda'$, and varying values as m, (D+2)×(D"-L-1) number of groups are generated. Thus, the child secondary delegation element computation unit 379 computes (D+2)×(D"-L-1) number of elements $h'_{m,\lambda'}$. The child secondary delegation element computation unit 379, using the RAM 914, stores data representing the (D"-L-1) number of computed elements $h'_{m',\lambda'}$.

The child user secret key output unit 363, using the CPU 911, inputs the data representing the element $k'_0$ stored by the child search element computation unit 372, the data representing the (D+2) number of elements $k'_{n,(a)}$ stored by the inquiry element a computation unit 334, and the data representing the (D+2) number of elements $k'_{n,(b)}$ stored by the inquiry element b computation unit 335. The child user secret key output unit 363, using the CPU 911, also inputs the data representing the (D+2) number of elements $f_{m',0}$ stored by the child derangement element computation unit 375, the data representing the (D+2)×(D+2) number of elements $f_{m',n,(a)}$ stored by the child derangement element a computation unit 376, and the data representing the (D+2)×(D+2) number of elements $f'_{m',n,(b)}$ stored by the child derangement element b computation unit 377. The child user secret key output unit 363, using the CPU 911, also inputs the data representing the (D"-L-1) number of elements $h'_{\lambda'}$ stored by the child delegation element computation unit 378 and the data representing the (D+2)×(D"-L-1) number of $h'_{m',\lambda'}$ stored by the child secondary delegation element computation unit 379.

The child user secret key output unit 363, using the CPU 911, outputs data including the data representing the element $k'_0$, the (D+2) number of elements $k'_{n,(a)}$, the (D+2) number of elements $k'_{n,(b)}$, the (D+2) number of elements $f_{m',0}$, the (D+2)×(D+2) number of elements $f_{m',n,(a)}$, the (D+2)×(D+2) number of elements $f_{m',n,(b)}$, the (D"-L-1) number of elements $h_{\lambda'}$, and the (D+2)×(D"-L-1) number of elements $h'_{m',\lambda'}$, as a child user secret key. The child user secret key output by the child user secret key output unit 363 is secretly notified to the query issuing device 300 having the user ID input by the child user identifier input unit 361.

The element $k'_0$ computed by the child search element computation unit 372 included in the child user secret key generated by the query issuing device 300 corresponds to the element $k_0$ computed by the search element computation unit 241 of the user secret key generation device 200. The (D+2) number of elements $k'_{n,(a)}$ computed by the inquiry element a computation unit 334 correspond to the (D+2) number of elements $k_{n,(a)}$ computed by the search element a computation unit 242 of the user secret key generation device 200. The (D+2) number of elements $k'_{n,(b)}$ computed by the inquiry element b computation unit 335 correspond to the (D+2) number of elements $k_{n,(b)}$ computed by the search element b computation unit 243 of the user secret key generation device 200. The (D+2) number of elements $f'_{m',0}$ computed by the child derangement element computation unit 375 correspond to the (D+2) number of elements $f_{m,0}$ computed by the derangement element computation unit 251 of the user secret key generation device 200. The (D+2)×(D+2) number of elements $f_{m',n,(a)}$ computed by the child derangement element a computation unit 376 correspond to the (D+2)×(D+2) number of elements $f_{m,n,(a)}$ computed by the derangement element a computation unit 252 of the user secret key generation device 200. The (D+2)×(D+2) number of elements $f_{m',n,(b)}$ computed by the child derangement element b computation unit 377 correspond to the (D+2)×(D+2) number of elements $f_{m,n,(b)}$ computed by the derangement element b computation unit 253 of the user secret key generation device 200. The (D"-L-1) number of elements $h'_{\lambda'}$ computed by the child delegation element computation unit 378 correspond to the (D'-L) number of elements $h_{\lambda}$ computed by the delegation element computation unit 261 of the user secret key generation device 200. The (D+2)×(D"-L-1) number of elements $h'_{m',\lambda'}$ computed by the child secondary delegation element computation unit 379 correspond to the (D+2)×(D'-L) number of elements $h_{m,\lambda}$ computed by the secondary delegation element computation unit 262 of the user secret key generation device 200.

In this way, out of the (D'-L) number of elements $h_{\lambda}$ stored by the delegation element storage unit 327 and the (D+2)×(D'-L) number of elements $h_{m,\lambda}$ stored by the secondary delegation element storage unit 328, the (D"-L-1) number of elements $h_{\lambda'}$ and the (D+2)×(D"-L-1) number of elements $h_{m,\lambda'}$ both having $\lambda$ equal to the integer $\lambda'$ from (L+2) to D" are used for generating a child user secret key. Given that $\lambda$ is an integer from (L+1) to D', the query issuing device 300 can generate a child user secret key when the integer D' is equal to or greater than the integer D".

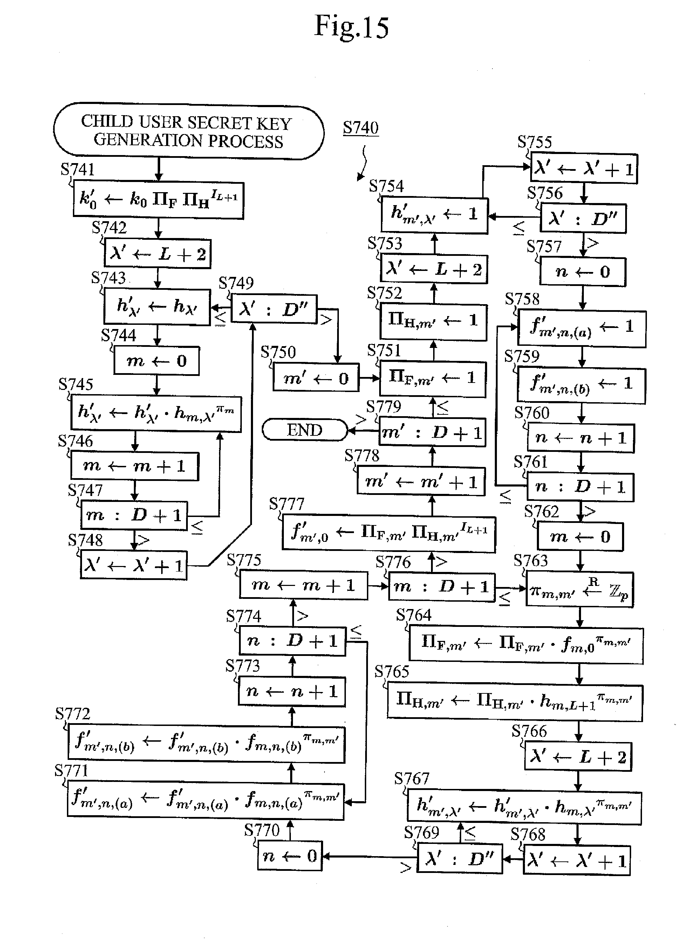

Fig. 15 is a flowchart showing an example of a flow of a child user secret key generation process S740 in this embodiment.

In the child user secret key generation process S740, the child user secret key generation unit 370 computes elements, other than elements generated by the common processing unit 330, to be included in a child user secret key. A specific procedure for computing a child user secret key will be described here. However, the calculation procedure is not limited to the procedure described here and may be different from the procedure described here, provided that mathematically equivalent results can be obtained.

The child user secret key generation process S740 has a child search element computation step S741, a child

$\lambda$ initialization step S742, a child delegation element initialization step S743, an m initialization step S744, a child delegation element calculation step S745, an m increment step S746, an m determination step S747, a child $\lambda$ increment step S748, a child $\lambda$ determination step S749, a child m initialization step S750, a child total product element F initialization step S751, a child total product element H initialization step S752, a child $\lambda$ initialization step S753, a child secondary delegation element initialization step S754, a child $\lambda$ increment step S755, a child $\lambda$ determination step S756, an n initialization step S757, a child derangement element a initialization step S758, a child derangement element b initialization step S759, an n increment step S760, an n determination step S761, an m initialization step S762, a secondary random number $\pi$ selection step S763, a child total product element F calculation step S764, a child total product element H calculation step S765, a child $\lambda$ initialization step S766, a child secondary delegation element calculation step S767, a child $\lambda$ increment step S768, a child $\lambda$ determination step S769, an n initialization step S770, a child derangement element a calculation step S771, a child derangement element b calculation step S772, an n increment step S773, an n determination step S774, an m increment step S775, an m determination step S776, a child derangement element computation step S777, a child m increment step S778, and a child m determination step S779.

In the child search element computation step S741, based on the integer $I_{L+1}$ stored by the child user identifier storage unit 362 and the element $\Pi_H$ computed by the total product element H computation unit 333 in the common process S710, the child search element computation unit 372, using the CPU 911, calculates the element $\Pi_H$ raised to the power of $I_{L+1}$.

Based on the computed element "$\Pi_H{}^\wedge I_{L+1}$", the element $k_0$ stored by the search element storage unit 321, and the element $\Pi_F$ computed by the total product element F computation unit 332 in the common process S710, the child search element computation unit 372, using the CPU 911, calculates a product of the element $k_0$, the element $\Pi_F$, and the element "$\Pi_H{}^\wedge I_{L+1}$" and obtains an element $k'_0$ which is an element of the multiplicative group G2.

In the child $\lambda$ initialization step S742, the child delegation element computation unit 378, using the CPU 911, sets the value of the variable $\lambda'$ to the value (L+2) obtained by adding two to the integer L.

In the child delegation element initialization step S743, the child delegation element computation unit 378, using the RAM 914, stores an element $h_\lambda$ having $\lambda$ equal to the value of the variable $\lambda'$ out of the (D'-L) number of elements $h_\lambda$ stored by the delegation element storage unit 327 as a first value for calculating an element $h'_{\lambda'}$.

In the m initialization step S744, the child delegation element computation unit 378, using the CPU 911, sets the value of the variable m to 0.

In the child delegation element calculation step S745, based on an element $h_{m,\lambda}$ having m equal to the value of the variable m and $\lambda$ equal to the value of the variable $\lambda$ out of the (D+2)×(D'-L) number of elements $h_{m,\lambda}$ stored by the secondary delegation element storage unit 328 and an integer $\pi_m$ having m equal to the value of the variable m out of the (D+2) number of integers $\pi_m$ selected by the random number $\pi$ selection unit 331, the child delegation element computation unit 378, using the CPU 911, calculates the element $h_{m,\lambda}$ raised to the power of $\pi_m$.

Based on the stored element $h'_{\lambda'}$ and the computed element "$h_{m,\lambda}{}^\wedge\pi_m$", the child delegation element computation unit 378, using the CPU 911, calculates a product "$h'_{\lambda'}\cdot h_{m,\lambda}{}^\wedge_m$" of the element $h'_{\lambda'}$ and the element "$h_{m,\lambda}{}^\wedge\pi_m$". The child delegation element computation unit 378, using the RAM 914, stores the computed product "$h'_{\lambda'}\cdot h_{m,\lambda}{}^\wedge\pi_m$" as a new value of the element $h'_{\lambda'}$.

In the m increment step S746, the child delegation element computation unit 378, using the CPU 911, increments the value of the variable m by one.

In the m determination step S747, the child delegation element computation unit 378, using the CPU 911, compares the value of the variable m and the value (D+1) obtained by adding one to the integer D.

If the value of the variable m is not greater than (D+1), the child delegation element computation unit 378, using the CPU 911, returns to the child delegation element calculation step S745 and continues with the calculation of the element $h'_{\lambda'}$.

If the value of the variable m is greater than (D+1), the child delegation element computation unit 378, using the CPU 911, fmishes the calculation of the element $h'_{\lambda'}$ and proceeds to the child $\lambda$ increment step S748.

In the child $\lambda$ increment step S748, the child delegation element computation unit 378, using the CPU 911, increments the value of the variable $\lambda'$ by one.

In the child $\lambda$ determination step S749, the child delegation element computation unit 378, using the CPU 911, compares the value of the variable $\lambda'$ and the integer D".

If the value of the variable $\lambda'$ is not greater than D", the child delegation element computation unit 378, using the CPU 911, returns to the child delegation element initialization step S743 and calculates a next element $h'_{\lambda'}$.

If the value of the variable $\lambda'$ is greater than D", the child delegation element computation unit 378, using the CPU 911, finishes the calculation of the (D"-L-1) number of elements $h'_{\lambda'}$ and proceeds to the child m initialization step S750.

In this way, the steps from the child delegation element initialization step S743 to the child $\lambda$ determination step S749 are repeated (D"-L-1) number of times. The child delegation element computation unit 378 executes the child delegation element calculation step S745 (D+2) number of times for each repeat of the variable $\lambda'$ and computes one element $h'_{\lambda'}$. The child delegation element computation unit 378 computes a total of (D"-L-1) number of elements $h'_{\lambda'}$.

In the child m initialization step S750, the child total product element F computation unit 373, using the CPU 911, sets the value the variable m' to 0.

In the child total product element F initialization step S751, the child total product element F computation unit 373, using the RAM 914, stores the identity element 1 of the multiplicative group G2 as a first value for calculating an element $\Pi_{F,m'}$.

In the child total product element H initialization step S752, the child total product element H computation unit 374, using the RAM 914, stores the identity element 1 of the multiplicative group G2 as a first value for calculating an element $\Pi_{H,m'}$.

In the child $\lambda$ initialization step S753, the child secondary delegation element computation unit 379, using the CPU 911, sets the value of the variable $\lambda'$ to the value (L+2) obtained by adding two to the integer L.

In the child secondary delegation element initialization step S754, the child secondary delegation element computation unit 379, using the RAM 914, stores the identity element 1 of the multiplicative group G2 as a first value for calculating an element $h'_{m',\lambda'}$.

In the child $\lambda$ increment step S755, the child secondary delegation element computation unit 379, using the CPU 911, increments the value of the variable $\lambda'$ by one.

In the child $\lambda$ determination step S756, the child secondary delegation element computation unit 379, using the CPU 911, compares the value of the variable $\lambda'$ and the integer D".

If the value of the variable $\lambda'$ is not greater than D", the child secondary delegation element computation unit 379, using the CPU 911, returns to the child secondary delegation element initialization step S754 and sets a next element $h'_{m',\lambda'}$.

If the value of the variable $\lambda'$ is greater than D", the child secondary delegation element computation unit 379, using the CPU 911, fmishes the setting of the (D"-L-1) number of elements $h'_{m',\lambda'}$ and proceeds to the n initialization step S757.

In the n initialization step S757, the child derangement element a computation unit 376, using the CPU 911, sets the value of the variable n to 0.

In the child derangement element a initialization step S758, the child derangement element a computation unit 376, using the RAM 914, stores the identity element 1 of the multiplicative group G2 as a first value for calculating an element $f'_{m',n,(a)}$.

In the child derangement element b initialization step S759, the child derangement element b computation unit 377, using the RAM 914, stores the identity element 1 of the multiplicative group G2 as a first value for calculating an element $f_{m',n,(b)}$.

In the n increment step S760, the child derangement element a computation unit 376, using the CPU 911, increments the value of the variable n by one.

In the n determination step S761, the child derangement element a computation unit 376, using the CPU 911, compares the value of the variable n and the value (D+1) obtained by adding one to the integer D.

If the value of the variable n is not greater than (D+1), the child derangement element a computation unit 376, using the CPU 911, returns to the child derangement element a initialization step S758 and sets a next element $f'_{m',n,(a)}$ and a next element $f'_{m,n,(b)}$.

If the value of the variable n is greater than (D+1), the child derangement element a computation unit 376, using the CPU 911, finishes the setting of (D+2) number of elements $f'_{m,n,(a)}$ and (D+2) number of elements $f'_{m',n,(b)}$ and proceeds to the m initialization step S762.

In the m initialization step S762, the secondary random number $\pi$ selection unit 371, using the CPU 911, sets the value of the variable m to 0.

In the secondary random number $\pi$ selection step S763, the secondary random number $\pi$ selection unit 371, using the CPU 911, uniformly randomly selects an integer $\pi_{m,m'}$ out of integers from 0 to less than p.

In the child total product element F calculation step S764, based on an element $f_{m,0}$ having m equal to the value of the variable m out of the (D+2) number of elements $f_{m,0}$ stored by the derangement element storage unit 324 and the integer $\pi_{m,m'}$ selected by the secondary random number $\pi$ selection unit 371 in the secondary random number $\pi$ selection step S763, the child total product element F computation unit 373, using the CPU 911, calculates the element $f_{m,0}$ raised to the power of $\pi_{m,m'}$.

Based on the stored element $\Pi_{F,m'}$ and the computed element "$f_{m,0}{}^{\wedge}\pi_{m,m'}$", the child total product element F computation unit 373, based on the CPU911, calculates a product "$\Pi_{F,m'}\cdot f_{m,0}{}^{\wedge}\pi_{m,m'}$" of the element $\Pi_{F,m'}$ and the element "$f_{m,0}{}^{\wedge}\pi_{m,m'}$". The child total product element F computation unit 373, using the RAM 914, stores the computed product "$\Pi_{F,m'}\cdot f_{m,0}{}^{\wedge}\pi_{m,m'}$" as a new value of the element $\Pi_{F,m'}$.

In the child total product element H calculation step S765, based on an element $h_{m,L+1}$ having m equal to the value of the variable m and $\lambda$ equal to (L+1) out of the (D+2)x(D'-L) number of elements $h_{m,\lambda}$ stored by the secondary delegation element storage unit 328 and the integer $\pi_{m,m'}$ selected by the secondary random number $\pi$ selection unit 371 in the secondary random number $\pi$ selection step S763, the child total product element H computation unit 374, using the CPU 911, calculates the element $h_{m,L+1}$ raised to the power of $\pi_{m,m'}$.

Based on the stored element $\Pi_{H,m'}$ and the computed element "$h_{m,L+1}{}^{\wedge}\pi_{m,m'}$" the child total product element H computation unit 374, using the CPU 911, calculates a product "$\Pi_{H,m'} \cdot h_{m,L+1}{}^{\wedge}\pi_{m,m}$" of the element $\Pi_{H,m'}$ and the element "$h_{m,L+1}{}^{\wedge}\pi_{m,m}$". The child total product element H computation unit 374, using the RAM 914, stores the computed product "$\Pi_{H,m'} \cdot h_{m,L+1}{}^{\wedge}\pi_{m,m}$" as a new value of the element $\Pi_{H,m'}$.

In the child $\lambda$ initialization step S766, the child secondary delegation element computation unit 379, using the CPU 911, sets the value of the variable $\lambda'$ to the value (L+2) obtained by adding two to the integer L.

In the child secondary delegation element calculation step S767, based on an element $h_{m,\lambda}$ having m equal to the value of the variable m and $\lambda$ equal to the value of the variable $\lambda'$ out of the (D+2)×(D'-L) number of elements $h_{m,\lambda}$ stored by the secondary delegation element storage unit 328 and the integer $\pi_{m,m'}$ selected by the secondary random number $\pi$ selection unit 371 in the secondary random number $\pi$ selection step S763, the child secondary delegation element computation unit 379, using the CPU 911, calculates the element $h_{m,\lambda}$ raised to the power of $\pi_{m,m'}$. Based on an element $h'_{m',\lambda'}$ having $\lambda'$ equal to the value of the variable $\lambda'$ out of the (D"-L-1) of stored elements $h_{m',\lambda'}$ and the computed element "$h_{m,\lambda'}{}^{\wedge}\pi_{m,m'}$", the child secondary delegation element computation unit 379, using the CPU 911, calculates a product "$h'_{m',\lambda'} \cdot h_{m,\lambda}{}^{\wedge}\pi_{m,m'}$" of the element $h'_{m',\lambda'}$ and the element "$h_{m,\lambda}{}^{\wedge}\pi_{m,m'}$". The child secondary delegation element computation unit 379, using the RAM 914, stores the computed product "$h'_{m',\lambda'} \cdot h_{m,\lambda}{}^{\wedge}\pi_{m,m'}$" as a new value of the element $h'_{m',\lambda'}$, having $\lambda'$ equal to the value of the variable $\lambda'$.

In the child $\lambda$ increment step S768, the child secondary delegation element computation unit 379, using the CPU 911, increments the value of the variable $\lambda'$ by one.

In the child $\lambda$ determination step S769, the child secondary delegation element computation unit 379, using the CPU 911, compares the value of the variable $\lambda'$ and the integer D".

If the value of the variable $\lambda'$ is not greater than D", the child secondary delegation element computation unit 379, using the CPU 911, returns to the child secondary delegation element calculation step S767, and calculates a next element $h'_{m',\lambda'}$.

If the value of the variable $\lambda'$ is greater than D", the child secondary delegation element computation unit 379, using the CPU 911, proceeds to the n initialization step S770.

In the n initialization step S770, the child derangement element a computation unit 376, using the CPU 911, sets the value of the variable n to 0.

In the child derangement element a calculation step S771, based on an element $f_{m,n,}(a)$ having m equal to the value of the variable m and n equal to the value of the variable n out of the (D+2)x(D+2) number of elements $f_{m,n,}(a)$ stored by the derangement element a storage unit 325 and the integer $\pi_{m,m'}$ selected by the secondary random number $\pi$ selection unit 371 in the secondary random number $\pi$ selection step S763, the child derangement element a computation unit 376, using the CPU 911, calculates the element $f_{m,n,(a)}$ raised to the power of $\pi_{m,m'}$. Based on an element $f'_{m',n,(a)}$ having n equal to the variable n out of the (D+2) number of stored elements $f'_{m',n,(a)}$ and the computed element "$f_{m,n,(a)}{}^{\wedge}\pi_{m,m'}$", the child derangement element a computation unit 376, using the CPU 911, calculates a product "$f'_{m',n,(a)} \cdot f_{m,n,(a)}{}^{\wedge}\pi_{m,m'}$" of the element $f'_{m',n,(a)}$ and the element "$f_{m,n,(a)}{}^{\wedge}\pi_{m,m'}$". The child derangement element a computation unit 376, using the RAM 914, stores the computed product "$f'_{m',n,(a)} \cdot f_{m,n,(a)}{}^{\wedge}\pi_{m,m'}$" as a new value of the element $f'_{m',n,(a)}$ having n equal to the value of the variable n.

In the child derangement element b calculation step S772, based on an element $f_{m,n,(b)}$ having m equal to the value of the variable m and n equal to the value of the variable n out of the (D+2)x(D+2) number of elements $f_{m,n,(b)}$ stored by the derangement element b storage unit 326 and the integer $\pi_{m,m'}$ selected by the secondary random number $\pi$ selection unit 371 in the secondary random number $\pi$ selection step S763, the child derangement element b computation unit 377, using the CPU 911, calculates the element $f_{m,n,(b)}$ raised to the power of $\pi_{m,m'}$. Based on an element $f'_{m',n,(b)}$ having n equal to the value of the variable n out of the (D+2) number of stored elements $f'_{m',n,(b)}$ and the computed element "$f_{m,n,(b)}{}^{\wedge}\pi_{m,m'}$" the child derangement element b computation unit 377, using the CPU 911, calculates a product "$f'_{m',n'} \cdot f_{m,n,(b)}{}^{\wedge}\pi_{m,m'}$" of the element $f'_{m,n,(b)}$ and the element "$f_{m,n,(b)}{}^{\wedge}\pi_{m,m'}$" The child derangement element a computation unit 376, using the RAM 914, stores the computed product "$f'_{m',n,(b)} \cdot f_{m,n,(b)}{}^{\wedge}\pi_{m,m'}$" as a new value of the element $f'_{m',n,(b)}$ having n equal to the value of the variable n.

In the n increment step S773, the child derangement element a computation unit 376, using the CPU 911, increments the value of the variable n by one.

In the n determination step S774, the child derangement element a computation unit 376, using the CPU 911, compares the value of the variable n and the value (D+1) obtained by adding one to the integer D.

If the value of the variable n is not greater than (D+1), the child derangement element a computation unit 376, using the CPU 911, returns to the child derangement element a calculation step S771 and calculates a next element $f'_{m',n,(a)}$ and a next element $f'_{m',n,(b)}$.

If the value of the variable n is greater than (D+1), the child derangement element a computation unit 376, using the CPU 911, proceeds to the m increment step S775.

In the m increment step S775, the secondary random number $\pi$ selection unit 371, using the CPU 911, increments the value of the variable m by one.

In the m determination step S776, the secondary random number $\pi$ selection unit 371, using the CPU 911, compares the value of the variable m and the value (D+1) obtained by adding one to the integer D.

If the value of the variable m is not greater than (D+1), the secondary random number $\pi$ selection unit 371, using the CPU 911, returns to the secondary random number $\pi$ selection step S763 and selects a next integer $\pi_{m,m'}$.

If the value of the variable m is greater than (D+1), the secondary random number $\pi$ selection unit 371, using the CPU 911, proceeds to the child derangement element computation step S777.

In the child derangement element computation step S777, based on the integer $I_{L+1}$ stored by the child user identifier storage unit 362 and the element $\Pi_{H,m'}$ computed by the child total product element H computation unit 374, the child derangement element computation unit 375, using the CPU 911, calculates the element $\Pi_{H,m'}$ raised to the power of $I_{L+1}$.

Based on the element $\Pi_{F,m'}$ computed by the child total product element F computation unit 373 and the computed element "$\Pi_{H,m'}{}^{\wedge}I_{L+1}$", the child derangement element computation unit 375, using the CPU 911, calculates a product of the element $\Pi_{F,m'}$ and the element "$\Pi_{H,m'}{}^{\wedge}I_{L+1}$" and obtains an element $f'_{m',0}$ which is an element of the multiplicative group G2.

In the child m increment step S778, the child total product element F computation unit 373, using the CPU 911, increments the value of the variable m' by one.

In the child m determination step S779, the child total product element F computation unit 373, using the CPU 911, compares the value of the variable m' and the value (D+1) obtained by adding one to the integer D.

If the value of the variable m' is not greater than (D+1), the child total product element F computation unit 373, using the CPU 911, returns to the child total product element F initialization step S751 and sets a next element $\Pi_{F',m'}$

If the value of the variable m' is greater than (D+1), the child total product element F computation unit 373, using the CPU 911, fmishes the child user secret key generation process S740.

In this way, the steps from the child total product element F initialization step S751 to the child m determination step S779 are repeated (D+2) number of times.

The steps from the secondary random number $\pi$ selection step S763 to the m determination step S776 are repeated (D+2) number of times for each repeat of the variable m'. The child total product element F computation unit 373 executes the child total product element F calculation step S764 (D+2) number of times and computes one element $\Pi_{F,m'}$ for each repeat of the variable m'. The child total product element F computation unit 373 computes a total of (D+2) number of elements $\Pi_{F,m'}$. The child total product element H computation unit 374 executes the child total product element H calculation step S765 (D+2) number of times and computes one element $\Pi_{H,m'}$ for each repeat of the variable m'. The child total product element H computation unit 374 computes a total of (D+2) number of elements $\Pi_{H,m'}$.

The steps from the child secondary delegation element calculation step S767 to the child $\lambda$ determination step S769 are repeated (D"-L-1) number of times for each repeat of the variable m. The child secondary delegation element computation unit 379 executes the child secondary delegation element calculation step S767 (D"-L-1) number of times and calculates (D"-L-1) number of elements $h'_{m',\lambda'}$ for each repeat of the variable m. By repeating this (D+2) number of times, the child secondary delegation element computation unit 379 computes (D"-L-1) number of elements $h'_{m',\lambda'}$. By further repeating this (D+2) number of times, the child secondary delegation element computation unit 379 computes a total of $(D+2)\times$(D"-L-1) number of elements $h'_{m',\lambda'}$.

The steps from the child derangement element a computation step S771 to the n determination step S774 are repeated (D+2) number of times for each repeat of the variable m. The child derangement element a computation unit 376 executes the child derangement element a calculation step S771 (D+2) number of times and calculates (D+2) number of elements $f'_{m',n,(a)}$ for each repeat of the variable m. By repeating this (D+2) number of times, the child derangement element a computation unit 376 computes (D+2) number of elements $f'_{m',n,(a)}$. By further repeating this (D+2) number of times, the child derangement element a computation unit 376 computes a total of $(D+2)\times$(D+2) number of elements $f'_{m',n,(a)}$. The child derangement element b computation unit 377 executes the child derangement element b calculation step S772 (D+2) number of times and calculates (D+2) number of elements $f'_{m',n,(b)}$ for each repeat of the variable m. By repeating this (D+2) number of times, the child derangement element b computation unit 377 computes (D+2) number of elements $f'_{m',n,(b)}$. By further repeating this (D+2) number of times, the child derangement element b computation unit 377 computes a total of $(D+2)\times$(D+2) number of elements $f'_{m',n,(b)}$.

The user secret key generation device 200 computes each of the elements included in a user secret key by calculating the right side of each of the equations shown below.

[Formula 16]

$$k_0 = w' \prod_{n \in [D+1]} \Pi_{Y,n}{}^{\rho_n} \qquad f_{m,0} = \prod_{n \in [D+1]} \Pi_{Y,n}{}^{\rho_{n,m}}$$

$$k_{n,(a)} = a'_n{}^{-\rho_n} \qquad f_{m,n,(a)} = a'_n{}^{-\rho_{n,m}}$$

$$k_{n,(b)} = b'_n{}^{-\rho_n} \qquad f_{m,n,(b)} = b'_n{}^{-\rho_{n,m}}$$

$$h_\lambda = \prod_{n \in [D+1]} y'_{n,\lambda}{}^{\rho_n} \qquad h_{m,\lambda} = \prod_{n \in [D+1]} y'_{n,\lambda}{}^{\rho_{n,m}}$$

$$\Pi_{Y,n} = y'_{n,0} \prod_{i \in [1,L]} y'_{n,i}{}^{I_i}$$

The equations for computing the element $k_0$ and the element $f_{m,0}$ can be converted as shown below.

[Formula 17]

$$k_0 = w' \prod_{n \in [D+1]} \left( y'_{n,0} \cdot \prod_{i \in [1,L]} y'_{n,i}{}^{I_i} \right)^{\rho_n} = w' \cdot \prod_{n \in [D+1]} \left( y'_{n,0}{}^{\rho_n} \cdot \prod_{i \in [1,L]} y'_{n,i}{}^{I_i \cdot \rho_n} \right)$$

$$f_{m,0} = \prod_{n \in [D+1]} \left( y'_{n,0} \cdot \prod_{i \in [1,L]} y'_{n,i}{}^{I_i} \right)^{\rho_{n,m}} = \prod_{n \in [D+1]} \left( y'_{n,0}{}^{\rho_{n,m}} \cdot \prod_{i \in [1,L]} y'_{n,i}{}^{I_i \cdot \rho_{n,m}} \right)$$

The child search element computation unit 372 computes the element $k'_0$ included in the child user secret key by calculating the right side of each of the equations shown below.

[Formula 18]

$$k'_0 = k_0 \, \Pi_F \, \Pi_H{}^{I_{L+1}}$$

$$\Pi_F = \prod_{m \in [D+1]} f_{m,0}{}^{\pi_m} \qquad \Pi_H = h_{L+1} \prod_{m \in [D+1]} h_{m,L+1}{}^{\pi_m}$$

The equation for computing the element $k'_0$ can be converted as shown below.

[Formula 19]

$$k'_0 = k_0 \prod_{m \in [D+1]} f_{m,0}{}^{\pi_m} \cdot \left( h_{L+1} \prod_{m \in [D+1]} h_{m,L+1}{}^{\pi_m} \right)^{I_{L+1}}$$

$$= w' \cdot \prod_{n \in [D+1]} \left( y'_{n,0}{}^{\rho'_n} \cdot \prod_{i \in [L+1]} y'_{n,i}{}^{I_i \cdot \rho'_n} \right)$$

where the following applies.

[Formula 20]

$$\rho'_n = \rho_n + \sum_{m \in [D+1]} \rho_{n,m}\, \pi_m$$

where $\rho'_n$ is an integer from 0 to less than p and n is an integer from 0 to (D+1).

The (D+2) number of integers $\rho_n$, the (D+2)×(D+2) number of integers $\rho_{n,m}$, and the (D+2) number of integers $\pi_m$ are all uniformly randomly distributed among integers from 0 to less than p, so that the (D+2) number of integers $\rho'_n$ are also uniformly randomly distributed among integers from 0 to less than p. Thus, the integer $\rho'_n$ is equivalent to the integer $\rho_n$ selected by the random number $\rho$ selection unit 231 of the user secret key generation device 200.

Thus, the element $k'_0$ computed by the child search element computation unit 372 is equivalent to the element $k_0$ computed by the search element computation unit 241 of the user secret key generation device 200.

The inquiry element a computation unit 334 computes the element $k'_{n,(a)}$ included in the child user secret key by calculating the right side of the equation shown below.

[Formula 21]

$$k'_{n,(a)} = k_{n,(a)} \prod_{m \in [D+1]} f_{m,n,(a)}{}^{\pi_m}$$

The equation for computing the element $k'_{n,(a)}$ can be converted as shown below.

[Formula 22]

$$k'_{n,(a)} = a'_n{}^{-\rho_n} \cdot \prod_{m \in [D+1]} a'_n{}^{-\rho_{n,m} \cdot \pi_m} = a'_n{}^{-\rho'_n}$$

Thus, the element $k'_{n,(a)}$ computed by the inquiry element a computation unit 334 is equivalent to the element $k_{n,(a)}$ computed by the search element a computation unit 242 of the user secret key generation device 200.

The inquiry element b computation unit 335 computes the element $k'_{n,(b)}$ included in the child user secret key by calculating the right side of the equation shown below.

[Formula 23]

$$k'_{n,(b)} = k_{n,(b)} \prod_{m \in [D+1]} f_{m,n,(b)}{}^{\pi_m}$$

The equation for computing the element $k'_{n,(b)}$ can be converted as shown below.

[Formula 24]

$$k'_{n,(b)} = b'^{-\rho_n}_n \cdot \prod_{m \in [D+1]} b'^{-\rho_{n,m} \cdot \pi_m}_n = b'^{-\rho'_n}_n$$

Thus, the element $k'_{n,(b)}$ computed by the inquiry element b computation unit 335 is equivalent to the element $k_{n,(b)}$ computed by the search element b computation unit 243 of the user secret key generation device 200.

The child derangement element computation unit 375 computes the element $f'_{m',0}$ included in the child user secret key by calculating the right side of each of the equations shown below.

[Formula 25]

$$f'_{m',0} = \Pi_{F,m'} \, \Pi_{H,m'}{}^{I_{L+1}}$$

$$\Pi_{F,m'} = \prod_{m \in [D+1]} f_{m,0}{}^{\pi_{m,m'}} \qquad \Pi_{H,m'} = \prod_{m \in [D+1]} h_{m,L+1}{}^{\pi_{m,m'}}$$

The equation for computing the element $f'_{m',0}$ can be converted as shown below.

[Formula 26]

$$f'_{m',0} = \prod_{m \in [D+1]} f_{m,0}{}^{\pi_{m,m'}} \cdot \left( \prod_{m \in [D+1]} h_{m,L+1}{}^{\pi_{m,m'}} \right)^{I_{L+1}}$$

$$= \prod_{n \in [D+1]} \left( y'_{n,0}{}^{\rho'_{n,m'}} \cdot \prod_{i \in [1,L+1]} y'_{n,i}{}^{I_i \cdot \rho'_{n,m'}} \right)$$

where the following applies.

[Formula 27]

$$\rho'_{n,m'} = \sum_{m \in [D+1]} \rho_{n,m} \, \pi_{m,m'}$$

where $\rho'_{n,m'}$ is an integer from 0 to less than p, n is an integer from 0 to (D+1), and m is an integer from 0 to (D+1).

The (D+2)x(D+2) number of integers $\rho_{n,m}$ and the (D+2)x(D+2) number of integers $\pi_{m,m'}$ are all uniformly randomly distributed among integers from 0 to less than p, so that the (D+2)×(D+2) number of integers $\rho'_{n,m'}$ are also uniformly randomly distributed among integers from 0 to less than p. Thus, the integer $\rho'_{n,m'}$ is equivalent to the integer $\rho_{n,m}$ selected by the secondary random number ρ selection unit 232 of the user secret key generation device 200. Thus, the element $f'_{m',0}$ computed by the child derangement element computation unit 375 is equivalent to the element $f_{m,0}$ computed by the derangement element computation unit 251 of the user secret key generation device 200.

The child derangement element a computation unit 376 computes the element $f'_{m',n,(a)}$ included in the child user secret key by calculating the right side of the equation shown below.

[Formula 28]

$$f'_{m',n,(a)} = \prod_{m\in[D+1]} f_{m,n,(a)}{}^{\pi_{m,m'}}$$

The equation for computing the element $f'_{m',n,(a)}$ can be converted as shown below.

[Formula 29]

$$f'_{m',n,(a)} = \prod_{m\in[D+1]} a'_n{}^{-\rho_{n,m}\cdot\pi_{m,m'}} = a'_n{}^{-\rho'_{n,m'}}$$

Thus, the element $f'_{m',n,(a)}$ computed by the child derangement element a computation unit 376 is equivalent to the element $f_{m,n,(a)}$ computed by the derangement element a computation unit 252 of the user secret key generation device 200.

The child derangement element b computation unit 377 computes the element $f'_{m,n,(b)}$ included in the child user secret key by calculating the right side of the equation shown below.

[Formula 30]

$$f'_{m',n,(b)} = \prod_{m\in[D+1]} f_{m,n,(b)}{}^{\pi_{m,m'}}$$

The equation for computing the element $f'_{m',n,(b)}$ can be converted as shown below.

[Formula 31]

$$f'_{m',n,(b)} = \prod_{m\in[D+1]} b'_n{}^{-\rho_{n,m}\cdot\pi_{m,m'}} = b'_n{}^{-\rho'_{n,m'}}$$

Thus, the element $f'_{m',n,(b)}$ computed by the child derangement element b computation unit 377 is equivalent to the element $f_{m,n,(b)}$ computed by the derangement element b computation unit 253 of the user secret key generation device 200.

The child delegation element computation unit 378 computes the element $h'_{\chi'}$ included in the child user secret key by calculating the right side of the equation shown below.

[Formula 32]

$$h'_{\chi'} = h_{\chi'} \prod_{m\in[D+1]} h_{m,\chi'}{}^{\pi_m}$$

The equation for computing the element $h'_{\chi'}$ can be converted as shown below.

[Formula 33]

$$h'_{\lambda'} = \prod_{n\in[D+1]} \left( {y'_{n,\lambda'}}^{\rho_n} \cdot \prod_{m\in[D+1]} {y'_{n,\lambda'}}^{\rho_{n,m}\cdot\pi_m} \right) = \prod_{n\in[D+1]} {y'_{n,\lambda'}}^{\rho'_n}$$

Thus, the element $h'_{\lambda'}$ computed by the child delegation element computation unit 378 is equivalent to the element $h_\lambda$ computed by the delegation element computation unit 261 of the user secret key generation device 200.

The child secondary delegation element computation unit 379 computes the element $h'_{m',\lambda'}$ included in the child user secret key by calculating the right side of the equation shown below.

[Formula 34]

$$h'_{m',\lambda'} = \prod_{m\in[D+1]} {h_{m,\lambda'}}^{\pi_{m,m'}}$$

The equation for computing the element $h'_{m',\lambda'}$ can be converted as shown below.

[Formula 35]

$$h'_{m',\lambda'} = \prod_{n\in[D+1]}\prod_{m\in[D+1]} {y'_{n,\lambda'}}^{\rho_{n,m}\cdot\pi_{m,m'}} = \prod_{n\in[D+1]} {y'_{n,\lambda'}}^{\rho'_{n,m'}}$$

Thus, the element $h'_{m',\lambda'}$ computed by the child secondary delegation element computation unit 379 is equivalent to the element $h_{m,\lambda}$ computed by the secondary delegation element computation unit 262 of the user secret key generation device 200.

As described above, all the elements included in the child user secret key are equivalent to the elements included in the corresponding user secret key. As a result, the child user secret key generated by the query issuing device 300 is equivalent to the user secret key generated by the user secret key generation device 200.

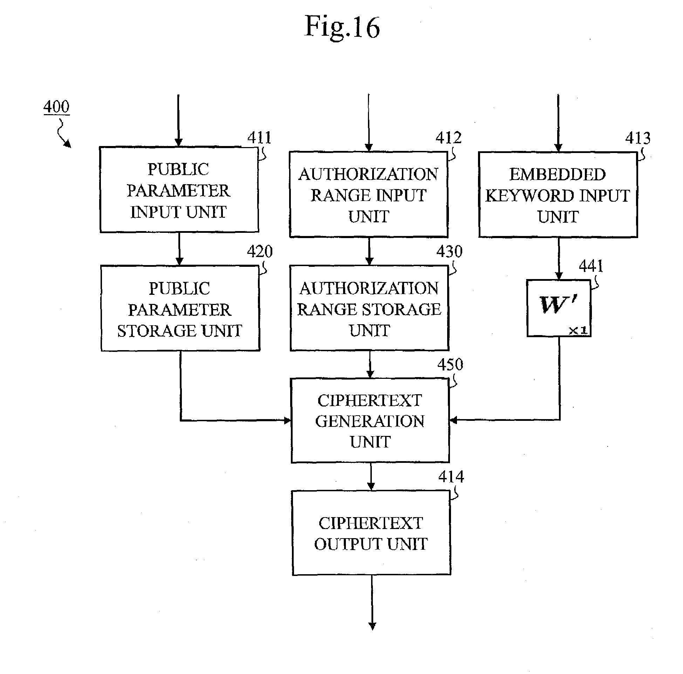

Fig. 16 is a block configuration diagram showing an example of a configuration of functional blocks of the encryption device 400 in this embodiment.

The encryption device 400 generates a ciphertext in which a keyword is embedded by using a public parameter generated by the public parameter generation device 100.

The encryption device 400 has a public parameter input unit 411, an authorization range input unit 412, an embedded keyword input unit 413, a ciphertext output unit 414, a public parameter storage unit 420, an authorization range storage unit 430, an embedded keyword storage unit 441, and a ciphertext generation unit 450.

The public parameter input unit 411, using the CPU 911, inputs the public parameter generated the public parameter generation device 100. The public parameter includes data representing a generator $g_1$ which is an element of the multiplicative group G1, an element $\Omega$ which is an element of the multiplicative group G3, (D+2)×(D+1) of number of elements $a_{n,1}$ which are elements of the multiplicative group G1, and (D+2)×(D+1) number of elements $b_{n,1}$ which are elements of the multiplicative group G1.

The public parameter storage unit 420, using the magnetic disk device 920, stores the public parameter input by the public parameter input unit 411.

The authorization range input unit 412, using the CPU 911, inputs an integer L' and L" number of integers $l'_j$ representing a range of the query issuing devices 300 to be given an authorization to search for the keyword embedded in the ciphertext to be generated. The integer L' is an integer from 1 to (D-1), and L" is an arbitrary integer selected out of integers from 0 to L'. The integer $l'_j$ is an integer from 0 to less than p, where j is one of L" number of arbitrary integers selected out of integers from 1 to (D-1).

The integer L' represents the segment count L of the user ID of the query issuing device 300 to be given an authorization.

This means that an authorization to search is not given to the query issuing device 300 of a different level whose segment count L of the user ID is not equal to the integer L'.

The integer $I'_j$ indicates specifying the j-th integer $I_j$ out of the L number of integers $I_i$ which are the user ID of the query issuing device 300. This means that an authorization to search is not given to the query issuing device 300 whose j-th integer $I_j$ is not equal to $I'_j$.

When the user ID is a character string, the authorization range input unit 412 may be configured to input character strings corresponding to L" number of specified segments of the user ID. In this case, the authorization range input unit 412 converts the L" number of input character strings into integers $I'_j$.

The authorization range input unit 412 may be configured to input wildcards indicating (L"-L') number of unspecified segments of the user ID. In this case, the authorization range input unit 412 computes the integer L' by adding the number of input integers $I'_j$ and the number of input wildcards.

A set whose elements are L" number of integers j will hereinafter be referred to as "A'". The set A' represents segments of the user ID to which the integers $I_j$ are specified. A set whose elements are (L'-L") number of integers other than the elements of the set A' out of L' number of integers from 1 to L' will be referred to as "A". The set A represents segments of the user ID to which wildcards are specified.

For example, to specify the authorization range 610a shown in Fig. 3, the integer L' is 2, the set A' is {1}, and the set A is {2}. To specify the authorization range 610b, the integer L' is 1, the set A' is {1}, and the set A is an empty set. To specify the authorization range 610f, the integer L' is 4, the set A' is an empty set, and set A is {1,2,3,4}.

The authorization range storage unit 430, using the magnetic disk device 920, stores the authorization range input by the authorization range input unit 412.

The embedded keyword input unit 413, using the CPU 911, inputs an integer W' as the keyword to be embedded in the ciphertext. The integer W' is an integer from 0 to less than p. The embedded keyword input unit 413 may be configured to input a character string as a keyword. In this case, the embedded keyword input unit 413 converts the input keyword into the integer W'.

The embedded keyword storage unit 441, using the magnetic disk device 920, stores as an embedded keyword the integer W' input by the embedded keyword input unit 413.

Based on the public parameter stored by the public parameter storage unit 420, the authorization range stored by the authorization range storage unit 430, and the embedded keyword stored by the embedded keyword storage unit 441, the ciphertext generation unit 450, using the CPU 911, generates a ciphertext.

The ciphertext output unit 414, using the CPU 911, outputs the ciphertext generated by the ciphertext generation unit 450. The ciphertext output by the ciphertext output unit 414 is stored by the search device 500.

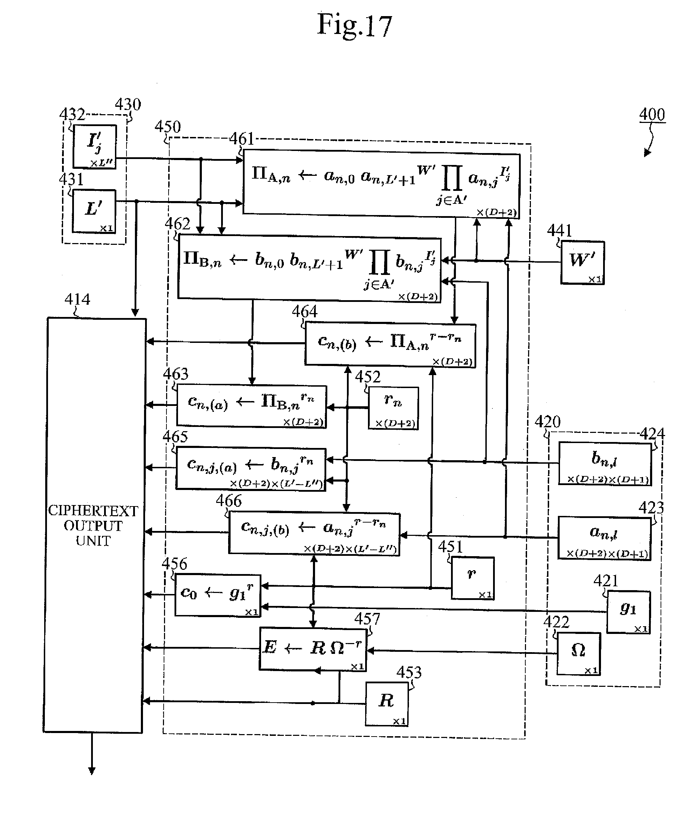

Fig. 17 is a detailed block diagram showing an example of a detailed configuration of the public parameter storage unit 420, the authorization range storage unit 430, and the ciphertext generation unit 450 of the encryption device 400 in this embodiment.

The public parameter storage unit 420 has a first generator storage unit 421, a public element $\Omega$ storage unit 422, a public element a storage unit 423, and a public element b storage unit 424.

The authorization range storage unit 430 has a segment count storage unit 431 and an authorization identifier storage unit 432.

The ciphertext generation unit 450 has a random number r selection unit 451, a secondary random number r selection unit 452, a random element selection unit 453, a cipher element computation unit 456, a verification element computation unit 457, a total product element A computation unit 461, a total product element B computation unit 462, a cipher element a computation unit 463, a cipher element b computation unit 464, a cipher partial element a computation unit 465, and a cipher partial element b computation unit 466.

The first generator storage unit 421, using the magnetic disk device 920, stores data representing a generator $g_1$ out of the public parameter. The generator $g_1$ is an element of the multiplicative group G1.

The public element $\Omega$ storage unit 422, using the magnetic disk device 920, stores data representing an element $\Omega$ out of the public parameter. The element $\Omega$ is an element of the multiplicative group G3.

The public element a storage unit 423, using the magnetic disk device 920, stores data representing (D+2)$\times$(D+1) number of elements $a_{n,1}$ out of the public parameter. The elements $a_{n,1}$ are elements of the multiplicative group G1, where n is an integer from 0 to (D+1) and 1 is an integer from 0 to D.

The public element b storage unit 424, using the magnetic disk device 920, stores data representing (D+2)$\times$(D+1) number of elements $b_{n,1}$ out of the public parameter. The elements $b_{n,1}$ are elements of the multiplicative group G1, where n is an integer from 0 to (D+1) and 1 is an integer from 0 to D.

The segment count storage unit 431, using the magnetic disk device 920, stores data representing an integer L'. The authorization range storage unit 430 may be configured to include a set storage unit that stores the set A or the set A' in place of the segment count storage unit 431.

The authorization identifier storage unit 432, using the magnetic disk device 920, stores data representing L" number of integers $I'_j$.

The random number r selection unit 451, using the CPU 911, uniformly randomly selects an integer out of integers from 0 to less than p. The integer selected by the random number r selection unit 451 will hereinafter be referred to as "r". The random number r selection unit 451, using the RAM 914, stores data representing the selected integer r.

The secondary random number r selection unit 452, using the CPU 911, uniformly randomly selects (D+2) number of integers out of integers from 0 to less than p. The integers selected by the secondary random number r selection unit 452 will hereinafter be referred to as "$r_n$", where n is an integer from 0 to (D+1). The secondary random number r selection unit 452, using the RAM 914, stores data representing the (D+2) number of selected integers $r_n$.

The random element selection unit 453, using the CPU 911, uniformly randomly selects an element out of elements of the multiplicative group G3. The element selected by the random element selection unit 453 will hereinafter be referred to as "R". The random element selection unit 453, using the RAM 914, stores data representing the selected element R.

The cipher element computation unit 456, using the CPU 911, inputs the data representing the generator $g_1$ stored by the first generator storage unit 421, and the data representing the integer r stored by the random number r selection unit 451. The cipher element computation unit 456, using the CPU 911, calculates the generator $g_1$ raised to the power of r. The element "$g_1$^r" computed by the cipher element computation unit 456 will hereinafter be referred to as "$c_0$". $c_0$ is an element of the multiplicative group G1. The cipher element computation unit 456, using the RAM 914, stores data representing the computed element $c_0$.

The verification element computation unit 457, using the CPU 911, inputs the data representing the element Ω stored by the public element Ω storage unit 422, the data representing the integer r stored by the random number r selection unit 451, and the data representing the element R stored by the random element selection unit 453.
The verification element computation unit 457, using the CPU 911, calculates the element Ω raised to the power of (-r). The element "Ω^(-r)" computed by the verification element computation unit 457 is an element of the multiplicative group G3.
The verification element computation unit 457, using the CPU 911, calculates a product "R·Ω^(-r)" of the element R and the computed element "Ω^(-r)". The product "R·Ω^(-r)" computed by the verification element computation unit 457 will hereinafter be referred to as "E". E is an element of the multiplicative group G3. The verification element computation unit 457, using the RAM 914, stores data representing the computed element E.

The total product element A computation unit 461, using the CPU 911, inputs the data representing the (D+2) ×(D+1) number of elements $a_{n,1}$ stored by the public element a storage unit 423, the data representing the integer L' stored by the segment count storage unit 431, the data representing the L" number of integers $l'_j$ stored by the authorization identifier storage unit 432, and the data representing the integer W' stored by the embedded keyword storage unit 441.
Based on the integer W' and (D+2) number of elements $a_{n,L'+1}$ having 1 (alphabet 1) equal to (L'+1) out of the (D+2)× (D+1) of the elements $a_{n,1}$, the total product element A computation unit 461, using the CPU 911, calculates each of the (D+2) number of elements $a_{n,L'+1}$, raised to the power of W'. The (D+2) number of elements "$a_{n,L'+1}$^W'" computed by the total product element A computation unit 461 are elements of the multiplicative group G1.
Based on the L" number of integers $l'_j$ and (D+2)×L" number of elements $a_{n,j}$ having 1 (alphabet 1) equal to any of the L" number of integers j which are the elements of the set A' out of the (D+2)×(D+1) number of elements $a_{n,1}$, the total product element A computation unit 461, using the CPU 911 and for each integer $l'_j$, calculates each of (D+2) number of elements $a_{n,j}$ raised to the power of $l'_j$, where each element $a_{n,j}$ has the same j as the integer $l'_j$. The element "$a_{n,j}$^$l'_j$", computed by the total product element A computation unit 461 is an element of the multiplicative group G1. There are L" number of integers $l'_j$, so that the total product element A computation unit 461 computes a total of (D+2)×L" number of elements "$a_{n,j}$^$l'_j$".
Based on (D+2) number of elements $a_{n,0}$ having 1 (alphabet 1) equal to 0 out of the (D+2)×(D+1) number of elements $a_{n,1}$, the (D+2) number of computed elements "$a_{n,L'+1}$^W'", and the (D+2)×L" number of computed elements "$a_{n,j}$^$l'_j$", the total product element A computation unit 461, using the CPU 911 and for each element $a_{n,0}$, calculates a total product of (L"+2) number of elements which are the element $a_{n,0}$, an element "$a_{n,L'+1}$^W'" having the same n as the element $a_{n,0}$ out of the (D+2) number of elements "$a_{n,L'+1}$^W'", and L" number of elements "$a_{n,j}$^$l'_j$" having the same n as the element $a_{n,0}$ out of the (D+2)xL" number of elements "$a_{n,j}$^$l'_j$". The total product computed by the total product element A computation unit 461 will hereinafter be referred to as "$\Pi_{A,n}$", where n is an integer from 0 to (D+1). $\Pi_{A,n}$ is an element of the multiplicative group G1. The total product element A computation unit 461, using the RAM 914, stores data representing the (D+2) number of computed elements $\Pi_{A,n}$.

The total product element B computation unit 462, using the CPU 911, inputs the data representing the (D+2) ×(D+1) number of elements $b_{n,1}$ stored by the public element b storage unit 424, the data representing the integer L' stored by the segment count storage unit 431, the data representing the L" number of integers $l'_j$ stored by the authorization identifier storage unit 432, and the data representing the integer W' stored by the embedded keyword storage unit 441.
Based on the integer W' and (D+2) number of elements $b_{n,L'+1}$ having 1 (alphabet 1) equal to (L'+1) out of the (D+2)× (D+1) number of elements $b_{n,1}$, the total product element B computation unit 462, using the CPU 911, calculates each of the (D+2) number of elements $b_{n,L'+1}$ raised to the power of W'. The (D+2) number of elements "$b_{n,L'+1}$^W'" computed by the total product element B computation unit 462 are elements of the multiplicative group G1.

Based on the L" number of integers $l'_j$ and $(D+2) \times L"$ number of elements $b_{n,j}$ having 1 (alphabet 1) equal to any of the L" number of integers j which are the elements of the set A' out of the $(D+2) \times (D+1)$ number of elements $b_{n,1}$, the total product element B computation unit 462, using the CPU 911 and for each integer $l'_j$, calculates each of (D+2) number of elements be raised to the power of $l'_j$, where each element $b_{n,j}$ has the same j as the integer $l'_j$. The element "$b_{n,j}{}^{\wedge}l'_j$" computed by the total product element B computation unit 462 is an element of the multiplicative group G1. There are L" number of integers $l'_j$, so that the total product element B computation unit 462 computes a total of $(D+2) \times L"$ number of elements "$a_{n,j}{}^{\wedge}l'_j$".

Based on (D+2) number of elements $b_{n,0}$ having 1 (alphabet 1) equal to 0 out of the $(D+2) \times (D+1)$ number of elements $a_{n,1}$, the (D+2) number of computed elements "$b_{n,L'+1}{}^{\wedge}W"$", and the $(D+2) \times L"$ number of computed elements "$b_{n,j}{}^{\wedge}l'_j$", the total product element B computation unit 462, using the CPU 911 and for each element $b_{n,0}$, calculates a total product of (L"+2) number of elements which are the element $b_{n,0}$, an element "$b_{n,L'+1}{}^{\wedge}W"$" having the same n as the element $b_{n,0}$ out of the (D+2) number of elements "$b_{n,L'+1}{}^{\wedge}W"$", and L" number of elements "$b_{n,j}{}^{\wedge}l'_j$" having the same n as the element $b_{n,0}$ out of the $(D+2) \times L"$ number of elements "$b_{n,j}{}^{\wedge}l'_j$". The total product computed by the total product element B computation unit 462 will hereinafter be referred to as "$_{B,n}$", where n is an integer from 0 to (D+1). $\Pi_{B,n}$ is an element of the multiplicative group G1. The total product element B computation unit 462, using the RAM 914, stores data representing the (D+2) number of computed elements $\Pi_{B,n}$.

The cipher element a computation unit 463, using the CPU 911, inputs the data representing the (D+2) number of integers $r_n$ stored by the secondary random number r selection unit 452 and the data representing the (D+2) number of elements $\Pi_{B,n}$ stored by the total product element B computation unit 462. The cipher element a computation unit 463, using the CPU 911 and for each of the (D+2) number of integers $r_n$, calculates the element $\Pi_{B,n}$ raised to the power of $r_n$, where the element $\Pi_{B,n}$ has the same n as the integer $r_n$. The element "$\Pi_{B,n}{}^{\wedge}r_n$" computed by the cipher element a computation unit 463 will hereinafter be referred to as "$c_{n,(a)}$", where n is an integer from 0 to (D+1). $c_{n,(a)}$ is an element of the multiplicative group G1. The cipher element a computation unit 463, using the RAM 914, stores data representing the (D+2) number of computed elements $C_{n,(a)}$.

The cipher element b computation unit 464, using the CPU 911, inputs the data representing the integer r stored by the random number r selection unit 451, the data representing the (D+2) number of integers $r_n$ stored by the secondary random number r selection unit 452, and the data representing the (D+2) number of elements $\Pi_{A,n}$ stored by the total product element A computation unit 461. The cipher element b computation unit 464, using the CPU 911 and for each of the (D+2) number of integers $r_n$, calculates a difference "$r-r_n$" obtained by subtracting the integer $r_n$ from the integer r. The cipher element b computation unit 464, using the CPU 911 and for each of the (D+2) number of integers $r_n$, calculates the element $\Pi_{A,n}$ raised to the power of "$r-r_n$", where the element $\Pi_{A,n}$ has the same n as the integer $r_n$. The element "$\Pi_{A,n}{}^{\wedge}(r-r_n)$" computed by the cipher element b computation unit 464 will hereinafter be referred to as "$c_{n,(b)}$", where n is an integer from 0 to (D+1). $C_{n,(b)}$ is an element of the multiplicative group G1. The cipher element b computation unit 464, using the RAM 914, stores data representing the (D+2) number of computed elements $C_{n,(b)}$.

The cipher partial element a computation unit 465, using the CPU 911, inputs the data representing the $(D+2) \times (D+1)$ number of elements $b_{n,1}$ stored by the public element b storage unit 424 and the data representing the (D+2) number of integers $r_n$ stored by the secondary random number r selection unit 452. Based on $(D+2) \times (L'-L")$ number of elements $b_{n,j}$ having 1 (alphabet 1) equal to any of (L'-L") number of integers j which are the elements of the set A out of the $(D+2) \times (D+1)$ number of elements $b_{n,1}$ and the (D+2) number of integers $r_n$, the cipher partial element a computation unit 465, using the CPU 911 and for each integer $r_n$, calculates each of (L'-L") number of elements $b_{n,j}$ raised to the power of $r_n$, where each element $b_{n,j}$ has the same n as the integer $r_n$. The element "$b_{n,j}{}^{\wedge}r_n$" computed by the cipher partial element a computation unit 465 will hereinafter be referred to as "$c_{n,j,(a)}$", where n is an integer from 0 to (D+1) and j is one of the L" number of integers which are the elements of the set A. $C_{n,j,(a)}$ is an element of the multiplicative group G1. There are (D+2) number of integers $r_n$, so that the cipher partial element a computation unit 465 computes a total of $(D+2) \times (L'-L")$ number of elements $C_{n,j,(a)}$. The cipher partial element a computation unit 465, using the RAM 914, stores data representing the $(D+2) \times (L'-L")$ number of computed elements $c_{n,j,(a)}$.

The cipher partial element b computation unit 466, using the CPU 911, inputs the data representing the $(D+2) \times (D+1)$ number of elements $a_{n,1}$ stored by the public element a storage unit 423, the data representing the integer r stored by the random number r selection unit 451, and the data representing the (D+2) number of integers $r_n$ stored by the secondary random number r selection unit 452. The cipher partial element b computation unit 466, using the CPU 911 and for each of the (D+2) number of integers $r_n$, calculates a difference "$r-r_n$" obtained by subtracting the integer $r_n$ from the integer r. Based on $(D+2) \times (L'-L")$ number of elements $a_{n,j}$ having 1 (alphabet 1) equal to any of the (L'-L") number of integers j which are the elements of the set A out of the $(D+2) \times (D+1)$ number of elements $a_{n,1}$ and the (D+2) number of computed differences "$r-r_n$", the cipher partial element b computation unit 466, using the CPU 911 and for each integer $r_n$, calculates each of (L'-L") number of elements $a_{n,j}$ raised to the power of "$r-r_n$", where each element $a_{n,j}$ has the same n as the integer $r_n$. The element "$a_{n,j}{}^{\wedge}(r-r_n)$" computed by the cipher partial element b computation unit 466 will hereinafter be referred to as "$c_{n,j,(b)}$", where n is an integer from 0 to (D+1) and j is one of the (L'-L") number of integers which are the elements of the set A. $c_{n,j,(b)}$ is an element of the multiplicative group G1. There are (D+2) number of integers $r_n$, so that the cipher partial element b computation unit 466 computes a total of (D+2)×(L'-L") number of elements $c_{n,j,(b)}$. The cipher partial element b computation unit 466, using the RAM 914, stores data representing the (D+2)x(L'-L") number of computed elements $c_{n,j,(b)}$.

The ciphertext output unit 414, using the CPU 911, inputs the data representing the integer L' stored by the segment count storage unit 431, the data representing the element R stored by the random element selection unit 453, the data representing the element E stored by the verification element computation unit 457, and the data representing the element $c_0$ stored by the cipher element computation unit 456. The ciphertext output unit 414, using the CPU 911, also inputs the data representing the (D+2) number of elements $c_{n,(a)}$ stored by the cipher element a computation unit 463, and the data representing the (D+2) number of elements $c_{n,(b)}$ stored by the cipher element b computation unit 464. The ciphertext output unit 414, using the CPU 911, also inputs the data representing the (D+2)×(L'-L") number of elements $C_{n,j,(a)}$ stored by the cipher partial element a computation unit 465 and the data representing the (D+2)×(L'-L") number of elements $c_{n,j,(b)}$ stored by the cipher partial element b computation unit 466.
The ciphertext output unit 414, using the CPU 911, outputs data including the data representing the integer L', the element R, the element E, the element $c_0$, the (D+2) number of elements $c_{n(a)}$, the (D+2) number of elements $c_{n,(b)}$, the (D+2)×(L'-L") number of elements $c_{n,j,(a)}$, and the (D+2)×(L'-L") number of elements $C_{n,j,(b)}$, as a ciphertext.
A ciphertext may be configured to include data representing the set A or the set A' in place of data representing the integer L'.

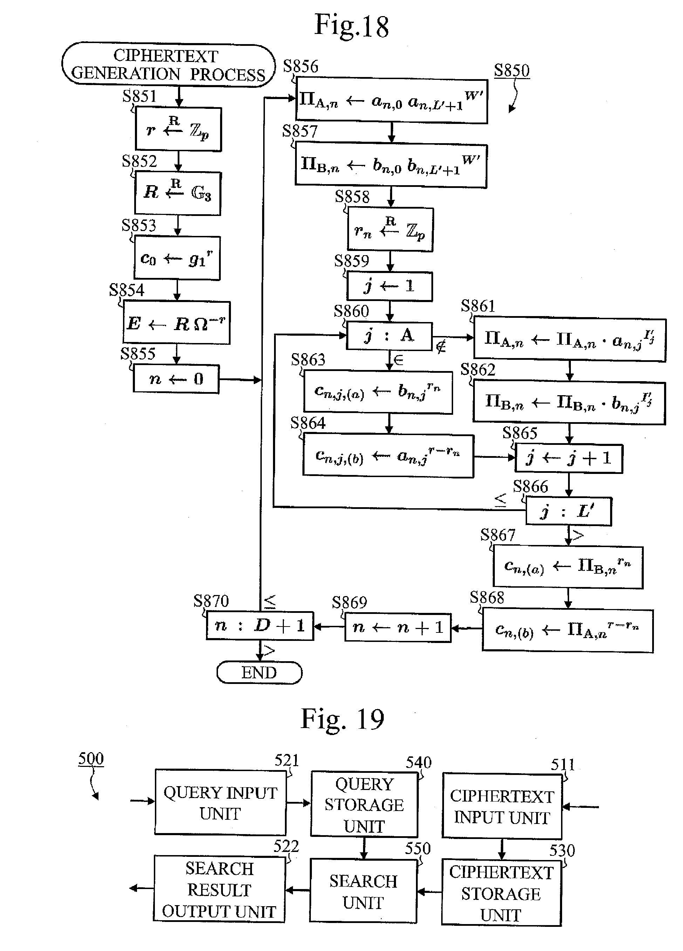

Fig. 18 is a flowchart showing an example of a flow of a ciphertext generation process S850 in this embodiment.
In the ciphertext generation process S850, the encryption device 400 computes elements to be included in a ciphertext. A specific procedure for generating a ciphertext will be described here. However, the calculation procedure is not limited to the procedure described here and may be different from the procedure described here, provided that mathematically equivalent results can be obtained.

The ciphertext generation process S850 has a random number r selection step S851, a random element selection step 5852, a cipher element computation step S853, a verification element computation step S854, an n initialization step S855, a total product element A initialization step S856, a total product element B initialization step S857, a secondary random number r selection step S858, a j initialization step S859, a wildcard determination step S860, a total product element A calculation step S861, a total product element B calculation step S862, a cipher partial element a computation step S863, a cipher partial element b computation step S864, a j increment step S865, a j determination step S866, a cipher element a computation step S867, a cipher element b computation step S868, an n increment step S869, and an n determination step S870.

In the random number r selection step S851, the random number r selection unit 451, using the CPU 911, uniformly randomly selects an integer r out of integers from 0 to less than p.

In the random element selection step S852, the random element selection unit 453, using the CPU 911, uniformly randomly selects an element R out of elements of the multiplicative group G3.

In the cipher element computation step S853, based on the generator $g_1$ stored by the first generator storage unit 421 and the integer r selected by the random number r selection unit 451 in the random number r selection step S851, the cipher element computation unit 456, using the CPU 911, calculates the generator $g_1$ raised to the power of r and obtains an element $c_0$ which is an element of the multiplicative group G1.

In the verification element computation step S854, based on the element $\Omega$ stored by the public element $\Omega$ storage unit 422 and the integer r selected by the random number r selection unit 451 in the random number r selection step S851, the verification element computation unit 457, using the CPU 911, calculates the element $\Omega$ raised to the power of (-r).
Based on the element R selected by the random element selection unit 453 in the random element selection step S852 and the computed element "$\Omega^{\wedge}(-r)$", the verification element computation unit 457, using the CPU 911, calculates a product "$R \cdot \Omega^{\wedge}(-r)$" of the element R and the element "$\Omega^{\wedge}(-r)$" and obtains an element E which is an element of the multiplicative group G3.

In the n initialization step S855, the total product element A computation unit 461, using the CPU 911, sets the value of the variable n to 0.

In the total product element A initialization step S856, based on an element $a_{n,L'+1}$ having n equal to the value of the variable n and 1 (alphabet 1) equal to (L'+1) out of the (D+2)×(D+1) number of elements $a_{n,1}$ stored by the public element a storage unit 423 and the integer W' stored by the embedded keyword storage unit 441, the total product element A computation unit 461, using the CPU 911, calculates the element $a_{n,L'+1}$, raised to the power of W'.
Based on an element $a_{n,0}$ having n equal to the value of the variable n and 1 (alphabet 1) equal to 0 out of the (D+2)×(D+1) number of elements $a_{n,1}$ stored by the public element a storage unit 423 and the computed element "$a_{n,L'+1}^{\wedge}W'$", the total product element A computation unit 461, using the CPU 911, calculates a product "$a_{n,0} \cdot a_{n,1}+1^{\wedge}W'$" of the element $a_{n,0}$ and the element "$a_{n,L'+1}^{\wedge}W'$". The total product element A computation unit 461, using the RAM 914, stores the computed product "$a_{n,0} \cdot a_{n,1}+1^{\wedge}W'$" as a first value for calculating an element $\Pi_{A,n}$.

In the total product element B initialization step S857, based on an element $b_{n,L'+1}$, having n equal to the value of the variable n and 1 (alphabet 1) equal to (L'+1) out of the $(D+2)\times(D+1)$ number of elements $b_{n,1}$ stored by the public element b storage unit 424 and the integer W' stored by the embedded keyword storage unit 441, the total product element B computation unit 462, using the CPU 911, calculates the element $b_{n,L'+1}$ raised to the power of W'.

Based on an element $b_{n,0}$ having n equal to the value of the variable n and 1 (alphabet 1) equal to 0 out of the $(D+2)\times(D+1)$ number of elements $b_{n,1}$ stored by the public element b storage unit 424 and the computed element "$b_{n,L'+1}{}^{\wedge}W'$", the total product element B computation unit 462, using the CPU 911, calculates a product "$b_{n,0}{\cdot}b_{n,L'+1}{}^{\wedge}W'$" of the element $b_{n,0}$ and the element "$b_{n,L'+1}{}^{\wedge}W'$", The total product element B computation unit 462, using the RAM 914, stores the computed product "$b_{n,0}{\cdot}b_{n,L'+1}{}^{\wedge}W'$" as a first value for calculating an element $\Pi_{B,n}$.

In the secondary random number r selection step S858, the secondary random number r selection unit 452, using the CPU 911, uniformly randomly selects an integer $r_n$ out of integers from 0 to less than p.

In the j initialization step S859, the total product element A computation unit 461, using the CPU 911, sets the value of a variable j to one.

In the wildcard determination step S860, the total product element A computation unit 461, using the CPU 911, determines whether or not the value of the variable j is equal to one of the integers included in the set A.

If the value of the variable j is not equal to any of the integers included in the set A, the total product element A computation unit 461, using the CPU 911, proceeds to the total product element A calculation step S861.

If the value of the variable j is equal to one of the integers included in the set A, the total product element A computation unit 461, using the CPU 911, proceeds to the cipher partial element a computation step S863.

In the total product element A calculation step S861, based an element $a_{n,j}$ having n equal to the value of the variable n and 1 (alphabet 1) equal to the value of the variable j out of the $(D+2)\times(D+1)$ of the elements $a_{n,1}$ stored by the public element a storage unit 423 and an integer $I'_j$ having j equal to the value of the variable j out of the L" number of integers $I_j$ stored by the authorization identifier storage unit 432, the total product element A computation unit 461, using the CPU 911, calculates the element $a_{n,j}$ raised to the power of $I'_j$.

Based on the stored element $\Pi_{A,n}$ and the computed element "$a_{n,j}{}^{\wedge}I'_j$", the total product element A computation unit 461, using the CPU 911, calculates a product "$\pi_{A,n}{\cdot}a_{n,j}{}^{\wedge}I'_j$" of the element $\Pi_{A,n}$ and the element "$a_{n,j}{}^{\wedge}I'_j$". The total product element A computation unit 461, using the RAM 914, stores the computed product "$\Pi_{A,n}{\cdot}a_{n,j}{}^{\wedge}I'_j$") as a new value of the element $\Pi_{A,n}$.

In the total product element B calculation step S862, based on an element $b_{n,j}$ having n equal to the value of the variable n and 1 (alphabet 1) equal to the value of the variable j out of the $(D+2)\times(D+1)$ number of elements $b_{n,1}$ stored by the public element b storage unit 424 and an integer $I'_j$ having j equal to the value of the variable j out of the L" number of integers $I'_j$ stored by the authorization identifier storage unit 432, the total product element B computation unit 462, using the CPU 911, calculates the element $b_{n,j}$ raised to the power of $I'_j$.

Based on the stored element $\Pi_{B,n}$ and the computed element "$b_{n,j}{}^{\wedge}I'_j$", the total product element B computation unit 462, using the CPU 911, calculates a product "$\pi_{B,n}{\cdot}b_{n,j}{}^{\wedge}I'_j$" of the element $\pi_{B,n}$ and the element "$b_{n,j}{}^{\wedge}I'_j$". The total product element B computation unit 462, using the RAM 914, stores the computed product "$\pi_{B,n}{\cdot}b_{n,j}{}^{\wedge}I'_j$" as a new value of the element $II_{B,n}$.

The total product element A computation unit 461, using the CPU 911, proceeds to the j increment step S865.

In the cipher partial element a computation step S863, based on an element $b_{n,j}$ having n equal to the value of the variable n and 1 (alphabet 1) equal to the value of the variable j out of the $(D+2)\times(D+1)$ number of elements $b_{n,1}$ stored by the public element b storage unit 424 and the integer $r_n$ selected by the secondary random number r selection unit 452 in the secondary random number r selection step S858, the cipher partial element a computation unit 465, using the CPU 911, calculates the element $b_{n,j}$ raised to the power of $r_n$ and obtains an element $c_{n,j,(a)}$ which is an element of the multiplicative group G1.

In the cipher partial element b computation step S864, based on the integer r selected by the random number r selection unit 451 in the random number r selection step S851 and the integer $r_n$ selected by the secondary random number r selection unit 452 in the secondary random number r selection step S858, the cipher partial element b computation unit 466, using the CPU 911, calculates a difference "$r-r_n$" obtained by subtracting the integer $r_n$ from the integer r. Based on an element $a_{n,j}$ having n equal to the value of the variable n and 1 (alphabet 1) equal to the value of the variable j out of the $(D+2)\times(D+1)$ number of elements $a_{n,1}$ stored by the public element a storage unit 423 and the computed difference "$r-r_n$", the cipher partial element b computation unit 466, using the CPU 911, calculates the element an raised to the power of "$r-r_n$" and obtains an element $C_{n,j,(b)}$ which is an element of the multiplicative group G1.

In the j increment step S865, the total product element A computation unit 461, using the CPU 911, increments the value of the variable j by one.

In the j determination step S866, the total product element A computation unit 461, using the CPU 911, compares the value of the variable j and the integer L'.

If the value of the variable j is not greater than L', the total product element A computation unit 461, using the CPU 911, returns to the wildcard determination step S860.

If the value of the variable j is greater than L', the total product element A computation unit 461, using the CPU 911, proceeds to the cipher element a computation step S867.

In the cipher element a computation step S867, based on the element $\Pi_{B,n}$ stored by the total product element B computation unit 462 and the integer $r_n$ selected by the secondary random number r selection unit 452 in the secondary random number r selection step S858, the cipher element a computation unit 463, using the CPU 911, calculates the element $\Pi_{B,n}$ raised to the power of $r_n$ and obtains an element $c_{n,(a)}$ which is an element of the multiplicative group G1.

In the cipher element b computation step S868, based on the integer r selected by the random number r selection unit 451 in the random number r selection step S851 and the integer $r_n$ selected by the secondary random number r selection unit 452 in the secondary random number r selection step S858, the cipher element b computation unit 464, using the CPU 911, calculates a difference "$r-r_n$" obtained by subtracting the integer $r_n$ from the integer r.

Based on the element $\Pi_{A,n}$ stored by the total product element A computation unit 461 and the computed difference "$r-r_n$", the cipher element b computation unit 464, using the CPU 911, calculates the element $\Pi_{A,n}$ raised to the power of "$r-r_n$" and obtains an element $c_{n,(b)}$ which is an element of the multiplicative group G1.

In the n increment step S869, the total product element A computation unit 461, using the CPU 911, increments the value of the variable n by one.

In the n determination step S870, the total product element A computation unit 461, using the CPU 911, compares the value of the variable n and the value (D+1) obtained by adding one to the integer D.

If the value of the variable n is not greater than D, the total product element A computation unit 461, using the CPU 911, returns to the total product element A initialization step S856 and sets a next element $\Pi_{A,n}$.

If the value of the variable n is greater than D, the total product element A computation unit 461, using the CPU 911, finishes the ciphertext generation process S850.

In this way, the steps from the total product element A initialization step S856 to the n determination step S870 are repeated (D+2) number of times. The cipher element a computation unit 463 executes the cipher element a computation step S867 (D+2) number of times and computes (D+2) number of elements $c_{n,(a)}$. The cipher element b computation unit 464 executes the cipher element b computation step S868 (D+2) number of times and computes (D+2) number of elements $c_{n,(b)}$.

The steps from the wildcard determination step S860 to the j determination step S866 are repeated L' number of times for each repeat of the variable n. Among these steps, the cipher partial element a computation step S863 and the cipher partial element b computation step S864 are executed (L'-L") number of times. The cipher partial element a computation unit 465 executes the cipher partial element a computation step S863 a total of (D+2)×(L'-L") number of times and computes (D+2)×(L'-L") number of elements $c_{n,j,(a)}$. The cipher partial element b computation unit 466 executes the cipher partial element b computation step S864 a total of (D+2)×(L'-L") times and computes (D+2)×(L'-L") number of elements $C_{n,j,(b)}$.

Fig. 19 is a block configuration diagram showing an example of a configuration of functional blocks of the search device 500 in this embodiment.

The search device 500 searches for a ciphertext in which a keyword specified in a query is embedded out of one or more ciphertexts stored in advance. However, when the query issuing device 300 that has generated the query does not have an authorization to search for the ciphertext, no hit is obtained even if the same keyword as the keyword specified in the query is embedded in the ciphertext. The search device 500 conducts searching without decrypting the ciphertext, so that the keyword embedded in the ciphertext remains unknown. The query is also encrypted, so that the keyword being searched for remains unknown to the search device 500.

The search device 500 has a ciphertext input unit 511, a query input unit 521, a search result output unit 522, a ciphertext storage unit 530, a query storage unit 540, and a search unit 550.

The ciphertext input unit 511, using the CPU 911, inputs a ciphertext generated by the encryption device 400. Each ciphertext includes data representing an integer L', an element R which is an element of the multiplicative group G3, an element E which is an element of the multiplicative group G3, an element $c_0$ which is an element of the multiplicative group G1, (D×2) number of elements $c_{n,(a)}$ which are elements of the multiplicative group G1, (D×2) number of elements $c_{n,(b)}$ which are elements of the multiplicative group G1, (D+2)×(L'-L") number of elements $c_{n,j,(a)}$ which are elements of the multiplicative group G1, and (D+2)×(L'-L") number of elements $c_{n,j,(b)}$ which are elements of the multiplicative group G1.

The ciphertext storage unit 530, using the magnetic disk device 920, stores the ciphertext input by the ciphertext input unit 511.

The query input unit 521, using the CPU 911, inputs a query generated by the query issuing device 300. Each query includes data representing an integer $l_i$, an element $k'_0$ which is an element of the multiplicative group G2, (D+2) number of elements $k'_{n,(a)}$ which are elements of the multiplicative group G2, and (D+2) number of elements $k'_{n,(b)}$ which are elements of the multiplicative group G2.

The query storage unit 540, using the RAM 914, stores the query input by the query input unit 521.

The search unit 550, using the CPU 911, searches ciphertexts stored by the ciphertext storage unit 530 to find a ciphertext in which is embedded the keyword specified by the query stored by the ciphertext storage unit 530. When the ciphertext storage unit 530 has stored a plurality of ciphertexts, the search unit 550 determines whether or not a hit is obtained in each ciphertext by computation using the ciphertext and the query. The search unit 550 executes this for all of the ciphertexts and finds a ciphertext containing a hit among all of the ciphertexts.

The search result output unit 522, using the CPU 911, generates a message indicating the result of searching by the search unit 550. The search result output unit 522 generates, for example, a message including data identifying, or representing the location of, the main body of data corresponding to the ciphertext in which a hit is found. The search result output unit 522, using the CPU 911, outputs the generated message. The message output by the search result output unit 522 is notified to the query issuing device 300 that has sent the query.

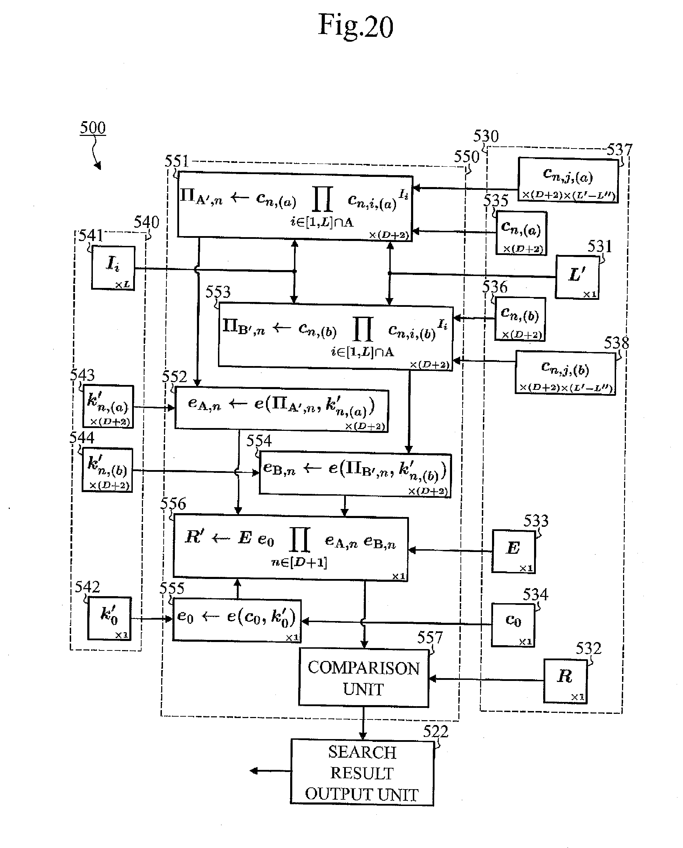

Fig. 20 is a detailed block diagram showing an example of a detailed configuration of the ciphertext storage unit 530, the query storage unit 540, and the search unit 550 of the search device 500 in this embodiment.
The ciphertext storage unit 530 has a segment count storage unit 531, a random element storage unit 532, a verification element storage unit 533, a cipher element storage unit 534, a cipher element a storage unit 535, a cipher element b storage unit 536, a cipher partial element a storage unit 537, and a cipher partial element b storage unit 538.

The query storage unit 540 has an inquiry identifier storage unit 541, an inquiry element storage unit 542, an inquiry element a storage unit 543, and an inquiry element b storage unit 544.
The search unit 550 has a cipher total product element A computation unit 551, a pairing element A computation unit 552, a cipher total product element B computation unit 553, a pairing element B computation unit 554, a pairing element computation unit 555, a comparison element computation unit 556, and a comparison unit 557.

The segment count storage unit 531, using the magnetic disk device 920, stores data representing an integer L' for each ciphertext.

The random element storage unit 532, using the magnetic disk device 920, stores data representing an element R for each ciphertext. The element R is an element of the multiplicative group G3.

The verification element storage unit 533, using the magnetic disk device 920, stores data representing an element E for each ciphertext. The element E is an element of the multiplicative group G3.

The cipher element storage unit 534, using the magnetic disk device 920, stores data representing an element $c_0$ for each ciphertext. The element $c_0$ is an element of the multiplicative group G1.

The cipher element a storage unit 535, using the magnetic disk device 920, stores data representing (D+2) number of elements $c_{n,(a)}$ for each ciphertext. The elements $c_{n,(a)}$ are elements of the multiplicative group G1, where n is an integer from 0 to (D+1).

The cipher element b storage unit 536, using the magnetic disk device 920, stores data representing (D+2) number of elements $c_{n,(b)}$ for each ciphertext. The elements $c_{n,(b)}$ are elements of the multiplicative group G1, where n is an integer from 0 to (D+1).

The cipher partial element a storage unit 537, using the magnetic disk device 920, stores data representing (D+2)×(L'-L") number of elements $c_{n,j,(a)}$ for each ciphertext. The elements $c_{n,j,(a)}$ are elements of the multiplicative group G1, where n is an integer from 0 to (D+1) and j is one of the L" number of integers included in the set A out of integers from 1 to L'.

The cipher partial element b storage unit 538, using the magnetic disk device 920, stores data representing (D+2)×(L'-L") number of elements $C_{n,j,(b)}$ for each ciphertext. The elements $c_{n,j,(b)}$ are elements of the multiplicative group G1, where n is an integer from 0 to (D+1) and j is one of the L" number of integers included in the set A out of integers from 1 to L'.

The inquiry identifier storage unit 541, using the RAM 914, stores data representing L number of integers $I_i$ out of the query, where i is an integer from 1 to L.

The inquiry element storage unit 542, using the RAM 914, stores data representing an element $k'_0$ out of the query. The element $k'_0$ is an element of the multiplicative group G2.

The inquiry element a storage unit 543, using the RAM 914, stores data representing (D+2) number of elements $k'_{n,(a)}$ out of the query. The elements $k'_{n,(a)}$ are elements of the multiplicative group G2, where n is an integer from 0 to (D+1),

The inquiry element b storage unit 544, using the RAM 914, stores data representing (D+2) number of elements $k'_{n,(b)}$ out of the query. The elements $k'_{n,(b)}$ are elements of the multiplicative group G2, where n is an integer from 0 to (D+1).

The cipher total product element A computation unit 551, using the CPU 911, inputs the data representing the integer L' stored by the segment count storage unit 531, the data representing the (D+2) number of elements $c_{n,(a)}$ stored by the cipher element a storage unit 535, and the data representing the (D+2)×(L'-L") number of elements $c_{n,j,(a)}$ stored by the cipher partial element a storage unit 537. The cipher total product element A computation unit 551, using the CPU 911, also inputs the data representing the L number of integers $I_i$ stored by the inquiry identifier storage unit 541. Based on elements $c_{n,i,(a)}$ having j equal to one of integers i from 1 to L out of the (D+2)×(L'-L") number of elements $c_{n,j,(a)}$ and integers $I_i$ having i equal to one of the integers included in the set A out of the L number of integers $I_i$, the cipher total product element A computation unit 551 calculates, for each integer $I_i$, each of the (D+2) number of elements

$c_{n,i,(a)}$ raised to the power of $l_i$, where each element $c_{n,i,(a)}$ has the same i as the integer $l_i$. The element "$c_{n,i,(a)}{}^{\wedge}l_i$" computed by the cipher total product element A computation unit 551 is an element of the multiplicative group G1.

The elements of the set A are integers from 1 to L'. Thus, when the integer L is L' or greater, the number of integers included in the set A out of integers from 1 to L is (L'-L") which is the same as the number of elements of the set A. When the integer L is smaller than L', the number of integers included in the set A out of integers from 1 to L may be smaller than (L'-L") which is the number of elements of the set A. The number of integers included in the set A out of integers from 1 to L will hereinafter be referred to as "$L_A$". The cipher total product element A computation unit 551 computes a total of $(D+2) \times L_A$ number of elements "$c_{n,i,(a)}{}^{\wedge}l_i$".

Based on the (D+2) number of elements $c_{n,(a)}$ and the $(D+2) \times L_A$ number of computed elements "$c_{n,i,(a)}{}^{\wedge}l_i$", the cipher total product element A computation unit 551, using the CPU 911 and for each element $C_{n,(a)}$, calculates a total product of a total of $(L_A+1)$ number of elements which are the element $c_{n,(a)}$ and $L_A$ number of elements "$c_{n,i(a)}{}^{\wedge}l_i$" having the same n as the element $c_{n,(a)}$. The total product computed by the cipher total product element A computation unit 551 will hereinafter be referred to as "$\Pi_{A',n}$,", where n is an integer from 0 to (D+1). $\Pi_{A'n}$ is an element of the multiplicative group G1. The cipher total product element A computation unit 551, using the RAM 914, stores data representing the (D+2) number of computed elements $\Pi_{A',n}$.

The cipher total product element B computation unit 553, using the CPU 911, inputs the data representing the integer L' stored by the segment count storage unit 531, the data representing the (D+2) number of elements $c_{n,(b)}$ stored by the cipher element b storage unit 536, and the data representing the $(D+2) \times (L'-L")$ number of elements $c_{n,j,(b)}$ stored by the cipher partial element b storage unit 538. The cipher total product element B computation unit 553, using the CPU 911, also inputs the data representing the L number of integers $l_i$ stored by the inquiry identifier storage unit 541. Based on $(D+2) \times L_A$ number of elements $c_{n,i,(b)}$ having j equal to one of the integers i from 1 to L out of the $(D+2) \times (L'-L")$ number of elements $c_{n,j,(b)}$ and $L_A$ number of integers $l_i$ having i equal to one of the integers included in the set A out of the L number of integers $l_i$, the cipher total product element B computation unit 553 calculates, for each integer $l_i$, each of the (D+2) number of elements $c_{n,i,(b)}$ raised to the power of $l_i$, where each element $c_{n,i,(b)}$ has the same i as the integer $l_i$. The element "$c_{n,i,(b)}{}^{\wedge}l_i$" computed by the cipher total product element B computation unit 553 is an element of the multiplicative group G1. The cipher total product element B computation unit 553 computes a total of $(D+2) \times L_A$ number of elements "$c_{n,i,(b)}{}^{\wedge}l_i$".

Based on the (D+2) number of elements $c_{n,(b)}$ and the $(D+2) \times L_A$ number of computed elements "$c_{n,i,(b)}{}^{\wedge}l_i$", the cipher total product element B computation unit 553, using the CPU 911 and for each element $c_{n,(b)}$, calculates a total product of a total of $(L_A+1)$ number of elements which are the element $c_{n,(b)}$ and $L_A$ number of elements "$c_{n,i,(b)}{}^{\wedge}l_i$" having the same n as the element $c_{n,(b)}$. The total product computed by the cipher total product element B computation unit 553 will hereinafter be referred to as "$\Pi_{B',n}$", where n is an integer from 0 to (D+1). $\Pi_{B',n}$ is an element of the multiplicative group G1. The cipher total product element B computation unit 553, using the RAM 914, stores data representing the (D+2) number of computed elements $\Pi_{B',n}$.

The pairing element A computation unit 552, using the CPU 911, inputs the data representing the (D+2) number of elements $k'_{n,(a)}$ stored by the inquiry element a storage unit 543 and the data representing the (D+2) number of elements $\Pi_{A',n}$ stored by the cipher total product element A computation unit 551. Based on the (D+2) number of elements $\Pi_{A',n}$ and the (D+2) number of elements $k'_{n,(a)}$, the pairing element A computation unit 552, using the CPU 911 and for each element $\pi_{A',n}$, calculates a pairing of the element $\Pi_{A',n}$ and an element $k'_{n,(a)}$ having the same n as the element $\Pi_{A',n}$ by the bilinear pairing e. The pairing computed by the pairing element A computation unit 552 will hereinafter be referred to as "$e_{A,n}$", where n is an integer from 0 to (D+1). $e_{A,n}$ is an element of the multiplicative group G3. The pairing element A computation unit 552 computes (D+2) number of elements $e_{A,n}$. The pairing element A computation unit 552, using the RAM 914, stores data representing the (D+2) number of computed elements $e_{A,n}$.

The pairing element B computation unit 554, using the CPU 911, inputs the data representing the (D+2) number of elements $k'_{n,(b)}$ stored by the inquiry element b storage unit 544 and the data representing the (D+2) number of elements $\Pi_{B',n}$ stored by the cipher total product element B computation unit 553. Based on the (D+2) number of elements $\Pi_{B',n}$ and the (D+2) number of elements $k'_{n,(b)}$, the pairing element B computation unit, using the CPU 911 and for each element $\Pi_{B',n}$, calculates a pairing of the element $\Pi_{B',n}$ and an element $k'_{n,(b)}$ having the same n as the element $\Pi_{B',n}$ by the bilinear pairing e. The pairing computed by the pairing element B computation unit 554 will hereinafter be referred to as "$e_{B,n}$", where n is an integer from 0 to (D+1). $e_{B,n}$ is an element of the multiplicative group G3. The pairing element B computation unit 554 computes (D+2) number of elements $e_{B,n}$. The pairing element B computation unit 554, using the RAM 914, stores data representing the (D+2) number of computed elements $e_{B,n}$.

The pairing element computation unit 555, using the CPU 911, inputs the data representing the element $c_0$ stored by the cipher element storage unit 534 and the data representing the element $k'_0$ stored by the inquiry element storage unit 542. Based on the element $c_0$ and the element $k'_0$, the pairing element computation unit 555, using the CPU 911, calculates a pairing of the element $c_0$ and the element $k'_0$ by the bilinear pairing e. The pairing computed by the pairing element computation unit 555 will hereinafter be referred to as "$e_0$". $e_0$ is an element of the multiplicative group G3. The pairing element computation unit 555 computes one element $e_0$. The pairing element computation unit 555, using the RAM 914, stores data representing the computed element $e_0$.

The comparison element computation unit 556, using the CPU 911, inputs the data representing the element E stored by the verification element storage unit 533, the data representing the (D+2) number of elements $e_{A,n}$ stored by the pairing element A computation unit 552, the data representing the (D+2) number of elements $e_{B,n}$ stored by the pairing element B computation unit 554, and the data representing the element $e_0$ stored by the pairing element computation unit 555. Based on the element E, the element $e_0$, the (D+2) number of elements $e_{A,n}$, and the (D+2) number of elements $e_{B,n}$, the comparison element computation unit 556, using the CPU 911, calculates a total product of a total of (2D+4) number of elements which are the element E, the element $e_0$, the (D+2) number of elements $e_{A,n}$, and the (D+2) number of elements $e_{B,n}$. The total product computed by the comparison element computation unit 556 will hereinafter be referred to as "R'". R' is an element of the multiplicative group G3. The comparison element computation unit 556 computes one element R'. The comparison element computation unit 556, using the RAM 914, stores data representing the computed element R'.

The comparison unit 557, using the CPU 911, inputs the data representing the element R stored by the random element storage unit 532 and the data representing the element R' stored by the comparison element computation unit 556. The comparison unit 557, using the CPU 911, compares the element R and the element R'.

If the element R matches the element R', the comparison unit 557, using the CPU 911, determines that a hit is found for the search.

If the element R does not match the element R', the comparison unit 557, using the CPU 911, determines that no hit is found for the search.

Based on the result of determination by the comparison unit 557, the search result output unit 522, using the CPU 911, generates a message indicating the search result.

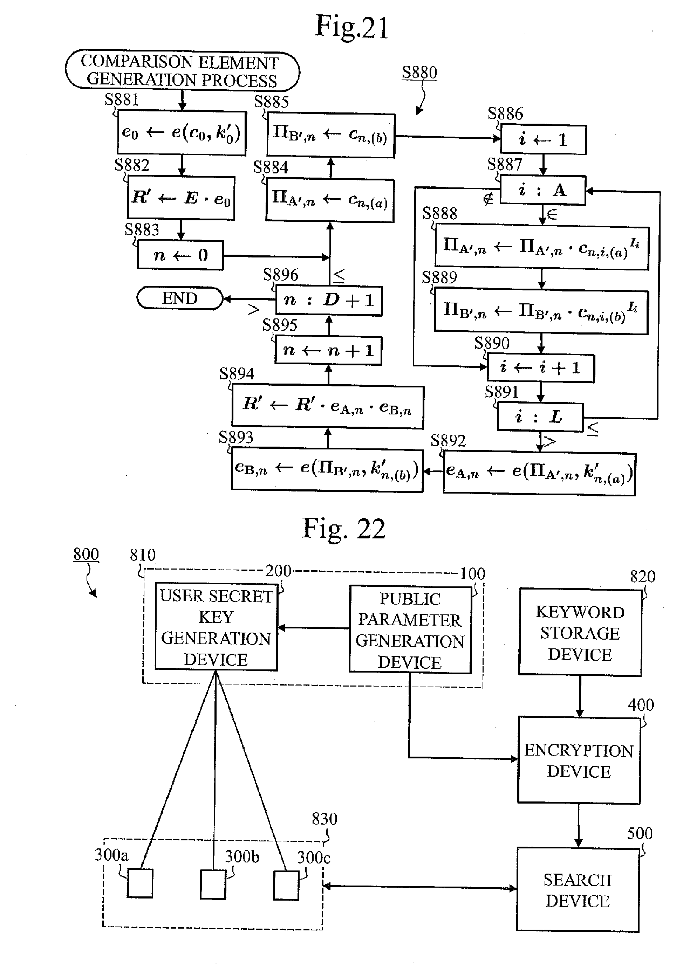

Fig. 21 is a flowchart showing an example of a flow of a comparison element generation process S880 in this embodiment.

In the comparison element generation process S880, the search unit 550 computes, for each ciphertext, an element R' which is an element of the multiplicative group G3. A specific procedure for computing a comparison element will be described here. However, the calculation procedure is not limited to the procedure described here and may be different from the procedure described here, provided that mathematically equivalent results can be obtained.

The comparison element generation process S880 has a pairing element computation step S881, a comparison element initialization step S882, an n initialization step S883, a cipher total product element A initialization step S884, a cipher total product element B initialization step S885, an i initialization step S886, a wildcard determination step S887, a cipher total product element A calculation step S888, a cipher total product element B calculation step S889, an i increment step S890, an i comparison step S891, a pairing element A computation step S892, a pairing element B computation step S893, a comparison element calculation step S894, an n increment step S895, and an n determination step S896.

In the pairing element computation step S881, based on the element $c_0$ stored by the cipher element storage unit 534 and the element $k'_0$ stored by the inquiry element storage unit 542, the pairing element computation unit 555, using the CPU 911, calculates a pairing of the element $c_0$ and the element $k'_0$ by the bilinear pairing e and obtains an element $e_0$ which is an element of the multiplicative group G3.

In the comparison element initialization step S882, based on the element E stored by the verification element storage unit 533 and the element $e_0$ computed by the pairing element computation unit 555 in the pairing element computation step S881, the comparison element computation unit 556, using the CPU 911, calculates a product "E·$e_0$" of the element E and the element $e_0$. The comparison element computation unit 556, using the RAM 914, stores the computed product "E·$e_0$" as a first value for calculating an element R'.

In the n initialization step S883, the cipher total product element A computation unit 551, using the CPU 911, sets the value of the variable n to 0.

In the cipher total product element A initialization step S884, the cipher total product element A computation unit 551, using the RAM 914, stores an element $c_{n,(a)}$ having n equal to the variable n out of the (D+2) number of elements $c_{n,(a)}$ stored by the cipher element a storage unit 535 as a first value for calculating an element $\Pi_{A',n}$.

In the cipher total product element B initialization step S885, the cipher total product element B computation unit 553, using the RAM 914, stores an element $c_{n,(b)}$ having n equal to the variable n out of the (D+2) number of elements $c_{n,(b)}$ stored by the cipher element b storage unit 536 as a first value for calculating an element $\Pi_{B',n}$.

In the i initialization step S886, the cipher total product element A computation unit 551, using the CPU 911, sets the value of the variable i to one.

In the wildcard determination step S887, the cipher total product element A computation unit 551, using the CPU 911, determines whether or not the value of the variable i is equal to any of the (L'-L") number of integers included in the set A.

If the value of the variable i is equal to one of the integers included in the set A, the cipher total product element A computation unit 551, using the CPU 911, proceeds to the cipher total product element A calculation step S888.

If the value of the variable i is not equal to any of the integers included in the set A, the cipher total product element A computation unit 551, using the CPU 911, proceeds to the i increment step S890.

In the cipher total product element A calculation step S888, based on an element $c_{n,i,(a)}$ having n equal to the value of the variable n and j equal to the value of the variable i out of the $(D+2)\times(L'-L'')$ number of elements $c_{n,j,(a)}$ stored by the cipher partial element a storage unit 537 and an integer $l_i$ having i equal to the variable i out of the L number of integers $l_i$ stored by the inquiry identifier storage unit 541, the cipher total product element A computation unit 551, using the CPU 911, calculates the element $c_{n,i,(a)}$ raised to the power of $l_i$.

Based on the stored element $\Pi_{A',n}$ and the computed element "$c_{n,i,(a)}{}^{\wedge}l_i$", the cipher total product element A computation unit 551, using the CPU 911, calculates a product "$\Pi_{A',n}\cdot c_{n,i,(a)}{}^{\wedge}l_i$" of the element $\Pi_{A',n}$ and the element "$c_{n,i,(a)}{}^{\wedge}l_i$". The cipher total product element A computation unit 551, using the RAM 914, stores the computed product "$\Pi_{A',n}\cdot c_{n,i,(a)}{}^{\wedge}l_i$" as a new value of the element $\Pi_{A',n}$.

In the cipher total product element B calculation step S889, based on an element $c_{n,i,(b)}$ having n equal to the value of the variable n and j equal to the value of the variable i out of the $(D+2)\times(L'-L'')$ number of elements $c_{n,j,(b)}$ stored by the cipher partial element b storage unit 538 and an integer $l_i$ having i equal to the variable i out of the L number of integers $l_i$ stored by the inquiry identifier storage unit 541, the cipher total product element B computation unit 553, using the CPU 911, calculates the element $c_{n,i,(b)}$ raised to the power of $l_i$.

Based on the stored element $\Pi_{B',n}$ and the computed element "$c_{n,i,(b)}{}^{\wedge}l_i$", the cipher total product element A computation unit 551, using the CPU 911, calculates a product "$\Pi_{B',n}\cdot c_{n,i,(b)}{}^{\wedge}l_i$" of the element $\Pi_{B',n}$ and the element "$c_{n,i,(b)}{}^{\wedge}l_i$". The cipher total product element B computation unit 553, using the RAM 914, stores the computed product "$\Pi_{B',n}\cdot c_{n,i,(b)}{}^{\wedge}l_i$" as a new value of the element $\Pi_{B',n}$.

In the i increment step S890, the cipher total product element A computation unit 551, using the CPU 911, increments the value of the variable i by one.

In the i comparison step S891, the cipher total product element A computation unit 551, using the CPU 911, compares the value of the variable i and the integer L.

If the value of the variable i is not greater than L, the cipher total product element A computation unit 551, using the CPU 911, returns to the wildcard determination step S887.

If the value of the variable i is greater than L, the cipher total product element A computation unit 551, using the CPU 911, proceeds to the pairing element A computation step S892.

In the pairing element A computation step S892, based on the element $\Pi_{A',n}$ stored by the cipher total product element A computation unit 551 and an element $k'_{n,(a)}$ having n equal to the variable n out of the $(D+2)$ number of elements $k'_{n,(a)}$ stored by the inquiry element a storage unit 543, the pairing element A computation unit 552, using the CPU 911, calculates a pairing of the element $\Pi_{A',n}$ and the element $k'_{n,(a)}$ by the bilinear pairing e and obtains an element $e_{A,n}$ which is an element of the multiplicative group G3.

In the pairing element B computation step S893, based on the element $\Pi_{B',n}$ stored by the cipher total product element B computation unit 553 and an element $k'_{n,(b)}$ having n equal to the variable n out of the $(D+2)$ number of elements $k'_{n,(b)}$ stored by the inquiry element b storage unit 544, the pairing element B computation unit 554, using the CPU 911, calculates a pairing of the element $\Pi_{B',n}$ and the element $k'_{n,(b)}$ by the bilinear pairing e and obtains an element $e_{B,n}$ which is an element of the multiplicative group G3.

In the comparison element calculation step S894, based on the stored element R', the element $e_{A,n}$ computed by the pairing element A computation unit 552 in the pairing element A computation step S892, and the element $e_{B,n}$ computed by the pairing element B computation unit 554 in the pairing element B computation step S893, the comparison element computation unit 556, using the CPU 911, calculates a product "$R'\cdot e_{A,n}\cdot e_{B,n}$" of the element R', the element $e_{A,n}$, and the element $e_{B,n}$. The comparison element computation unit 556, using the RAM 914, stores the computed product "$R'\cdot e_{A,n}\cdot e_{B,n}$" as a new value of the element R'.

In the n increment step S895, the cipher total product element A computation unit 551, using the CPU 911, increments the value of the variable n by one.

In the n determination step S896, the cipher total product element A computation unit 551, using the CPU 911, compares the value of the variable n and the value (D+1) obtained by adding one to the integer D.

If the value of the variable n is not greater than (D+1), the cipher total product element A computation unit 551, using the CPU 911, returns to the cipher total product element A initialization step S884.

If the value of the variable n is greater than (D+1), the cipher total product element A computation unit 551, using the CPU 911, finishes the comparison element generation process S880.

In this way, the steps from the cipher total product element A initialization step S884 to the n determination step S896 are repeated (D+2) number of times. The cipher total product element A computation unit 551 computes one element $\Pi_{A',n}$ for each repeat of the variable n. The cipher total product element A computation unit 551 computes a total of (D+2) number of elements $\Pi_{A',n}$. The cipher total product element B computation unit 553 computes one element $\Pi_{B',n}$ for each repeat of the variable n. The cipher total product element B computation unit 553 computes a total of (D+2) number of elements $\Pi_{A',n}$.

The pairing element A computation unit 552 executes the pairing element A computation step S892 (D+2) number of times and computes (D+2) number of elements $e_{A,n}$. The pairing element B computation unit 554 executes the pairing element B computation step S893 (D+2) number of times and computes (D+2) number of elements $e_{B,n}$. The comparison element computation unit 556 executes the comparison element calculation step S894 (D+2) number of times and computes one element R'.

The public parameter generation device 100 computes the elements included in the public parameter and the master secret key by calculating the right side of each of the equations shown below.

[Formula 36]

$$\Omega = g_3{}^{\omega} \qquad\qquad w' = g_2{}^{\omega}$$
$$a_{n,l} = g_1{}^{\alpha_n \cdot \theta_{n,l}} \qquad\qquad a'_n = g_2{}^{\alpha_n}$$
$$b_{n,l} = g_1{}^{\beta_n \cdot \theta_{n,l}} \qquad\qquad b'_n = g_2{}^{\beta_n}$$
$$g_3 = e(g_1, g_2) \qquad\qquad y'_{n,l} = g_2{}^{\alpha_n \cdot \beta_n \cdot \theta_{n,l}}$$

The user secret key generation device 200 computes the elements included in a query by calculating the right side of each of the equations shown below.

[Formula 37]

$$k'_0 = k_0 \, \Pi_F \, \Pi_H{}^W$$
$$k'_{n,(a)} = k_{n,(a)} \prod_{m \in [D+1]} f_{m,n,(a)}{}^{\pi_m} \qquad k'_{n,(b)} = k_{n,(b)} \prod_{m \in [D+1]} f_{m,n,(b)}{}^{\pi_m}$$

The equation for computing the element $k'_0$ can be converted as shown below.

[Formula 38]

$$k'_0 = k_0 \prod_{m \in [D+1]} f_{m,0}{}^{\pi_m} \cdot \left( h_{L+1} \prod_{m \in [D+1]} h_{m,L+1}{}^{\pi_m} \right)^W$$
$$= g_2{}^{\omega} \cdot \prod_{n \in [D+1]} \left( g_2{}^{\theta_{n,0}} \cdot \prod_{i \in [1,L]} g_2{}^{\theta_{n,i} \cdot l_i} \cdot g_2{}^{\theta_{n,L+1} \cdot W} \right)^{\alpha_n \cdot \beta_n \cdot \rho'_n}$$

The equation for computing the element $k'_{n,(a)}$ can be converted as shown below.

[Formula 39]

$$k'_{n,(a)} = a'_n{}^{-\rho'_n} = g_2{}^{-\alpha_n \cdot \rho'_n}$$

The equation for computing the element $k'_{n,(b)}$ can be converted as shown below.

[Formula 40]

$$k'_{n,(b)} = b'_n{}^{-\rho'_n} = g_2{}^{-\beta_n \cdot \rho'_n}$$

The encryption device 400 computes the elements included in a ciphertext by calculating the right side of each of the equations shown below.

[Formula 41]

$$E = R\,\Omega^{-r} \qquad c_{n,j,(a)} = b_{n,j}{}^{r_n}$$

$$c_0 = g_1{}^r \qquad c_{n,j,(b)} = a_{n,j}{}^{r-r_n}$$

$$c_{n,(a)} = \Pi_{B,n}{}^{r_n} \qquad \Pi_{B,n} = b_{n,0}\, b_{n,L'+1}{}^{W'} \prod_{j \in A'} b_{n,j}{}^{I'_j}$$

$$c_{n,(b)} = \Pi_{A,n}{}^{r-r_n} \qquad \Pi_{A,n} = a_{n,0}\, a_{n,L'+1}{}^{W'} \prod_{j \in A'} a_{n,j}{}^{I'_j}$$

The equation for computing the element E can be converted as shown below.

[Formula 42]

$$E = R \cdot g_3{}^{-r \cdot \omega}$$

The equation for computing the element $c_{n,(a)}$ can be converted as shown below.

[Formula 43]

$$c_{n,(a)} = \left( b_{n,0} \cdot \prod_{j \in A'} b_{n,j}{}^{I'_j} \cdot b_{n,L'+1}{}^{W'} \right)^{r_n}$$

$$= \left( g_1{}^{\theta_{n,0}} \cdot \prod_{j \in A'} g_1{}^{\theta_{n,j} \cdot I'_j} \cdot g_1{}^{\theta_{n,L'+1} \cdot W'} \right)^{\beta_n \cdot r_n}$$

The equation for computing the element $c_{n,(b)}$ can be converted as shown below.

[Formula 44]

$$c_{n,(b)} = \left( a_{n,0} \cdot \prod_{j \in A'} a_{n,j}^{I'_j} \cdot a_{n,L'+1}^{W'} \right)^{r-r_n}$$

$$= \left( g_1^{\theta_{n,0}} \cdot \prod_{j \in A'} g_1^{\theta_{n,j} \cdot I'_j} \cdot g_1^{\theta_{n,L'+1} \cdot W'} \right)^{\alpha_n \cdot (r-r_n)}$$

The equation for computing the element $c_{n,j,(a)}$ can be converted as shown below.

[Formula 45]

$$c_{n,j,(a)} = b_{n,j}^{r_n} = g_1^{\beta_n \cdot \theta_{n,j} \cdot r_n}$$

The equation for computing the element $c_{n,j,(b)}$ can be converted as shown below.

[Formula 46]

$$c_{n,j,(b)} = a_{n,j}^{r-r_n} = g_1^{\alpha_n \cdot \theta_{n,j} \cdot (r-r_n)}$$

The search device 500 computes the element R' by calculating the right side of each of the equations shown below.

[Formula 47]

$$R' = E \, e_0 \prod_{n \in [D+1]} e_{A,n} \, e_{B,n} \qquad e_0 = e(c_0, k'_0)$$

$$e_{A,n} = e(\Pi_{A',n}, k'_{n,(a)}) \qquad \Pi_{A',n} = c_{n,(a)} \prod_{i \in [1,L] \cap A} c_{n,i,(a)}^{I_i}$$

$$e_{B,n} = e(\Pi_{B',n}, k'_{n,(b)}) \qquad \Pi_{B',n} = c_{n,(b)} \prod_{i \in [1,L] \cap A} c_{n,i,(b)}^{I_i}$$

The equation for computing the element $e_0$ can be converted as shown below.

[Formula 48]

$$e_0 = e(c_0, k'_0) = g_3^{r \cdot \omega} \cdot \prod_{n \in [D+1]} \left( g_3^{\theta_{n,0}} \cdot \prod_{i \in [1,L]} g_3^{\theta_{n,i} \cdot I_i} \cdot g_3^{\theta_{n,L+1} \cdot W} \right)^{r \cdot \alpha_n \cdot \beta_n \cdot \rho'_n}$$

The equation for computing the element $e_{A,n}$ can be converted as shown below..

[Formula 49]

$$e_{A,n} = e\left(c_{n,(a)} \prod_{i \in [1,L] \cap A} c_{n,i,(a)}{}^{I_i}, k'_{n,(a)}\right)$$

$$= \left(g_3{}^{\theta_{n,0}} \cdot \prod_{j \in A'} g_3{}^{\theta_{n,j} \cdot I'_j} \cdot \prod_{i \in [1,L] \cap A} g_3{}^{\theta_{n,i} \cdot I_i} \cdot g_3{}^{\theta_{n,L'+1} \cdot W'}\right)^{-r_n \cdot \alpha_n \beta_n \cdot \rho'_n}$$

The equation for computing the element $e_{B,n}$ can be converted as shown below.

[Formula 50]

$$e_{B,n} = e\left(c_{n,(b)} \prod_{i \in [1,L] \cap A} c_{n,i,(b)}{}^{I_i}, k'_{n,(b)}\right)$$

$$= \left(g_3{}^{\theta_{n,0}} \cdot \prod_{j \in A'} g_3{}^{\theta_{n,j} \cdot I'_j} \cdot \prod_{i \in [1,L] \cap A} g_3{}^{\theta_{n,i} \cdot I_i} \cdot g_3{}^{\theta_{n,L'+1} \cdot W'}\right)^{(r_n - r) \cdot \alpha_n \beta_n \cdot \rho'_n}$$

Thus, the equation for computing the element R' can be converted as shown below.

[Formula 51]

$$R' = E \cdot e(c_0, k'_0) \cdot \prod_{n \in [D+1]} \left(e\left(c_{n,(a)} \prod_{i \in [1,L] \cap A} c_{n,i,(a)}{}^{I_i}, k'_{n,(a)}\right) \cdot\right.$$

$$\left. e\left(c_{n,(b)} \prod_{i \in [1,L] \cap A} c_{n,i,(b)}{}^{I_i}, k'_{n,(b)}\right)\right)$$

$$= R \cdot \prod_{n \in [D+1]} \left(\prod_{i \in [1,L] \cap \neg A} g_3{}^{\theta_{n,i} \cdot I_i} \cdot \prod_{j \in A'} g_3{}^{-\theta_{n,j} \cdot I'_j} \cdot g_3{}^{\theta_{n,L+1} \cdot W - \theta_{n,L'+1} \cdot W'}\right)^{r \cdot \alpha_n \cdot \beta_n \cdot \rho'_n}$$

In this equation, the element R' matches the element R if the content of the brackets is equal to the identity element 1 of the multiplicative group G3 for every n of 0 to (D+1).
The content of the brackets is formed as a product of three elements of the multiplicative group G3. The first element of the three elements is a total product of the generator $g_3$ raised to the power of "$\theta_{n,i} \cdot I_i$" for all the integers i not included in the set A out of integers from 1 to L. The second element of the three elements is a total product of the generator $g_3$ raised to the power of "$-\theta_{n,j} \cdot I'_j$" for all the integers j included in the set A'. The third element of the three elements is the generator $g_3$ raised to the power of "$\theta_{n,L+1} \cdot W - \theta_{n,L'+1} \cdot W'$".
The second element is an inverse element of the first element if the set consisting of integers out of 1 to L not included in the set A is equal to the set A' and if the integer $I_j$ and the integer $I'_j$ are equal for all the integers j included in the set A'.
The third element is the identity element 1 of the multiplicative group G3 if the integer $\theta_{n,L+1}$ and the integer $\theta_{n,L'+1}$ are equal and if the integer W and the integer W' are equal.
If the integer L and the integer L' are equal, the set consisting of integers out of 1 to L not included in the set A is equal to the set A' and the integer $\theta_{n,L+1}$ is equal to the integer $0_{n,L'+1}$.

The equality between the integer W and the integer W' means that the search keyword embedded in the query matches the keyword embedded in the ciphertext.

The equality between the integer L and the integer L' means that the level of the query issuing device 300 is the specified level. The equality between the integer $I_j$ and the integer $I'_j$ for all the integers j included in the set A' means that the specified segment of the user ID of the query issuing device 300 matches the specified user ID.

That is, the element R' matches the element R if the query issuing device 300 has an authorization to search and if the search keyword matches the keyword embedded in the ciphertext.

There is a possibility that the element R' may accidentally match the element R in other cases. However, the possibility is one out of p, and thus can be ignored if the prime number p is sufficiently large.

Therefore, the search device 500 determines a hit for the search only if the query issuing device 300 has an authorization to search and if the search keyword matches the keyword embedded in the ciphertext.

Although a detailed proof will be omitted, it is possible to theoretically prove that keyword information does not leak out from a ciphertext on the assumption that it is difficult to solve a Decisional Bilinear Diffie-Hellman Problem and a Decisional Linear Problem in terms of computational complexity. That is, the secure search system 800 is resistant to deciphering attacks and provides security.

A secure search system 800 in this embodiment encrypts a keyword and searches for the keyword in an encrypted state based on a request from at least any one of a plurality of query issuing devices 300 having, as a user identifier (user ID), less than D number (D being an integer of 1 or greater) of integers $I_i$ (i being an integer from 1 to L, L being an arbitrary integer of less than D, $I_i$ being an integer from 0 to less than p, and p being a prime number).

According to the secure search system 800 in this embodiment, a ciphertext can be generated by specifying only a portion of the user identifier. A query allowed to search for the ciphertext can be generated by a plurality of users having the matching specified portion. Thus, the size of the ciphertext is reduced, and there is no need to generate a new ciphertext when a new user is added.

A public parameter generation device 100 in this embodiment has a processing device (CPU 911) that processes data, a random number $\omega$ selection unit 121, a random number $\alpha$ selection unit 122, a random number $\beta$ selection unit 123, a random number $\theta$ selection unit 124, a public element $\Omega$ computation unit 131, a public element a computation unit 132, and a public element b computation unit 133, a secret element w computation unit 141, a secret element a computation unit 142, a secret element b computation unit 143, a secret element y computation unit 144, a public parameter output unit 151, and a master secret key output unit 152.

The random number $\omega$ selection unit 121, using the processing device, randomly selects an integer $\omega$ out of integers from 1 to less than p.

The random number $\alpha$ selection unit 122, using the processing device, randomly selects (D+2) number of integers $\alpha_n$ (n being an integer from 0 to D+1) out of integers from 1 to less than p.

The random number $\theta$ selection unit 123, using the processing device, randomly selects (D+2) number of integers $\beta_n$ out of integers from 1 to less than p.

The random number $\theta$ selection unit 124, using the processing device, randomly selects $(D+2) \times (D+1)$ number of integers $\theta_{n,1}$ (1 being an integer from 0 to D) out of integers from 1 to less than p.

The public element a computation unit 132, using the processing device and based on a generator $g_1$ of a multiplicative group G1 of an order of the prime number p, the (D+2) number of integers $\alpha_n$ selected by the random number $\alpha$ selection unit 122, and the $(D+2) \times (D+1)$ number of integers $\theta_{n,1}$ selected by the random number $\theta$ selection unit 124, calculates the generator $g_1$ raised to a power of $(\alpha_n \times \theta_{n,1})$ for each of $(D+2) \times (D+1)$ number of combinations (n,1) which are combinations of (D+2) number of integers n from 0 to (D+1) and (D+1) number of integers 1 from 0 to D, thereby computing $(D+2) \times (D+1)$ number of elements $a_{n,1}$ which are elements of the multiplicative group G1.

The public element b computation unit 133, using the processing device and based on the generator $g_1$ of the multiplicative group G1, the (D+2) number of integers $\beta_n$ selected by the random number $\beta$ selection unit 123, and the $(D+2) \times (D+1)$ number of integers $\theta_{n,1}$ selected by the random number $\theta$ selection unit 124, calculates the generator $g_1$ raised to a power of $(\beta_n \times \theta_{n,1})$ for each of the $(D+2) \times (D+1)$ number of combinations (n,1) which are combinations of the (D+2) number of integers n from 0 to (D+1) and the (D+1) number of integers 1 from 0 to D, thereby computing $(D+2) \times (D+1)$ number of elements $b_{n,1}$ which are elements of the multiplicative group G1.

The secret element w computation unit 141, using the processing device and based on a generator $g_2$ of a multiplicative group G2 of an order of the prime number p and the integer $\omega$ selected by the random number $\omega$ selection unit 121, calculates the generator $g_2$ raised to a power of $\omega$, thereby computing an element w' which is an element of the multiplicative group G2.

The public element $\Omega$ computation unit 131, using the processing device and based on a generator $g_3$ of a multiplicative group G3 of an order p and the integer $\omega$ selected the random number $\omega$ selection unit 121, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3.

The secret element a computation unit 142, using the processing device and based on the generator $g_2$ of the multiplicative group G2 and the (D+2) number of integers $\alpha_n$ selected by the random number $\alpha$ selection unit 122, calculates the generator $g_2$ raised to a power of $\alpha_n$ for each of the (D+2) number of integers n from 0 to (D+1), thereby computing (D+2) number of elements $a'_n$ which are elements of the multiplicative group G2.

The secret element b computation unit 143, based on the generator $g_2$ of the multiplicative group G2 and the (D+2) number of integers $\beta_n$ selected by the random number $\beta$ selection unit 123, calculates the generator $g_2$ raised to a power of $\beta_n$ for each of the (D+2) number of integers n from 0 to (D+1), thereby computing (D+2) number of elements $b'_n$ which are elements of the multiplicative group G2.

The secret element y computation unit 144, using the processing device and based on the generator $g_2$ of the multiplicative group G2, the (D+2) number of integers $\alpha_n$ selected by the random number $\alpha$ selection unit 122, the (D+2) number of integers $\beta_n$ selected by the random number $\beta$ selection unit 123, and the (D+2)$\times$(D+1) of integers $\theta_{n,1}$ selected by the random number $\theta$ selection unit 124, calculates the generator $g_2$ raised to a power of $(\alpha_n \times \beta_n \times \theta_{n,1})$ for each of the (D+2) $\times$(D+1) number of combinations (n,1) which are combinations of the (D+2) number of integers n from 0 to (D+1) and the (D+2) number of integers 1 from 0 to D, thereby computing (D+2)$\times$(D+1) number of elements $y'_{n,l}$ which are elements of the multiplicative group G2.

The public parameter output unit 151, using the processing device and as a public parameter in the secure search system 800, outputs the element $\Omega$ computed by the public element $\Omega$ computation unit 131, the (D+2)$\times$(D+1) number of elements $a_{n,1}$ computed by the public element a computation unit 132, and the (D+2)$\times$(D+1) number of elements $b_{n,1}$ computed by the public element b computation unit 133.

The master secret key output unit 152, using the processing device and as a master secret key in the secure search system 800, outputs the element w' computed by the secret element w computation unit 141, the (D+2) number of elements $a'_n$ computed by the secret element a computation unit 142, the (D+2) number of elements $b'_n$ computed by the secret element b computation unit 143, and the (D+2)$\times$(D+1) number of elements $y'_{n,1}$ computed by the secret element y computation unit 144.

According to the public parameter generation device 100 in this embodiment, it is possible to realize a secure search system in which the size of a ciphertext is reduced and in which there is no need to generate a new ciphertext when a new user is added.

An encryption device 400 in this embodiment has a storage device (magnetic disk device 920) that stores data, a processing device (CPU 911) that processes data, a public element $\Omega$ storage unit 422, a public element a storage unit 423, a public element b storage unit 424, an embedded keyword input unit 413, an authorization range input unit 412, a random number r selection unit 451, a secondary random number r selection unit 452, a random element selection unit 453, a verification element computation unit 457, a cipher element computation unit 456, a cipher element a computation unit 463, a cipher element b computation unit 464, a cipher partial element a computation unit 465, a cipher partial element b computation unit 466, and a ciphertext output unit 414.

The public element $\Omega$ storage unit 422, using the storage device, stores the element $\Omega$ output as the public parameter by the public parameter generation device 100.

The public element a storage unit 423, using the storage device, stores the (D+2)$\times$(D+1) number of elements $a_{n,1}$ output as the public parameter by the public parameter generation device 100.

The public element b storage unit 424, using the storage device, stores the (D+2)$\times$(D+1) number of elements $b_{n,1}$ output as the public parameter by the public parameter generation device 100.

The embedded keyword input unit 413, using the processing device and as the keyword to be encrypted, inputs an integer W' from 0 to less than p.

The authorization range input unit 412, using the processing device and as data specifying a range of query issuing devices 300 having an authorization to search for the keyword, inputs an integer L' (L' being an arbitrary integer from 1 to less than D) and L" number of integers $l'_j$ (L" being an arbitrary integer from 0 to L', j being L" number of integers arbitrarily selected out of integers from 1 to L', and $l'_j$ being an integer from 0 to less than p).

The random number r selection unit 451, using the processing device, randomly selects an integer r out of integers from 0 to less than p.

The secondary random number r selection unit 452, using the processing device, randomly selects (D+2) number of integers $r_n$ out of integers from 0 to less than p.

The random element selection unit 453, using the processing device, randomly selects an element R out of elements of the multiplicative group G3.

The verification element computation unit 457, using the processing device and based on the element $\Omega$ stored by the public element $\Omega$ storage unit 422, the integer r selected by the random number r selection unit 451, and the element R selected by the random element selection unit 453, calculates a product of the element $\Omega$ raised to a power of (-r) and the element R, thereby computing an element E which is an element of the multiplicative group G3.

The cipher element computation unit 456, using the processing device and based on the generator $g_1$ of the multiplicative

group G1 and the integer r selected by the random number r selection unit 451, calculates the generator $g_1$ raised to a power of r, thereby computing an element $c_0$ which is an element of the multiplicative group G1.

The cipher element a computation unit 463, using the processing device and based on the integer L' and the L" number of integers $I'_j$ input by the authorization range input unit 412, (D+2) number of elements $b_{n,0}$, (D+2)×L" number of elements $b_{n,1'}$, and (D+2) number of elements $b_{n,\Lambda'}$ (A' being an integer selected out of integers from more than L' to D) out of the (D+2)×(D+1) number of elements $b_{n,1}$ stored by the public element b storage unit 424, the integer W' input by the embedded keyword input unit 413, and the (D+2) number of integers $r_n$ selected by the secondary random number r selection unit 452, calculates the element $b_{n,j}$ raised to a power of $I_j$ for each of (D+2)×L" number of combinations (n, j) which are combinations of the (D+2) number of integers n from 0 to (D+1) and subscripts j of the L" number of integers $I'_j$, calculates the element $b_{n,\Lambda'}$ raised to a power of W' for each of the (D+2) number of integers n from 0 to (D+1), calculates a total product $\Pi_{B,n}$ of the element $b_{n,0}$, the L" number of elements $b_{n,j}$ raised to the power of $I'_j$, and the element $b_{n,\Lambda'}$ raised to the power of W' for each of the (D+2) number of integers n from 0 to (D+1), and calculates the calculated total product $\Pi_{B,n}$ raised to a power of $r_n$ for each of the (D+2) number of integers n from 0 to (D+1), thereby computing (D+2) number of elements $c_{n,(a)}$ which are elements of the multiplicative group G1.

The cipher element b computation unit 464, using the processing device and based on the integer L' and the L" number of integers $I'_j$ input by the authorization range input unit 412, (D+2) number of elements $a_{n,0}$, (D+2)×L" number of elements $a_{n,j'}$, and (D+2) number of elements $a_{n,\Lambda'}$ out of the (D+2)×(D+1) number of elements $a_{n,1}$ stored by the public element a storage unit 423, the integer W' input by the embedded keyword input unit 413, the integer r selected by the random number r selection unit 451, and the (D+2) number of integers $r_n$ selected by the secondary random number r selection unit 452, calculates the element $a_{n,j}$ raised to a power of $I_j$ for each of the (D+2)×L" number of combinations (n,j) which are combinations of the (D+2) number of integers n from 0 to (D+1) and the subscripts j of the L" number of integers $I'_j$, calculates the element $a_{n,\Lambda'}$ raised to a power of W' for each of the (D+2) number of integers n from 0 to (D+1), calculates a total product $\Pi_{A,n}$ of the element $a_{n,0}$, the L" number of elements $a_{n,j}$ raised to the power or $I'_j$, and the element $a_{n,\Lambda'}$ raised to the power of W' for each of the (D+2) number of integers n from 0 to (D+1), and calculates the calculated total product $\Pi_{A,n}$ raised to a power of $(r-r_n)$ for each of the (D+2) number of integers n from 0 to (D+1), thereby computing (D+2) number of elements $c_{n,(b)}$ which are elements of the multiplicative group G1.

The cipher partial element a computation unit 465, using the processing device and based on the integer L' and the subscripts j of the L" number of integers $I'_j$ input by the authorization range input unit 412, (D+2)×(L'-L") number of elements $b_{n,j'}$ (j' being (L'-L") number of integers other than the L" number of subscripts j out of integers from 1 to L') out of the (D+2)×(D+1) number of elements $b_{n,1}$ stored by the public element b storage unit 424, and the (D+2) number of integers $r_n$ selected by the secondary random number r selection unit 452, calculates the element $b_{n,j'}$ raised to a power of $r_n$ for each of (D+2)×(L'-L") number of combinations (n,j') which are combinations of the (D+2) number of integers n from 0 to (D+1) and (L'-L") number of integers j' other than the L" number of subscripts j out of integers from 1 to L', thereby computing (D+2)×(L'-L") number of elements $c_{n,j',(a)}$ which are elements of the multiplicative group G1.

The cipher partial element b computation unit 466, using the processing device and based on the integer L' and the subscripts j of the L" number of integers $I'_j$ input by the authorization range input unit 412, (D+2)×(L'-L") number of elements $a_{n,j'}$ out of the (D+2)×(D+1) number of elements $a_{n,1}$ stored by the public element a storage unit 423, the integer r selected by the random number r selection unit 451, and the (D+2) number of integers $r_n$ selected by the secondary random number r selection unit 452, calculates the element $b_{n,j'}$ raised to a power of $(r-r_n)$ for each of the (D+2)×(L'-L") number of combinations (n,j') which are combinations of the (D+2) number of integers n from 0 to (D+1) and the (L'-L") number of integers j' other than the L" number of subscripts j out of integers from 1 to less than L', thereby computing (D+2)×(L'-L") number of elements $c_{n,j',(b)}$ which are elements of the multiplicative group G1.

The ciphertext output unit 414, using the processing device and as a ciphertext in which the integer W' is embedded as the keyword, outputs the element R selected by the random element selection unit 453, the element E computed by the verification element computation unit 457, the element $c_0$ computed by the cipher element computation unit 456, the (D+2) number of elements $c_{n,(a)}$ computed by the cipher element a computation unit 463, the (D+2) number of elements $c_{n,(b)}$ computed by the cipher element b computation unit 464, the (D+2)×(L'-L") number of elements $c_{n,j',(a)}$ computed by the cipher partial element a computation unit 465, and the (D+2)×(L'-L") number of elements $c_{n,j',(b)}$ computed by the cipher partial element b computation unit 466.

According to the encryption device 400 in this embodiment, it is possible to realize a secure search system in which the size of a ciphertext is reduced and in which there is no need to generate a new ciphertext when a new user is added.

In this example, the integer A' is the value (L'+1) obtained by adding one to the integer L'. However, the integer $\Lambda'$ may be a different value. For example, the integer A' may be a constant value independent of the value of the integer L', such as a value equal to the integer D.

A user secret key generation device 200 in this embodiment has a storage device (magnetic disk device 920) that stores data, a processing device (CPU 911) that processes data, a secret element w storage unit 212, a secret element a storage unit 213, a secret element b storage unit 214, a secret element y storage unit 215, a user identifier input unit 221, a random number $\rho$ selection unit 231, a secondary random number $\rho$ selection unit 232, a total product element Y computation unit 233, a search element computation unit 241, a search element a computation unit 242, a search element b computation unit 243, a derangement element computation unit 251, a derangement element a computation unit 252, a derangement element b computation unit 253, a delegation element computation unit 261, a secondary delegation element computation unit 262, and a user secret key output unit 223.

The secret element w storage unit 212, using the storage device, stores the element w' output as the master secret key by the public parameter generation device 100.

The secret element a storage unit 213, using the storage device, stores the (D+2) number of elements $a'_n$ output as the master secret key by the public parameter generation device 100.

The secret element b storage unit 214, using the storage device, stores the (D+2) number of elements $b'_n$ output as the master secret key by the public parameter generation device 100.

The secret element y storage unit 215, using the storage device, stores the (D+2)×(D+1) number of elements $y'_{n,1}$ output as the master secret key by the public parameter generation device 100.

The user identifier input unit 221, using the processing device and for a query issuing device 300 requesting generation of a user secret key out of the plurality of the query issuing devices 300, inputs L number of integers $l_i$ as a user identifier (user ID) of the query issuing device 300.

The random number $\rho$ selection unit 231, using the processing device, randomly selects (D+2) number of integers $\rho_n$ out of integers from 0 to less than p.

The secondary random number $\rho$ selection unit 232, using the processing device, randomly selects (D+2)×(D+2) number of integers $\rho_{n,m}$ (m being an integer from 0 to D+1) out of integers from 0 to less than p.

The total product element Y computation unit 233, using the processing device and based on the L number of integers $l_i$ input by the user identifier input unit 221 and (D+2) number of elements $y'_{n,0}$ and (D+2)×L number of elements $y'_{n,i}$ out of the (D+2)×(D+1) number of elements $y'_{n,1}$ stored by the secret element y storage unit 215, calculates the element $y'_{n,i}$ raised to a power of $l_i$ for each of (D+2)×(D+1) number of combinations (n,i) which are combinations of the (D+2) number of integers n from 0 to (D+1) and (D+1) number of integers i from 1 to L, and calculates a total product of the element $y'_{n,0}$ and the L number of elements $y'_{n,i}$ raised to the power of $l_i$ for each of the (D+2) number of integers n from 0 to (D+1), thereby computing (D+2) number of elements $\Pi_{Y,n}$ which are elements of the multiplicative group G2.

The search element computation unit 241, using the processing device and based on the element w' stored by the secret element w storage unit 212, the (D+2) number of integers $\rho_n$ selected by the random number $\rho$ selection unit 231, and the (D+2) number of elements $\Pi_{Y,n}$ computed by the total product element Y computation unit 233, calculates the element $\Pi_{Y,n}$ raised to a power of $\rho_n$ for each of the (D+2) number of integers n from 0 to (D+1), and calculates a total product of the element w' and the (D+2) number of elements $\Pi_{Y,n}$ raised to the power of $\rho_n$, thereby computing an element $k_0$ which is an element of the multiplicative group G2.

The search element a computation unit 242, using the processing device and based on the (D+2) number of elements $a'_n$ stored by the secret element a storage unit 213 and the (D+2) number of integers $\rho_n$ selected by the random number $\rho$ selection unit 231, calculates the element $a'_n$ raised to a power of $(-\rho_n)$ for each of the (D+2) number of integers n from 0 to (D+1), thereby computing (D+2) number of elements $k_{n,(a)}$ which are elements of the multiplicative group G2.

The search element b computation unit 243, using the processing device and based on the (D+2) number of elements $b'_n$ stored by the secret element b storage unit 214 and the (D+2) number of integers $\rho_n$ selected by the random number $\rho$ selection unit 231, calculates the element $b'_n$ raised to a power of $(-\rho_n)$ for each of the (D+2) number of integers n from 0 to (D+1), thereby computing (D+2) number of elements $k_{n,(b)}$ which are elements of the multiplicative group G2.

The derangement element computation unit 251, using the processing device and based on the (D+2)×(D+2) number of integers $\rho_{n,m}$ selected by the secondary random number $\rho$ selection unit 232 and the (D+2) number of elements $\Pi_{Y,n}$ computed by the total product element Y computation unit 233, calculates the element $\Pi_{Y,n}$ raised to a power of $\rho_{n,m}$ for each of (D+2)×(D+2) number of combinations (n,m) which are combinations of the (D+2) number of integers n from 0 to (D+1) and (D+2) number of integers m from 0 to (D+1), and calculates a total product of the (D+2) number of elements $\Pi_{Y,n}$ raised to the power of $\rho_{n,m}$ for each of the (D+2) number of integers m from 0 to (D+1), thereby computing (D+2) number of elements $f_{m,0}$ which are elements of the multiplicative group G2.

The derangement element a computation unit 252, using the processing device and based on the (D+2) number of elements $a'_n$ stored by the secret element a storage unit 213 and the (D+2)×(D+2) number of integers $\rho_{n,m}$ selected by the secondary random number $\rho$ selection unit 232, calculates the element $a'_n$ raised to a power of $(-\rho_{n,m})$ for each of the (D+2)×(D+2) number of combinations (n,m) which are combinations of the (D+2) number of integers n from 0 to (D+1) and the (D+2) number of integers m from 0 to (D+1), thereby computing (D+2)×(D+2) number of elements $f_{m,n,(a)}$ which are elements of the multiplicative group G2.

The derangement element b computation unit 253, using the processing device and based on the (D+2) number of elements $b'_n$ stored by the secret element b storage unit 214 and the (D+2)×(D+2) number of integers $\rho_{n,m}$ selected the secondary random number $\rho$ selection unit 232, calculates the element $b'_n$ raised to a power of $(-\rho_{n,m})$ for each of the (D+2)×(D+2) number of combinations (n,m) which are combinations of the (D+2) number of integers n from 0 to (D+1) and the (D+2) number of integers m from 0 to (D+1), thereby computing (D+2)×(D+2) number of elements $f_{m,n,(b)}$ which are elements of the multiplicative group G2.

The delegation element computation unit 261, using the processing device and based on (D+2) number of elements $y'_{n,\Lambda}$ (A being an integer selected out of integers from more than L to D) out of the (D+2)×(D+1) number of elements $y'_{n,1}$ stored by the secret element y storage unit 215 and the (D+2) number of integers $\rho_n$ selected by the random number $\rho$ selection unit 231, calculates the element $y'_{n,\Lambda}$ raised to a power of $\rho_n$ for each of the (D+2) number of integers n from 0 to (D+1), and calculates a total product of the (D+2) number of elements $y'_{n,j}$ raised to the power of $\rho_n$, thereby computing an element $h_\Lambda$ which is an element of the multiplicative group G2.

The secondary delegation element computation unit 262, using the processing device and based on (D+2) number of elements $y'_{n,\Lambda}$ out of the (D+2)×(D+1) number of elements $y'_{n,1}$ stored by the secret element y storage unit 215 and the (D+2)×(D+2) number of integers $\rho_{n,m}$ selected by the secondary random number $\rho$ selection unit 232, calculates the element $y'_{n,\Lambda}$ raised to a power of $\rho_{n,m}$ for each of the (D+2)×(D+2) number of combinations (n,m) which are combinations of the (D+2) number of integers n from 0 to (D+1) and the (D+2) number of integers m from 0 to (D+1), and calculates a total product of the (D+2) number of elements $y'_{n,\Lambda}$ raised to the power of $\rho_{n,m}$ for each of the (D+2) number of integers m from 0 to (D+1), thereby computing (D+2) number of elements $h_{m,\Lambda}$ which are elements of the multiplicative group G2.

The user secret key output unit 223, using the processing device and as the user secret key of the query issuing device 300, outputs a combination of the element $k_0$ computed by the search element computation unit 241, the (D+2) number of elements $k_{n,(a)}$ computed by the search element a computation unit 242, the (D+2) number of elements $k_{n,(b)}$ computed by the search element b computation unit 243, the (D+2) number of elements $f_{m,0}$ computed by the derangement element computation unit 251, the (D+2)×(D+2) number of elements $f_{m,n,(a)}$ computed by the derangement element a computation unit 252, the (D+2)×(D+2) number of elements $f_{m,n,(b)}$ computed by the derangement element b computation unit 253, the element $h_\Lambda$ computed the delegation element computation unit 261, and the (D+2) number of elements $h_{m,\Lambda}$ computed by the secondary delegation element computation unit 262.

According to the user secret key generation device 200 in this embodiment, it is possible to realize a secure search system in which the size of a ciphertext is reduced and in which there is no need to generate a new ciphertext when a new user is added.

In this example, the integer $\Lambda$ is the value (L+1) obtained by adding one to the integer L. However, the integer A may be a different value, provided that it corresponds to the integer A' in the encryption device 400.

For example, when the integer A' in the encryption device 400 is equal to the integer D, the integer A should also be equal to the integer D. By setting constant values as the integers A' and the integer A independently of the integer L' and the integer L, it is possible to give an authorization to search not merely to the query issuing device 300 of one level only, but also to the query issuing device 300 of a higher level whose user ID has a specified value in a specified segment.

The query issuing device 300 in this embodiment has a storage device (magnetic disk device 920) that stores data, a processing device (CPU 911) that processes data, a user identifier storage unit 311, a search element storage unit 321, a search element a storage unit 322, a search element b storage unit 323, a derangement element storage unit 324, a derangement element a storage unit 325, a derangement element b storage unit 326, a delegation element storage unit 327, a secondary delegation element storage unit 328, a search keyword input unit 341, a random number $\pi$ selection unit 331, an inquiry element computation unit 351, an inquiry element a computation unit 334, an inquiry element b computation unit 335, and a query output unit 343.

The user identifier storage unit 311, using the storage device and as the user identifier (user ID) of the query issuing device 300, stores the L number of integers $I_i$.

The search element storage unit 321, using the storage device 300, stores the element $k_0$ output as the user secret key of the query issuing device 300 by the user secret key generation device 200.

The search element a storage unit 322, using the storage device, stores the (D+2) number of elements $k_{n,(a)}$ (n being an integer from 0 to D+1) output as the user secret key of the query issuing device 300 by the user secret key generation device 200.

The search element b storage unit 323, using the storage device, stores the (D+2) number of elements $k_{n,(b)}$ output as the user secret key of the query issuing device 300 by the user secret key generation device 200.

The derangement element storage unit 324, using the storage device, stores the (D+2) number of elements $f_{m,0}$ (m being an integer from 0 to D+1) output as the user secret key of the query issuing device 300 by the user secret key generation device 200.

The derangement element a storage unit 325, using the storage device, stores the (D+2)×(D+2) number of elements $f_{m,n,(a)}$ output as the user secret key of the query issuing device 300 by the user secret key generation device 200.

The derangement element b storage unit 326, using the storage device, stores the (D+2)×(D+2) number of elements $f_{m,n,(b)}$ output as the user secret key of the query issuing device 300 by the user secret key generation device 200.

The delegation element storage unit 327, using the storage device, stores the element $h_\Lambda$ output as the user secret key of the query issuing device 300 by the user secret key generation device 200.

The secondary delegation element storage unit 328, using the storage device, stores the (D+2) number of elements

$h_{m,\Lambda}$ output as the user secret key of the query issuing device by the user secret key generation device 200.

The search keyword input unit 341, using the processing device and as a keyword to be searched for, inputs an integer W from 0 to less than p.

The random number $\pi$ selection unit 331, using the processing device, randomly selects (D+2) number of integers $\pi_m$ out of integers from 0 to less than p.

The inquiry element computation unit 351, using the processing device and based on the element $k_0$ stored by the search element storage unit 321, the (D+2) number of elements $f_{m,0}$ stored by the derangement element storage unit 324, the element $h_{\Lambda}$ stored by the delegation element storage unit 327, the (D+2) number of elements $h_{m,\Lambda}$ stored by the secondary delegation element storage unit 328, the integer W input by the search keyword input unit, and the (D+2) number of integers $\pi_m$ selected by the random number $\pi$ selection unit 331, calculates the element $h_{m,\Lambda}$ raised to a power of $\pi_m$ for each of the (D+2) number of integers m from 0 to (D+1), calculates a total product $II_H$ of the element $h_{\Lambda}$ and the (D+2) number of elements $h_{m,\Lambda}$ raised to the power of $\pi_m$, calculates the element $f_{m,0}$ raised to a power of $\pi_m$ for each of the (D+2) number of integers m from 0 to (D+1), calculates the total product $II_H$ raised to a power of W, and calculates a total product of the element $k_0$, the (D+2) number of elements $f_{m,0}$ raised to the power of $\pi_m$, and the total product $II_H$ raised to the power of W, thereby computing an element $k'_0$ which is an element of the multiplicative group G2.

The inquiry element a computation unit 334, using the processing device and based on the (D+2) number of elements $k_{n,(a)}$ stored by the search element a storage unit 322, the (D+2)×(D+2) number of elements $f_{m,n,(a)}$ stored by the derangement element a storage unit 325, and the (D+2) number of integers $\pi_m$ selected by the random number $\pi$ selection unit 331, calculates the element $f_{m,n,(a)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2.

The inquiry element b computation unit 335, using the processing device and based on the (D+2) number of elements $k_{n,(b)}$ stored by the search element b storage unit 323, the (D+2)×(D+2) number of elements $f_{m,n,(b)}$ stored by the derangement element b storage unit 326, and the (D+2) number of integers $\pi_m$ selected by the random number $\pi$ selection unit 331, calculates the element $f_{m,n,(b)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $f_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2.

The query output unit 343, using the processing device and as a query for searching with the integer W as the keyword, outputs a combination of the L number of integers $I_i$ stored by the user identifier storage unit 311, the element $k'_0$ computed by the inquiry element computation unit 351, the (D+2) number of elements $k'_{n,(a)}$ computed by the inquiry element a computation unit 334, and the (D+2) number of elements $k'_{n,(b)}$ computed by the inquiry element b computation unit 335.

According to the query issuing device 300 in this embodiment, it is possible to realize a secure search system in which the size of a ciphertext is reduced and in which there is no need to generate a new ciphertext when a new user is added.

A search device 500 in this embodiment has a storage device (magnetic disk device 920) that stores data, a processing device (CPU 911) that processes data, a ciphertext storage unit 530, a query input unit 521, a pairing element computation unit 555, a pairing element A computation unit 552, a pairing element B computation unit 554, a comparison element computation unit 556, and a comparison unit 557.

The ciphertext storage unit 530, using the storage device and as the ciphertext in which the keyword is embedded, stores a combination of the element R, the element E, the element $c_0$, the (D+2) number of elements $c_{n,(a)}$, the (D+2) number of elements $c_{n,(b)}$, the (D+2)×(L'-L") number of elements $c'_{n,j',(a)}$, and the (D+2)×(L'-L") number of elements $c'_{n,j,(b)}$ included in the ciphertext output by the encryption device 400.

The query input unit 521, using the processing device and as the query for searching for the keyword, inputs the combination of the L number of integers $I_i$, the element $k'_0$, the (D+2) number of elements $k'_{n,(a)}$, and the (D+2) number of elements $k'_{n,(b)}$ output by the query issuing device 300.

The pairing element computation unit 555, using the processing device and based on the element $c_0$ included in the ciphertext stored by the ciphertext storage unit 530 and the element $k'_0$ included in the query input by the query input unit 521, maps a pair of the element $c_0$ and the element $k'_0$ by the bilinear pairing e, thereby computing an element $e_0$ which is an element of the multiplicative group G3.

The pairing element A computation unit 552, using the processing device and based on the (D+2) number of elements $c_{n,(a)}$ and the (D+2)×(L'-L") number of elements $c_{n·j',(a,)}$ included in the ciphertext stored by the ciphertext storage unit 530 and the L number of integers $I_i$ and the (D+2) number of elements $k'_{n,(a)}$ included in the query input by the query input unit 521, calculates the element $c_{n,i',(a)}$ raised to a power of $I_{-i'}$ for each of (D+2)×$L_A$ number of combinations (n,i') which are combinations of the (D+2) number of integers n from 0 to (D+1) and $L_A$ number of integers i' from 1 to L out of the (L'-L") number of integers j' which are subscripts of the (D+2)×(L'-L") number of elements $c_{n,j',(a)}$, calculates a total product $\Pi_{A',n}$ of the element $c_{n,(a)}$ and the $L_A$ number of elements $c_{n,i',(a)}$ raised to the power of $I_{-i'}$ for each of the (D+2) number of integers n from 0 to (D+1), and maps a pair of the total product $\Pi_{A',n}$ and the element $k'_{n,(a)}$ by the bilinear pairing e for each of the (D+2) number of integers n from 0 to (D+1), thereby computing (D+2) number of elements $e_{A',n}$ which are elements of the multiplicative group G3.

The pairing element B computation unit 554, using the processing device and based on the (D+2) number of elements $c_{n,(b)}$ and the (D+2)×(L'-L") number of elements $c_{n,j',(b)}$ included in the ciphertext stored by the ciphertext storage unit 530 and the L number of integers $I_i$ and the (D+2) number of elements $k'_{n,(b)}$ included in the query input by the query input unit 521, calculates the element $c_{n,i',(b)}$ raised to a power of $I_{-i'}$ for each of the (D+2)×$L_A$ number of combinations (n,i') which are combinations of the (D+2) number of integers n from 0 to (D+1) and the $L_A$ number of integers i' from 1 to L out of the (L'-L") number of integers j' which are the subscripts of the (D+2)×(L'-L") number of elements $c_{n,j',(b)}$, calculates a total product $\Pi_{B',n}$ of the element $c_{n,(b)}$ and the $L_A$ number of elements $c_{n,i',(b)}$ raised to the power of $I_{-i'}$ for each of the (D+2) number of integers n from 0 to (D+1), and maps a pair of the total product $\Pi_{B',n}$ and the element $k'_{n,(b)}$ by the bilinear pairing e for each of the (D+2) number of integers n from 0 to (D+1), thereby computing (D+2) number of elements $e_{B,n}$ which are elements of the multiplicative group G3.

The comparison element computation unit 556, using the processing device and based on the element E included in the ciphertext stored by the ciphertext storage unit 530, the element $e_0$ computed by the pairing element computation unit 555, the (D+2) number of elements $e_{A,n}$ computed by the pairing element A computation unit 552, and the (D+2) number of elements $e_{B,n}$ computed by the pairing element B computation unit 554, calculates a total product of the element E, the element $e_0$, the (D+2) number of elements $e_{A,n}$, and the (D+2) number of elements $e_{B,n}$, thereby computing an element R' which is an element of the multiplicative group G3.

The comparison unit 557, using the processing device, compares the element R included in the ciphertext stored by the ciphertext storage unit 530 and the element R' computed by the comparison element computation unit 556, and determines a hit for searching if the element R matches the element R'.

According to the search device 500 in this embodiment, it is possible to realize a secure search system in which the size of a ciphertext is reduced and in which there is no need to generate a new ciphertext when a new user is added.

The secure search system 800 in this embodiment can provide the query issuing device 300 with an authorization to generate a user secret key of a lower-level query issuing device such as a child query issuing device.

The delegation element computation unit 261 of the user secret key generation device 200, using the processing device and based on (D+2)×(D'-L) number (D' being an integer from more than L to D) of elements $y'_{n,\lambda}$ ($\lambda$ being an integer from more than L to D') out of the (D+2)×(D+1) number of elements $y'_{n,1}$ stored by the secret element y storage unit 215 and the (D+2) number of integers $\rho_n$ selected by the random number $\rho$ selection unit 231, calculates the element $y'_{n,\lambda}$ raised to a power of $\rho_n$ for each of (D+2)×(D'-L) number of combinations (n,λ) which are combinations of the (D+2) number of integers n from 0 to (D+1) and (D'-L) number of integers λ from more than L to D', and calculates a total product of the (D+2) number of elements $y'_{n,\lambda}$ raised to the power of $\rho_n$ for each of the (D'-L) number of integers λ from more than L to D', thereby computing (D'-L) number of elements $h_\lambda$ which are elements of the multiplicative group G2.

The secondary delegation element computation unit 262, using the processing device and based on (D+2)×(D'-L) number of elements $y'_{n,\lambda}$ out of the (D+2)×(D+1) number of elements $y'_{n,1}$ stored by the secret element y storage unit 215 and the (D+2)x(D+2) number of integers $\rho_{n,m}$ selected by the secondary random number $\rho$ selection unit 232, calculates the element $y'_{n,\lambda}$ raised to a power of $\rho_{n,m}$ for each of (D+2)×(D+2)×(D'-L) number of combinations (n,m,λ) which are combinations of the (D+2) number of integers n from 0 to (D+1), the (D+2) number of integers m from 0 to (D+1), and the (D'-L) number of integers λ from more than L to D', and calculates a total product of the (D+2) number of elements $y'_{n,\lambda}$ raised to the power of $\rho_{n,m}$ for each of (D+2)×(D'-L) number of combinations (m,λ) which are combinations of the (D+2) number of integers m from 0 to (D+1) and the (D'-L) number of integers λ from more than L to D', thereby computing (D+2)×(D'-L) number of elements $h_{m,\lambda}$ which are elements of the multiplicative group G2.

The user secret key output unit 223, using the processing device and as the user secret key of the query issuing device 300, outputs a combination of the element $k_0$ computed by the search element computation unit 241, the (D+2) number of elements $k_{n,(a)}$ computed by the search element a computation unit 242, the (D+2) number of elements $k_{n,(b)}$ computed by the search element b computation unit 243, the (D+2) number of elements $f_{m,0}$ computed by the derangement element computation unit 251, the (D+2)×(D+2) number of elements $f_{m,n,(a)}$ computed by the derangement element a computation unit 252, the (D+2)×(D+2) number of elements $f_{m,n(b)}$ computed by the derangement element b computation unit 253, the (D'-L) number of elements $h_\lambda$ computed by the delegation element computation unit 261, and the (D+2)×(D'-L) number of elements $h_{m,\lambda}$ computed by the secondary delegation element computation unit 262.

According to the user secret key generation device 200 in this embodiment, it is possible to realize a secure search system in which the query issuing device 300 can be provided with an authorization to generate a user secret key of a lower-level query issuing device such as a child query issuing device.

The query issuing device 300 further has a child user identifier input unit 361, a secondary random number $\pi$

selection unit 371, a child search element computation unit 372, a child derangement element computation unit 375, a child derangement element a computation unit 376, a child derangement element b computation unit 377, a child delegation element computation unit 378, a child secondary delegation element computation unit 379, and a child user secret key output unit 363.

The delegation element storage unit 327, using the storage device, stores the (D'-L) number of elements $h_\lambda$ output as the user secret key of the query issuing device 300 by the user secret key generation device 200.

The secondary delegation element storage unit 328, using the storage device, stores the $(D+2)\times(D'-L)$ number of elements $h_{m,\lambda}$ output as the user secret key of the query issuing device 300 by the user secret key generation device 200.

The child user identifier input unit 361, using the processing device, inputs an integer $I_{L+1}$ from 0 to less than p.

The secondary random number $\pi$ selection unit 371, using the processing device, randomly selects $(D+2)\times(D+2)$ number of integers $\pi_{m,m'}$-(m' being an integer from 0 to D+1)- out of integers from 0 to less than p.

The child search element computation unit 372, using the processing device and based on the element $k_0$ stored by the search element storage unit 321, the (D+2) number of elements $f_{-m,0}$ stored by the derangement element storage unit 324, an element $h_{L+1}$ out of the (D'-L) number of elements $h_\lambda$ stored by the delegation element storage unit 327, (D+2) number of elements $h_{m,L+1}$ out of the $(D+2)\times(D'-L)$ number of elements $h_{m,\lambda}$ stored by the secondary delegation element storage unit 328, the (D+2) number of integers $\pi_m$- selected by the random number $\pi$ selection unit 331, and the integer $I_{L+1}$ input by the child user identifier input unit 361, calculates the element $h_{m,\Lambda}$ raised to a power of $\pi_m$ for each of the (D+2) number of integers m from 0 to (D+1), calculates a total product $II_H$ of the element $h_\lambda$ and the (D+2) number of elements $h_{m,\Lambda}$ raised to the power of $\pi_m$, calculates the element $f_{m,0}$ raised to a power of $\pi_m$ for each of the (D+2) number of integers m from 0 to (D+1), calculates the total product $II_H$ raised to a power of $I_{L+1}$, and calculates a total product of the element $k_0$, the (D+2) number of elements $f_{-m,0}$ raised to the power of $\pi_m$, and the total product $II_H$ raised to the power of $I_{L+1}$, thereby computing an element $k''_0$ which is an element of the multiplicative group G2.

The child derangement element computation unit 375, using the processing device and based on the (D+2) number of elements $f_{m,0}$ stored by the derangement element storage unit 324, (D+2) number of elements $h_{m,L+1}$ out of the $(D+2)\times(D'-L)$ number of elements $h_{m,\lambda}$ stored by the secondary delegation element storage unit 328, and the $(D+2)\times(D+2)$ number of integers $\pi_{m,m'}$ selected by the secondary random number $\pi$ selection unit 371, calculates the element $f_{m,0}$ raised to a power of $\pi_{m,m'}$ and the element $h_{m,L+1}$ raised to a power of $\pi_{m,m'}$ for each of $(D+2)\times(D+2)$ number of combinations (m,m') which are combinations of the (D+2) number of integers m from 0 to (D+1) and (D+2) number of integers m' from 0 to (D+1), calculates a total product $\Pi_{H,m'}$ of the (D+2) number of elements $h_{m,L+1}$ raised to the power of $\pi_{m,m'}$ for each of the (D+2) number of integers m' from 0 to (D+1), and calculates a total product of the (D+2) number of elements $f_{m,0}$ raised to the power of $\pi_{m,m'}$ and the total product $\Pi_{H,m'}$ raised to the power of $I_L$ for each of the (D+2) number of integers m' from 0 to (D+1), thereby computing (D+2) number of elements $f_{m',0}$ which are elements of the multiplicative group G2.

The child derangement element a computation unit 376, using the processing device and based on the (D+2) number of elements $f_{m,n,(a)}$ stored by the derangement element a storage unit 325 and the $(D+2)\times(D+2)$ number of integers $\pi_{m,m'}$ selected by the secondary random number $\pi$ selection unit 371, calculates the element $f_{m,n,(a)}$ raised to a power of $\pi_{m,m'}$ for each of $(D+2)\times(D+2)\times(D+2)$ number of (n,m,m') which are combinations of the (D+2) number of integers n from 0 to (D+1), the (D+2) number of integers m from 0 to (D+1), and the (D+2) number of integers m' from 0 to (D+1), and calculates a total product of the (D+2) number of elements $f_{m,n,(a)}$ raised to the power of $\pi_{m,m'}$ for each of $(D+2)\times(D+2)$ number of (n,m') which are combinations of the (D+2) number of integers n from 0 to (D+1) and the (D+2) number of integers m' from 0 to (D+1), thereby computing (D+2) number of elements $f_{m',n,(a)}$ which are elements of the multiplicative group G2.

The child derangement element b computation unit 377, using the processing device and based on the (D+2) number of elements $f_{m,n,(b)}$ stored by the derangement element b storage unit 326 and the $(D+2)\times(D+2)$ number of integers $\pi_{m,m'}$ selected by the secondary random number $\pi$ selection unit 371, calculates the element $f_{m,n,(b)}$ raised to a power of $\pi_{m,m'}$ for each of the $(D+2)\times(D+2)\times(D+2)$ number of (n,m,m') which are combinations of the (D+2) number of integers n from 0 to (D+1), the (D+2) number of integers m from 0 to (D+1), and the (D+2) number of integers m' from 0 to (D+1), and calculates a total product of the (D+2) number of elements $f_{m,n,(b)}$ raised to the power of $\pi_{m,m'}$ for each of the $(D+2)\times(D+2)$ number of (n,m') which are combinations of the (D+2) number of integers n from 0 to (D+1) and the (D+2) number of integers m' from 0 to (D+1), thereby computing (D+2) number of elements $f_{m',n,(b)}$ which are elements of the multiplicative group G2.

The child delegation element computation unit 378, using the processing device and based on (D''-L-1) number (D'' being an integer from more than (L+1) to D') of elements $h_{\lambda'}$ ($\lambda'$ being an integer from more than (L+1) to D'') out of the (D'-L) number of elements $h_\lambda$ stored by the delegation element storage unit 327, $(D+2)\times(D''-L-1)$ number of elements $h_{m,\lambda'}$ out of the $(D+2)\times(D'-L)$ number of elements $h_{m,\lambda}$ stored by the secondary delegation element storage unit 328, and the (D+2) number of integers $\pi_m$ selected by the random number $\pi$ selection unit 331, calculates the element $h_{m,\lambda'}$ raised to a power of $\pi_m$ for each of $(D+2)\times(D''-L-1)$ number of combinations $(m,\lambda')$ which are combinations of the (D+2) number of integers m from 0 to (D+1) and (D''-L-1) number of integers $\lambda'$ from more than (L+1) to D'', and calculates a total product of the element $h_{\lambda'}$ and the (D+2) number of elements $h_{m,\lambda'}$ raised to the power of $\pi_m$ for each of the (D"-L-1) number of integers $\lambda'$ from more than (L+1) to D", thereby computing (D"-L-1) number of elements $h'_{\lambda'}$ which are elements of the multiplicative group G2.

The child secondary delegation element computation unit 379, using the processing device and based on (D+2)×(D"-L-1) number of elements $h_{m,\lambda'}$ out of the (D+2)×(D'-L-1) number of elements $h_{m,\lambda}$ stored by the secondary delegation element storage unit 328 and the (D+2)×(D+2) number of integers $\pi_{m,m'}$ selected by the secondary random number $\pi$ selection unit 371, calculates the elements $h_{m,\lambda'}$ raised to a power of $\pi_{m,m'}$ for each of (D+2)×(D+2)×(D"-L-1) number of combinations (m,m',λ') which are combinations of the (D+2) number of integers m from 0 to (D+1), the (D+2) number of integers m' from 0 to (D+1), and (D"-L-1) number of integers j' from more than L to D", and calculates a total product of the (D+2) number of elements $h_{m,\lambda'}$ raised to the power of $\pi_{m,m'}$ for each of (D+2)×(D"-L-1) number of combinations (m,m',λ) which are combinations of the (D+2) number of integers m' from 0 to (D+1) and the (D"-L-1) number of integers λ' from more than L to D", thereby computing (D+2)×(D"-L-1) number of elements $h'_{m',\lambda'}$ which are elements of the multiplicative group G2.

The child user secret key output unit 363, as a user secret key of another query issuing device 300 having as a user identifier the L number of integers $I_i$ stored by the user identifier storage unit 311 and the integer $I_{L+1}$ input by the child user identifier input unit 361, outputs a combination of the element $k''_0$ computed by the child search element computation unit 372, the (D+2) number of elements $k'_{n,(a)}$ computed by the inquiry element a computation unit 334, the (D+2) number of elements $k'_{n,(b)}$ computed by the inquiry element b computation unit 335, the (D+2) number of elements $f_{m',0}$ computed by the child derangement element computation unit 375, the (D+2)×(D+2) number of elements $f_{m',n,(a)}$ computed by the child derangement element a computation unit 376, the (D+2)×(D+2) number of elements $f_{m',n,(b)}$ computed by the child derangement element b computation unit 377, the (D"-L-1) number of elements $h'_{\lambda'}$ computed by the child delegation element computation unit 378, and the (D+2)×(D"-L-1) number of elements $h'_{m',\lambda'}$ computed by the child secondary delegation element computation unit 379.

According to the query issuing device 300 in this embodiment, it is possible to generate a user secret key of a lower-level query issuing device such as a child query issuing device.

The secure search system 800 (secure search device) described above has a root PKG (group public key generation device 810), the query issuing device 300, the encryption device 400, and a data server (search device 500). The root PKG generates a public parameter and a master secret key. The query issuing device 300 issues a query. The encryption device 400 performs encryption. The data server stores data and performs secure searching.

The secure search system 800 in this embodiment is suitable for a system in which a plurality of groups are arranged hierarchically. For example, in a general organization such as a large company or a government office, a plurality of groups exist hierarchically. For example, a "--- division" is subdivided into a plurality of "sections", which are further subdivided into "--- subsections" hierarchically.

The plurality of groups are arranged in a so-called tree structure. The group public key generation device 810 (root PKG) is located at a portion corresponding to the root of the tree. The query issuing device 300 is located at an intermediate node (intermediate PKG) or a portion corresponding to a leaf of the tree (query issuing device). There may be, for example, three groups. The hierarchical structure may have, for example, two levels. However, the number of groups and the number of levels are not limited to such numbers. For example, the configuration may be such that a plurality of subgroups are located under a given group. The query issuing device 300 does not necessarily have to be located at the lowest level. The query issuing device 300 may be located immediately under the root PKG or immediately under an intermediate PKG in the middle. The groups form the tree structure having a maximum of (D-1) number of layered levels. That is, assume that the root PKG is at the first level, an intermediate PKG immediately under the root PKG is at the second level, and an intermediate PKG immediately under the intermediate PKG at the second level is at the third level. Then, the last intermediate PKG is at the (D-1)-th level and the query issuing device 300 immediately under the last intermediate PKG is at the D-th level. The root PKG is not counted as a level, so that there are a maximum of (D-1) number of levels.

The ID of the query issuing device 300 or intermediate PKG is a combination of one or more integers. For example, the ID of the intermediate PKG at the L-th level is a combination of L number of integers $(I_1, I_2, ..., I_{L-1}, I_L) \in Zp^L$. The ID of the intermediate PKG at a parent node of the L-th level intermediate PKG is a combination of (L-1) number of integers $(I_1, I_2, ..., I_{L-1})$. The ID of the query issuing device 300 at a child node of the L-th level intermediate PKG (query issuing device 300) is, for example, a combination of (L+1) number of integers $(I_1, I_2, ..., I_{L-1}, I_L, I_{L+1})$.

The root PKG (public key generator) generates a public parameter PK and a master secret key MSK. The intermediate PKG or query issuing device 300 has a user secret key directly issued by the root PKG. The intermediate PKG or query issuing device 300 may have a user secret key issued by another intermediate PKG at a level higher than its own level. For example, the query issuing device 300 whose ID is a combination of L number of integers $(I_1, I_2, ..., I_{L-1}, I_L)$ sends a request for issuance of a user secret key to the intermediate PKG whose ID is a combination of (L-1) number of integers $(I_1, I_2, ..., I_{L-1})$, and has the user secret key issued. In this way, the intermediate PKG issues a user secret key to another intermediate PKG or query issuing device 300 whose ID includes its own ID and whose level is lower than its own level. A user secret key issued by the root PKG is equivalent to a user secret key issued by the intermediate PKG.

The root PKG has, for example, a public parameter/master secret key generation unit (public parameter generation device 100), a user secret key generation unit (user secret key generation device 200), a master secret key storage unit (secret element w storage unit 212, secret element a storage unit 213, secret element b storage unit 214, secret element y storage unit 215).

The intermediate PKG has, for example, a user secret key generation request issuing unit (user secret key request output unit 312), the user secret key storage unit 320, and a lower-level user secret key generation unit (child user secret key generation unit 370).

The user secret key generation request issuing unit issues a user secret key generation request to the root PKG or the intermediate PKG at a higher level. The user secret key storage unit 320 stores a user secret key issued by the root PKG or the intermediate PKG. The lower-level user secret key generation unit issues a user secret key to a user or intermediate PKG at a level lower than its own level by using the user secret key of the intermediate PKG itself.

The root PKG generates a public parameter PK and a master secret key MSK as explained below, for example. First, the public parameter/master secret key generation unit uniformly randomly selects a generator $g_1$ from the multiplicative group G1. The public parameter/master secret key generation unit uniformly randomly selects a generator $g_2$ from the multiplicative group G2. Then, the public parameter/master secret key generation unit uniformly randomly selects $\omega$ and $(\alpha_n, \beta_n)_{n \in [1+D]}$ respectively from a multiplicative group $Z_p^*$ of a finite field $Z_p$. Then, the public parameter/ master secret key generation unit uniformly randomly selects $(\theta_{n,1})_{(n,1) \in [1+D] \times [D]}$ respectively from the finite field $Z_p$.

Then, the public parameter/master secret key generation unit calculates $\Omega = e(g_1, g_2)^{\wedge}\omega$ and $(a_{n,1} = g_1{}^{\wedge}(\alpha_n \cdot \theta_{n,1}), b_{n,1}=g_1{}^{\wedge}(\beta_n \cdot \theta_{n,1}))_{(n,1) \in [1+D] \times [D]}$. Then, the public parameter/master secret key generation unit calculates w' = $g_2{}^{\wedge}\omega$ and $(a'_n = (g_2{}^{\wedge}\alpha_n), b'_n = (g_2{}^{\wedge}\beta_n), (y'_{n,1}=(g_2{}^{\wedge}\alpha_n \cdot \beta_n \cdot \theta_{n,1}))1 \in [D])_{n \in [1+D]}$. Then, the public parameter/master secret key generation unit discloses the three groups G1, G2, G3, the order p, the pairing e, the calculated $\Omega$, $(a_{n,1}, bn,1)_{(n,1) \in [1+D] \times [D]}$ as the public parameter PK. Lastly, the public parameter/master secret key generation unit stores the calculated w' and $(a'_n, b'_n, (Y'_{n,1})_{1 \in [D]})_{n \in [1+D]}$ as the master secret key MSK in the master secret key storage unit.

The query issuing device 300 or intermediate PKG sends a user secret key generation request to another intermediate PKG at a level higher than its own level as explained below, for example.

First, the query issuing device 300 or intermediate PKG issues a combination of L number of integers $(I_1, \ldots, I_L) \in Z_p^L$, which is its own ID, as a user secret key generation request. Then, the query issuing device 300 or intermediate PKG sends the user secret key generation request to the root PKG or another intermediate PKG at a higher level.

The root PKG receives a user secret key generation request from the query issuing device 300 or intermediate PKG, generates a user secret key, and sends the user secret key to the query issuing device 300 or intermediate PKG as explained below, for example.

First, the root PKG receives a combination of L number of integers $(I_1, \ldots, I_L)$, which is an ID, as a user secret key generation request from the query issuing device 300 or intermediate PKG at the (L+1)-th level. Then, the root PKG uniformly randomly selects $(\rho_n, (\rho_{n,m})_{m \in [1+D]})_{n \in [1+D]}$ respectively from the finite field $Z_p$. Then, the root PKG calculates:

[Formula 52]

$$k_0 = w' \prod_{n=0}^{1+D} \left( y'_{n,0} \cdot \prod_{l=1}^{L} y'{}^{I_l}_{n,l_l} \right)^{\rho_n} \quad , \quad \left( k_{n,(a)} = a'{}^{-\rho_n}_n \quad , \quad k_{n,(b)} = b'{}^{-\rho_n}_n \right)_{n \in [1+D]}$$

and designates $d_{ID}{}^{test} = (k_0, (k_{n,(a)}, k_{n,(b)n \in [1+D]}$. Then, the root PKG calculates:

[Formula 53]

$$\left( \begin{array}{c} f_{m,0} = \prod_{n=0}^{1+D} \left( y'_{n,0} \cdot \prod_{l=1}^{L} y_{n,l}{}^{I_l} \right)^{\rho_{n,m}} \\ \left( f_{m,n,(a)} = a'_n{}^{-\rho_{n,m}} \ , \ f_{m,n,(b)} = b'_n{}^{-\rho_{n,m}} \right)_{n \in [1+D]} \end{array} \right)_{m \in [1+D]}$$

and designates $d_{ID}{}^{rerand} = (f_{m,0}, (f_{m,n,(a)}, f_{m,n,(b)})_{n \in [1+D]})_{m \in [1+D]}$. Then, the root PKG calculates:

[Formula 54]

$$\left( h_l = \prod_{n=0}^{1+D} (y'_{n,l})^{\rho_n} \ , \ \left( h_{m,l} = \prod_{n=0}^{1+D} y'_{n,l}{}^{\rho_{n,m}} \right)_{m \in [1+D]} \right)_{l \in [1+L,D]}$$

and designates $d_{ID}{}^{deleg} = (h_1, (h_{m,1})_{m \in [1+D]})_{1 \in [1+L,D]}$. Lastly, the root PKG sends $d_{ID} = (d_{ID}{}^{test}, d_{ID}{}^{rerand}, d_{ID}{}^{deleg})$ to the query issuing device 300 or intermediate PKG as the user secret key corresponding to the ID.

The intermediate PKG receives a user secret key generation request from the query issuing device 300 or another intermediate PKG, generates a user secret key, and sends the user secret key to the query issuing device 300 or intermediate PKG as explained below, for example.

The ID of the intermediate PKG at the L-th level is a combination of (L-1) number of integers $(I_1, ..., I_{L-1})$. The user secret key of this intermediate PKG itself is $d_{ID|L-1} = (d_{ID|L-1}{}^{test}, d_{ID|L-1}{}^{rerand}, d_{ID|L-1}{}^{deleg})$, Where $d_{ID|L-1}{}^{test} = (k_0, (k_{n,(a)}, k_{n,(b)})_{n \in [1+D]})$, $d_{ID|L-1}{}^{rerand} = (f_{m,0}, (f_{m,n,(a)}, f_{m,n,(b)})_{n \in [1+D]})_{m \in [1+D]}$, and $d_{ID|L-1}{}^{deleg} = (h_1, (h_{m,1})_{m \in [1+D]})_{1 \in [L,D]}$.

First, the intermediate PKG at the L-th level receives a combination of L number of integers $(I_1, ... , I_L)$, which is an ID, as a user secret key generation request from the query issuing device 300 or intermediate PKG at the (L+1)-th level. Then, the intermediate PKG at the L-th level uniformly randomly selects $(\pi_m, (\pi_{m,m'})_{m' \in [1+D]})_{m \in [1+D]}$ respectively from $Z_p$. Then, the intermediate PKG at the L-th level calculates:

[Formula 55]

$$k'_0 = k_0 \prod_{m=0}^{1+D} (f_{m,0}{}^{\pi_m}) \cdot \left( h_L \prod_{m=0}^{1+D} h_{m,L}{}^{\pi_m} \right)^{I_L}$$

$$\left( k'_{n,(a)} = k_{n,(a)} \prod_{m=0}^{1+D} f_{m,n,(a)}{}^{\pi_m} \ , \ k'_{n,(b)} = k_{n,(b)} \prod_{m=0}^{1+D} f_{m,n,(b)}{}^{\pi_m} \right)_{n \in [1+D]}$$

and designates $d_{ID}{}^{test} = (ko, (k_{n,(a)}, k_{n,(b)})_{n \in [1+D]}$. Then, the intermediate PKG at the L-th level calculates:

[Formula 56]

$$
\left(
\begin{array}{c}
f'_{m',0} = \left(\displaystyle\prod_{m=0}^{1+D} f_{m,0}{}^{\pi_{m,m'}}\right) \cdot \left(\displaystyle\prod_{m=0}^{1+D} h_{m,L}{}^{\pi_{m,m'}}\right)^{I_L} \\[3em]
\left(f'_{m',n,(a)} = \displaystyle\prod_{m=0}^{1+D} f_{m,n,(a)}{}^{\pi_{m,m'}} \quad , \quad f'_{m',n,(b)} = \displaystyle\prod_{m=0}^{1+D} f_{m,n,(b)}{}^{\pi_{m,m'}}\right)_{n\in[1+D]}
\end{array}
\right)_{m'\in[1+D]}
$$

and designates $d_{ID}{}^{rerand} = (f_{m,0}, (f_{m,n,(a)}, f_{m,n,(b)})_{n\in[1+D]})_{m\in[1+D]}$. Then, the intermediate PKG at the L-th level calculates:

[Formula 57]

$$
\left(h'_l = h_l \prod_{m=0}^{1+D} (h_{m,l})^{\pi_m} \quad , \quad \left(h'_{m',l} = \prod_{m=0}^{1+D} h_{m,l}{}^{\pi_{m,m'}}\right)_{m'\in[1+D]}\right)_{l\in[1+L,D]}
$$

and designates $d_{ID}{}^{deleg} = (h_1, (h_{m,1})_{m\in[1+D]})_{1\in[1+L,D]}$. Lastly, the intermediate PKG at the L-th level sends $d_{ID} = (d_{ID}{}^{test}, d_{ID}{}^{rerand}, d_{ID}{}^{deleg})$ to the query issuing device 300 or intermediate PKG as the user secret key corresponding to the ID.

The encryption device 400 encrypts a keyword W, generates a ciphertext C, and sends the ciphertext C to the data server as explained below, for example.

The encryption device 400 generates the ciphertext C for the query issuing device 300 at the (L+1)-th level. The query issuing device 300 for which the ciphertext C is generated is specified by a combination of L number of integers and/or * (asterisks) (for example, $(l_1, *, l_3, ..., l_L)$), where * denotes any user at that level. For example, a given company has levels of "--- division", "--- section", and "-subsection". Each subsection includes a plurality of users. The ID of each user is a combination of four integers which are an integer $l_1$ representing a division, an integer $l_2$ representing a section, an integer $l_3$ representing a subsection, and an integer $l_4$ representing an individual. To encrypt W such that this keyword can be searched by all users belonging to a general affairs division, the ID is (general affairs division, *, *, *). On the other hand, to encrypt W such that this keyword can be searched by users belonging to a cashier subsection of an accounting section of the general affairs division , the ID is (general affairs division, accounting section, cashier subsection, *).

Here, a symbol "A(ID)" is defmed as A(ID) = $\{i\in[1,L]|l_i=*\}$. A symbol "A'(ID)" is defined as A'(ID) = $\{i\in[1,L]|l_i\neq*\}$. A(ID) represents a set (set A) of numbers of fields where $l_i$ is * out of fields 1 to L. On the other hand, A'(ID) represents a set (set A') of numbers of fields where $l_i$ is not * but a particular specified value out of fields 1 to L.

First, the encryption device 400 uniformly randomly selects r and $(r_n)_{n\in[1+D]}$ respectively from the finite field $Z_p$. The encryption device 400 uniformly randomly selects R from the multiplicative group G3. Then, the encryption device 400 calculates E = $R\Omega^{(-r)}$. Then, the encryption device 400 calculates $c_0 = g_1{}^r$. Then, the encryption device 400 calculates:

[Formula 58]

$$
\left(
\begin{array}{l}
c_{n,(a)} = \left( b_{n,0} \cdot \prod_{l \in A'(ID)} b_{n,l}{}^{I_l} \cdot b_{n,L+1}{}^{W} \right)^{r_n} \\[2mm]
c_{n,(b)} = \left( a_{n,0} \cdot \prod_{l \in A'(ID)} a_{n,l}{}^{I_l} \cdot a_{n,L+1}{}^{W} \right)^{r-r_n} \\[2mm]
\left( c'_{n,l,(a)} = b_{n,l}{}^{r_n} \;,\; c'_{n,l,(b)} = a_{n,l}{}^{r-r_n} \right)_{l \in A(ID)}
\end{array}
\right)_{n \in [1+D]}
$$

Lastly, the encryption device 400 sends C = (A(ID), R, E, $c_0$, $(c_{n,(a)}, c_{n,(b)}, (c'_{n,1}, (a), c'_{n,1}, (b))_{1 \in A(ID)})_{n \in [1+D]})$ to the data server (search device 500) as the ciphertext.

The query issuing device 300 issues a query for the keyword W as explained below, for example.

The query issuing device 300 is at the (L+1)-th level and its user ID is a combination of L number of integers ($I_1$, ..., $I_L$). First, the query issuing device 300 uniformly randomly selects $(\pi_m)_{m \in [1+D]}$ respectively from the finite field Zp. Then, the query issuing device 300 calculates:

[Formula 59]

$$
k'_0 = k_0 \prod_{m=0}^{1+D} (f_{m,0}{}^{\pi_m}) \cdot \left( h_L \prod_{m=0}^{1+D} h_{m,L}{}^{\pi_m} \right)^{W}
$$

Then, the query issuing device 300 calculates:

[Formula 60]

$$
\left( k'_{n,(a)} = k_{n,(a)} \prod_{m=0}^{1+D} (f_{m,n,(a)})^{\pi_m} \;,\; k'_{n,(b)} = k_{n,(b)} \prod_{m=0}^{1+D} (f_{m,n,(b)})^{\pi_m} \right)_{n \in [1+D]}
$$

Lastly, the query issuing device 300 sends T = $((I_i)_{i \in [1,L]}, k'_0, (k'_{n,(a)}, k'_{n,(b)})_{n \in [1+D]})$ to the data server (search device 500) as the query.

The data server (search device 500) performs secure searching by using the ciphertext C = (A(ID), R, E, $c_0$, $(C_{n,(a)}, c_{n,(b)}, (c_{n,1}, (a), C_{n,1}, (b))_{1 \in A(ID)n[1+D]})$ and the query T=$((I_i)_{i \in [1,L]}, k'_0, (k'_{n,(a)}, k'_{n,(b)n \in [1+D]})$ as explained below, for example.

First, the search unit 550 of the data server calculates the following for every i of i ∈ A(ID).

[Formula 61]

$$
c_{n,(a)} \leftarrow c_{n,(a)} \cdot c'_{n,i,(a)}{}^{I_i} \qquad c_{n,(b)} \leftarrow c_{n,(b)} \cdot c'_{n,i,(b)}{}^{I_i}
$$

Then, the search unit 550 calculates:

[Formula 62]

$$R' = E \cdot e(c_0, k_0') \cdot \prod_{n=0}^{1+D} \left( e(c_{n,(a)}, k_{n,(a)}') \cdot e(c_{n,(b)}, k_{n,(b)}') \right)$$

Then, the search unit 550 determines whether R=R'. If R=R', the search unit 550 determines that a hit is found for the keyword. If not R=R', the search unit 550 determines that no hit is found for the keyword.

By performing encryption, query generation, and secure searching as described above, a hit is found for a search only if the ID of the query issuing device 300 is included in the group authorized to perform keyword searching of the ciphertext and if the keyword in the query matches the keyword in the ciphertext.

According to the secure search system 800, a public key, i.e., a public parameter needs to be issued only by the root PKG (public parameter generation device 100), and there is no need for each user within a group to individually issue a public key. Thus, in a system setup, the need to set up each user can be eliminated.

There is also no need to issue a public parameter for each group. Thus, in a system setup, the need to set up each intermediate PKG can be eliminated likewise.

In encryption, a public key is not needed for each searcher, so that encryption work can be reduced. Further, by specifying * (asterisk) in encryption, the group authorized to perform keyword searching can be changed flexibly.

There is also no need to generate a different ciphertext for each searcher. Thus, the size of a ciphertext is not proportional to the number of searchers.

Even when a searcher is added in the group after data has been encrypted, the public parameter for the group remains unchanged, thereby eliminating the need to re-encrypt the data.

Second Embodiment

A second embodiment will be described with reference to Figs. 22 to 26.

Common parts as in the first embodiment will be referenced by the same numerals, and description thereof will be omitted.

Fig. 22 is a system configuration diagram showing an example of an overall configuration of the secure search system 800 in this embodiment.

The query issuing devices 300 of the query issuing device group 830 all belong to the same level instead of being divided into a plurality of levels. The user ID of each query issuing device 300 is not divided into segments and is made of one integer $I_1$. In the configuration described in the first embodiment, this can be regarded as a special instance where there is only one level of the query issuing devices 300.

Thus, the integer L is 1 for all user IDs. The integer D is 2.

The public parameter generation device 100 is configured as described in the first embodiment. Thus, referring to Fig. 6, only differences from the first embodiment will be described.

The random number $\alpha$ selection unit 122, using the CPU 911, uniformly randomly selects four integers $\alpha_n$ out of integers from 1 to less than p, where n is an integer from 0 to 3.

The random number $\beta$ selection unit 123, using the CPU 911, uniformly randomly selects four integers $\beta_n$ out of integers from 1 to less than p, where n is an integer from 0 to 3.

The random number $\theta$ selection unit 124, using the CPU 911, uniformly randomly selects twelve integers $\theta_{n,1}$ out of integers from 1 to less than p, where n is an integer from 0 to 3, and 1 (alphabet 1) is an integer from 0 to 2.

The public element a computation unit 132, using the CPU 911, computes twelve elements $a_{n,1}$ which are elements of the multiplicative group G1, where n is an integer from 0 to 3 and 1 (alphabet 1) is an integer from 0 to 2.

The public element b computation unit 133, using the CPU 911, computes twelve elements $b_{n,1}$ which are elements of the multiplicative group G1, where n is an integer from 0 to 3 and 1 (alphabet 1) is an integer from 0 to 2.

The secret element a computation unit 142, using the CPU 911, computes four element $a_n'$ which are elements of the multiplicative group G2, where n is an integer from 0 to 3.

The secret element b computation unit 143, using the CPU 911, computes four elements $b_n'$ which are elements of the multiplicative group G2, where n is an integer from 0 to 3.

The secret element y computation unit 144, using the CPU 911, computes twelve elements $y_{n,1}'$ which are elements of the multiplicative group G2, where n is an integer from 0 to 3 and 1 (alphabet 1) is an integer from 0 to 2.

The user secret key generation device 200 is configured as described in the first embodiment. Thus, referring to Fig. 8, only differences from the first embodiment will be described.

The secret element a storage unit 213, using the magnetic disk device 920, stores data representing four elements $a_n'$ out of the master secret key. The elements $a_n'$ are elements of the multiplicative group G2, where n is an integer from 0 to 3.

The secret element b storage unit 214, using the magnetic disk device 920, stores data representing four elements $b'_n$ out of the master secret key. The elements $b'_n$ are elements of the multiplicative group G2, where n is an integer from 0 to 3.

The secret element y storage unit 215, using the magnetic disk device 920, stores data representing twelve elements $y'_{n,1}$ out of the master secret key. The elements $y'_{n,1}$ are elements of the multiplicative group G2, where n is an integer from 0 to 3 and 1 (alphabet 1) is an integer from 0 to 2.

The identifier storage unit 222, using the RAM 914 and as a user ID, stores data representing an integer $I_1$.

The random number $\rho$ selection unit 231, using the CPU 911, uniformly randomly selects four integers $\rho_n$ out of integers from 0 to less than p, where n is an integer from 0 to 3.

The secondary random number $\rho$ selection unit 232, using the CPU 911, uniformly randomly selects sixteen integers $\rho_{n,m}$ out of integers from 0 to less than p, where n is an integer from 0 to 3 and m is an integer from 0 to 3.

The total product element Y computation unit 233, using the CPU 911, computes four elements $\Pi_{Y,n}$ which are elements of the multiplicative group G2, where n is an integer from 0 to 3.

The search element a computation unit 242, using the CPU 911, computes four elements $k_{n,(a)}$ which are elements of the multiplicative group G2, where n is an integer from 0 to 3.

The search element b computation unit 243, using the CPU 911, computes four elements $k_{n,(b)}$ which are elements of the multiplicative group G2, where n is an integer from 0 to 3.

The derangement element computation unit 251, using the CPU 911, computes four elements $f_{m,0}$ which are elements of the multiplicative group G2, where m is an integer from 0 to 3.

The derangement element a computation unit 252, using the CPU 911, computes sixteen elements $f_{m,n,(a)}$ which are elements of the multiplicative group G2, where m is an integer from 0 to 3 and n is an integer from 0 to 3.

The derangement element b computation unit 253, using the CPU 911, computes sixteen elements $f_{m,n,(b)}$ which are elements of the multiplicative group G2, where m is an integer from 0 to 3 and n is an integer from 0 to 3.

The delegation element computation unit 261, using the CPU 911, computes an element $h_2$ which is an element of the multiplicative group G2.

The secondary delegation element computation unit 262, using the CPU 911, computes four elements $h_{m,2}$ which are elements of the multiplicative group G2, where m is an integer from 0 to 3.

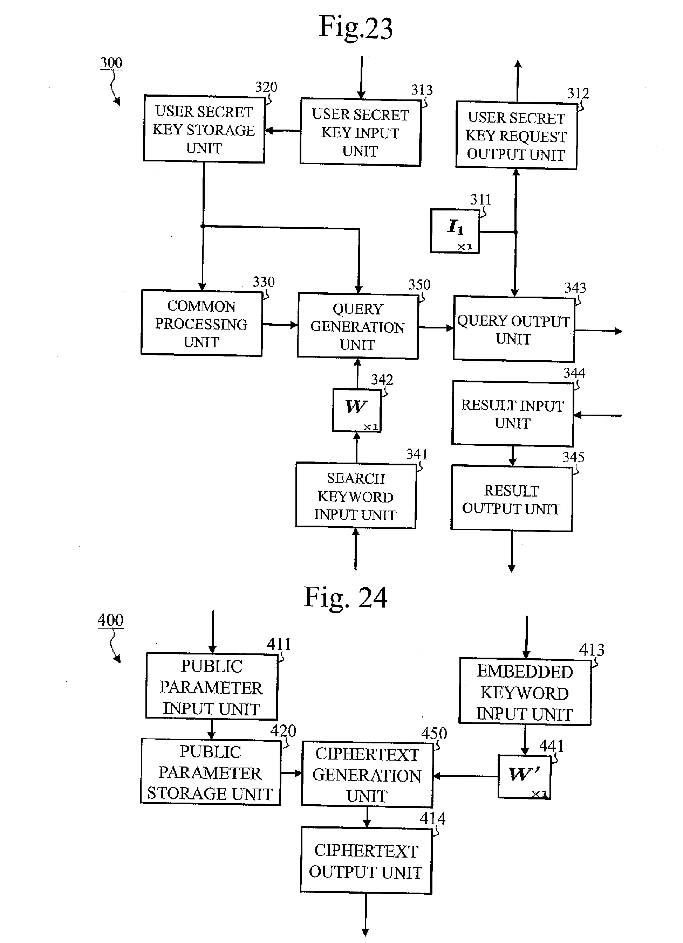

Fig. 23 is a block configuration diagram showing an example of a configuration of functional blocks of the query issuing device 300 in this embodiment.

Unlike the first embodiment, the query issuing device 300 is not adapted to generate a user secret key of a child query issuing device. The query issuing device 300 does not have the child user identifier input unit 361, the child user identifier storage unit 362, the child user secret key output unit 363, and the child user secret key generation unit 370 of the first embodiment.

The user identifier storage unit 311, using the magnetic disk device 920 and as a user ID, stores an integer $I_1$.

Detailed block configurations of the user secret key storage unit 320, the common processing unit 330, and the query generation unit 350 are the same as those described in the first embodiment. Thus, referring to Fig. 11, only differences from the first embodiment will be described.

The search element a storage unit 322, using the magnetic disk device 920, stores data representing four elements $k_{n,(a)}$ out of the user secret key. The elements $k_{n,(a)}$ are elements of the multiplicative group G2, where n is an integer from 0 to 3.

The search element b storage unit 323, using the magnetic disk device 920, stores data representing four elements $k_{n,(b)}$ out of the user secret key. The elements $k_{n,(b)}$ are elements of the multiplicative group G2, where n is an integer from 0 to 3.

The derangement element storage unit 324, using the magnetic disk device 920, stores data representing four elements $f_{m,0}$. The elements $f_{m,0}$ are elements of the multiplicative group G2, where m is an integer from 0 to 3.

The derangement element a storage unit 325, using the magnetic disk device 920, stores data representing sixteen elements $f_{m,n,(a)}$ out of the user secret key. The elements $f_{m,n,(a)}$ are elements of the multiplicative group G2, where m is an integer from 0 to 3 and n is an integer from 0 to 3.

The derangement element b storage unit 326, using the magnetic disk device 920, stores data representing sixteen elements $f_{m,n,(b)}$ out of the user secret key. The elements $f_{m,n,(b)}$ are elements of the multiplicative group G2, where m is an integer from 0 to 3 and n is an integer from 0 to 3.

The delegation element storage unit 327, using the magnetic disk device 920, stores data representing an element $h_2$ out of the user secret key. The element $h_2$ is an element of the multiplicative group G2.

The secondary delegation element storage unit 328, using the magnetic disk device 920, stores data representing four elements $h_{m,2}$ out of the user secret key. The elements $h_{m,2}$ are elements of the multiplicative group G2, where m is an integer from 0 to 3.

The random number $\pi$ selection unit 331, using the CPU 911, selects four integers $\pi_m$ out of integers from 0 to less than p, where m is an integer from 0 to 3.

The inquiry element a computation unit 334, using the CPU 911, computes four elements $k'_{n,(a)}$ which are elements of the multiplicative group G2.

The inquiry element b computation unit 335, using the CPU 911, computes four elements $k'_{n,(b)}$ which are elements of the multiplicative group G2.

Fig. 24 is a block configuration diagram showing an example of a configuration of functional blocks of the encryption device 400 in this embodiment.

Unlike the first embodiment, the encryption device 400 generates a ciphertext that can be searched by every query issuing device 300 having a user secret key, instead of limiting the query issuing devices 300 to be given an authorization to search. The encryption device 400 does not have the authorization range input unit 412 and the authorization range storage unit 430 of the first embodiment.

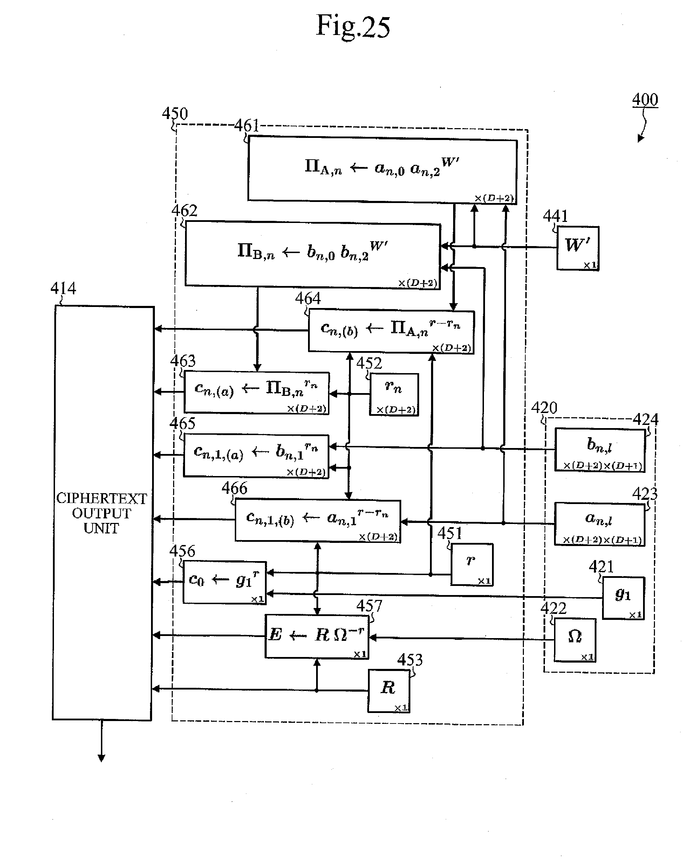

Fig. 25 is a detailed block diagram showing an example of a detailed configuration of functional blocks of the public parameter storage unit 420 and the ciphertext generation unit 450 of the encryption device 400 in this embodiment.

The public element a storage unit 423, using the magnetic disk device 920, stores data representing twelve elements $a_{n,1}$ out of the public parameter. The elements $a_{n,1}$ are elements of the multiplicative group G1, where n is an integer from 0 to 3 and 1 is an integer from 0 to 2.

The public element b storage unit 424, using the magnetic disk device 920, stores data representing twelve elements $b_{n,1}$ out of the public parameter. The elements $b_{n,1}$ are elements of the multiplicative group G1, where n is an integer from 0 to 3 and 1 is an integer from 0 to 2.

The secondary random number r selection unit 452, using the CPU 911, uniformly randomly selects four integers $r_n$ out of integers from 0 to less than p.

The total product element A computation unit 461, using the CPU 911, inputs data representing the twelve elements $a_{n,1}$ stored by the public element a storage unit 423 and data representing the integer W' stored by the embedded keyword storage unit 441.

Based on four elements $a_{n,2}$ having 1 (alphabet 1) equal to 2 out of the twelve elements $a_{n,1}$ and the integer W', the total product element A computation unit 461, using the CPU 911, calculates each of the four elements $a_{n,2}$ raised to the power of W'. The element "$a_{n,1}{}^{W'}$" computed by the total product element A computation unit 461 is an element of the multiplicative group G1. The total product element A computation unit 461 computes four elements "$a_{n,2}{}^{W'}$", where n is an integer from 0 to 3.

Based on four elements $a_{n,0}$ having 1 (alphabet 1) equal to 0 out of the twelve elements $a_{n,1}$ and the computed four elements "$a_{n,2}{}^{W'}$", the total product element A computation unit 461, using the CPU 911 and for each element $a_{n,0}$, calculates a product "$a_{n,0} \cdot a_{n,2}{}^{W'}$" of the element $a_{n,0}$ and the element "$a_{n,2}{}^{W'}$" having the same n as the element $a_{n,0}$, and obtains an element $\Pi_{A,n}$. The element $\Pi_{A,n}$ is an element of the multiplicative group G1. The total product element A computation unit 461 computes four elements $\Pi_{A,n}$, where n is an integer from 0 to 3.

The total product element B computation unit 462, using the CPU 911, inputs data representing the twelve elements $b_{n,1}$ stored by the public element b storage unit 424 and data representing the integer W' stored by the embedded keyword storage unit 441.

Based on four elements $b_{n,2}$ having 1 (alphabet 1) equal to 2 out of the twelve elements $b_{n,1}$ and the integer W', the total product element B computation unit 462, using the CPU 911, calculates each of the four elements $b_{n,2}$ raised to the power of W'. The element "$b_{n,1}{}^{W'}$" computed by the total product element B computation unit 462 is an element of the multiplicative group G1. The total product element B computation unit 462 computes four elements "$b_{n,2}{}^{W'}$", where n is an integer from 0 to 3.

Based on four elements $b_{n,0}$ having 1 (alphabet 1) equal to 0 out of the twelve elements $b_{n,1}$ and the computed four elements "$b_{n,2}{}^{W'}$", the total product element B computation unit 462, using the CPU 911 and for each element $b_{n,0}$, calculates a product "$b_{n,0} \cdot b_{n,2}{}^{W'}$" of the element $b_{n,0}$ and the element "$b_{n,2}{}^{W'}$" having the same n as the element $b_{n,0}$, and obtains an element $\Pi_{B,n}$. The element $\Pi_{B,n}$ is an element of the multiplicative group G1. The total product element B computation unit 462 computes four elements $\Pi_{B,n}$, where n is an integer from 0 to 3.

The cipher element a computation unit 463, using the CPU 911, computes four elements $c_{n,(a)}$, where n is an integer from 0 to 3.

The cipher element b computation unit 464, using the CPU 911, computes four elements $c_{n,(b)}$, where n is an integer from 0 to 3.

The cipher partial element a computation unit 465, using the CPU 911, inputs data representing the twelve elements $b_{n,1}$ stored by the public element b storage unit 424 and data representing the four integers $r_n$ stored by the secondary random number r selection unit 452.

Based on four elements $b_{n,1}$ having 1 (alphabet 1) equal to one out of the twelve elements $b_{n,1}$ and the four integers $r_n$, the cipher partial element a computation unit 465, using the CPU 911 and for each integer $r_n$, calculates the element $b_{n,1}$ raised to the power of $r_n$, where the element $b_{n,1}$ has the same n as the integer $r_n$, and obtains an element $c_{n,1,(a)}$. The element "$c_{n,1,(a)}$" is an element of the multiplicative group G1. The cipher partial element a computation unit 465 computes four elements $c_{n,1,(a)}$, where n is an integer from 0 to 3.

The cipher partial element b computation unit 466, using the CPU 911, inputs data representing the twelve elements $a_{n,1}$ stored by the public element a storage unit 423, data representing the integer r stored by the random number r selection unit 451, and data representing the four integers $r_n$ stored by the secondary random number r selection unit 452.

Based on the integer r and the four integers $r_n$, the cipher partial element b computation unit 466, using the CPU 911 and for each of the four integers $r_n$, calculates a difference "$r-r_n$" obtained by subtracting the integer $r_n$ from the integer r. The cipher partial element b computation unit 466 computes four differences "$r-r_n$".

Based on four elements $a_{n,1}$ having 1 (alphabet 1) equal to one out of the twelve elements $a_{n,1}$ and the computed four differences "$r-r_n$", the cipher partial element b computation unit 466, using the CPU 911 and for each integer $r_n$, calculates the element $a_{n,1}$ raised to the power of "$r-r_n$", where the element $a_{n,1}$ has the same n as the integer $r_n$, and obtains an element $c_{n,1,(b)}$. The element "$c_{n,1,(b)}$" is an element of the multiplicative group G1. The cipher partial element b computation unit 466 computes four elements $c_{n,1,(b)}$, where n is an integer from 0 to 3.

The ciphertext output unit 414, using the CPU 911, inputs data representing the element R stored by the random element selection unit 453, data representing the element E stored by the verification element computation unit 457, data representing the element $c_0$ stored by the cipher element computation unit 456, data representing the four elements $c_{n,(a)}$ stored by the cipher element a computation unit 463, data representing the four elements $c_{n,(b)}$ stored by the cipher element b computation unit 464, data representing the four elements $c_{n,1,(a)}$ stored by the cipher partial element a computation unit 465, and data representing the four elements $c_{n,1,(b)}$ stored by the cipher partial element b computation unit 466.

The ciphertext output unit 414, using the CPU 911 and as the ciphertext, outputs data including data representing the element R, the element E, the element $c_0$, the four elements $c_{n,(a)}$, the four elements $c_{n,(b)}$, the four elements $c_{n,1,(a)}$, and the four elements $c_{n,1,(b)}$.

The search device 500 is configured as described in the first embodiment.

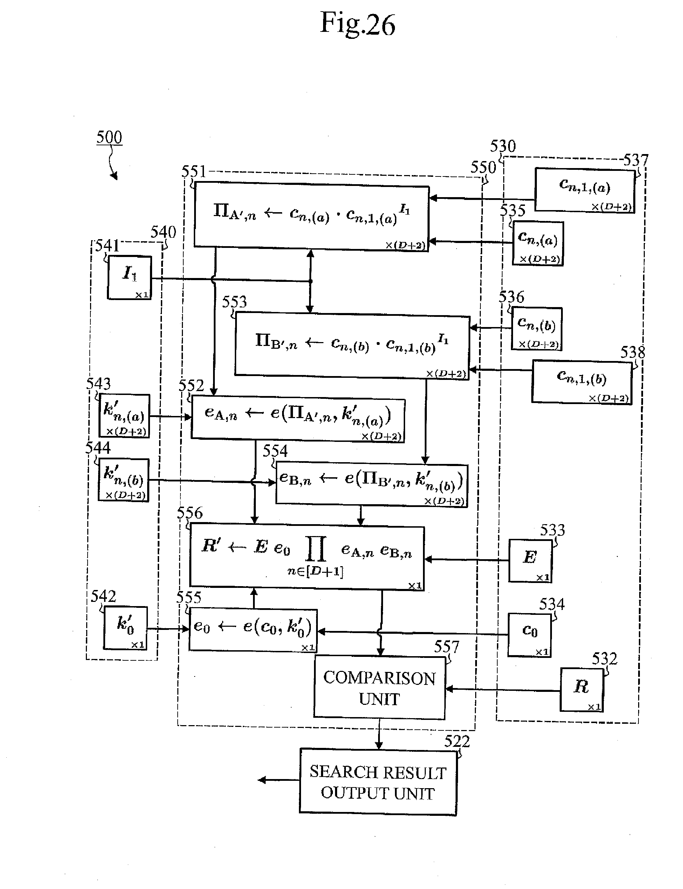

Fig. 26 is a detailed block diagram showing an example of a detailed configuration of functional blocks of the public parameter storage unit 420 and the ciphertext generation unit 450 of the search device 500 in this embodiment.

Unlike the first embodiment, the ciphertext storage unit 530 does not have the segment count storage unit 531. The cipher element a storage unit 535, using the magnetic disk device 920 and for each ciphertext, stores data representing four elements $c_{n,(a)}$ which are elements of the multiplicative group G1.

The cipher element b storage unit 536, using the magnetic disk device 920 and for each ciphertext, stores four elements $c_{n,(b)}$ which are elements of the multiplicative group G1.

The cipher partial element a storage unit 537, using the magnetic disk device 920 and for each ciphertext, stores data representing four elements $c_{n,1,(a)}$ which are elements of the multiplicative group G1.

The cipher partial element b storage unit 538, using the magnetic disk device 920 and for each ciphertext, stores data representing four elements $c_{n,1,(b)}$ which are elements of the multiplicative group G1.

The inquiry identifier storage unit 541, using the RAM 914, stores data representing an integer $l_1$ out of the query. The inquiry element a storage unit 543, using the RAM 914, stores data representing four elements $k'_{n,(a)}$ out of the query, where n is an integer from 0 to 3.

The inquiry element b storage unit 544, using the RAM 914, stores data representing four elements $k'_{n,(b)}$ out of the query, where n is an integer from 0 to 3.

The cipher total product element A computation unit 551, using the CPU 911, stores the data representing the four elements $c_{n,(a)}$ stored by the cipher element a storage unit 535, the data representing the four elements $c_{n,1,(a)}$ stored by the cipher partial element a storage unit 537, and the data representing the integer $l_1$ stored by the inquiry identifier storage unit 541.

Based on the four elements $c_{n,1,(a)}$ and the integer $l_1$, the cipher total product element A computation unit 551, using the CPU 911, calculates each of the four elements $c_{n,1,(a)}$ raised to the power of $l_1$. The element "$c_{n,1,(a)}{}^{\wedge}l_1$" computed by the cipher total product element A computation unit 551 is an element of the multiplicative group G1. The cipher total product element A computation unit 551 computes four elements "$c_{n,1,(a)}{}^{\wedge}l_1$", where n is an integer from 0 to 3.

Based on the four elements $c_{n,(a)}$ and the computed four elements "$c_{n,1,(a)}{}^{\wedge}l_1$", the cipher total product element A computation unit 551, using the CPU 911 and for each element $c_{n,(a)}$, calculates a product of the element $c_{n,(a)}$ and the element "$c_{n,1,(a)}{}^{\wedge}l_1$" having the same n as the element $c_{n,(a)}$, and obtains an element $\Pi_{A',n}$. The element $\Pi_{A',n}$ is an element of the multiplicative group G1. The cipher total product element A computation unit 551 computes four elements $\Pi_{A',n}$, where n is an integer from 0 to 3.

The cipher total product element B computation unit 553, using the CPU 911, inputs the data representing the four elements $c_{n,(b)}$ stored by the cipher element b storage unit 536, the data representing the four elements $c_{n,1,(b)}$ stored by the cipher partial element b storage unit 538, and the data representing the integer $l_1$ stored by the inquiry identifier storage unit 541.

Based on the four elements $c_{n,1,(b)}$ and the integer $l_1$, the cipher total product element B computation unit 553, using the CPU 911, calculates each of the four elements $c_{n,1,(b)}$ raised to the power of $l_1$. The element "$c_{n,1,(b)}{}^{\wedge}l_1$" computed by

the cipher total product element B computation unit 553 is an element of the multiplicative group G1. The cipher total product element B computation unit 553 computes four elements "$c_{n,1,(b)}{}^{\wedge}l_1$", where n is an integer from 0 to 3.

Based on the four elements $c_{n,(b)}$ and the computed four elements "$c_{n,1,(b)}{}^{\wedge}l_1$", the cipher total product element B computation unit 553, using the CPU 911 and for each element $c_{n,(b)}$, calculates a product of the element $c_{n,(b)}$ and the element "$c_{n,1(b)}{}^{\wedge}l_1$" having the same n as the element $c_{n,(b)}$, and obtains an element $\Pi_{B',n}$. The element $\Pi_{B',n}$ is an element of the multiplicative group G1. The cipher total product element B computation unit 553 computes four elements $\Pi_{B',n}$, where n is an integer from 0 to 3.

The pairing element A computation unit 552, using the CPU 911, computes four elements $e_{A,n}$ which are elements of the multiplicative group G3, where n is an integer from 0 to 3.

The pairing element B computation unit 554, using the CPU 911, computes four elements $e_{B,n}$ which are elements of the multiplicative group G3, where n is an integer from 0 to 3.

The search device 500 determines that a hit is found for the search only when the keyword being searched for matches the keyword embedded in the ciphertext. Users having an authorization to search are not limited. Thus, the search device 500 determines that a hit is found for the search when the keyword being searched for matches the keyword embedded in the ciphertext in a query generated by every query issuing device 300 having a user secret key generated by the user secret key generation device 200.

The secure search system 800 is resistant to deciphering attacks and provides security.

In the secure search system 800, there exists one group, to which belong a plurality of users. In the secure search system 800, the encryption device 400 performs public key encryption on data such that the data can be searched by a keyword, and registers the data in the server (search device 500). Each user (query issuing device 300) generates a trapdoor (query) for searching by using its own user secret key. The search device 500 performs secure searching by using ciphertexts and the trapdoor.

The secure search system 800 in this embodiment is suitable for small-scale organizations such as small or medium-sized enterprises or amateur circles. In a small or medium-sized enterprise, there exists a "group" of several to several hundred people. That is, in Company A, there exists a group which is "a group of employees of Company A". An amateur circle is also a "group" of approximately several tens of people.

The group public key generation device 810 (group PKG) performs key management within the group, such as issuing a public parameter for the group and issuing a user secret key for each query issuing device 300 owned by each user within the group. The query issuing devices 300 correspond to users 1 to N, where N is the number of users within the group. The query issuing device 300 issues a query for performing keyword searching of ciphertexts. The encryption device 400 encrypts keywords. The data server (search device 500) stores ciphertexts, accepts queries, and executes searching.

The data server may be configured to exist outside the organization of the group or to exist within the organization of the group. The group PKG may be configured to exist within the organization of the group or to exist outside the organization of the group. The encryption device 400 may be configured to exist outside the organization of the group or to exist within the organization of the group.

The encryption device 400 performs encryption by using a public key, thereby not using secret information. The data server performs searching based on ciphertexts and queries, thereby not using secret information. Thus, the data server and the encryption device 400 may belong to an organization completely unrelated to the group.

The group PKG has a public parameter/master secret key generation unit (public parameter generation device 100), a user secret key generation unit (user secret key generation device 200), and a master secret key storage unit (secret element w storage unit 212, secret element a storage unit 213, secret element b storage unit 214, secret element y storage unit 215). The public parameter/master secret key generation unit generates a public parameter and a master secret key for the group. The user secret key generation unit generates a user secret key individually for each user belonging to the group. The master secret key storage unit stores the master secret key generated by the public parameter/master secret key generation unit.

The query issuing device 300 has a user secret key generation request issuing unit (user secret key request output unit 312), the user secret key storage unit 320, and a query issuing unit (query generation unit 350). The user secret key generation request issuing unit issues to the group PKG a user secret key generation request. The user secret key storage unit 320 stores a user secret key issued by the group PKG. The query issuing unit issues to the data server a query for searching for a ciphertext including a given keyword.

The data server (search device 500) has the ciphertext storage unit 530, the query storage unit 540, and the search unit 550. The ciphertext storage unit 530 stores a ciphertext sent from the encryption device 400. The query storage unit 540 stores a query sent from the query issuing device 300. The search unit 550 searches for a ciphertext matching the content of a query out of ciphertexts stored in the ciphertext storage unit 530.

The encryption device 400 has the public parameter storage unit 420 and an encryption unit (ciphertext generation unit 450). The public parameter storage unit 420 stores a public parameter disclosed by the group PKG. The encryption unit encrypts a keyword by using the public parameter and generates a ciphertext.

The public parameter/master secret key generation unit of the group PKG generates a public parameter PK and a master secret key MSK as explained below, for example.

First, the public parameter/master secret key generation unit uniformly randomly selects a generator $g_1$ from the multiplicative group G1. The public parameter/master secret key generation unit uniformly randomly selects a generator $g_2$ from the multiplicative group G2. Then, the public parameter/master secret key generation unit uniformly randomly selects $\omega$ and $(\alpha_n, \beta_n)_{n \in [3]}$ respectively from $Z_p{}^*$. Then, the public parameter/master secret key generation unit uniformly randomly selects $(\theta_{n,1})_{(n,1) \in [3] \times [2]}$ respectively from $Z_p$. Then, in step S604, it calculates $\Omega = e(g_1, g_2)^\wedge\omega$ and $(a_{n,1}=g_1{}^\wedge(\alpha_n\cdot\theta_{n,1}), b_{n,1}=g_1{}^\wedge(\beta_n\cdot\theta_{n,1}))_{(n,1) \in [3] \times [2]}$. Then, the public parameter/master secret key generation unit calculates w' = $g_2{}^\wedge\omega$, $(a'_n=g_2{}^\wedge\alpha_n, b'_n=g_2{}^\wedge\beta_n, (y'_{n,1}=g_2{}^\wedge(\alpha_n\cdot\beta_n\cdot\theta_{n,1})_{1\in[D])n\in[3]}$. Then, the public parameter/master secret key generation unit discloses as the public parameter PK the groups G1, G2, and G3, the order p, the pairing e, and the calculated and $(a_{n,1}, b_{n,1})_{(n,1)\in[3]\times[2]}$. Lastly, the public parameter/master secret key generation unit stores the calculated w' and $(a'_n, b'_n, (y'_{n,1})_{1\in[D])n\in[3]}$ as the master secret key MSK in the master secret key storage unit.

The user secret key generation request issuing unit of the query issuing device 300 issues a user secret key generation request to the group PKG as explained below, for example.

A user name (user ID) is $I_1$. The user name is an element of the finite field $Z_p$. That is, the user name is a numerical value from 0 to p-1. In view of cipher security, the size of p should be approximately 160 bits. When the user name is represented by a character string of approximately 160 bits, the user name may be handled directly as a numerical value. For a longer character string, a cipher hash function such as SHA-1 may be used to convert the character string into a value of approximately 160 bits.

First, the user secret key generation request issuing unit issues $i_1 \in Z_p$, which is a user ID, as a user secret key generation request. Then, the user secret key generation request issuing unit sends the user secret key generation request to the group PKG.

The user secret key generation unit of the group PKG receives a user secret key generation request from the query issuing device 300, generates a user secret key, and sends the user secret key to the query issuing device 300 as explained below, for example.

First, the user secret key generation unit receives $I_1$, which is a user ID, from the query issuing device 300 as a user secret key generation request. Then, the user secret key generation unit uniformly randomly selects $(\rho_n, (\rho_{n,m})_{m\in[3]})_{n\in[3]}$ respectively from the finite field $Z_p$. Then, the user secret key generation unit calculates:

[Formula 63]

$$k_0 = w' \prod_{n=0}^{3} \left( y'_{n,0} \cdot y'_{n,1}{}^{I_1} \right)^{\rho_n}, \left( k_{n,(a)} = a'_n{}^{-\rho_n}, \quad k_{n,(b)} = b'_n{}^{-\rho_n} \right)_{n\in[3]}$$

and designates $d_{I1}{}^{test}$= (ko, $(k_{n,(a)}, k_{n,(b)})_n \in 3$). Then, the user secret key generation unit calculates:

[Formula 64]

$$\left( \begin{array}{c} f_{m,0} = \prod_{n=0}^{3} \left( y'_{n,0} \cdot y'_{n,1}{}^{I_1} \right)^{\rho_{n,m}} \\ \left( f_{m,n,(a)} = a'_n{}^{-\rho_{n,m}}, \quad f_{m,n,(b)} = b'_n{}^{-\rho_{n,m}} \right)_{n\in[3]} \end{array} \right)_{m\in[3]}$$

and designates $d_{I1}{}^{rerand}$ = ($f_{m,0}$, $(f_{m,n,(a)}, f_{m,n,(b)})_{n\in[3]})_{m\in[3]}$. Then, the user secret key generation unit calculates:

[Formula 65]

$$h_2 = \prod_{n=0}^{3} \left( y'_{n,2} \right)^{\rho_n} \quad , \quad \left( h_{m,2} = \prod_{n=0}^{3} y'_{n,2}{}^{\rho_{n,m}} \right)_{m \in [3]}$$

and designates $d_{l1}{}^{deleg} = (h_2, (h_{m,2})_{m \in [3]})$. Lastly, the user secret key generation unit sends $d_{l1} = (d_{l1}{}^{test}, d_{l1}{}^{rerand} d_{l1}{}^{deleg})$ to the query issuing device 300 as the user secret key corresponding to $l_1$.

The query issuing device 300, upon receiving the user secret key, stores it in the user secret key storage unit 320.

The user secret key must not be disclosed to any party other than the query issuing device 300 of the relevant user. For this reason, it is desirable to send and receive the user secret key by protecting a communication path between the query issuing device 300 and the group PKG by a communication path protection method such as SSL (Secure Socket Layer).

The encryption device 400 encrypts a keyword W and generates a ciphertext C as explained below, for example. The ciphertext generated by the encryption device 400 is a ciphertext for keyword searching. A ciphertext of the main part of data (for example, a ciphertext of the main part of a mail) is prepared separately. The main part of data may be encrypted by a conventional public key encryption method such as RSA encryption.

First, the encryption unit uniformly randomly selects r and $(r_n)_{n \in [3]}$ respectively from the finite field Zp. The encryption unit uniformly randomly selects R from the multiplicative group G3. Then, the encryption unit calculates E = RΩ^(-r). Then, the encryption unit calculates $c_0 = g_1$^r. Then, the encryption unit calculates:

[Formula 66]

$$\left( \begin{array}{cc} c_{n,(a)} = \left( b_{n,0} \cdot b_{n,2}{}^{W} \right)^{r_n} & , \quad c_{n,(b)} = \left( a_{n,0} \cdot a_{n,2}{}^{W} \right)^{r-r_n} \\ c_{n,1,(a)} = b_{n,1}{}^{r_n} & , \quad c_{n,1,(b)} = a_{n,1}{}^{r-r_n} \end{array} \right)_{n \in [3]}$$

Lastly, the encryption unit sends C = (R, E, $c_0$, $(c_{n,(a)}, c_{n,(b)}, c_{n,1,(a)}, c_{n,1,(b)})_{n \in [3]}$) to the data server as the ciphertext.

The query issuing device 300 generates a query for the keyword W as explained below, for example.

First, the query issuing unit uniformly randomly selects $(\pi_m)_{m \in [3]}$ respectively from the finite field $Z_p$. Then, the query issuing unit calculates:

[Formula 67]

$$k'_0 = \left( k_0 \prod_{m=0}^{3} (f_{m,0})^{\pi_m} \right) \left( h_2 \prod_{m=0}^{3} (h_{m,2})^{\pi_m} \right)^{W}$$

Then, the query issuing unit calculates:

[Formula 68]

$$\left( k'_{n,(a)} = k_{n,(a)} \prod_{m=0}^{3} \left( f_{m,n,(a)} \right)^{\pi_m} \quad, \quad k'_{n,(b)} = k_{n,(b)} \prod_{m=0}^{3} \left( f_{m,n,(b)} \right)^{\pi_m} \right)_{n\in[3]}$$

Lastly, the query issuing unit sends $T = (l_1, k'_0, (k'_{n,(a)}, k'_{n,(b)})_{n\in[3]})$ to the data server as the query.

The data server performs secure searching by using the ciphertext $C = (R, E, c_0, (c_{n,(a)}, c_{n,(b)}, c'_{n,(a)}, c'_{n,(b)n\in[3]})$ and the query $T = (l_1, k'_0, (k'_{n,(a)}, k'_{n,(b)})_{n\in[3]})$ as explained below, for example.

First, the search unit 550 calculates:

[Formula 69]

$$R' = E \cdot e(c_0, k'_0) \cdot \prod_{n=0}^{3} \left( e(c_{n,(a)} \cdot c_{n,1,(a)}, k'_{n,(a)}) \cdot e(c_{n,(b)} \cdot c_{n,1,(b)}, k'_{n,(b)}) \right)$$

Then, the search unit 550 determines whether R=R'. If R=R', the search unit 550 determines that a hit is found for the keyword. If not R=R', the search unit 550 determines that no hit is found for the keyword.

By performing encryption, query generation, and secure searching as described above, a hit is found for the search only if the keyword in the query matches the keyword in the ciphertext.

According to the secure search system 800, a public key, i.e., a public parameter, needs only to be issued by the group PKG and not individually by each user within the group. Thus, in a system setup, the need to set up each user separately can be eliminated.

The public parameter is common within the group, so that a public key is not required for each searcher. Thus, encryption work can be reduced.

There is no need to generate a different ciphertext for each searcher. Thus, the size of a ciphertext is not proportional to the number of searchers.

Even when a searcher is newly added to the group after data has been encrypted, the public parameter of the group remains unchanged, thereby providing the effect of eliminating the need to re-encrypt the data.

List of Reference Signs

100: public parameter generation device
111: first generator selection unit
112: second generator selection unit
121: random number ω selection unit
122: random number α selection unit
123: random number β selection unit
124: random number θ selection unit
131: public element Ω computation unit
132: public element a computation unit
133: public element b computation unit
141: secret element w computation unit
142: secret element a computation unit
143: secret element b computation unit
144: secret element y computation unit
151: public parameter output unit
152: master secret key output unit

200: user secret key generation device
211: master secret key input unit
212: secret element w storage unit
213: secret element a storage unit
214: secret element b storage unit
215: secret element y storage unit
221: user identifier input unit
222: identifier storage unit
223: user secret key output unit
231: random number p selection unit
232: secondary random number $\rho$ selection unit
233: total product element Y computation unit
241: search element computation unit
242: search element a computation unit
243: search element b computation unit
251: derangement element computation unit
252: derangement element a computation unit
253: derangement element b computation unit
261: delegation element computation unit
262: secondary delegation element computation unit
300: query issuing device
311: user identifier storage unit
312: user secret key request output unit
313: user secret key input unit
320: user secret key storage unit
321: search element storage unit
322: search element a storage unit
323: search element b storage unit
324: derangement element storage unit
325: derangement element a storage unit
326: derangement element b storage unit
327: delegation element storage unit
328: secondary delegation element storage unit
330: common processing unit
331: random number $\pi$ selection unit
332: total product element F computation unit
333: total product element H computation unit
334: inquiry element a computation unit
335: inquiry element b computation unit
341: search keyword input unit
342: search keyword storage unit
343: query output unit
344: result input unit
345: result output unit
350: query generation unit
351: inquiry element computation unit
361: child user identifier input unit
362: child user identifier storage unit
363: child user secret key output unit
370: child user secret key generation unit
371: secondary random number $\pi$ selection unit
372: child search element computation unit
373: child total product element F computation unit
374: child total product element H computation unit
375: child derangement element computation unit
376: child derangement element a computation unit
377: child derangement element b computation unit
378: child delegation element computation unit

379: child secondary delegation element computation unit
400: encryption device
411: public parameter input unit
412: authorization range input unit
413: embedded keyword input unit
414: ciphertext output unit
420: public parameter storage unit
421: first generator storage unit
422: public element $\Omega$ storage unit
423: public element a storage unit
424: public element b storage unit
430: authorization range storage unit
431: segment count storage unit
432: authorization identifier storage unit
441: embedded keyword storage unit
450: ciphertext generation unit
451: random number r selection unit
452: secondary random number r selection unit
453: random element selection unit
456: cipher element computation unit
457: verification element computation unit
461: total product element A computation unit
462: total product element B computation unit
463: cipher element a computation unit
464: cipher element b computation unit
465: cipher partial element a computation unit
466: cipher partial element b computation unit
500: search device
511: ciphertext input unit
521: query input unit
522: search result output unit
530: ciphertext storage unit
531: segment count storage unit
532: random element storage unit
533: verification element storage unit
534: cipher element storage unit
535: cipher element a storage unit
536: cipher element b storage unit
537: cipher partial element a storage unit
538: cipher partial element b storage unit
540: query storage unit
541: inquiry identifier storage unit
542: inquiry element storage unit
543: inquiry element a storage unit
544: inquiry element b storage unit
550: search unit
551: cipher total product element A computation unit
552: pairing element A computation unit
553: cipher total product element B computation unit
554: pairing element B computation unit
555: pairing element computation unit
556: comparison element computation unit
557: comparison unit
600: user ID
601 to 604: segments
610: authorization range
800: secure search system
810: group public key generation device

820: keyword storage device
830: query issuing device group
901: display device
902: keyboard
903: mouse
904: FDD
905: CDD
906: printer device
907: scanner device
910: system unit
911: CPU
912: bus
913: ROM
914: RAM
915: communication device
920: magnetic disk device
921: OS
922: window system
923: programs
924: files
931: telephone
932: facsimile machine
940: Internet
941: gateway
942: LAN

**Claims**

1. A secure search system that encrypts a keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the secure search system comprising:

a public parameter generation device; an encryption device; a user secret key generation device; a query issuing device; and a search device, wherein

the public parameter generation device has a processing device that processes data, a random number $\omega$ selection unit, a random number $\alpha$ selection unit, a random number $\beta$ selection unit, a random number $\theta$ selection unit, a public element $\Omega$ computation unit, a public element a computation unit, and a public element b computation unit, a secret element w computation unit, a secret element a computation unit, a secret element b computation unit, a secret element y computation unit, a public parameter output unit, and a master secret key output unit;

the random number $\omega$ selection unit, using the processing device, randomly selects an integer $\omega$ out of integers from 1 to less than p;

the random number $\alpha$ selection unit, using the processing device, randomly selects (D+2) number of integers $\alpha_n$ (n being an integer from 0 to D+1) out of integers from 1 to less than p;

the random number $\beta$ selection unit, using the processing device, randomly selects (D+2) number of integers $\beta_n$ out of integers from 1 to less than p;

the random number $\theta$ selection unit, using the processing device, randomly selects $(D+2)\times(D+1)$ number of integers $\theta_{n,1}$ (1 being an integer from 0 to D) out of integers from 1 to less than p;

the public element a computation unit, using the processing device and based on a generator $g_1$ of a multiplicative group G1 of an order of the prime number p, the (D+2) number of integers $\alpha_n$ selected by the random number $\alpha$ selection unit, and the $(D+2)\times(D+1)$ number of integers $\theta_{n,1}$ selected by the random number $\theta$ selection unit, calculates the generator $g_1$ raised to a power of $(\alpha_n \times \theta_{n,1})$ for each of $(D+2)\times(D+1)$ number of combinations (n,1) which are combinations of (D+2) number of integers n from 0 to (D+1) and (D+1) number of integers 1 from 0 to D, thereby computing $(D+2)\times(D+1)$ number of elements $a_{n,1}$ which are elements of the multiplicative group G1;

the public element b computation unit, using the processing device and based on the generator $g_1$ of the multiplicative group G1, the (D+2) number of integers $\beta_n$ selected by the random number $\beta$ selection unit, and

the $(D+2) \times (D+1)$ number of integers $\theta_{n,1}$ selected by the random number $\theta$ selection unit, calculates the generator $g_1$ raised to a power of $(\beta'' \times \theta_{n,1})$ for each of the $(D+2) \times (D+1)$ number of combinations $(n,1)$ which are combinations of the $(D+2)$ number of integers n from 0 to $(D+1)$ and the $(D+1)$ number of integers 1 from 0 to D, thereby computing $(D+2) \times (D+1)$ number of elements $b_{n,1}$ which are elements of the multiplicative group G1;

the secret element w computation unit, using the processing device and based on a generator $g_2$ of a multiplicative group G2 of an order of the prime number p and the integer $\omega$ selected by the random number $\omega$ selection unit, calculates the generator $g_2$ raised to a power of $\omega$, thereby computing an element w' which is an element of the multiplicative group G2;

the public element $\Omega$ computation unit, using the processing device and based on a generator $g_3$ of a multiplicative group G3 of an order p and the integer $\omega$ selected the random number $\omega$ selection unit, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3;

the secret element a computation unit, using the processing device and based on the generator $g_2$ of the multiplicative group G2 and the $(D+2)$ number of integers $\alpha_n$ selected by the random number $\alpha$ selection unit, calculates the generator $g_2$ raised to a power of $\alpha_n$ for each of the $(D+2)$ number of integers n from 0 to $(D+1)$, thereby computing $(D+2)$ number of elements $a'_n$ which are elements of the multiplicative group G2;

the secret element b computation unit, based on the generator $g_2$ of the multiplicative group G2 and the $(D+2)$ number of integers $\beta_n$ selected by the random number $\beta$ selection unit, calculates the generator $g_2$ raised to a power of $\beta_n$ for each of the $(D+2)$ number of integers n from 0 to $(D+1)$, thereby computing $(D+2)$ number of elements $b'_n$ which are elements of the multiplicative group G2;

the secret element y computation unit, using the processing device and based on the generator $g_2$ of the multiplicative group G2, the $(D+2)$ number of integers $\alpha_n$, selected by the random number $\alpha$ selection unit, the $(D+2)$ number of integers $\beta_n$ selected by the random number $\beta$ selection unit, and the $(D+2) \times (D+1)$ of integers $\theta_{n,1}$, selected by the random number $\theta$ selection unit, calculates the generator $g_2$ raised to a power of $(\alpha_n \times \beta_n \times \theta_{n,1})$ for each of the $(D+2) \times (D+1)$ number of combinations $(n,1)$ which are combinations of the $(D+2)$ number of integers n from 0 to $(D+1)$ and the $(D+2)$ number of integers 1 from 0 to D, thereby computing $(D+2) \times (D+1)$ number of elements $y'_{n,1}$ which are elements of the multiplicative group G2;

the public parameter output unit, using the processing device and as a public parameter in the secure search system, outputs the element $\Omega$ computed by the public element $\Omega$ computation unit, the $(D+2) \times (D+1)$ number of elements $a_{n,1}$ computed by the public element a computation unit, and the $(D+2) \times (D+1)$ number of elements $b_{n,1}$ computed by the public element b computation unit;

the master secret key output unit, using the processing device and as a master secret key in the secure search system, outputs the element w' computed by the secret element w computation unit, the $(D+2)$ number of elements $a'_n$ computed by the secret element a computation unit, the $(D+2)$ number of elements b'n computed by the secret element b computation unit, and the $(D+2) \times (D+1)$ number of elements $y'_{n,1}$ computed by the secret element y computation unit;

the encryption device has a storage device that stores data, a processing device that processes data, a public element $\Omega$ storage unit, a public element a storage unit, a public element b storage unit, an embedded keyword input unit, an authorization range input unit, a random number r selection unit, a secondary random number r selection unit, a random element selection unit, a verification element computation unit, a cipher element computation unit, a cipher element a computation unit, a cipher element b computation unit, a cipher partial element a computation unit, a cipher partial element b computation unit, and a ciphertext output unit;

the public element $\Omega$ storage unit, using the storage device, stores the element $\Omega$ output as the public parameter by the public parameter generation device;

the public element a storage unit, using the storage device, stores the $(D+2) \times (D+1)$ number of elements $a_{n,1}$ output as the public parameter by the public parameter generation device;

the public element b storage unit, using the storage device, stores the $(D+2) \times (D+1)$ number of elements $b_{n,1}$ output as the public parameter by the public parameter generation device;

the embedded keyword input unit, using the processing device and as the keyword to be encrypted, inputs an integer W' from 0 to less than p;

the authorization range input unit, using the processing device and as data specifying a range of query issuing devices having an authorization to search for the keyword, inputs an integer L' (L' being an arbitrary integer from 1 to less than D) and L" number of integers $I'_j$ (L" being an arbitrary integer from 0 to L', j being L" number of integers arbitrarily selected out of integers from 1 to L', and $I'_j$ being an integer from 0 to less than p);

the random number r selection unit, using the processing device, randomly selects an integer r out of integers from 0 to less than p;

the secondary random number r selection unit, using the processing device, randomly selects (D+2) number of integers $r_n$ out of integers from 0 to less than p;

the random element selection unit, using the processing device, randomly selects an element R out of elements of the multiplicative group G3;

the verification element computation unit, using the processing device and based on the element $\Omega$ stored by the public element $\Omega$ storage unit, the integer r selected by the random number r selection unit, and the element R selected by the random element selection unit, calculates a product of the element $\Omega$ raised to a power of (-r) and the element R, thereby computing an element E which is an element of the multiplicative group G3;

the cipher element computation unit, using the processing device and based on the generator $g_1$ of the multiplicative group G1 and the integer r selected by the random number r selection unit, calculates the generator $g_1$ raised to a power of r, thereby computing an element $c_0$ which is an element of the multiplicative group G1;

the cipher element a computation unit, using the processing device and based on the integer L' and the L" number of integers $I'_j$ input by the authorization range input unit, (D+2) number of elements $b_{n,0}$, (D+2)×L" number of elements $b_{n,1'}$, and (D+2) number of elements $b_{n,\Lambda'}$ (A' being an integer selected out of integers from more than L' to D) out of the (D+2)×(D+1) number of elements $b_{n,1}$ stored by the public element b storage unit, the integer W' input by the embedded keyword input unit, and the (D+2) number of integers $r_n$ selected by the secondary random number r selection unit, calculates the element $b_{n,j}$ raised to a power of $I_j$ for each of (D+2)×L" number of combinations (n,j) which are combinations of the (D+2) number of integers n from 0 to (D+1) and subscripts j of the L" number of integers $I'_j$, calculates the element $b_{n,\Lambda'}$ raised to a power of W' for each of the (D+2) number of integers n from 0 to (D+1), calculates a total product $\pi_{B,n}$ of the element $b_{n,0}$, the L" number of elements $b_{n,j}$ raised to the power of $I'_j$, and the element $b_{n,\Lambda'}$ raised to the power of W' for each of the (D+2) number of integers n from 0 to (D+1), and calculates the calculated total product $\pi_{B,n}$ raised to a power of $r_n$ for each of the (D+2) number of integers n from 0 to (D+1), thereby computing (D+2) number of elements $c_{n,(a)}$ which are elements of the multiplicative group G1;

the cipher element b computation unit, using the processing device and based on the integer L' and the L" number of integers $I'_j$ input by the authorization range input unit, (D+2) number of elements $a_{n,0}$, (D+2)×L" number of elements $a_{n,j'}$, and (D+2) number of elements $a_{n,\Lambda'}$ out of the (D+2)×(D+1) number of elements $a_{n,1}$ stored by the public element a storage unit, the integer W' input by the embedded keyword input unit, the integer r selected by the random number r selection unit, and the (D+2) number of integers $r_n$ selected by the secondary random number r selection unit, calculates the element $a_{n,j}$ raised to a power of $I_j$ for each of the (D+2)×L" number of combinations (n,j) which are combinations of the (D+2) number of integers n from 0 to (D+1) and the subscripts j of the L" number of integers $I'_j$, calculates the element $a_{n,\Lambda'}$ raised to a power of W' for each of the (D+2) number of integers n from 0 to (D+1), calculates a total product $\Pi_{A,n}$ of the element $a_{n,0}$, the L" number of elements $a_{n,j}$ raised to the power of $I'_j$, and the element $a_{n,\Lambda'}$ raised to the power of W' for each of the (D+2) number of integers n from 0 to (D+1), and calculates the calculated total product $\Pi_{A,n}$ raised to a power of (r-$r_n$) for each of the (D+2) number of integers n from 0 to (D+1), thereby computing (D+2) number of elements $c_{n,(b)}$ which are elements of the multiplicative group G1;

the cipher partial element a computation unit, using the processing device and based on the integer L' and the subscripts j of the L" number of integers $I'_j$ input by the authorization range input unit, (D+2)×(L'-L") number of elements $b_{n,j'}$ (j' being (L'-L") number of integers other than the L" number of subscripts j out of integers from 1 to L') out of the (D+2)×(D+1) number of elements $b_{n,1}$ stored by the public element b storage unit, and the (D+2) number of integers $r_n$ selected by the secondary random number r selection unit, calculates the element $b_{n,j'}$ raised to a power of $r_n$ for each of (D+2)×(L'-L") number of combinations (n,j') which are combinations of the (D+2) number of integers n from 0 to (D+1) and (L'-L") number of integers j' other than the L" number of subscripts j out of integers from 1 to L', thereby computing (D+2)×(L'-L") number of elements $c_{n,j',(a)}$ which are elements of the multiplicative group G1;

the cipher partial element b computation unit, using the processing device and based on the integer L' and the subscripts j of the L" number of integers $I'_j$ input by the authorization range input unit, (D+2)×(L'-L") number of elements $a_{n,j'}$ out of the (D+2)×(D+1) number of elements $a_{n,1}$ stored by the public element a storage unit, the integer r selected by the random number r selection unit, and the (D+2) number of integers $r_n$ selected by the secondary random number r selection unit, calculates the element $b_{n,j'}$ raised to a power of (r-$r_n$) for each of the (D+2)×(L'-L") number of combinations (n,j') which are combinations of the (D+2) number of integers n from 0 to (D+1) and the (L'-L") number of integers j' other than the L" number of subscripts j out of integers from 1 to less than L', thereby computing (D+2)×(L'-L") number of elements $c_{n,j',(b)}$ which are elements of the multiplicative group G1;

the ciphertext output unit, using the processing device and as a ciphertext in which the integer W' is embedded as the keyword, outputs the element R selected by the random element selection unit, the element E computed by the verification element computation unit, the element $c_0$ computed by the cipher element computation unit, the (D+2) number of elements $c_{n,(a)}$ computed by the cipher element a computation unit, the (D+2) number of elements $c_{n,(b)}$ computed by the cipher element b computation unit, the (D+2)×(L'-L") number of elements $c_{n,j',(a)}$ computed by the cipher partial element a computation unit, and the (D+2)×(L'-L") number of elements $c_{n,j',(b)}$ computed by the cipher partial element b computation unit;

the user secret key generation device has a storage device that stores data, a processing device that processes data, a secret element w storage unit, a secret element a storage unit, a secret element b storage unit, a secret element y storage unit, a user identifier input unit, a random number $\rho$ selection unit, a secondary random number $\rho$ selection unit, a total product element Y computation unit, a search element computation unit, a search element a computation unit, a search element b computation unit, a derangement element computation unit, a derangement element a computation unit, a derangement element b computation unit, a delegation element computation unit, a secondary delegation element computation unit, and a user secret key output unit;

the secret element w storage unit, using the storage device, stores the element w' output as the master secret key by the public parameter generation device;

the secret element a storage unit, using the storage device, stores the (D+2) number of elements $a'_n$ output as the master secret key by the public parameter generation device;

the secret element b storage unit, using the storage device, stores the (D+2) number of elements $b'_n$ output as the master secret key by the public parameter generation device;

the secret element y storage unit, using the storage device, stores the (D+2)×(D+1) number of elements $y'_{n,1}$ output as the master secret key by the public parameter generation device;

the user identifier input unit, using the processing device and for a query issuing device requesting generation of a user secret key out of the plurality of the query issuing devices, inputs L number of integers $I_i$ as a user identifier of the query issuing device;

the random number $\rho$ selection unit, using the processing device, randomly selects (D+2) number of integers $\rho_n$ out of integers from 0 to less than p;

the secondary random number $\rho$ selection unit, using the processing device, randomly selects (D+2)×(D+2) number of integers $\rho_{n,m}$ (m being an integer from 0 to D+1) out of integers from 0 to less than p;

the total product element Y computation unit, using the processing device and based on the L number of integers $I_i$ input by the user identifier input unit and (D+2) number of elements $y'_{n,0}$ and (D+2)×L number of elements $y'_{n,i}$ out of the (D+2)×(D+1) number of elements $y'_{n,1}$ stored by the secret element y storage unit, calculates the element $y'_{n,i}$ raised to a power of $I_i$ for each of (D+2)×(D+1) number of combinations (n,i) which are combinations of the (D+2) number of integers n from 0 to (D+1) and (D+1) number of integers i from 1 to L, and calculates a total product of the element $y'_{n,0}$ and the L number of elements $y'_{n,i}$ raised to the power of $I_i$ for each of the (D+2) number of integers n from 0 to (D+1), thereby computing (D+2) number of elements $\Pi_{Y,n}$ which are elements of the multiplicative group G2;

the search element computation unit, using the processing device and based on the element w' stored by the secret element w storage unit, the (D+2) number of integers $\rho_n$ selected by the random number $\rho$ selection unit, and the (D+2) number of elements $\Pi_{Y,n}$ computed by the total product element Y computation unit, calculates the element $\Pi_{Y,n}$ raised to a power of $\rho_n$ for each of the (D+2) number of integers n from 0 to (D+1), and calculates a total product of the element w' and the (D+2) number of elements $\Pi_{Y,n}$ raised to the power of $\rho_n$, thereby computing an element $k_0$ which is an element of the multiplicative group G2;

the search element a computation unit, using the processing device and based on the (D+2) number of elements $a'_n$ stored by the secret element a storage unit and the (D+2) number of integers $\rho_n$ selected by the random number $\rho$ selection unit, calculates the element $a'_n$ raised to a power of $(-\rho_n)$ for each of the (D+2) number of integers n from 0 to (D+1), thereby computing (D+2) number of elements $k_{n,(a)}$ which are elements of the multiplicative group G2;

the search element b computation unit, using the processing device and based on the (D+2) number of elements $b'_n$ stored by the secret element b storage unit and the (D+2) number of integers $\rho_n$ selected by the random number $\rho$ selection unit, calculates the element $b'_n$ raised to a power of $(-\rho_n)$ for each of the (D+2) number of integers n from 0 to (D+1), thereby computing (D+2) number of elements $k_{n,(b)}$ which are elements of the multiplicative group G2;

the derangement element computation unit, using the processing device and based on the (D+2)×(D+2) number of integers $\rho_{n,m}$ selected by the secondary random number $\rho$ selection unit and the (D+2) number of elements $\Pi_{Y,n}$ computed by the total product element Y computation unit, calculates the element $\Pi_{Y,n}$ raised to a power of $\rho_{n,m}$ for each of (D+2)×(D+2) number of combinations (n,m) which are combinations of the (D+2) number of integers n from 0 to (D+1) and (D+2) number of integers m from 0 to (D+1), and calculates a total product of the (D+2) number of elements $\Pi_{Y,n}$ raised to the power of $\rho_{n,m}$ for each of the (D+2) number of integers m from 0 to (D+1), thereby computing (D+2) number of elements $f_{m,0}$ which are elements of the multiplicative group G2;

the derangement element a computation unit, using the processing device and based on the (D+2) number of

elements $a'_n$ stored by the secret element a storage unit and the $(D+2)\times(D+2)$ number of integers $\rho_{n,m}$ selected by the secondary random number $\rho$ selection unit, calculates the element $a'_n$ raised to a power of $(-\rho_{n,m})$ for each of the $(D+2)\times(D+2)$ number of combinations $(n,m)$ which are combinations of the $(D+2)$ number of integers n from 0 to $(D+1)$ and the $(D+2)$ number of integers m from 0 to $(D+1)$, thereby computing $(D+2)\times(D+2)$ number of elements $f_{m,n,(a)}$ which are elements of the multiplicative group G2;

the derangement element b computation unit, using the processing device and based on the $(D+2)$ number of elements $b'_n$ stored by the secret element b storage unit and the $(D+2)\times(D+2)$ number of integers $\rho_{n,m}$ selected the secondary random number $\rho$ selection unit, calculates the element $b'_n$ raised to a power of $(-\rho_{n,m})$ for each of the $(D+2)\times(D+2)$ number of combinations $(n,m)$ which are combinations of the $(D+2)$ number of integers n from 0 to $(D+1)$ and the $(D+2)$ number of integers m from 0 to $(D+1)$, thereby computing $(D+2)\times(D+2)$ number of elements $f_{m,n,(b)}$ which are elements of the multiplicative group G2;

the delegation element computation unit, using the processing device and based on $(D+2)$ number of elements $y'_{n,\Lambda}$ ($\Lambda$ being an integer selected out of integers from more than L to D) out of the $(D+2)\times(D+1)$ number of elements $y'_{n,1}$ stored by the secret element y storage unit and the $(D+2)$ number of integers $\rho_n$ selected by the random number $\rho$ selection unit, calculates the element $y'_{n,\Lambda}$ raised to a power of $\rho_n$ for each of the $(D+2)$ number of integers n from 0 to $(D+1)$, and calculates a total product of the $(D+2)$ number of elements $y'_{n,j}$ raised to the power of $\rho_n$, thereby computing an element $h_\Lambda$ which is an element of the multiplicative group G2;

the secondary delegation element computation unit, using the processing device and based on $(D+2)$ number of elements $y'_{n,\Lambda}$ out of the $(D+2)\times(D+1)$ number of elements $y'_{n,1}$ stored by the secret element y storage unit and the $(D+2)\times(D+2)$ number of integers $\rho_{n,m}$ selected by the secondary random number $\rho$ selection unit, calculates the element $y'_{n,\Lambda}$ raised to a power of $\rho_{n,m}$ for each of the $(D+2)x(D+2)$ number of combinations $(n, m)$ which are combinations of the $(D+2)$ number of integers n from 0 to $(D+1)$ and the $(D+2)$ number of integers m from 0 to $(D+1)$, and calculates a total product of the $(D+2)$ number of elements $y'_{n,A}$ raised to the power of $\rho_{n,m}$ for each of the $(D+2)$ number of integers m from 0 to $(D+1)$, thereby computing $(D+2)$ number of elements $h_{m,\Lambda}$ which are elements of the multiplicative group G2;

the user secret key output unit, using the processing device and as the user secret key of the query issuing device, outputs a combination of the element $k_0$ computed by the search element computation unit, the $(D+2)$ number of elements $k_{n,(a)}$ computed by the search element a computation unit, the $(D+2)$ number of elements $k_{n,(b)}$ computed by the search element b computation unit, the $(D+2)$ number of elements $f_{m,0}$ computed by the derangement element computation unit, the $(D+2)\times(D+2)$ number of elements $f_{m,n,(a)}$ computed by the derangement element a computation unit, the $(D+2)\times(D+2)$ number of elements $f_{m,n,(b)}$ computed by the derangement element b computation unit, the element $h_\Lambda$ computed the delegation element computation unit, and the $(D+2)$ number of elements $h_{m,\Lambda}$ computed by the secondary delegation element computation unit;

the query issuing device has a storage device that stores data, a processing device that processes data, a user identifier storage unit, a search element storage unit, a search element a storage unit, a search element b storage unit, a derangement element storage unit, a derangement element a storage unit, a derangement element b storage unit, a delegation element storage unit, a secondary delegation element storage unit, a search keyword input unit, a random number $\pi$ selection unit, an inquiry element computation unit, an inquiry element a computation unit, an inquiry element b computation unit, and a query output unit;

the user identifier storage unit, using the storage device and as the user identifier of the query issuing device, stores the L number of integers $I_i$;

the search element storage unit, using the storage device, stores the element $k_0$ output as the user secret key of the query issuing device by the user secret key generation device;

the search element a storage unit, using the storage device, stores the $(D+2)$ number of elements $k_{n,(a)}$ (n being an integer from 0 to $D+1$) output as the user secret key of the query issuing device by the user secret key generation device;

the search element b storage unit, using the storage device, stores the $(D+2)$ number of elements $k_{n,(b)}$ output as the user secret key of the query issuing device by the user secret key generation device;

the derangement element storage unit, using the storage device, stores the $(D+2)$ number of elements $f_{m,0}$ (m being an integer from 0 to $D+1$) output as the user secret key of the query issuing device by the user secret key generation device;

the derangement element a storage unit, using the storage device, stores the $(D+2)\times(D+2)$ number of elements $f_{m,n,(a)}$ output as the user secret key of the query issuing device by the user secret key generation device;

the derangement element b storage unit, using the storage device, stores the $(D+2)\times(D+2)$ number of elements $f_{m,n,(b)}$ output as the user secret key of the query issuing device by the user secret key generation device;

the delegation element storage unit, using the storage device, stores the element $h_\Lambda$ output as the user secret key of the query issuing device by the user secret key generation device;

the secondary delegation element storage unit, using the storage device, stores the $(D+2)$ number of elements

$h_{m,\Lambda}$ output as the user secret key of the query issuing device by the user secret key generation device;

the search keyword input unit, using the processing device and as a keyword to be searched for, inputs an integer W from 0 to less than p;

the random number $\pi$ selection unit, using the processing device, randomly selects (D+2) number of integers $\pi_m$ out of integers from 0 to less than p;

the inquiry element computation unit, using the processing device and based on the element $k_0$ stored by the search element storage unit, the (D+2) number of elements $f_{m,0}$ stored by the derangement element storage unit, the element $h_\Lambda$ stored by the delegation element storage unit, the (D+2) number of elements $h_{m,\Lambda}$ stored by the secondary delegation element storage unit, the integer W input by the search keyword input unit, and the (D+2) number of integers $\pi_m$ selected by the random number $\pi$ selection unit, calculates the element $h_{m,\pi}$ raised to a power of $\pi_m$ for each of the (D+2) number of integers m from 0 to (D+1), calculates a total product $\Pi_H$ of the element $h_\Lambda$ and the (D+2) number of elements $h_{m,\Lambda}$ raised to the power of $\pi_m$, calculates the element $f_{m,0}$ raised to a power of $\pi_m$ for each of the (D+2) number of integers m from 0 to (D+1), calculates the total product $\Pi_H$ raised to a power of W, and calculates a total product of the element $k_0$, the (D+2) number of elements $f_{m,0}$ raised to the power of $\pi_m$, and the total product $\Pi_H$ raised to the power of W, thereby computing an element $k'_0$ which is an element of the multiplicative group G2;

the inquiry element a computation unit, using the processing device and based on the (D+2) number of elements $k_{n,(a)}$ stored by the search element a storage unit, the (D+2)×(D+2) number of elements $f_{m,n,(a)}$ stored by the derangement element a storage unit, and the (D+2) number of integers $\pi_m$ selected by the random number $\pi$ selection unit, calculates the element $f_{m,n,(a)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2;

the inquiry element b computation unit, using the processing device and based on the (D+2) number of elements $k_{n,(b)}$ stored by the search element b storage unit, the (D+2)×(D+2) number of elements $f_{m,n,(b)}$ stored by the derangement element b storage unit, and the (D+2) number of integers $\pi_m$ selected by the random number $\pi$ selection unit, calculates the element $f_{m,n,(b)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $f_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2;

the query output unit, using the processing device and as a query for searching with the integer W as the keyword, outputs a combination of the L number of integers $I_i$ stored by the user identifier storage unit, the element $k'_0$ computed by the inquiry element computation unit, the (D+2) number of elements $k'_{n,(a)}$ computed by the inquiry element a computation unit, and the (D+2) number of elements $k'_{n,(b)}$ computed by the inquiry element b computation unit;

the search device has a storage device that stores data, a processing device that processes data, a ciphertext storage unit, a query input unit, a pairing element computation unit, a pairing element A computation unit, a pairing element B computation unit, a comparison element computation unit, and a comparison unit;

the ciphertext storage unit, using the storage device and as the ciphertext in which the keyword is embedded, stores a combination of the element R, the element E, the element $c_0$, the (D+2) number of elements $c_{n,(a)}$, the (D+2) number of elements $c_{n,(b)}$, the (D+2)×(L'-L") number of elements $c_{n,j',(a)}$, and the (D+2)×(L'-L") number of elements $c_{n,j',(b)}$ included in the ciphertext output by the encryption device;

the query input unit, using the processing device and as the query for searching for the keyword, inputs the combination of the L number of integers $I_i$, the element $k'_0$, the (D+2) number of elements $k'_{n,(a)}$, and the (D+2) number of elements $k'_{n,(b)}$ output by the query issuing device;

the pairing element computation unit, using the processing device and based on the element $c_0$ included in the ciphertext stored by the ciphertext storage unit and the element $k'_0$ included in the query input by the query input unit, maps a pair of the element $c_0$ and the element $k'_0$ by the bilinear pairing e, thereby computing an element $e_0$ which is an element of the multiplicative group G3;

the pairing element A computation unit, using the processing device and based on the (D+2) number of elements $c_{n,(a)}$ and the (D+2)×(L'-L") number of elements $c_{n,j',(a)}$ included in the ciphertext stored by the ciphertext storage unit and the L number of integers $I_i$ and the (D+2) number of elements $k'_{n,(a)}$ included in the query input by the query input unit, calculates the element $c_{n,i',(a)}$ raised to a power of $I_{-i'}$ for each of (D+2)×$L_A$ number of combinations (n,i') which are combinations of the (D+2) number of integers n from 0 to (D+1) and $L_A$ number of integers i' from 1 to L out of the (L'-L") number of integers j' which are subscripts of the (D+2)×(L'-L") number of elements $c_{n,j',(a)}$, calculates a total product $\Pi_{\Lambda',n}$ of the element $c_{n,(a)}$ and the $L_A$ number of elements $c_{n,i',(a)}$ raised to the power of $I_{-i}$, for each of the (D+2) number of integers n from 0 to (D+1), and maps a pair of the total product $II_{A',n}$ and the element $k'_{n,(a)}$ by the bilinear pairing e for each of the (D+2) number of integers n from 0 to (D+1), thereby computing (D+2) number of elements $e_{A,n}$ which are elements of the multiplicative group G3;

the pairing element B computation unit, using the processing device and based on the (D+2) number of elements $c_{n,(b)}$ and the $(D+2)\times(L'-L'')$ number of elements $c_{n,j',(b)}$ included in the ciphertext stored by the ciphertext storage unit and the L number of integers $I_i$ and the (D+2) number of elements $k'_{n,(b)}$ included in the query input by the query input unit, calculates the element $c_{n,i',(b)}$ raised to a power of $I_{i'}$ for each of the $(D+2)\times LA$ number of combinations (n,i') which are combinations of the (D+2) number of integers n from 0 to (D+1) and the $L_A$ number of integers i' from 1 to L out of the (L'-L'') number of integers j' which are the subscripts of the $(D+2)\times(L'-L'')$ number of elements $c_{n,j',(b)}$, calculates a total product $II_{B',n}$ of the element $c_{n,(b)}$ and the $L_A$ number of elements $c_{n,i',(b)}$ raised to the power of $I_{-i'}$ for each of the (D+2) number of integers n from 0 to (D+1), and maps a pair of the total product $II_{B',n}$ and the element $k'_{n,(b)}$ by the bilinear pairing e for each of the (D+2) number of integers n from 0 to (D+1), thereby computing (D+2) number of elements $e_{B,n}$ which are elements of the multiplicative group G3;

the comparison element computation unit, using the processing device and based on the element E included in the ciphertext stored by the ciphertext storage unit, the element $e_0$ computed by the pairing element computation unit, the (D+2) number of elements $e_{A,n}$ computed by the pairing element A computation unit, and the (D+2) number of elements $e_{B,n}$ computed by the pairing element B computation unit, calculates a total product of the element E, the element $e_0$, the (D+2) number of elements $e_{A,n}$, and the (D+2) number of elements $e_{B,n}$, thereby computing an element R' which is an element of the multiplicative group G3; and

the comparison unit, using the processing device, compares the element R included in the ciphertext stored by the ciphertext storage unit and the element R' computed by the comparison element computation unit and determines a hit for searching if the element R matches the element R'.

2.  The secure search system of claim 1, wherein

the delegation element computation unit, using the processing device and based on $(D+2)\times(D'-L)$ number (D' being an integer from more than L to D) of elements $y'_{n,\lambda}$ ($\lambda$ being an integer from more than L to D') out of the $(D+2)\times(D+1)$ number of elements $y'_{n,l}$ stored by the secret element y storage unit and the (D+2) number of integers $\rho_n$ selected by the random number $\rho$ selection unit, calculates the element $y'_{n,\lambda}$ raised to a power of $\rho_n$ for each of $(D+2)\times(D'-L)$ number of combinations (n,$\lambda$) which are combinations of the (D+2) number of integers n from 0 to (D+1) and (D'-L) number of integers $\lambda$ from more than L to D', and calculates a total product of the (D+2) number of elements $y'_{n,\lambda}$ raised to the power of $\rho_n$ for each of the (D'-L) number of integers $\lambda$ from more than L to D', thereby computing (D'-L) number of elements $h_\lambda$ which are elements of the multiplicative group G2;

the secondary delegation element computation unit, using the processing device and based on $(D+2)\times(D'-L)$ number of elements $y'_{n,\lambda}$ out of the $(D+2)\times(D+1)$ number of elements $y'_{n,1}$ stored by the secret element y storage unit and the $(D+2)\times(D+2)$ number of integers $\rho_{n,m}$ selected by the secondary random number $\rho$ selection unit, calculates the element $y'_{n,\lambda}$ raised to a power of $\rho_{n,m}$ for each of $(D+2)\times(D+2)\times(D'-L)$ number of combinations (n,m,$\lambda$) which are combinations of the (D+2) number of integers n from 0 to (D+1), the (D+2) number of integers m from 0 to (D+1), and the (D'-L) number of integers $\lambda$ from more than L to D', and calculates a total product of the (D+2) number of elements $y'_{n,\lambda}$, raised to the power of $\rho_{n,m}$ for each of $(D+2)\times(D'-L)$ number of combinations (m,$\lambda$) which are combinations of the (D+2) number of integers m from 0 to (D+1) and the (D'-L) number of integers $\lambda$ from more than L to D', thereby computing $(D+2)\times(D'-L)$ number of elements $h_{m,\lambda}$ which are elements of the multiplicative group G2;

the user secret key output unit, using the processing device and as the user secret key of the query issuing device, outputs a combination of the element $k_0$ computed by the search element computation unit, the (D+2) number of elements $k_{n,(a)}$ computed by the search element a computation unit, the (D+2) number of elements $k_{n,(b)}$ computed by the search element b computation unit, the (D+2) number of elements $f_{m,0}$ computed by the derangement element computation unit, the $(D+2)\times(D+2)$ number of elements $f_{m,n,(a)}$ computed by the derangement element a computation unit, the $(D+2)\times(D+2)$ number of elements $f_{m,n,(b)}$ computed by the derangement element b computation unit, the (D'-L) number of elements $h_\lambda$ computed by the delegation element computation unit, and the $(D+2)\times(D'-L)$ number of elements $h_{m,\lambda}$ computed by the secondary delegation element computation unit;

the query issuing device further has a child user identifier input unit, a secondary random number $\pi$ selection unit, a child search element computation unit, a child derangement element computation unit, a child derangement element a computation unit, a child derangement element b computation unit, a child delegation element computation unit, a child secondary delegation element computation unit, and a child user secret key output unit;

the delegation element storage unit, using the storage device, stores the $(D'-L)$ number of elements $h_\lambda$ output as the user secret key of the query issuing device by the user secret key generation device;

the secondary delegation element storage unit, using the storage device, stores the $(D+2)\times(D'-L)$ number of elements $h_{m,\lambda}$ output as the user secret key of the query issuing device by the user secret key generation device;

the child user identifier input unit, using the processing device, inputs an integer $I_{L+1}$ from 0 to less than p;

the secondary random number $\pi$ selection unit, using the processing device, randomly selects $(D+2)\times(D+2)$ number of integers $\pi_{m,m'}$- (m' being an integer from 0 to D+1)- out of integers from 0 to less than p;

the child search element computation unit, using the processing device and based on the element $k_0$ stored by the search element storage unit, the $(D+2)$ number of elements $f_{-m,0}$ stored by the derangement element storage unit, an element $h_{L+1}$ out of the $(D'-L)$ number of elements $h_\lambda$ stored by the delegation element storage unit, $(D+2)$ number of elements $h_{m,L+1}$ out of the $(D+2)\times(D'-L)$ number of elements $h_{m,\lambda}$ stored by the secondary delegation element storage unit, the $(D+2)$ number of integers $\pi_{m}$- selected by the random number $\pi$ selection unit, and the integer $I_{L+1}$ input by the child user identifier input unit, calculates the element $h_{m,L+1}$ raised to a power of $\pi_m$ for each of the $(D+2)$ number of integers m from 0 to $(D+1)$, calculates a total product $\Pi_H$ of the element $h_{L+1}$ and the $(D+2)$ number of elements $h_{m,L+1}$ raised to the power of $\pi_m$, calculates the element $f_{-m,0}$ raised to a power of $\pi_m$ for each of the $(D+2)$ number of integers m from 0 to $(D+1)$, calculates the total product $\Pi_H$ raised to a power of $I_{L+1}$, and calculates a total product of the element $k_0$, the $(D+2)$ number of elements $f_{-m,0}$ raised to the power of $\pi_m$, and the total product $\Pi_H$ raised to the power of $I_{L+1}$, thereby computing an element $k''_0$ which is an element of the multiplicative group G2;

the child derangement element computation unit, using the processing device and based on the $(D+2)$ number of elements $f_{m,0}$ stored by the derangement element storage unit, $(D+2)$ number of elements $h_{m,L+1}$ out of the $(D+2)\times(D'-L)$ number of elements $h_{m,\lambda}$ stored by the secondary delegation element storage unit, and the $(D+2)\times(D+2)$ number of integers $\pi_{m,m'}$ selected by the secondary random number $\pi$ selection unit, calculates the element $f_{m,0}$ raised to a power of $\pi_{m,m'}$ and the element $h_{m,L+1}$ raised to a power of $\pi_{m,m'}$ for each of $(D+2)\times(D+2)$ number of combinations (m,m') which are combinations of the $(D+2)$ number of integers m from 0 to $(D+1)$ and $(D+2)$ number of integers m' from 0 to $(D+1)$, calculates a total product $\Pi_{H,m'}$ of the $(D+2)$ number of elements $h_{m,L+1}$ raised to the power of $\pi_{m,m'}$ for each of the $(D+2)$ number of integers m' from 0 to $(D+1)$, and calculates a total product of the $(D+2)$ number of elements $f_{m,0}$ raised to the power of $\pi_{m,m'}$ and the total product $\Pi_{H,m'}$ raised to the power of $I_{L+1}$ for each of the $(D+2)$ number of integers m' from 0 to $(D+1)$, thereby computing $(D+2)$ number of elements $f_{m',0}$ which are elements of the multiplicative group G2;

the child derangement element a computation unit, using the processing device and based on the $(D+2)\times(D+2)$ number of elements $f_{m,n,(a)}$ stored by the derangement element a storage unit and the $(D+2)\times(D+2)$ number of integers $\pi_{m,m'}$ selected by the secondary random number $\pi$ selection unit, calculates the element $f_{m,n,(a)}$ raised to a power of $\pi_{m,m'}$ for each of $(D+2)\times(D+2)\times(D+2)$ number of (n,m,m') which are combinations of the $(D+2)$ number of integers n from 0 to $(D+1)$, the $(D+2)$ number of integers m from 0 to $(D+1)$, and the $(D+2)$ number of integers m' from 0 to $(D+1)$, and calculates a total product of the $(D+2)$ number of elements $f_{m,n,(a)}$ raised to the power of $\pi_{m,m'}$ for each of $(D+2)\times(D+2)$ number of (n,m') which are combinations of the $(D+2)$ number of integers n from 0 to $(D+1)$ and the $(D+2)$ number of integers m' from 0 to $(D+1)$, thereby computing $(D+2)\times(D+2)$ number of elements $f'_{m',n,(a)}$ which are elements of the multiplicative group G2;

the child derangement element b computation unit, using the processing device and based on the $(D+2)\times(D+2)$ number of elements $f_{m,n,(b)}$ stored by the derangement element b storage unit and the $(D+2)\times(D+2)$ number of integers $\pi_{m,m'}$ selected by the secondary random number $\pi$ selection unit, calculates the element $f_{m,n,(b)}$ raised to a power of $\pi_{m,m'}$ for each of the $(D+2)\times(D+2)\times(D+2)$ number of (n,m,m') which are combinations of the $(D+2)$ number of integers n from 0 to $(D+1)$, the $(D+2)$ number of integers m from 0 to $(D+1)$, and the $(D+2)$ number of integers m' from 0 to $(D+1)$, and calculates a total product of the $(D+2)$ number of elements $f_{m,n,(b)}$ raised to the power of $\pi_{m,m'}$ for each of the $(D+2)\times(D+2)$ number of (n,m') which are combinations of the $(D+2)$ number of integers n from 0 to $(D+1)$ and the $(D+2)$ number of integers m' from 0 to $(D+1)$, thereby computing $(D+2)\times(D+2)$ number of elements $f'_{m,n,(b)}$ which are elements of the multiplicative group G2;

the child delegation element computation unit, using the processing device and based on $(D''-L-1)$ number $(D''$ being an integer from more than $(L+1)$ to $D')$ of elements $h_{\lambda'}$ ($\lambda'$ being an integer from more than $(L+1)$ to $D''$) out of the $(D'-L)$ number of elements $h_\lambda$ stored by the delegation element storage unit, $(D+2)\times(D''-L-1)$ number of elements $h_{m,\lambda'}$ out of the $(D+2)\times(D'-L)$ number of elements $h_{m,\lambda}$ stored by the secondary delegation element storage unit, and the $(D+2)$ number of integers $\pi_m$ selected by the random number $\pi$ selection unit, calculates the element $h_{m,\lambda'}$ raised to a power of $\pi_m$ for each of $(D+2)\times(D''-L-1)$ number of combinations $(m,\lambda')$ which are combinations of the $(D+2)$ number of integers m from 0 to $(D+1)$ and $(D''-L-1)$ number of integers $\lambda'$ from more than $(L+1)$ to $D''$, and calculates a total product of the element $h_{\lambda'}$ and the $(D+2)$ number of elements $h_{m,\lambda'}$ raised to the power of $\pi_m$ for each of the $(D''-L-1)$ number of integers $\lambda'$ from more than $(L+1)$ to $D''$, thereby computing $(D''-L-1)$ number of elements $h'_{\lambda'}$ which are elements of the multiplicative group G2;

the child secondary delegation element computation unit, using the processing device and based on $(D+2)\times(D''-L-1)$ number of elements $h_{m,\lambda'}$ out of the $(D+2)\times(D'-L)$ number of elements $h_{m,\lambda}$ stored by the secondary delegation element storage unit and the $(D+2)\times(D+2)$ number of integers $\pi_{m,m'}$ selected by the secondary random number $\pi$ selection unit, calculates the elements $h_{m,\lambda'}$ raised to a power of $\pi_{m,m'}$ for each of $(D+2)\times(D+2)\times(D''-L-1)$ number of combinations $(m,m',\lambda')$ which are combinations of the $(D+2)$ number of integers m from 0 to $(D+1)$, the $(D+2)$ number of integers m' from 0 to $(D+1)$, and the $(D''-L-1)$ number of integers j' from more than L to D'', and calculates a total product of the $(D+2)$ number of elements $h_{m,\lambda'}$ raised to the power of $\pi_{m,m'}$ for each of $(D+2)\times(D''-L-1)$ number of combinations $(m,m',\lambda')$ which are combinations of the $(D+2)$ number of integers m' from 0 to $(D+1)$ and the $(D''-L-1)$ number of integers $\lambda'$ from more than L to D'', thereby computing $(D+2)\times(D''-L-1)$ number of elements $h'_{m',\lambda'}$ which are elements of the multiplicative group G2; and
the child user secret key output unit, as a user secret key of another query issuing device having as a user identifier the L number of integers $l_i$ stored by the user identifier storage unit and the integer $l_{L+1}$ input by the child user identifier input unit, outputs a combination of the element $k''_0$ computed by the child search element computation unit, the $(D+2)$ number of elements $k'_{n,(a)}$ computed by the inquiry element a computation unit, the $(D+2)$ number of elements $k'_{n,(b)}$ computed by the inquiry element b computation unit, the $(D+2)$ number of elements $f'_{m,0}$ computed by the child derangement element computation unit, the $(D+2)\times(D+2)$ number of elements $f'_{m',n,(a)}$ computed by the child derangement element a computation unit, the $(D+2)\times(D+2)$ number of elements $f'_{m',n,(b)}$ computed by the child derangement element b computation unit, the $(D''-L-1)$ number of elements $h'_{\lambda'}$ computed by the child delegation element computation unit, and the $(D+2)\times(D''-L-1)$ number of elements $h'_{m',\lambda'}$ computed by the child secondary delegation element computation unit.

3. A public parameter generation device that generates a public parameter and a master secret key to be used in a secure search system that encrypts a keyword and searches for the keyword in an encrypted state based on a request from at least any one of a plurality of query issuing devices having, as a user identifier, less than D number (D being an integer of 2 or greater) of integers $l_i$ (i being an integer from 1 to L, L being an arbitrary integer of less than D, $l_i$ being an integer from 0 to less than p, and p being a prime number), the public parameter generation device comprising:

a processing device that processes data; a random number $\omega$ selection unit; a random number $\alpha$ selection unit; a random number $\beta$ selection unit; a random number $\theta$ selection unit; a public element $\Omega$ computation unit; a public element a computation unit; and a public element b computation unit; a secret element w computation unit; a secret element a computation unit; a secret element b computation unit; a secret element y computation unit; a public parameter output unit; and a master secret key output unit, wherein
the random number $\omega$ selection unit, using the processing device, randomly selects an integer $\omega$ out of integers from 1 to less than p;
the random number $\alpha$ selection unit, using the processing device, randomly selects $(D+2)$ number of integers $\alpha_n$ (n being an integer from 0 to D+1) out of integers from 1 to less than p;
the random number $\beta$ selection unit, using the processing device, randomly selects $(D+2)$ number of integers $\beta_n$ out of integers from 1 to less than p;
the random number $\theta$ selection unit, using the processing device, randomly selects $(D+2)\times(D+1)$ number of integers $\theta_{n,l}$ (l being an integer from 0 to D) out of integers from 1 to less than p;
the public element a computation unit, using the processing device and based on a generator $g_1$ of a multiplicative group G1 of an order of the prime number p, the $(D+2)$ number of integers $\alpha_n$ selected by the random number $\alpha$ selection unit, and the $(D+2)\times(D+1)$ number of integers $\theta_{n,1}$ selected by the random number $\theta$ selection unit, calculates the generator $g_1$ raised to a power of $(\alpha_n\times\theta_{n,1})$ for each of $(D+2)\times(D+1)$ number of combinations (n,l) which are combinations of $(D+2)$ number of integers n from 0 to $(D+1)$ and $(D+1)$ number of integers 1 from 0 to D, thereby computing $(D+2)\times(D+1)$ number of elements $a_{n,1}$ which are elements of the multiplicative group G1;
the public element b computation unit, using the processing device and based on the generator $g_1$ of the multiplicative group G1, the $(D+2)$ number of integers $\beta_n$ selected by the random number $\beta$ selection unit, and the $(D+2)\times(D+1)$ number of integers $\theta_{n,1}$ selected by the random number $\theta$ selection unit, calculates the generator $g_1$ raised to a power of $(\beta_n\times\theta_{n,1})$ for each of the $(D+2)\times(D+1)$ number of combinations (n,l) which are combinations of the $(D+2)$ number of integers n from 0 to $(D+1)$ and the $(D+1)$ number of integers 1 from 0 to D, thereby computing $(D+2)\times(D+1)$ number of elements $b_{n,l}$ which are elements of the multiplicative group G1;
the secret element w computation unit, using the processing device and based on a generator $g_2$ of a multiplicative group G2 of an order of the prime number p and the integer $\omega$ selected by the random number $\omega$ selection unit, calculates the generator $g_2$ raised to a power of $\omega$, thereby computing an element w' which is an element of the multiplicative group G2;

the public element $\Omega$ computation unit, using the processing device and based on a generator $g_3$ of a multiplicative group G3 of an order p and the integer $\omega$ selected the random number $\omega$ selection unit, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3; the secret element a computation unit, using the processing device and based on the generator $g_2$ of the multiplicative group G2 and the (D+2) number of integers $\alpha_n$ selected by the random number $\alpha$ selection unit, calculates the generator $g_2$ raised to a power of $\alpha_n$ for each of the (D+2) number of integers n from 0 to (D+1), thereby computing (D+2) number of elements a'$_n$ which are elements of the multiplicative group G2;

the secret element b computation unit, based on the generator $g_2$ of the multiplicative group G2 and the (D+2) number of integers $\beta_n$ selected by the random number $\beta$ selection unit, calculates the generator $g_2$ raised to a power of $\beta_n$ for each of the (D+2) number of integers n from 0 to (D+1), thereby computing (D+2) number of elements b'$_n$ which are elements of the multiplicative group G2;

the secret element y computation unit, using the processing device and based on the generator $g_2$ of the multiplicative group G2, the (D+2) number of integers $\alpha_n$ selected by the random number $\alpha$ selection unit, the (D+2) number of integers $\beta_n$ selected by the random number $\beta$ selection unit, and the (D+2)$\times$(D+1) of integers $\theta_{n,l}$ selected by the random number $\theta$ selection unit, calculates the generator $g_2$ raised to a power of $(\alpha_n\times\beta_n\times\theta_{n,l})$ for each of the (D+2)$\times$(D+1) number of combinations (n,l) which are combinations of the (D+2) number of integers n from 0 to (D+1) and the (D+2) number of integers 1 from 0 to D, thereby computing (D+2)$\times$(D+1) number of elements y'$_{n,l}$ which are elements of the multiplicative group G2;

the public parameter output unit, using the processing device and as the public parameter in the secure search system, outputs the element $\Omega$ computed by the public element $\Omega$ computation unit, the (D+2)$\times$(D+1) number of elements a$_{n,l}$ computed by the public element a computation unit, and the (D+2)$\times$(D+1) number of elements b$_{n,l}$ computed by the public element b computation unit; and

the master secret key output unit, using the processing device and as the master secret key in the secure search system, outputs the element w' computed by the secret element w computation unit, the (D+2) number of elements a'$_n$ computed by the secret element a computation unit, the (D+2) number of elements b'$_n$ computed by the secret element b computation unit, and the (D+2)$\times$(D+1) number of elements y'$_{n,l}$ computed by the secret element y computation unit.

4. An encryption device that encrypts a keyword in a secure search system that encrypts the keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the encryption device comprising:

a storage device that stores data; a processing device that processes data; a public element $\Omega$ storage unit; a public element a storage unit; a public element b storage unit; an embedded keyword input unit; an authorization range input unit; a random number r selection unit; a secondary random number r selection unit; a random element selection unit; a verification element computation unit; a cipher element computation unit; a cipher element a computation unit; a cipher element b computation unit; a cipher partial element a computation unit; a cipher partial element b computation unit; and a ciphertext output unit, wherein

the public element $\Omega$ storage unit, using the storage device, stores an element $\Omega$ which is an element of a multiplicative group G3 of an order p;

the public element a storage unit, using the storage device, stores (D+2)$\times$(D+1) number of elements a$_{n,l}$ (n being an integer from 0 to D+1 and 1 being an integer from 0 to D) which are elements of a multiplicative group G1 of an order p;

the public element b storage unit, using the storage device, stores (D+2)$\times$(D+1) number of elements b$_{n,l}$ which are elements of the multiplicative group G1;

the embedded keyword input unit, using the processing device and as the keyword to be encrypted, inputs an integer W' from 0 to less than p;

the authorization range input unit, using the processing device and as data specifying a range of query issuing devices having an authorization to search for the keyword, inputs an integer L' (L' being an arbitrary integer from 1 to less than D) and L" number of integers $I'_j$ (L" being an arbitrary integer from 0 to L', j being L" number of integers arbitrarily selected out of integers from 1 to L', and $I'_j$ being an integer from 0 to less than p);

the random number r selection unit, using the processing device, randomly selects an integer r out of integers from 0 to less than p;

the secondary random number r selection unit, using the processing device, randomly selects (D+2) number of integers $r_n$ out of integers from 0 to less than p;

the random element selection unit, using the processing device, randomly selects an element R out of elements of the multiplicative group G3;

the verification element computation unit, using the processing device and based on the element $\Omega$ stored by the public element $\Omega$ storage unit, the integer r selected by the random number r selection unit, and the element R selected by the random element selection unit, calculates a product of the element $\Omega$ raised to a power of (-r) and the element R, thereby computing an element E which is an element of the multiplicative group G3;

the cipher element computation unit, using the processing device and based on the generator $g_1$ of the multiplicative group G1 and the integer r selected by the random number r selection unit, calculates the generator $g_1$ raised to a power of r, thereby computing an element $c_0$ which is an element of the multiplicative group G1;

the cipher element a computation unit, using the processing device and based on the integer L' and the L" number of integers $I'_j$ input by the authorization range input unit, (D+2) number of elements $b_{n,0}$, (D+2)×L" number of elements $b_{n,1'}$, and (D+2) number of elements $b_{n,A'}$ (A' being an integer selected out of integers from more than L' to D) out of the (D+2)×(D+1) number of elements $b_{n,I}$ stored by the public element b storage unit, the integer W' input by the embedded keyword input unit, and the (D+2) number of integers $r_n$ selected by the secondary random number r selection unit, calculates the element $b_{n,j}$ raised to a power of $I_j$ for each of (D+2)×L" number of combinations (n,j) which are combinations of (D+2) number of integers n from 0 to (D+1) and subscripts j of the L" number of integers $I'_j$, calculates the element $b_{n,A'}$ raised to a power of W' for each of the (D+2) number of integers n from 0 to (D+1), calculates a total product $\Pi_{B,n}$ of the element $b_{n,0}$, the L" number of elements $b_{n,j}$ raised to the power of $I'_j$, and the element $b_{n,A'}$ raised to the power of W' for each of the (D+2) number of integers n from 0 to (D+1), and calculates the calculated total product $\Pi_{B,n}$ raised to a power of $r_n$ for each of the (D+2) number of integers n from 0 to (D+1), thereby computing (D+2) number of elements $c_{n,(a)}$ which are elements of the multiplicative group G1;

the cipher element b computation unit, using the processing device and based on the integer L' and the L" number of integers $I'_j$ input by the authorization range input unit, (D+2) number of elements $a_{n,0}$, (D+2)×L" number of elements $a_{n,j'}$, and (D+2) number of elements $a_{n,A'}$ out of the (D+2)×(D+1) number of elements $a_{n,I}$ stored by the public element a storage unit, the integer W' input by the embedded keyword input unit, the integer r selected by the random number r selection unit, and the (D+2) number of integers $r_n$ selected by the secondary random number r selection unit, calculates the element $a_{n,j}$ raised to a power of $I_j$ for each of the (D+2)×L" number of combinations (n,j) which are combinations of the (D+2) number of integers n from 0 to (D+1) and the subscripts j of the L" number of integers $I'_j$, calculates the element $a_{n,A'}$ raised to a power of W' for each of the (D+2) number of integers n from 0 to (D+1), calculates a total product $\Pi_{A,n}$ of the element $a_{n,0}$, the L" number of elements $a_{n,j}$ raised to the power of $I'_j$, and the element $a_{n,A'}$ raised to the power of W' for each of the (D+2) number of integers n from 0 to (D+1), and calculates the calculated total product $\Pi_{A,n}$ raised to a power of (r-$r_n$) for each of the (D+2) number of integers n from 0 to (D+1), thereby computing (D+2) number of elements $c_{n,(b)}$ which are elements of the multiplicative group G1;

the cipher partial element a computation unit, using the processing device and based on the integer L' and the subscripts j of the L" number of integers $I'_j$ input by the authorization range input unit, (D+2)×(L'-L") number of elements $b_{n,j'}$ (j' being (L'-L") number of integers other than the L" number of subscripts j out of integers from 1 to L') out of the (D+2)×(D+1) number of elements $b_{n,I}$ stored by the public element b storage unit, and the (D+2) number of integers $r_n$ selected by the secondary random number r selection unit, calculates the element $b_{n,j'}$ raised to a power of $r_n$ for each of (D+2)×(L'-L") number of combinations (n,j') which are combinations of the (D+2) number of integers n from 0 to (D+1) and (L'-L") number of integers j' other than the L" number of subscripts j out of integers from 1 to L', thereby computing (D+2)×(L'-L") number of elements $c_{n,j',(a)}$ which are elements of the multiplicative group G1;

the cipher partial element b computation unit, using the processing device and based on the integer L' and the subscripts j of the L" number of integers $I'_j$ input by the authorization range input unit, (D+2)×(L'-L") number of elements $a_{n,j'}$ out of the (D+2) × (D+1) number of elements $a_{n,I}$ stored by the public element a storage unit, the integer r selected by the random number r selection unit, and the (D+2) number of integers $r_n$ selected by the secondary random number r selection unit, calculates the element $b_{n,j'}$ raised to a power of (r-$r_n$) for each of the (D+2)×(L'-L") number of combinations (n,j') which are combinations of the (D+2) number of integers n from 0 to (D+1) and the (L'-L") number of integers j' other than the L" number of subscripts j out of integers from 1 to less than L', thereby computing (D+2)×(L'-L") number of elements $c_{n,j',(b)}$ which are elements of the multiplicative group G1; and

the ciphertext output unit, using the processing device and as a ciphertext in which the integer W' is embedded as the keyword, outputs the element R selected by the random element selection unit, the element E computed by the verification element computation unit, the element $c_0$ computed by the cipher element computation unit, the (D+2) number of elements $c_{n,(a)}$ computed by the cipher element a computation unit, the (D+2) number of elements $c_{n,(b)}$ computed by the cipher element b computation unit, the (D+2) x (L'-L") number of elements $c_{nj',(a)}$ computed by the cipher partial element a computation unit, and the $(D+2) \times (L'-L")$ number of elements $c_{n,j',(b)}$ computed by the cipher partial element b computation unit.

5. A user secret key generation device that generates a user secret key to be used by a query issuing device in a secure search system that encrypts a keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the user secret key generation device comprising:

a storage device that stores data; a processing device that processes data; a secret element w storage unit; a secret element a storage unit; a secret element b storage unit; a secret element y storage unit; a user identifier input unit; a random number p selection unit; a secondary random number $\rho$ selection unit; a total product element Y computation unit; a search element computation unit; a search element a computation unit; a search element b computation unit; a derangement element computation unit; a derangement element a computation unit; a derangement element b computation unit; a delegation element computation unit; a secondary delegation element computation unit; and a user secret key output unit, wherein

the secret element w storage unit, using the storage device and as a part of a master secret key in the secure search system, stores an element w' which is an element of a multiplicative group G2 of an order p;

the secret element a storage unit, using the storage device and as a part of the master secret key, stores (D+2) number of elements $a'_n$ (n being an integer from 0 to D+1) which are elements of the multiplicative group G2;

the secret element b storage unit, using the storage device and as a part of the master secret key, stores (D+2) number of elements $b'_n$ which are elements of the multiplicative group G2;

the secret element y storage unit, using the storage device and as a part of the master secret key, stores (D+2) $\times$(D+1) number of elements $y'_{n,l}$ (l being an integer from 0 to D) which are elements of the multiplicative group G2;

the user identifier input unit, using the processing device and for a query issuing device requesting generation of a user secret key out of the plurality of the query issuing devices, inputs L number of integers $I_i$ as a user identifier of the query issuing device;

the random number p selection unit, using the processing device, randomly selects (D+2) number of integers $\rho_n$ out of integers from 0 to less than p;

the secondary random number p selection unit, using the processing device, randomly selects $(D+2) \times (D+2)$ number of integers $\rho_{n,m}$ (m being an integer from 0 to D+1) out of integers from 0 to less than p;

the total product element Y computation unit, using the processing device and based on the L number of integers $I_i$ input by the user identifier input unit and (D+2) number of elements $y'_{n,0}$ and $(D+2) \times L$ number of elements $y'_{n,i}$ out of the $(D+2) \times (D+1)$ number of elements $y'_{n,l}$ stored by the secret element y storage unit, calculates the element $y'_{n,i}$ raised to a power of $I_i$ for each of $(D+2) \times (D+1)$ number of combinations (n,i) which are combinations of (D+2) number of integers n from 0 to (D+1) and (D+1) number of integers i from 1 to L, and calculates a total product of the element $y'_{n,0}$ and the L number of elements $y'_{n,i}$ raised to the power of $I_i$ for each of the (D+2) number of integers n from 0 to (D+1), thereby computing (D+2) number of elements $\Pi_{Y,n}$ which are elements of the multiplicative group G2;

the search element computation unit, using the processing device and based on the element w' stored by the secret element w storage unit, the (D+2) number of integers $\rho_n$ selected by the random number $\rho$ selection unit, and the (D+2) number of elements $\Pi_{Y,n}$ computed by the total product element Y computation unit, calculates the element $\Pi_{Y,n}$ raised to a power of $\rho_n$ for each of the (D+2) number of integers n from 0 to (D+1), and calculates a total product of the element w' and the (D+2) number of elements $\Pi_{Y,n}$ raised to the power of $\rho_n$, thereby computing an element $k_0$ which is an element of the multiplicative group G2;

the search element a computation unit, using the processing device and based on the (D+2) number of elements $a'_n$ stored by the secret element a storage unit and the (D+2) number of integers $\rho_n$ selected by the random number p selection unit, calculates the element $a'_n$ raised to a power of $(-\rho_n)$ for each of the (D+2) number of integers n from 0 to (D+1), thereby computing (D+2) number of elements $k_{n,(a)}$ which are elements of the multiplicative group G2;

the search element b computation unit, using the processing device and based on the (D+2) number of elements $b'_n$ stored by the secret element b storage unit and the (D+2) number of integers $\rho_n$ selected by the random number p selection unit, calculates the element $b'_n$ raised to a power of $(-\rho_n)$ for each of the (D+2) number of integers n from 0 to (D+1), thereby computing (D+2) number of elements $k_{n,(b)}$ which are elements of the multiplicative group G2;

the derangement element computation unit, using the processing device and based on the $(D+2) \times \alpha(D+2)$ number of integers $\rho_{n,m}$ selected by the secondary random number $\rho$ selection unit and the $(D+2)$ number of elements $\Pi_{Y,n}$ computed by the total product element Y computation unit, calculates the element $\Pi_{Y,n}$ raised to a power of $\rho_{n,m}$ for each of $(D+2) \times (D+2)$ number of combinations $(n,m)$ which are combinations of the $(D+2)$ number of integers $n$ from 0 to $(D+1)$ and $(D+2)$ number of integers $m$ from 0 to $(D+1)$, and calculates a total product of the $(D+2)$ number of elements $\Pi_{Y,n}$ raised to the power of $\rho_{n,m}$ for each of the $(D+2)$ number of integers $m$ from 0 to $(D+1)$, thereby computing $(D+2)$ number of elements $f_{m,0}$ which are elements of the multiplicative group G2;

the derangement element a computation unit, using the processing device and based on the $(D+2)$ number of elements $a'_n$ stored by the secret element a storage unit and the $(D+2) \times (D+2)$ number of integers $\rho_{n,m}$ selected by the secondary random number $\rho$ selection unit, calculates the element $a'_n$ raised to a power of $(-\rho_{n,m})$ for each of the $(D+2) \times (D+2)$ number of combinations $(n,m)$ which are combinations of the $(D+2)$ number of integers $n$ from 0 to $(D+1)$ and the $(D+2)$ number of integers $m$ from 0 to $(D+1)$, thereby computing $(D+2) \times (D+2)$ number of elements $f_{m,n,(a)}$ which are elements of the multiplicative group G2;

the derangement element b computation unit, using the processing device and based on the $(D+2)$ number of elements $b'_n$ stored by the secret element b storage unit and the $(D+2) \times (D+2)$ number of integers $\rho_{n,m}$ selected the secondary random number $\rho$ selection unit, calculates the element $b'_n$ raised to a power of $(-\rho_{n,m})$ for each of the $(D+2) \times (D+2)$ number of combinations $(n,m)$ which are combinations of the $(D+2)$ number of integers $n$ from 0 to $(D+1)$ and the $(D+2)$ number of integers $m$ from 0 to $(D+1)$, thereby computing $(D+2) \times (D+2)$ number of elements $f_{m,n,(b)}$ which are elements of the multiplicative group G2;

the delegation element computation unit, using the processing device and based on $(D+2)$ number of elements $y'_{n,A}$ (A being an integer selected out of integers from more than L to D) out of the $(D+2) \times (D+1)$ number of elements $y'_{n,I}$ stored by the secret element y storage unit and the $(D+2)$ number of integers $\rho_n$ selected by the random number $\rho$ selection unit, calculates the element $y'_{n,A}$ raised to a power of $\rho_n$ for each of the $(D+2)$ number of integers $n$ from 0 to $(D+1)$, and calculates a total product of the $(D+2)$ number of elements $y'_{n,A}$ raised to the power of $\rho_n$, thereby computing an element $h_A$ which is an element of the multiplicative group G2;

the secondary delegation element computation unit, using the processing device and based on $(D+2)$ number of elements $y'_{n,A}$ out of the $(D+2) \times (D+1)$ number of elements $y'_{n,I}$ stored by the secret element y storage unit and the $(D+2) \times (D+2)$ number of integers $\rho_{n,m}$ selected by the secondary random number $\rho$ selection unit, calculates the element $y'_{n,A}$ raised to a power of $\rho_{n,m}$ for each of the $(D+2) \times (D+2)$ number of combinations $(n, m)$ which are combinations of the $(D+2)$ number of integers $n$ from 0 to $(D+1)$ and the $(D+2)$ number of integers $m$ from 0 to $(D+1)$, and calculates a total product of the $(D+2)$ number of elements $y'_{n,A}$ raised to the power of $\rho_{n,m}$ for each of the $(D+2)$ number of integers $m$ from 0 to $(D+1)$, thereby computing $(D+2)$ number of elements $h_{m,A}$ which are elements of the multiplicative group G2; and

the user secret key output unit, using the processing device and as the user secret key of the query issuing device, outputs a combination of the element $k_0$ computed by the search element computation unit, the $(D+2)$ number of elements $k_{n,(a)}$ computed by the search element a computation unit, the $(D+2)$ number of elements $k_{n,(b)}$ computed by the search element b computation unit, the $(D+2)$ number of elements $f_{m,0}$ computed by the derangement element computation unit, the $(D+2) \times (D+2)$ number of elements $f_{m,n,(a)}$ computed by the derangement element a computation unit, the $(D+2) \times (D+2)$ number of elements $f_{m,n,(b)}$ computed by the derangement element b computation unit, the element $h_A$ computed the delegation element computation unit, and the $(D+2)$ number of elements $h_{m,A}$ computed by the secondary delegation element computation unit.

6. A query issuing device that generates a query for searching for a keyword in a secure search system that encrypts the keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than $p$, and $p$ being a prime number), the query issuing device comprising:

a storage device that stores data; a processing device that processes data; a user identifier storage unit; a search element storage unit; a search element a storage unit; a search element b storage unit; a derangement element storage unit; a derangement element a storage unit; a derangement element b storage unit; a delegation element storage unit; a secondary delegation element storage unit; a search keyword input unit; a random number $\pi$ selection unit; an inquiry element computation unit; an inquiry element a computation unit; an inquiry element b computation unit; and a query output unit, wherein

the user identifier storage unit, using the storage device and as the user identifier of the query issuing device, stores L number of integers $I_i$;

the search element storage unit, using the storage device and as a part of a user secret key of the query issuing device, stores an element $k_0$ which is an element of a multiplicative group G2 of an order p;

the search element a storage unit, using the storage device and as a part of the user secret key, stores (D+2) number of elements $k_{n,(a)}$ (n being an integer from 0 to D+1) which are elements of the multiplicative group G2;

the search element b storage unit, using the storage device and as a part of the user secret key, stores (D+2) number of elements $k_{n,(b)}$ which are elements of the multiplicative group G2;

the derangement element storage unit, using the storage device and as a part of the user secret key, stores (D+2) number of elements $f_{m,0}$ (m being an integer from 0 to D+1) which are elements of the multiplicative group G2;

the derangement element a storage unit, using the storage device and as a part of the user secret key, stores (D+2)×(D+2) number of elements $f_{m,n,(a)}$ which are elements of the multiplicative group G2;

the derangement element b storage unit, using the storage device and as a part of the user secret key, stores (D+2)×(D+2) number of elements $f_{m,n,(b)}$ which are elements of the multiplicative group G2;

the delegation element storage unit, using the storage device and as a part of the user secret key, stores an element $h_{L+1}$ which is an element of the multiplicative group G2;

the secondary delegation element storage unit, using the storage device and as a part of the user secret key, stores (D+2) number of elements $h_{m,L+1}$ which are elements of the multiplicative group G2;

the search keyword input unit, using the processing device and as a keyword to be searched for, inputs an integer W from 0 to less than p;

the random number $\pi$ selection unit, using the processing device, randomly selects (D+2) number of integers $\pi_m$ out of integers from 0 to less than p;

the inquiry element computation unit, using the processing device and based on the element $k_0$ stored by the search element storage unit, the (D+2) number of elements $f_{m,0}$ stored by the derangement element storage unit, the element $h_A$ stored by the delegation element storage unit, the (D+2) number of elements $h_{m,A}$ stored by the secondary delegation element storage unit, the integer W input by the search keyword input unit, and the (D+2) number of integers $\pi_m$ selected by the random number $\pi$ selection unit, calculates the element $h_{m,A}$ raised to a power of $\pi_m$ for each of (D+2) number of integers m from 0 to (D+1), calculates a total product $\Pi_H$ of the element $h_A$ and the (D+2) number of elements $h_{m,A}$ raised to the power of $\pi_m$, calculates the element $f_{m,0}$ raised to a power of $\pi_m$ for each of the (D+2) number of integers m from 0 to (D+1), calculates the total product $\Pi_H$ raised to a power of W, and calculates a total product of the element $k_0$, the (D+2) number of elements $f_{m,0}$ raised to the power of $\pi_m$, and the total product $\Pi_H$ raised to the power of W, thereby computing an element $k'_0$ which is an element of the multiplicative group G2;

the inquiry element a computation unit, using the processing device and based on the (D+2) number of elements $k_{n,(a)}$ stored by the search element a storage unit, the (D+2)$\pi$(D+2) number of elements $f_{m,n,(a)}$ stored by the derangement element a storage unit, and the (D+2) number of integers $\pi$m selected by the random number $\pi$ selection unit, calculates the element $f_{m,n,(a)}$ raised to a power of $\pi_m$ for each of (D+2)$\pi$(D+2) number of combinations (n,m) which are combinations of (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2;

the inquiry element b computation unit, using the processing device and based on the (D+2) number of elements $k_{n,(b)}$ stored by the search element b storage unit, the (D+2)×(D+2) number of elements $f_{m,n,(b)}$ stored by the derangement element b storage unit, and the (D+2) number of integers $\pi_m$ selected by the random number $\pi$ selection unit, calculates the element $f_{m,n,(b)}$ raised to a power of $\pi_m$ for each of the (D+2)×(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $f_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2; and

the query output unit, using the processing device and as a query for searching with the integer W as the keyword, outputs a combination of the L number of integers $I_i$ stored by the user identifier storage unit, the element $k'_0$ computed by the inquiry element computation unit, the (D+2) number of elements $k'_{n,(a)}$ computed by the inquiry element a computation unit, and the (D+2) number of elements $k'_{n,(b)}$ computed by the inquiry element b computation unit.

7. A search device that searches for a keyword in a secure search system that encrypts the keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the search device comprising:

a storage device that stores data; a processing device that processes data; a ciphertext storage unit; a query input unit; a pairing element computation unit; a pairing element A computation unit; a pairing element B computation unit; a comparison element computation unit; and a comparison unit, wherein

the ciphertext storage unit, using the storage device and as a ciphertext in which the keyword is embedded, stores a combination of an element $R$ which is an element of a multiplicative group $G3$ of an order $p$, an element $E$ which is an element of the multiplicative group $G3$, an element $c_0$ which is an element of a multiplicative group $G1$ of an order $p$, $(D+2)$ number of elements $c_{n,(a)}$ which are elements of the multiplicative group $G1$, $(D+2)$ number of elements $c_{n,(b)}$ which are elements of the multiplicative group $G1$, $(D+2) \times (L'-L'')$ number of elements $c_{n,j',(a)}$ ($L'$ being an arbitrary integer from 1 to less than $D$, $L''$ being an arbitrary integer from 0 to $L'$, and $j'$ being $(L'-L'')$ number of integers arbitrarily selected out of integers from 1 to $L'$) which are elements of the multiplicative group $G1$, and $(D+2) \times (L'-L'')$ number of elements $c_{n,j',(b)}$ which are elements of the multiplicative group $G1$;

the query input unit, using the processing device and as a query for searching for a keyword, inputs a combination of $L$ number of integers $l_i$, an element $k'_0$ which is an element of a multiplicative group $G2$ of an order $p$, $(D+2)$ number of elements $k'_{n,(a)}$ which are elements of the multiplicative group $G2$, and $(D+2)$ number of elements $k'_{n,(b)}$ which are elements of the multiplicative group $G2$;

the pairing element computation unit, using the processing device and based on the element $c_0$ included in the ciphertext stored by the ciphertext storage unit and the element $k'_0$ included in the query input by the query input unit, maps a pair of the element $c_0$ and the element $k'_0$ by the bilinear pairing $e$, thereby computing an element $e_0$ which is an element of the multiplicative group $G3$;

the pairing element A computation unit, using the processing device and based on the $(D+2)$ number of elements $c_{n,(a)}$ and the $(D+2) \times (L'-L'')$ number of elements $c_{n,j',(a)}$ included in the ciphertext stored by the ciphertext storage unit and the $L$ number of integers $l_i$ and the $(D+2)$ number of elements $k'_{n,(a)}$ included in the query input by the query input unit, calculates the element $c_{n,i',(a)}$ raised to a power of $l_{-i'}$ for each of $(D+2) \times L_A$ number of combinations $(n,i')$ which are combinations of $(D+2)$ number of integers $n$ from 0 to $(D+1)$ and $L_A$ number of integers $i'$ from 1 to $L$ out of $(L'-L'')$ number of integers $j'$ which are subscripts of the $(D+2) \times (L'-L'')$ number of elements $c_{n,j',(a)}$, calculates a total product $\Pi_{A',n}$ of the element $c_{n,(a)}$ and the $L_A$ number of elements $c_{n,i',(a)}$ raised to the power of $l_{-i'}$ for each of the $(D+2)$ number of integers $n$ from 0 to $(D+1)$, and maps a pair of the total product $\Pi_{A',n}$ and the element $k'_{n,(a)}$ by the bilinear pairing $e$ for each of the $(D+2)$ number of integers $n$ from 0 to $(D+1)$, thereby computing $(D+2)$ number of elements $e_{A,n}$ which are elements of the multiplicative group $G3$;

the pairing element B computation unit, using the processing device and based on the $(D+2)$ number of elements $c_{n,(b)}$ and the $(D+2) \times (L'-L'')$ number of elements $c_{n,j',(b)}$ included in the ciphertext stored by the ciphertext storage unit and the $L$ number of integers $l_i$ and the $(D+2)$ number of elements $k'_{n,(b)}$ included in the query input by the query input unit, calculates the element $c_{n,i',(b)}$ raised to a power of $l_{-i'}$ for each of the $(D+2) \times L_A$ number of combinations $(n,i')$ which are combinations of the $(D+2)$ number of integers $n$ from 0 to $(D+1)$ and the $L_A$ number of integers $i'$ from 1 to $L$ out of the $(L'-L'')$ number of integers $j'$ which are the subscripts of the $(D+2) \times (L'-L'')$ number of elements $c_{n,j',(b)}$, calculates a total product $\Pi_{B',n}$ of the element $c_{n,(b)}$ and the $L_A$ number of elements $c_{n,i',(b)}$ raised to the power of $l_{-i'}$, for each of the $(D+2)$ number of integers $n$ from 0 to $(D+1)$, and maps a pair of the total product $\Pi_{B',n}$ and the element $k'_{n,(b)}$ by the bilinear pairing $e$ for each of the $(D+2)$ number of integers $n$ from 0 to $(D+1)$, thereby computing $(D+2)$ number of elements $e_{B,n}$ which are elements of the multiplicative group $G3$;

the comparison element computation unit, using the processing device and based on the element $E$ included in the ciphertext stored by the ciphertext storage unit, the element $e_0$ computed by the pairing element computation unit, the $(D+2)$ number of elements $e_{A,n}$ computed by the pairing element A computation unit, and the $(D+2)$ number of elements $e_{B,n}$ computed by the pairing element B computation unit, calculates a total product of the element $E$, the element $e_0$, the $(D+2)$ number of elements $e_{A,n}$, and the $(D+2)$ number of elements $e_{B,n}$, thereby computing an element $R'$ which is an element of the multiplicative group $G3$; and

the comparison unit, using the processing device, compares the element $R$ included in the ciphertext stored by the ciphertext storage unit and the element $R'$ computed by the comparison element computation unit and determines a hit for searching if the element $R$ matches the element $R'$.

**8.** A computer program that, by being executed by a computer having a storage device that stores data and a processing device that processes data, causes the computer to function as at least any one of the public parameter generation device of claim 3, the encryption device of claim 4, the user secret key generation device of claim 5, the query issuing device of claim 6, and the search device of claim 7.

**9.** A secure search method by which a secure search system having a public parameter generation device, an encryption device, a user secret key generation device, a query issuing device, and a search device encrypts a keyword and searches for the keyword in an encrypted state based on a request from at least any one of a plurality of query issuing devices having, as a user identifier, less than D number (D being an integer of 2 or greater) of integers $l_i$ (i being an integer from 1 to L, L being an arbitrary integer of less than D, $l_i$ being an integer from 0 to less than p, and p being a prime number), the secure search method, wherein

the public parameter generation device has a processing device that processes data, a random number $\omega$ selection unit, a random number $\alpha$ selection unit, a random number $\beta$ selection unit, a random number $\theta$ selection unit, a public element $\Omega$ computation unit, a public element a computation unit, and a public element b computation unit, a secret element w computation unit, a secret element a computation unit, a secret element b computation unit, a secret element y computation unit, a public parameter output unit, and a master secret key output unit;

the random number $\omega$ selection unit, using the processing device, randomly selects an integer $\omega$ out of integers from 1 to less than p;

the random number $\alpha$ selection unit, using the processing device, randomly selects (D+2) number of integers $\alpha_n$ (n being an integer from 0 to D+1) out of integers from 1 to less than p;

the random number $\beta$ selection unit, using the processing device, randomly selects (D+2) number of integers $\beta_n$ out of integers from 1 to less than p;

the random number $\theta$ selection unit, using the processing device, randomly selects (D+2)$\times$(D+1) number of integers $\theta_{n,l}$(1 being an integer from 0 to D) out of integers from 1 to less than p;

the public element a computation unit, using the processing device and based on a generator $g_1$ of a multiplicative group G1 of an order of the prime number p, the (D+2) number of integers $\alpha_n$ selected by the random number $\alpha$ selection unit, and the (D+2)$\times$(D+1) number of integers $\theta_{n,1}$ selected by the random number $\theta$ selection unit, calculates the generator $g_1$ raised to a power of $(\alpha_n\times\theta_{n,1})$ for each of (D+2)$\times$(D+1) number of combinations (n,l) which are combinations of (D+2) number of integers n from 0 to (D+1) and (D+1) number of integers 1 from 0 to D, thereby computing (D+2)$\times$(D+1) number of elements $a_{n,1}$ which are elements of the multiplicative group G1;

the public element b computation unit, using the processing device and based on the generator $g_1$ of the multiplicative group G1, the (D+2) number of integers $\beta_n$ selected by the random number $\beta$ selection unit, and the (D+2)$\times$(D+1) number of integers $\theta_{n,1}$ selected by the random number $\theta$ selection unit, calculates the generator $g_1$ raised to a power of $(\beta_n\times\theta_{n,1})$ for each of the (D+2)$\times$(D+1) number of combinations (n,l) which are combinations of the (D+2) number of integers n from 0 to (D+1) and the (D+1) number of integers 1 from 0 to D, thereby computing (D+2)$\times$(D+1) number of elements $b_{n,1}$ which are elements of the multiplicative group G1;

the secret element w computation unit, using the processing device and based on a generator $g_2$ of a multiplicative group G2 of an order of the prime number p and the integer $\omega$ selected by the random number $\omega$ selection unit, calculates the generator $g_2$ raised to a power of $\omega$, thereby computing an element w' which is an element of the multiplicative group G2;

the public element $\Omega$ computation unit, using the processing device and based on a generator $g_3$ of a multiplicative group G3 of an order p and the integer $\omega$ selected the random number $\omega$ selection unit, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3;

the secret element a computation unit, using the processing device and based on the generator $g_2$ of the multiplicative group G2 and the (D+2) number of integers $\alpha_n$ selected by the random number $\alpha$ selection unit, calculates the generator $g_2$ raised to a power of $\alpha_n$ for each of the (D+2) number of integers n from 0 to (D+1), thereby computing (D+2) number of elements $a'_n$ which are elements of the multiplicative group G2;

the secret element b computation unit, based on the generator $g_2$ of the multiplicative group G2 and the (D+2) number of integers $\beta_n$ selected by the random number $\beta$ selection unit, calculates the generator $g_2$ raised to a power of $\beta_n$ for each of the (D+2) number of integers n from 0 to (D+1), thereby computing (D+2) number of elements $b'_n$ which are elements of the multiplicative group G2;

the secret element y computation unit, using the processing device and based on the generator $g_2$ of the multiplicative group G2, the (D+2) number of integers $\alpha_n$ selected by the random number $\alpha$ selection unit, the (D+2) number of integers $\beta_n$ selected by the random number $\beta$ selection unit, and the (D+2)$\times$(D+1) of integers $\theta_{n,l}$ selected by the random number $\theta$ selection unit, calculates the generator $g_2$ raised to a power of $(\alpha_n\times\beta_n\times\theta_{n,l})$ for each of the (D+2)$\times$(D+1) number of combinations (n,l) which are combinations of the (D+2) number of integers n from 0 to (D+1) and the (D+2) number of integers 1 from 0 to D, thereby computing (D+2)$\times$(D+1) number of elements $y'_{n,l}$ which are elements of the multiplicative group G2;

the public parameter output unit, using the processing device and as a public parameter in the secure search system, outputs the element $\Omega$ computed by the public element $\Omega$ computation unit, the (D+2)$\times$(D+1) number of elements $a_{n,l}$ computed by the public element a computation unit, and the (D+2)$\times$(D+1) number of elements

$b_{n,1}$ computed by the public element b computation unit;

the master secret key output unit, using the processing device and as a master secret key in the secure search system, outputs the element w' computed by the secret element w computation unit, the (D+2) number of elements $a'_n$ computed by the secret element a computation unit, the (D+2) number of elements $b'_n$ computed by the secret element b computation unit, and the (D+2)×(D+1) number of elements $y'_{n,l}$ computed by the secret element y computation unit;

the encryption device has a storage device that stores data, a processing device that processes data, a public element $\Omega$ storage unit, a public element a storage unit, a public element b storage unit, an embedded keyword input unit, an authorization range input unit, a random number r selection unit, a secondary random number r selection unit, a random element selection unit, a verification element computation unit, a cipher element computation unit, a cipher element a computation unit, a cipher element b computation unit, a cipher partial element a computation unit, a cipher partial element b computation unit, and a ciphertext output unit;

the public element $\Omega$ storage unit, using the storage device, stores the element $\Omega$ output as the public parameter by the public parameter generation device;

the public element a storage unit, using the storage device, stores the (D+2)×(D+1) number of elements $a_{n,1}$ output as the public parameter by the public parameter generation device;

the public element b storage unit, using the storage device, stores the (D+2)×(D+1) number of elements $b_{n,1}$ output as the public parameter by the public parameter generation device;

the embedded keyword input unit, using the processing device and as the keyword to be encrypted, inputs an integer W' from 0 to less than p;

the authorization range input unit, using the processing device and as data specifying a range of query issuing devices having an authorization to search for the keyword, inputs an integer L' (L' being an arbitrary integer from 1 to less than D) and L" number of integers $l'_j$ (L" being an arbitrary integer from 0 to L', j being L" number of integers arbitrarily selected out of integers from 1 to L', and $l'_j$ being an integer from 0 to less than p);

the random number r selection unit, using the processing device, randomly selects an integer r out of integers from 0 to less than p;

the secondary random number r selection unit, using the processing device, randomly selects (D+2) number of integers $r_n$ out of integers from 0 to less than p;

the random element selection unit, using the processing device, randomly selects an element R out of elements of the multiplicative group G3;

the verification element computation unit, using the processing device and based on the element $\Omega$ stored by the public element $\Omega$ storage unit, the integer r selected by the random number r selection unit, and the element R selected by the random element selection unit, calculates a product of the element $\Omega$ raised to a power of (-r) and the element R, thereby computing an element E which is an element of the multiplicative group G3;

the cipher element computation unit, using the processing device and based on the generator $g_1$ of the multiplicative group G1 and the integer r selected by the random number r selection unit, calculates the generator $g_1$ raised to a power of r, thereby computing an element $c_0$ which is an element of the multiplicative group G1;

the cipher element a computation unit, using the processing device and based on the integer L' and the L" number of integers $l'_j$ input by the authorization range input unit, (D+2) number of elements $b_{n,0}$, (D+2)×L" number of elements $b_{n,l'}$, and (D+2) number of elements $b_{n,\Lambda'}$ ($\Lambda'$ being an integer selected out of integers from more than L' to D) out of the (D+2)×(D+1) number of elements $b_{n,l}$ stored by the public element b storage unit, the integer W' input by the embedded keyword input unit, and the (D+2) number of integers $r_n$ selected by the secondary random number r selection unit, calculates the element $b_{n,j}$ raised to a power of $l_j$ for each of (D+2)×L" number of combinations (n,j) which are combinations of the (D+2) number of integers n from 0 to (D+1) and subscripts j of the L" number of integers $l'_j$, calculates the element $b_{n,\Lambda'}$ raised to a power of W' for each of the (D+2) number of integers n from 0 to (D+1), calculates a total product $\Pi_{B,n}$ of the element $b_{n,0}$, the L" number of elements $b_{n,j}$ raised to the power of $l'_j$, and the element $b_{n,\Lambda'}$ raised to the power of W' for each of the (D+2) number of integers n from 0 to (D+1), and calculates the calculated total product $\Pi_{B,n}$ raised to a power of $r_n$ for each of the (D+2) number of integers n from 0 to (D+1), thereby computing (D+2) number of elements $c_{n,(a)}$ which are elements of the multiplicative group G1;

the cipher element b computation unit, using the processing device and based on the integer L' and the L" number of integers $l'_j$ input by the authorization range input unit, (D+2) number of elements $a_{n,0}$, (D+2)×L" number of elements $a_{n,j'}$, and (D+2) number of elements $a_{n,\Lambda'}$ out of the (D+2)×(D+1) number of elements $a_{n,l}$ stored by the public element a storage unit, the integer W' input by the embedded keyword input unit, the integer r selected by the random number r selection unit, and the (D+2) number of integers $r_n$ selected by the secondary random number r selection unit, calculates the element $a_{n,j}$ raised to a power of $l_j$ for each of the (D+2)×L" number of combinations (n,j) which are combinations of the (D+2) number of integers n from 0 to (D+1) and the subscripts j of the L" number of integers $l'_j$, calculates the element $a_{n,\Lambda'}$ raised to a power of W' for each of the (D+2) number of integers n from 0 to (D+1), calculates a total product $\Pi_{A,n}$ of the element $a_{n,0}$, the L" number of elements $a_{n,j}$ raised to the power of $l'_j$, and the element $a_{n,\Lambda'}$ raised to the power of W' for each of the (D+2) number of integers n from 0 to (D+1), and calculates the calculated total product $TT_{A,n}$ raised to a power of $(r-r_n)$ for each of the (D+2) number of integers n from 0 to (D+1), thereby computing (D+2) number of elements $C_{n,(a)}$ which are elements of the multiplicative group G1;

the cipher partial element a computation unit, using the processing device and based on the integer L' and the subscripts j of the L" number of integers $l'_j$ input by the authorization range input unit, (D+2)×(L'-L") number of elements $b_{n,j'}$ (j' being (L'-L") number of integers other than the L" number of subscripts j out of integers from 1 to L') out of the (D+2)×(D+1) number of elements $b_{n,1}$ stored by the public element b storage unit, and the (D+2) number of integers $r_n$ selected by the secondary random number r selection unit, calculates the element $b_{n,j'}$ raised to a power of $r_n$ for each of (D+2) × (L'-L") number of combinations (n,j') which are combinations of the (D+2) number of integers n from 0 to (D+1) and (L'-L") number of integers j' other than the L" number of subscripts j out of integers from 1 to L', thereby computing (D+2)×(L'-L") number of elements $C_{n,j',(a)}$ which are elements of the multiplicative group G1;

the cipher partial element b computation unit, using the processing device and based on the integer L' and the subscripts j of the L" number of integers $l'_j$ input by the authorization range input unit, (D+2)×(L'-L") number of elements $a_{n,j'}$ out of the (D+2)×(D+1) number of elements $a_{n,1}$ stored by the public element a storage unit, the integer r selected by the random number r selection unit, and the (D+2) number of integers $r_n$ selected by the secondary random number r selection unit, calculates the element $b_{n,j'}$ raised to a power of $(r-r_n)$ for each of the (D+2)×(L'-L") number of combinations (n,j') which are combinations of the (D+2) number of integers n from 0 to (D+1) and the (L'-L") number of integers j' other than the L" number of subscripts j out of integers from 1 to less than L', thereby computing (D+2)×(L'-L") number of elements $c_{n,j',(b)}$ which are elements of the multiplicative group G1;

the ciphertext output unit, using the processing device and as a ciphertext in which the integer W' is embedded as the keyword, outputs the element R selected by the random element selection unit, the element E computed by the verification element computation unit, the element $c_0$ computed by the cipher element computation unit, the (D+2) number of elements $c_{n,(a)}$ computed by the cipher element a computation unit, the (D+2) number of elements $c_{n,(b)}$ computed by the cipher element b computation unit, the (D+2)×(L'-L") number of elements $c_{n,j',(a)}$ computed by the cipher partial element a computation unit, and the (D+2)×(L'-L") number of elements $c_{n,j',(b)}$ computed by the cipher partial element b computation unit;

the user secret key generation device has a storage device that stores data, a processing device that processes data, a secret element w storage unit, a secret element a storage unit, a secret element b storage unit, a secret element y storage unit, a user identifier input unit, a random number $\rho$ selection unit, a secondary random number $\rho$ selection unit, a total product element Y computation unit, a search element computation unit, a search element a computation unit, a search element b computation unit, a derangement element computation unit, a derangement element a computation unit, a derangement element b computation unit, a delegation element computation unit, a secondary delegation element computation unit, and a user secret key output unit;

the secret element w storage unit, using the storage device, stores the element w' output as the master secret key by the public parameter generation device;

the secret element a storage unit, using the storage device, stores the (D+2) number of elements $a'_n$ output as the master secret key by the public parameter generation device;

the secret element b storage unit, using the storage device, stores the (D+2) number of elements $b'_n$ output as the master secret key by the public parameter generation device;

the secret element y storage unit, using the storage device, stores the (D+2)×(D+1) number of elements $y'_{n,1}$ output as the master secret key by the public parameter generation device;

the user identifier input unit, using the processing device and for a query issuing device requesting generation of a user secret key out of the plurality of the query issuing devices, inputs L number of integers $l_i$ as a user identifier of the query issuing device;

the random number $\rho$ selection unit, using the processing device, randomly selects (D+2) number of integers $\rho_n$ out of integers from 0 to less than p;

the secondary random number $\rho$ selection unit, using the processing device, randomly selects (D+2)×(D+2) number of integers $\rho_{n,m}$ (m being an integer from 0 to D+1) out of integers from 0 to less than p;

the total product element Y computation unit, using the processing device and based on the L number of integers $l_i$ input by the user identifier input unit and (D+2) number of elements $y'_{n,0}$ and (D+2)×L number of elements $y'_{n,i}$ out of the (D+2)×(D+1) number of elements $y'_{n,1}$ stored by the secret element y storage unit, calculates the element $y'_{n,i}$ raised to a power of $l_i$ for each of (D+2)×(D+1) number of combinations (n,i) which are combinations of the (D+2) number of integers n from 0 to (D+1) and (D+1) number of integers i from 1 to L, and calculates a total product of the element $y'_{n,0}$ and the L number of elements $y'_{n,i}$ raised to the power of $l_i$ for

each of the (D+2) number of integers n from 0 to (D+1), thereby computing (D+2) number of elements $II_{Y,n}$ which are elements of the multiplicative group G2;

the search element computation unit, using the processing device and based on the element w' stored by the secret element w storage unit, the (D+2) number of integers $\rho_n$ selected by the random number $\rho$ selection unit, and the (D+2) number of elements $II_{Y,n}$ computed by the total product element Y computation unit, calculates the element $II_{Y,n}$ raised to a power of $\rho_n$ for each of the (D+2) number of integers n from 0 to (D+1), and calculates a total product of the element w' and the (D+2) number of elements $II_{Y,n}$ raised to the power of $\rho_n$, thereby computing an element $k_0$ which is an element of the multiplicative group G2;

the search element a computation unit, using the processing device and based on the (D+2) number of elements $a'_n$ stored by the secret element a storage unit and the (D+2) number of integers $\rho_n$ selected by the random number $\rho$ selection unit, calculates the element $a'_n$ raised to a power of $(-\rho_n)$ for each of the (D+2) number of integers n from 0 to (D+1), thereby computing (D+2) number of elements $k_{n,(a)}$ which are elements of the multiplicative group G2;

the search element b computation unit, using the processing device and based on the (D+2) number of elements $b'_n$ stored by the secret element b storage unit and the (D+2) number of integers $\rho_n$ selected by the random number $\rho$ selection unit, calculates the element $b'_n$ raised to a power of $(-\rho_n)$ for each of the (D+2) number of integers n from 0 to (D+1), thereby computing (D+2) number of elements $k_{n,(b)}$ which are elements of the multiplicative group G2;

the derangement element computation unit, using the processing device and based on the $(D+2)\times(D+2)$ number of integers $\rho_{n,m}$ selected by the secondary random number $\rho$ selection unit and the (D+2) number of elements $\Pi_{Y,n}$ computed by the total product element Y computation unit, calculates the element $\Pi_{Y,n}$ raised to a power of $\rho_{n,m}$ for each of $(D+2)\times(D+2)$ number of combinations (n,m) which are combinations of the (D+2) number of integers n from 0 to (D+1) and (D+2) number of integers m from 0 to (D+1), and calculates a total product of the (D+2) number of elements $\Pi_{Y,n}$ raised to the power of $\rho_{n,m}$ for each of the (D+2) number of integers m from 0 to (D+1), thereby computing (D+2) number of elements $f_{m,0}$ which are elements of the multiplicative group G2;

the derangement element a computation unit, using the processing device and based on the (D+2) number of elements $a'_n$ stored by the secret element a storage unit and the $(D+2)\times(D+2)$ number of integers $\rho_{n,m}$ selected by the secondary random number $\rho$ selection unit, calculates the element $a'_n$ raised to a power of $(-\rho_{n,m})$ for each of the $(D+2)\times(D+2)$ number of combinations (n,m) which are combinations of the (D+2) number of integers n from 0 to (D+1) and the (D+2) number of integers m from 0 to (D+1), thereby computing $(D+2)\times(D+2)$ number of elements $f_{m,n,(a)}$ which are elements of the multiplicative group G2;

the derangement element b computation unit, using the processing device and based on the (D+2) number of elements $b'_n$ stored by the secret element b storage unit and the $(D+2)x(D+2)$ number of integers $\rho_{n,m}$ selected the secondary random number $\rho$ selection unit, calculates the element $b'_n$ raised to a power of $(-\rho_{n,m})$ for each of the $(D+2)\times(D+2)$ number of combinations (n,m) which are combinations of the (D+2) number of integers n from 0 to (D+1) and the (D+2) number of integers m from 0 to (D+1), thereby computing $(D+2)\times(D+2)$ number of elements $f_{m,n,(b)}$ which are elements of the multiplicative group G2;

the delegation element computation unit, using the processing device and based on (D+2) number of elements $y'_{n,\Lambda}$ (Λ being an integer selected out of integers from more than L to D) out of the $(D+2)\times(D+1)$ number of elements $y'_{n,1}$ stored by the secret element y storage unit and the (D+2) number of integers $\rho_n$ selected by the random number p selection unit, calculates the element $y'_{n,\Lambda}$ raised to a power of $\rho_n$ for each of the (D+2) number of integers n from 0 to (D+1), and calculates a total product of the (D+2) number of elements $y'_{n,j}$ raised to the power of $\rho_n$, thereby computing an element $h_\Lambda$ which is an element of the multiplicative group G2;

the secondary delegation element computation unit, using the processing device and based on (D+2) number of elements $y'_{n,\Lambda}$ out of the $(D+2)\times(D+1)$ number of elements $y'_{n,1}$ stored by the secret element y storage unit and the $(D+2)\times(D+2)$ number of integers $\rho_{n,m}$ selected by the secondary random number p selection unit, calculates the element $y'_{n,\Lambda}$ raised to a power of $\rho_{n,m}$ for each of the $(D+2)\times(D+2)$ number of combinations (n, m) which are combinations of the (D+2) number of integers n from 0 to (D+1) and the (D+2) number of integers m from 0 to (D+1), and calculates a total product of the (D+2) number of elements $y'_{n,\Lambda}$ raised to the power of $\rho_{n,m}$ for each of the (D+2) number of integers m from 0 to (D+1), thereby computing (D+2) number of elements $h_{m,\Lambda}$ which are elements of the multiplicative group G2;

the user secret key output unit, using the processing device and as the user secret key of the query issuing device, outputs a combination of the element $k_0$ computed by the search element computation unit, the (D+2) number of elements $k_{n,(a)}$ computed by the search element a computation unit, the (D+2) number of elements $k_{n,(b)}$ computed by the search element b computation unit, the (D+2) number of elements $f_{m,0}$ computed by the derangement element computation unit, the $(D+2)\times(D+2)$ number of elements $f_{m,n,(a)}$ computed by the derangement element a computation unit, the $(D+2)\times(D+2)$ number of elements $f_{m,n,(b)}$ computed by the derangement element b computation unit, the element $h_\Lambda$ computed by the delegation element computation unit, and the (D+2) number of elements $h_{m,\Lambda}$ computed by the secondary delegation element computation unit;

the query issuing device has a storage device that stores data, a processing device that processes data, a user identifier storage unit, a search element storage unit, a search element a storage unit, a search element b storage unit, a derangement element storage unit, a derangement element a storage unit, a derangement element b storage unit, a delegation element storage unit, a secondary delegation element storage unit, a search keyword input unit, a random number $\pi$ selection unit, an inquiry element computation unit, an inquiry element a computation unit, an inquiry element b computation unit, and a query output unit;

the user identifier storage unit, using the storage device and as the user identifier of the query issuing device, stores the L number of integers $l_i$;

the search element storage unit, using the storage device, stores the element $k_0$ output as the user secret key of the query issuing device by the user secret key generation device;

the search element a storage unit, using the storage device, stores the (D+2) number of elements $k_{n,(a)}$ (n being an integer from 0 to D+1) output as the user secret key of the query issuing device by the user secret key generation device;

the search element b storage unit, using the storage device, stores the (D+2) number of elements $k_{n,(b)}$ output as the user secret key of the query issuing device by the user secret key generation device;

the derangement element storage unit, using the storage device, stores the (D+2) number of elements $f_{m,0}$ (m being an integer from 0 to D+1) output as the user secret key of the query issuing device by the user secret key generation device;

the derangement element a storage unit, using the storage device, stores the (D+2)$\times$(D+2) number of elements $f_{m,n,(a)}$ output as the user secret key of the query issuing device by the user secret key generation device;

the derangement element b storage unit, using the storage device, stores the (D+2)$\times$(D+2) number of elements $f_{m,n,(b)}$ output as the user secret key of the query issuing device by the user secret key generation device;

the delegation element storage unit, using the storage device, stores the element $h_\Lambda$ output as the user secret key of the query issuing device by the user secret key generation device;

the secondary delegation element storage unit, using the storage device, stores the (D+2) number of elements $h_{m,\Lambda}$ output as the user secret key of the query issuing device by the user secret key generation device;

the search keyword input unit, using the processing device and as a keyword to be searched for, inputs an integer W from 0 to less than p;

the random number $\pi$ selection unit, using the processing device, randomly selects (D+2) number of integers $\pi_m$ out of integers from 0 to less than p;

the inquiry element computation unit, using the processing device and based on the element $k_0$ stored by the search element storage unit, the (D+2) number of elements $f_{m,0}$ stored by the derangement element storage unit, the element $h_\Lambda$ stored by the delegation element storage unit, the (D+2) number of elements $h_{m,\Lambda}$ stored by the secondary delegation element storage unit, the integer W input by the search keyword input unit, and the (D+2) number of integers $\pi_m$ selected by the random number $\pi$ selection unit, calculates the element $h_{m,\Lambda}$ raised to a power of $\pi_m$ for each of the (D+2) number of integers m from 0 to (D+1), calculates a total product $\text{II}_H$ of the element $h_\Lambda$ and the (D+2) number of elements $h_{m,\Lambda}$ raised to the power of $\pi_m$, calculates the element $f_{m,0}$ raised to a power of $\pi_m$ for each of the (D+2) number of integers m from 0 to (D+1), calculates the total product $\Pi_H$ raised to a power of W, and calculates a total product of the element $k_0$, the (D+2) number of elements $f_{m,0}$ raised to the power of $\pi_m$, and the total product $\Pi_H$ raised to the power of W, thereby computing an element $k'_0$ which is an element of the multiplicative group G2;

the inquiry element a computation unit, using the processing device and based on the (D+2) number of elements $k_{n,(a)}$ stored by the search element a storage unit, the (D+2)$\times$(D+2) number of elements $f_{m,n,(a)}$ stored by the derangement element a storage unit, and the (D+2) number of integers $\pi_m$ selected by the random number $\pi$ selection unit, calculates the element $f_{m,n,(a)}$ raised to a power of $\pi_m$ for each of the (D+2)$\times$(D+2) number of combinations (n,m) which are combinations of the (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2;

the inquiry element b computation unit, using the processing device and based on the (D+2) number of elements $k_{n,(b)}$ stored by the search element b storage unit, the (D+2)$\times$(D+2) number of elements $f_{m,n,(b)}$ stored by the derangement element b storage unit, and the (D+2) number of integers $\pi_m$ selected by the random number $\pi$ selection unit, calculates the element $f_{m,n,(b)}$ raised to a power of $\pi_m$ for each of the (D+2)$\times$(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $i_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2;

the query output unit, using the processing device and as a query for searching with the integer W as the keyword, outputs a combination of the L number of integers $I_i$ stored by the user identifier storage unit, the element $k'_0$ computed by the inquiry element computation unit, the (D+2) number of elements $k'_{n,(a)}$ computed by the inquiry element a computation unit, and the (D+2) number of elements $k'_{n,(b)}$ computed by the inquiry element b computation unit;

the search device has a storage device that stores data, a processing device that processes data, a ciphertext storage unit, a query input unit, a pairing element computation unit, a pairing element A computation unit, a pairing element B computation unit, a comparison element computation unit, and a comparison unit;

the ciphertext storage unit, using the storage device and as the ciphertext in which the keyword is embedded, stores a combination of the element R, the element E, the element $c_0$, the (D+2) number of elements $c_{n,(a)}$, the (D+2) number of elements $c_{n,(b)}$, the (D+2)×(L'-L") number of elements $c_{n,j',(a)}$, and the (D+2)×(L'-L") number of elements $c_{n,j',(b)}$ included in the ciphertext output by the encryption device;

the query input unit, using the processing device and as the query for searching for the keyword, inputs the combination of the L number of integers $I_i$, the element $k'_0$, the (D+2) number of elements $k'_{n,(a)}$, and the (D+2) number of elements $k'_{n,(b)}$ output by the query issuing device;

the pairing element computation unit, using the processing device and based on the element $c_0$ included in the ciphertext stored by the ciphertext storage unit and the element $k'_0$ included in the query input by the query input unit, maps a pair of the element $c_0$ and the element $k'_0$ by the bilinear pairing e, thereby computing an element $e_0$ which is an element of the multiplicative group G3;

the pairing element A computation unit, using the processing device and based on the (D+2) number of elements $c_{n,(a)}$ and the (D+2)×(L'-L") number of elements $c_{n,j',(a)}$ included in the ciphertext stored by the ciphertext storage unit and the L number of integers $I_i$ and the (D+2) number of elements $k'_{n,(a)}$ included in the query input by the query input unit, calculates the element $c_{n,i',(a)}$ raised to a power of $I_{-i'}$ for each of (D+2)×$L_A$ number of combinations (n,i') which are combinations of the (D+2) number of integers n from 0 to (D+1) and $L_A$ number of integers i' from 1 to L out of the (L'-L") number of integers j' which are subscripts of the (D+2)×(L'-L") number of elements $c_{n,j',(a)}$, calculates a total product $\Pi_{A',n}$ of the element $c_{n,(a)}$ and the $L_A$ number of elements $c_{n,i',(a)}$ raised to the power of $I_{-i'}$ for each of the (D+2) number of integers n from 0 to (D+1), and maps a pair of the total product $\Pi_{A',n}$ and the element $k'_{n,(a)}$ by the bilinear pairing e for each of the (D+2) number of integers n from 0 to (D+1), thereby computing (D+2) number of elements $e_{A,n}$ which are elements of the multiplicative group G3;

the pairing element B computation unit, using the processing device and based on the (D+2) number of elements $c_{n,(b)}$ and the (D+2)×(L'-L") number of elements $c_{n,j',(b)}$ included in the ciphertext stored by the ciphertext storage unit and the L number of integers $I_i$ and the (D+2) number of elements $k'_{n,(b)}$ included in the query input by the query input unit, calculates the element $c_{n,i',(b)}$ raised to a power of $I_{-i'}$ for each of the (D+2)×$L_A$ number of combinations (n,i') which are combinations of the (D+2) number of integers n from 0 to (D+1) and the $L_A$ number of integers i' from 1 to L out of the (L'-L") number of integers j' which are the subscripts of the (D+2)×(L'-L") number of elements $c_{n,j',(b)}$, calculates a total product $\Pi_{B',n}$ of the element $c_{n,(b)}$ and the $L_A$ number of elements $c_{n,i',(b)}$ raised to the power of $I_{-i'}$ for each of the (D+2) number of integers n from 0 to (D+1), and maps a pair of the total product $\Pi_{B',n}$ and the element $k'_{n,(b)}$ by the bilinear pairing e for each of the (D+2) number of integers n from 0 to (D+1), thereby computing (D+2) number of elements $e_{B,n}$ which are elements of the multiplicative group G3;

the comparison element computation unit, using the processing device and based on the element E included in the ciphertext stored by the ciphertext storage unit, the element $e_0$ computed by the pairing element computation unit, the (D+2) number of elements $e_{A,n}$ computed by the pairing element A computation unit, and the (D+2) number of elements $e_{B,n}$ computed by the pairing element B computation unit, calculates a total product of the element E, the element $e_0$, the (D+2) number of elements $e_{A,n}$, and the (D+2) number of elements $e_{B,n}$, thereby computing an element R' which is an element of the multiplicative group G3; and

the comparison unit, using the processing device, compares the element R included in the ciphertext stored by the ciphertext storage unit and the element R' computed by the comparison element computation unit and determines a hit for searching if the element R matches the element R'.

10. A public parameter generation method by which a public parameter generation device generates a public parameter and a master secret key to be used in a secure search system that encrypts a keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the public parameter generation method, wherein

the public parameter generation device has a processing device that processes data, a random number ω selection unit, a random number $\alpha$ selection unit, a random number $\beta$ selection unit, a random number $\theta$ selection unit, a public element $\Omega$ computation unit, a public element a computation unit, and a public element b computation unit, a secret element w computation unit, a secret element a computation unit, a secret element b computation unit, a secret element y computation unit, a public parameter output unit, and a master secret key output unit;

the random number $\omega$ selection unit, using the processing device, randomly selects an integer $\omega$ out of integers from 1 to less than p;

the random number $\alpha$ selection unit, using the processing device, randomly selects (D+2) number of integers $\alpha_n$ (n being an integer from 0 to D+1) out of integers from 1 to less than p;

the random number $\beta$ selection unit, using the processing device, randomly selects (D+2) number of integers $\beta_n$ out of integers from 1 to less than p;

the random number $\theta$ selection unit, using the processing device, randomly selects $(D+2) \times (D+1)$ number of integers $\theta_{n,1}$ (1 being an integer from 0 to D) out of integers from 1 to less than p;

the public element a computation unit, using the processing device and based on a generator $g_1$ of a multiplicative group G1 of an order of the prime number p, the (D+2) number of integers $\alpha_n$ selected by the random number $\alpha$ selection unit, and the $(D+2) \times (D+1)$ number of integers $\theta_{n,1}$ selected by the random number $\theta$ selection unit, calculates the generator $g_1$ raised to a power of $(\alpha_n \times \theta_{n,1})$ for each of $(D+2) \times (D+1)$ number of combinations (n,1) which are combinations of (D+2) number of integers n from 0 to (D+1) and (D+1) number of integers 1 from 0 to D, thereby computing $(D+2) \times (D+1)$ number of elements $a_{n,1}$ which are elements of the multiplicative group G1;

the public element b computation unit, using the processing device and based on the generator $g_1$ of the multiplicative group G1, the (D+2) number of integers $\beta_n$ selected by the random number $\beta$ selection unit, and the $(D+2) \times (D+1)$ number of integers $\theta_{n,1}$ selected by the random number $\theta$ selection unit, calculates the generator $g_1$ raised to a power of $(\beta_n \times \theta_{n,1})$ for each of the $(D+2) \times (D+1)$ number of combinations (n,1) which are combinations of the (D+2) number of integers n from 0 to (D+1) and the (D+1) number of integers 1 from 0 to D, thereby computing $(D+2) \times (D+1)$ number of elements $b_{n,1}$ which are elements of the multiplicative group G1;

the secret element w computation unit, using the processing device and based on a generator $g_2$ of a multiplicative group G2 of an order of the prime number p and the integer $\omega$ selected by the random number $\omega$ selection unit, calculates the generator $g_2$ raised to a power of $\omega$, thereby computing an element w' which is an element of the multiplicative group G2;

the public element $\Omega$ computation unit, using the processing device and based on a generator $g_3$ of a multiplicative group G3 of an order p and the integer $\omega$ selected the random number $\omega$ selection unit, calculates the generator $g_3$ raised to a power of $\omega$, thereby computing an element $\Omega$ which is an element of the public multiplicative group G3, the generator $g_3$ being obtained by mapping a pair of the generator $g_1$ of the multiplicative group G1 and the generator $g_2$ of the multiplicative group G2 by a bilinear pairing e that maps a pair of an element of the multiplicative group G1 and an element of the multiplicative group G2 to an element of the multiplicative group G3;

the secret element a computation unit, using the processing device and based on the generator $g_2$ of the multiplicative group G2 and the (D+2) number of integers $\alpha_n$ selected by the random number $\alpha$ selection unit, calculates the generator $g_2$ raised to a power of $\alpha_n$ for each of the (D+2) number of integers n from 0 to (D+1), thereby computing (D+2) number of elements $a'_n$ which are elements of the multiplicative group G2;

the secret element b computation unit, based on the generator $g_2$ of the multiplicative group G2 and the (D+2) number of integers $\beta_n$ selected by the random number $\beta$ selection unit, calculates the generator $g_2$ raised to a power of $\beta_n$ for each of the (D+2) number of integers n from 0 to (D+1), thereby computing (D+2) number of elements $b'_n$ which are elements of the multiplicative group G2;

the secret element y computation unit, using the processing device and based on the generator $g_2$ of the multiplicative group G2, the (D+2) number of integers $\alpha_n$ selected by the random number $\alpha$ selection unit, the (D+2) number of integers $\beta_n$ selected by the random number $\beta$ selection unit, and the $(D+2) \times (D+1)$ of integers $\theta_{n,1}$ selected by the random number $\theta$ selection unit, calculates the generator $g_2$ raised to a power of $(\alpha_n \times \beta_n \times \theta_{n,1})$ for each of the $(D+2) \times (D+1)$ number of combinations (n,1) which are combinations of the (D+2) number of integers n from 0 to (D+1) and the (D+2) number of integers 1 from 0 to D, thereby computing $(D+2) \times (D+1)$ number of elements $y'_{n,1}$ which are elements of the multiplicative group G2;

the public parameter output unit, using the processing device and as the public parameter in the secure search system, outputs the element $\Omega$ computed by the public element $\Omega$ computation unit, the $(D+2) \times (D+1)$ number of elements $a_{n,1}$ computed by the public element a computation unit, and the $(D+2) \times (D+1)$ number of elements $b_{n,1}$ computed by the public element b computation unit; and

the master secret key output unit, using the processing device and as the master secret key in the secure search system, outputs the element w' computed by the secret element w computation unit, the (D+2) number of elements $a'_n$ computed by the secret element a computation unit, the (D+2) number of elements $b'_n$ computed by the secret element b computation unit, and the $(D+2) \times (D+1)$ number of elements $y'_{n,1}$ computed by the secret element y computation unit.

11. An encryption method by which an encryption device encrypts a keyword in a secure search system that encrypts the keyword and searches for the keyword in an encrypted state based on a request from at least any one of a plurality of query issuing devices having, as a user identifier, less than D number (D being an integer of 2 or greater) of integers $l_i$ (i being an integer from 1 to L, L being an arbitrary integer of less than D, $l_i$ being an integer from 0 to less than p, and p being a prime number), the encryption method, wherein

the encryption device has a storage device that stores data, a processing device that processes data, a public element $\Omega$ storage unit, a public element a storage unit, a public element b storage unit, an embedded keyword input unit, an authorization range input unit, a random number r selection unit, a secondary random number r selection unit, a random element selection unit, a verification element computation unit, a cipher element computation unit, a cipher element a computation unit, a cipher element b computation unit, a cipher partial element a computation unit, a cipher partial element b computation unit, and a ciphertext output unit;

the public element $\Omega$ storage unit, using the storage device, stores an element $\Omega$ which is an element of a multiplicative group G3 of an order p;

the public element a storage unit, using the storage device, stores $(D+2)\times(D+1)$ number of elements $a_{n,1}$ (n being an integer from 0 to D+1 and 1 being an integer from 0 to D) which are elements of a multiplicative group G1 of an order p;

the public element b storage unit, using the storage device, stores $(D+2)\times(D+1)$ number of elements $b_{n,1}$ which are elements of the multiplicative group G1;

the embedded keyword input unit, using the processing device and as the keyword to be encrypted, inputs an integer W' from 0 to less than p;

the authorization range input unit, using the processing device and as data specifying a range of query issuing devices having an authorization to search for the keyword, inputs an integer L' (L' being an arbitrary integer from 1 to less than D) and L" number of integers $l'_j$ (L" being an arbitrary integer from 0 to L', j being L" number of integers arbitrarily selected out of integers from 1 to L', and $l'_j$ being an integer from 0 to less than p);

the random number r selection unit, using the processing device, randomly selects an integer r out of integers from 0 to less than p;

the secondary random number r selection unit, using the processing device, randomly selects $(D+2)$ number of integers $r_n$ out of integers from 0 to less than p;

the random element selection unit, using the processing device, randomly selects an element R out of elements of the multiplicative group G3;

the verification element computation unit, using the processing device and based on the element $\Omega$ stored by the public element $\Omega$ storage unit, the integer r selected by the random number r selection unit, and the element R selected by the random element selection unit, calculates a product of the element $\Omega$ raised to a power of (-r) and the element R, thereby computing an element E which is an element of the multiplicative group G3;

the cipher element computation unit, using the processing device and based on the generator $g_1$ of the multiplicative group G1 and the integer r selected by the random number r selection unit, calculates the generator $g_1$ raised to a power of r, thereby computing an element $c_0$ which is an element of the multiplicative group G1;

the cipher element a computation unit, using the processing device and based on the integer L' and the L" number of integers $l'_j$ input by the authorization range input unit, $(D+2)$ number of elements $b_{n,0}$, $(D+2)\times L"$ number of elements $b_{n,1'}$, and $(D+2)$ number of elements $b_{n,\Lambda'}$ (A' being an integer selected out of integers from more than L' to D) out of the $(D+2)\times(D+1)$ number of elements $b_{n,1}$ stored by the public element b storage unit, the integer W' input by the embedded keyword input unit, and the $(D+2)$ number of integers $r_n$ selected by the secondary random number r selection unit, calculates the element $b_{n,j}$ raised to a power of $l_j$ for each of $(D+2)\times L"$ number of combinations (n,j) which are combinations of $(D+2)$ number of integers n from 0 to $(D+1)$ and subscripts j of the L" number of integers $l'_j$, calculates the element $b_{n,\Lambda'}$ raised to a power of W' for each of the $(D+2)$ number of integers n from 0 to $(D+1)$, calculates a total product $\Pi_{B,n}$ of the element $b_{n,0}$, the L" number of elements $b_{n,j}$ raised to the power of $l'_j$, and the element $b_{n,\Lambda'}$ raised to the power of W' for each of the $(D+2)$ number of integers n from 0 to $(D+1)$, and calculates the calculated total product $\Pi_{B,n}$ raised to a power of $r_n$ for each of the $(D+2)$ number of integers n from 0 to $(D+1)$, thereby computing $(D+2)$ number of elements $c_{n,(a)}$ which are elements of the multiplicative group G1;

the cipher element b computation unit, using the processing device and based on the integer L' and the L" number of integers $l'_j$ input by the authorization range input unit, $(D+2)$ number of elements $a_{n,0}$, $(D+2)\times L"$ number of elements $a_{n,j'}$, and $(D+2)$ number of elements $a_{n,\Lambda'}$ out of the $(D+2)\times(D+1)$ number of elements $a_{n,1}$ stored by the public element a storage unit, the integer W' input by the embedded keyword input unit, the integer r selected by the random number r selection unit, and the $(D+2)$ number of integers $r_n$ selected by the secondary random number r selection unit, calculates the element $a_{n,j}$ raised to a power of $I_j$ for each of the $(D+2)\times L''$ number of combinations $(n,j)$ which are combinations of the $(D+2)$ number of integers n from 0 to $(D+1)$ and the subscripts j of the $L''$ number of integers $I'_j$, calculates the element $a_{n,\Lambda'}$ raised to a power of $W'$ for each of the $(D+2)$ number of integers n from 0 to $(D+1)$, calculates a total product $\Pi_{A,n}$ of the element $a_{n,0}$, the $L''$ number of elements $a_{n,j}$ raised to the power of $I'_j$, and the element $a_{n,A'}$ raised to the power of $W'$ for each of the $(D+2)$ number of integers n from 0 to $(D+1)$, and calculates the calculated total product $\Pi_{A,n}$ raised to a power of $(r-r_n)$ for each of the $(D+2)$ number of integers n from 0 to $(D+1)$, thereby computing $(D+2)$ number of elements $c_{n,(a)}$ which are elements of the multiplicative group G1;

the cipher partial element a computation unit, using the processing device and based on the integer $L'$ and the subscripts j of the $L''$ number of integers $I'j$ input by the authorization range input unit, $(D+2)\times(L'-L'')$ number of elements $b_{n,j'}$ (j' being $(L'-L'')$ number of integers other than the $L''$ number of subscripts j out of integers from 1 to $L'$) out of the $(D+2)\times(D+1)$ number of elements $b_{n,1}$ stored by the public element b storage unit, and the $(D+2)$ number of integers $r_n$ selected by the secondary random number r selection unit, calculates the element $b_{n,j'}$ raised to a power of $r_n$ for each of $(D+2)\times(L'-L'')$ number of combinations $(n,j')$ which are combinations of the $(D+2)$ number of integers n from 0 to $(D+1)$ and $(L'-L'')$ number of integers j' other than the $L''$ number of subscripts j out of integers from 1 to $L'$, thereby computing $(D+2)$ x $(L'-L'')$ number of elements $c_{n,j',(a)}$ which are elements of the multiplicative group G1;

the cipher partial element b computation unit, using the processing device and based on the integer $L'$ and the subscripts j of the $L''$ number of integers $I'_j$ input by the authorization range input unit, $(D+2)\times(L'-L'')$ number of elements $a_{n,j'}$ out of the $(D+2)\times(D+1)$ number of elements $a_{n,1}$ stored by the public element a storage unit, the integer r selected by the random number r selection unit, and the $(D+2)$ number of integers $r_n$ selected by the secondary random number r selection unit, calculates the element $b_{n,j'}$ raised to a power of $(r-r_n)$ for each of the $(D+2)\times(L'-L'')$ number of combinations $(n,j')$ which are combinations of the $(D+2)$ number of integers n from 0 to $(D+1)$ and the $(L'-L'')$ number of integers j' other than the $L''$ number of subscripts j out of integers from 1 to less than $L'$, thereby computing $(D+2)\times(L'-L'')$ number of elements $c_{n,j',(b)}$ which are elements of the multiplicative group G1; and

the ciphertext output unit, using the processing device and as a ciphertext in which the integer $W'$ is embedded as the keyword, outputs the element R selected by the random element selection unit, the element E computed by the verification element computation unit, the element $c_0$ computed by the cipher element computation unit, the $(D+2)$ number of elements $c_{n,(a)}$ computed by the cipher element a computation unit, the $(D+2)$ number of elements $c_{n,(b)}$ computed by the cipher element b computation unit, the $(D+2)\times(L'-L'')$ number of elements $c_{n,j',(a)}$ computed by the cipher partial element a computation unit, and the $(D+2)\times(L'-L'')$ number of elements $c_{n,j',(b)}$ computed by the cipher partial element b computation unit.

12. A user secret key generation method by which a user secret key generation device generates a user secret key to be used in a secure search system that encrypts a keyword and searches for the keyword in an encrypted state based on a request from at least any one of a plurality of query issuing devices having, as a user identifier, less than D number (D being an integer of 2 or greater) of integers $I_i$ (i being an integer from 1 to L, L being an arbitrary integer of less than D, $I_i$ being an integer from 0 to less than p, and p being a prime number), the user secret key generation method, wherein

the user secret key generation device has a storage device that stores data, a processing device that processes data, a secret element w storage unit, a secret element a storage unit, a secret element b storage unit, a secret element y storage unit, a user identifier input unit, a random number p selection unit, a secondary random number p selection unit, a total product element Y computation unit, a search element computation unit, a search element a computation unit, a search element b computation unit, a derangement element computation unit, a derangement element a computation unit, a derangement element b computation unit, a delegation element computation unit, a secondary delegation element computation unit, and a user secret key output unit;

the secret element w storage unit, using the storage device and as a part of a master secret key in the secure search system, stores an element $w'$ which is an element of a multiplicative group G2 of an order p;

the secret element a storage unit, using the storage device and as a part of the master secret key, stores $(D+2)$ number of elements $a'_n$ (n being an integer from 0 to D+1) which are elements of the multiplicative group G2;

the secret element b storage unit, using the storage device and as a part of the master secret key, stores $(D+2)$ number of elements $b'_n$ which are elements of the multiplicative group G2;

the secret element y storage unit, using the storage device and as a part of the master secret key, stores $(D+2)\times(D+1)$ number of elements $y'_{n,1}$ (1 being an integer from 0 to D) which are elements of the multiplicative group G2;

the user identifier input unit, using the processing device and for a query issuing device requesting generation of a user secret key out of the plurality of the query issuing devices, inputs L number of integers $l_i$ as a user identifier of the query issuing device;

the random number p selection unit, using the processing device, randomly selects (D+2) number of integers $\rho_n$ out of integers from 0 to less than p;

the secondary random number p selection unit, using the processing device, randomly selects (D+2)$\times$(D+2) number of integers $\rho_{n,m}$ (m being an integer from 0 to D+1) out of integers from 0 to less than p;

the total product element Y computation unit, using the processing device and based on the L number of integers $l_i$ input by the user identifier input unit and (D+2) number of elements $y'_{n,0}$ and (D+2)$\times$L number of elements $y'_{n,i}$ out of the (D+2)$\times$(D+1) number of elements $y'_{n,1}$ stored by the secret element y storage unit, calculates the element $y'_{n,i}$ raised to a power of $l_i$ for each of (D+2)$\times$(D+1) number of combinations (n,i) which are combinations of (D+2) number of integers n from 0 to (D+1) and (D+1) number of integers i from 1 to L, and calculates a total product of the element $y'_{n,0}$ and the L number of elements $y'_{n,i}$ raised to the power of $l_i$ for each of the (D+2) number of integers n from 0 to (D+1), thereby computing (D+2) number of elements $\Pi_{Y,n}$ which are elements of the multiplicative group G2;

the search element computation unit, using the processing device and based on the element w' stored by the secret element w storage unit, the (D+2) number of integers $\rho_n$ selected by the random number p selection unit, and the (D+2) number of elements $\Pi_{Y,n}$ computed by the total product element Y computation unit, calculates the element $\Pi_{Y,n}$ raised to a power of $\rho_n$ for each of the (D+2) number of integers n from 0 to (D+1), and calculates a total product of the element w' and the (D+2) number of elements $\Pi_{Y,n}$ raised to the power of $\rho_n$, thereby computing an element $k_0$ which is an element of the multiplicative group G2;

the search element a computation unit, using the processing device and based on the (D+2) number of elements $a'_n$ stored by the secret element a storage unit and the (D+2) number of integers $\rho_n$ selected by the random number p selection unit, calculates the element $a'_n$ raised to a power of ($-\rho_n$) for each of the (D+2) number of integers n from 0 to (D+1), thereby computing (D+2) number of elements $k_{n,(a)}$ which are elements of the multiplicative group G2;

the search element b computation unit, using the processing device and based on the (D+2) number of elements $b'_n$ stored by the secret element b storage unit and the (D+2) number of integers $\rho_n$ selected by the random number p selection unit, calculates the element $b'_n$ raised to a power of ($-\rho_n$) for each of the (D+2) number of integers n from 0 to (D+1), thereby computing (D+2) number of elements $k_{n,(b)}$ which are elements of the multiplicative group G2;

the derangement element computation unit, using the processing device and based on the (D+2)$\times$(D+2) number of integers $\rho_{n,m}$ selected by the secondary random number p selection unit and the (D+2) number of elements $\Pi_{Y,n}$ computed by the total product element Y computation unit, calculates the element $\Pi_{Y,n}$ raised to a power of $\rho_{n,m}$ for each of (D+2)$\times$(D+2) number of combinations (n,m) which are combinations of the (D+2) number of integers n from 0 to (D+1) and (D+2) number of integers m from 0 to (D+1), and calculates a total product of the (D+2) number of elements $\Pi_{Y,n}$ raised to the power of $\rho_{n,m}$ for each of the (D+2) number of integers m from 0 to (D+1), thereby computing (D+2) number of elements $f_{m,0}$ which are elements of the multiplicative group G2;

the derangement element a computation unit, using the processing device and based on the (D+2) number of elements $a'_n$ stored by the secret element a storage unit and the (D+2)$\times$(D+2) number of integers $\rho_{n,m}$ selected by the secondary random number p selection unit, calculates the element $a'_n$ raised to a power of ($-\rho_{n,m}$) for each of the (D+2)$\times$(D+2) number of combinations (n,m) which are combinations of the (D+2) number of integers n from 0 to (D+1) and the (D+2) number of integers m from 0 to (D+1), thereby computing (D+2)$\times$(D+2) number of elements $f_{m,n,(a)}$ which are elements of the multiplicative group G2;

the derangement element b computation unit, using the processing device and based on the (D+2) number of elements $b'_n$ stored by the secret element b storage unit and the (D+2)$\times$(D+2) number of integers $\rho_{n,m}$ selected the secondary random number p selection unit, calculates the element $b'_n$ raised to a power of ($-\rho_{n,m}$) for each of the (D+2)$\times$(D+2) number of combinations (n,m) which are combinations of the (D+2) number of integers n from 0 to (D+1) and the (D+2) number of integers m from 0 to (D+1), thereby computing (D+2)$\times$(D+2) number of elements $f_{m,n,(b)}$ which are elements of the multiplicative group G2;

the delegation element computation unit, using the processing device and based on (D+2) number of elements $y'_{n,A}$ (A being an integer selected out of integers from more than L to D) out of the (D+2)$\times$(D+1) number of elements $y'_{n,1}$ stored by the secret element y storage unit and the (D+2) number of integers $\rho_n$ selected by the random number p selection unit, calculates the element $y'_{n,A}$ raised to a power of $\rho_n$ for each of the (D+2) number of integers n from 0 to (D+1), and calculates a total product of the (D+2) number of elements $y'_{n,A}$ raised to the power of $\rho_n$, thereby computing an element $h_A$ which is an element of the multiplicative group G2;

the secondary delegation element computation unit, using the processing device and based on (D+2) number of elements $y'_{n,A}$ out of the (D+2)$\times$(D+1) number of elements $y'_{n,1}$ stored by the secret element y storage unit and the (D+2)$\times$(D+2) number of integers $\rho_{n,m}$ selected by the secondary random number $\rho$ selection unit,

calculates the element $y'_{n,A}$ raised to a power of $\rho_{n,m}$ for each of the $(D+2)\times(D+2)$ number of combinations $(n, m)$ which are combinations of the $(D+2)$ number of integers $n$ from 0 to $(D+1)$ and the $(D+2)$ number of integers $m$ from 0 to $(D+1)$, and calculates a total product of the $(D+2)$ number of elements $y'_{n,A}$ raised to the power of $\rho_{n,m}$ for each of the $(D+2)$ number of integers $m$ from 0 to $(D+1)$, thereby computing $(D+2)$ number of elements $h_{m,A}$ which are elements of the multiplicative group G2; and

the user secret key output unit, using the processing device and as the user secret key of the query issuing device, outputs a combination of the element $k_0$ computed by the search element computation unit, the $(D+2)$ number of elements $k_{n,(a)}$ computed by the search element a computation unit, the $(D+2)$ number of elements $k_{n,(b)}$ computed by the search element b computation unit, the $(D+2)$ number of elements $f_{m,0}$ computed by the derangement element computation unit, the $(D+2)\times(D+2)$ number of elements $f_{m,n,(a)}$ computed by the derangement element a computation unit, the $(D+2)\times(D+2)$ number of elements $f_{m,n,(b)}$ computed by the derangement element b computation unit, the element $h_A$ computed the delegation element computation unit, and the $(D+2)$ number of elements $h_{m,A}$ computed by the secondary delegation element computation unit.

13. A query issuing method by which a query issuing device generates a query for searching for a keyword in a secure search system that encrypts the keyword and searches for the keyword in an encrypted state based on a request from at least any one of a plurality of query issuing devices having, as a user identifier, less than D number (D being an integer of 2 or greater) of integers $l_i$ ($i$ being an integer from 1 to L, L being an arbitrary integer of less than D, $l_i$ being an integer from 0 to less than p, and p being a prime number), the query issuing method, wherein

the query issuing device has a storage device that stores data, a processing device that processes data, a user identifier storage unit, a search element storage unit, a search element a storage unit, a search element b storage unit, a derangement element storage unit, a derangement element a storage unit, a derangement element b storage unit, a delegation element storage unit, a secondary delegation element storage unit, a search keyword input unit, a random number $\pi$ selection unit, an inquiry element computation unit, an inquiry element a computation unit, an inquiry element b computation unit, and a query output unit;

the user identifier storage unit, using the storage device and as the user identifier of the query issuing device, stores L number of integers $l_i$;

the search element storage unit, using the storage device and as a part of a user secret key of the query issuing device, stores an element $k_0$ which is an element of a multiplicative group G2 of an order p;

the search element a storage unit, using the storage device and as a part of the user secret key, stores $(D+2)$ number of elements $k_{n,(a)}$ ($n$ being an integer from 0 to D+1) which are elements of the multiplicative group G2;

the search element b storage unit, using the storage device and as a part of the user secret key, stores $(D+2)$ number of elements $k_{n,(b)}$ which are elements of the multiplicative group G2;

the derangement element storage unit, using the storage device and as a part of the user secret key, stores $(D+2)$ number of elements $f_{m,0}$ ($m$ being an integer from 0 to D+1) which are elements of the multiplicative group G2;

the derangement element a storage unit, using the storage device and as a part of the user secret key, stores $(D+2)\times(D+2)$ number of elements $f_{m,n,(a)}$ which are elements of the multiplicative group G2;

the derangement element b storage unit, using the storage device and as a part of the user secret key, stores $(D+2)\times(D+2)$ number of elements $f_{m,n,(b)}$ which are elements of the multiplicative group G2;

the delegation element storage unit, using the storage device and as a part of the user secret key, stores an element $h_{L+1}$ which is an element of the multiplicative group G2;

the secondary delegation element storage unit, using the storage device and as a part of the user secret key, stores $(D+2)$ number of elements $h_{m,L+1}$ which are elements of the multiplicative group G2;

the search keyword input unit, using the processing device and as a keyword to be searched for, inputs an integer W from 0 to less than p;

the random number $\pi$ selection unit, using the processing device, randomly selects $(D+2)$ number of integers $\pi_m$ out of integers from 0 to less than p;

the inquiry element computation unit, using the processing device and based on the element $k_0$ stored by the search element storage unit, the $(D+2)$ number of elements $f_{m,0}$ stored by the derangement element storage unit, the element $h_A$ stored by the delegation element storage unit, the $(D+2)$ number of elements $h_{m,A}$ stored by the secondary delegation element storage unit, the integer W input by the search keyword input unit, and the $(D+2)$ number of integers $\pi_m$ selected by the random number $\pi$ selection unit, calculates the element $h_{m,A}$ raised to a power of $\pi_m$ for each of $(D+2)$ number of integers $m$ from 0 to $(D+1)$, calculates a total product $II_H$ of the element $h_A$ and the $(D+2)$ number of elements $h_{m,A}$ raised to the power of $\pi_m$, calculates the element $f_{m,0}$ raised to a power of $\pi_m$ for each of the $(D+2)$ number of integers $m$ from 0 to $(D+1)$, calculates the total product $II_H$ raised to a power of W, and calculates a total product of the element $k_0$, the $(D+2)$ number of elements

$f_{m,0}$ raised to the power of $\pi_m$, and the total product $II_H$ raised to the power of W, thereby computing an element $k'_0$ which is an element of the multiplicative group G2;

the inquiry element a computation unit, using the processing device and based on the (D+2) number of elements $k_{n,(a)}$ stored by the search element a storage unit, the (D+2)$\times$(D+2) number of elements $f_{m,n,(a)}$ stored by the derangement element a storage unit, and the (D+2) number of integers $\pi_m$ selected by the random number $\pi$ selection unit, calculates the element $f_{m,n,(a)}$ raised to a power of $\pi_m$ for each of (D+2)$\times$(D+2) number of combinations (n,m) which are combinations of (D+2) number of integers n from 0 to (D+1) and the (D+2) number of integers m from 0 to (D+1), and calculates a total product of the element $k_{n,(a)}$ and the (D+2) number of elements $f_{m,n,(a)}$ raised to the power of $\pi_m$ for each of the (D+2) number of integers n from 0 to (D+1), thereby computing (D+2) number of elements $k'_{n,(a)}$ which are elements of the multiplicative group G2;

the inquiry element b computation unit, using the processing device and based on the (D+2) number of elements $k_{n,(b)}$ stored by the search element b storage unit, the (D+2)$\times$(D+2) number of elements $f_{m,n,(b)}$ stored by the derangement element b storage unit, and the (D+2) number of integers $\pi_m$ selected by the random number $\pi$ selection unit, calculates the element $f_{m,n,(b)}$ raised to a power of $\pi_m$ for each of the (D+2)$\times$(D+2) number of combinations (n,m) which are combinations of the (D+2) number of integers n from 0 to (D+1) and the (D+2) number of integers m from 0 to (D+1), and calculates a total product of the element $k_{n,(b)}$ and the (D+2) number of elements $f_{m,n,(b)}$ raised to the power of $\pi_m$ for each of the (D+2) number of integers n from 0 to (D+1), thereby computing (D+2) number of elements $k'_{n,(b)}$ which are elements of the multiplicative group G2; and

the query output unit, using the processing device and as a query for searching with the integer W as the keyword, outputs a combination of the L number of integers $l_i$ stored by the user identifier storage unit, the element $k'_0$ computed by the inquiry element computation unit, the (D+2) number of elements $k'_{n,(a)}$ computed by the inquiry element a computation unit, and the (D+2) number of elements $k'_{n,(b)}$ computed by the inquiry element b computation unit.

14. A search method by which a search device searches for a keyword in a secure search system that encrypts the keyword and searches for the keyword in an encrypted state based on a request from at least any one of a plurality of query issuing devices having, as a user identifier, less than D number (D being an integer of 2 or greater) of integers $l_i$ (i being an integer from 1 to L, L being an arbitrary integer of less than D, $l_i$ being an integer from 0 to less than p, and p being a prime number), the search method, wherein

the search device has a storage device that stores data, a processing device that processes data, a ciphertext storage unit, a query input unit, a pairing element computation unit, a pairing element A computation unit, a pairing element B computation unit, a comparison element computation unit, and a comparison unit;

the ciphertext storage unit, using the storage device and as a ciphertext in which the keyword is embedded, stores a combination of an element R which is an element of a multiplicative group G3 of an order p, an element E which is an element of the multiplicative group G3, an element $c_0$ which is an element of a multiplicative group G1 of an order p, (D+2) number of elements $c_{n,(a)}$ which are elements of the multiplicative group G1, (D+2) number of elements $c_{n,(b)}$ which are elements of the multiplicative group G1, (D+2)$\times$(L'-L") number of elements $c_{n,j',(a)}$ (L' being an arbitrary integer from 1 to less than D, L" being an arbitrary integer from 0 to L', and j' being (L'-L") number of integers arbitrarily selected out of integers from 1 to L') which are elements of the multiplicative group G1, and (D+2)$\times$(L'-L") number of elements $c_{n,j',(b)}$ which are elements of the multiplicative group G1;

the query input unit, using the processing device and as a query for searching for the keyword, inputs a combination of L number of integers $l_i$, an element $k'_0$ which is an element of a multiplicative group G2 of an order p, (D+2) number of elements $k'_{n,(a)}$ which are elements of the multiplicative group G2, and (D+2) number of elements $k'_{n,(b)}$ which are elements of the multiplicative group G2;

the pairing element computation unit, using the processing device and based on the element $c_0$ included in the ciphertext stored by the ciphertext storage unit and the element $k'_0$ included in the query input by the query input unit, maps a pair of the element $c_0$ and the element $k'_0$ by the bilinear pairing e, thereby computing an element $e_0$ which is an element of the multiplicative group G3;

the pairing element A computation unit, using the processing device and based on the (D+2) number of elements $c_{n,(a)}$ and the (D+2)$\times$(L'-L") number of elements $c_{n,j',(a)}$ included in the ciphertext stored by the ciphertext storage unit and the L number of integers $l_i$ and the (D+2) number of elements $k'_{n,(a)}$ included in the query input by the query input unit, calculates the element $c_{n,i',(a)}$ raised to a power of $l_{-i'}$ for each of (D+2)$\times$LA number of combinations (n,i') which are combinations of (D+2) number of integers n from 0 to (D+1) and $L_A$ number of integers i' from 1 to L out of (L'-L") number of integers j' which are subscripts of the (D+2)$\times$(L'-L") number of elements $c_{n,j',(a)}$, calculates a total product $\Pi_{A',n}$ of the element $c_{n,(a)}$ and the $L_A$ number of elements $c_{n,i',(a)}$ raised to the power of $l_{-i'}$ for each of the (D+2) number of integers n from 0 to (D+1), and maps a pair of the total product $\Pi_{A',n}$ and the element $k'_{n,(a)}$ by the bilinear pairing e for each of the (D+2) number of integers n from 0 to (D+1), thereby computing (D+2) number of elements $e_{A,n}$ which are elements of the multiplicative group G3;

the pairing element B computation unit, using the processing device and based on the (D+2) number of elements $c_{n,(b)}$ and the (D+2)×(L'-L") number of elements $c_{n,j',(b)}$ included in the ciphertext stored by the ciphertext storage unit and the L number of integers $I_i$ and the (D+2) number of elements $k'_{n,(b)}$ included in the query input by the query input unit, calculates the element $c_{n,i',(b)}$ raised to a power of $I_{-i'}$ for each of the (D+2)×$L_A$ number of combinations (n,i') which are combinations of the (D+2) number of integers n from 0 to (D+1) and the $L_A$ number of integers i' from 1 to L out of the (L'-L") number of integers j' which are the subscripts of the (D+2)×(L'-L") number of elements $c_{n,j',(b)}$, calculates a total product $II_{B',n}$ of the element $c_{n,(b)}$ and the $L_A$ number of elements $c_{n,i',(b)}$ raised to the power of $I_{-i'}$ for each of the (D+2) number of integers n from 0 to (D+1), and maps a pair of the total product $II_{B',n}$ and the element $k'_{n,(b)}$ by the bilinear pairing e for each of the (D+2) number of integers n from 0 to (D+1), thereby computing (D+2) number of elements $e_{B,n}$ which are elements of the multiplicative group G3;

the comparison element computation unit, using the processing device and based on the element E included in the ciphertext stored by the ciphertext storage unit, the element $e_0$ computed by the pairing element computation unit, the (D+2) number of elements $e_{A,n}$ computed by the pairing element A computation unit, and the (D+2) number of elements $e_{B,n}$ computed by the pairing element B computation unit, calculates a total product of the element E, the element $e_0$, the (D+2) number of elements $e_{A,n}$, and the (D+2) number of elements $e_{B,n}$, thereby computing an element R' which is an element of the multiplicative group G3; and

the comparison unit, using the processing device, compares the element R included in the ciphertext stored by the ciphertext storage unit and the element R' computed by the comparison element computation unit and determines a hit for searching if the element R matches the element R'.

# Fig. 1

# Fig. 2

| 601 | 602 | 603 | 604 | |
|-----|-----|-----|-----|---|
| ABC | | | | 600a |
| DEF | | | | 600b |
| GHI | | | | 600c |
| ABC | abc | | | 600d |
| ABC | def | | | 600e |
| GHI | abc | | | 600f |
| GHI | def | | | 600g |
| GHI | ghi | | | 600h |
| GHI | abc | 12 | | 600i |
| GHI | abc | 34 | | 600j |
| GHI | ghi | 12 | | 600k |
| GHI | abc | 12 | A | 600l |
| GHI | abc | 12 | B | 600m |
| GHI | abc | 12 | C | 600n |

# Fig. 3

| 601 | 602 | 603 | 604 | |
|-----|-----|-----|-----|-----|
| ABC | * | | | 610a |
| ABC | | | | 610b |
| GHI | abc | 12 | * | 610c |
| * | def | | | 610d |
| * | abc | * | | 610e |
| * | * | * | * | 610f |
| * | * | | | 610g |

# Fig. 4

906 907
901 905
940: INTERNET
942: LAN 941
GATEWAY
902 903 904
910: SYSTEM UNIT
931 932

100: PUBLIC PARAMETER GENERATION DEVICE
200: USER SECRET KEY GENERATION DEVICE
300: QUERY ISSUING DEVICE
400: ENCRYPTION DEVICE
500: SEARCH DEVICE

# Fig. 5

100: PUBLIC PARAMETER GENERATION DEVICE
200: USER SECRET KEY GENERATION DEVICE
300: QUERY ISSUING DEVICE
400: ENCRYPTION DEVICE
500: SEARCH DEVICE

911

CPU (PROCESSING DEVICE)

913
ROM (STORAGE DEVICE)

914
RAM (STORAGE DEVICE)

901
CRT (DISPLAY DEVICE)

902
K/B (INPUT DEVICE)

903
MOUSE (INPUT DEVICE)

915
COMMUNICATION DEVICE

904
FDD (STORAGE DEVICE)

905
CDD (STORAGE DEVICE)

906
PRINTER (OUTPUT DEVICE)

907
SCANNER (INPUT DEVICE)

912: BUS

920
MAGNETIC DISK DEVICE
(STORAGE DEVICE)

921
OS

922
WINDOW SYSTEM

923
PROGRAMS

924
FILES

Fig.6

# Fig. 7

<u>S630</u>

PUBLIC PARAMETER
GENERATION PROCESS

S631
$$g_1 \overset{R}{\leftarrow} \mathbb{G}_1$$

S632
$$g_2 \overset{R}{\leftarrow} \mathbb{G}_2$$

S633
$$\omega \overset{R}{\leftarrow} \mathbb{Z}_p^*$$

S634
$$\Omega \leftarrow e(g_1, g_2)^\omega$$

S635
$$w' \leftarrow g_2^\omega$$

S636
$$n \leftarrow 0$$

S637
$$\alpha_n \overset{R}{\leftarrow} \mathbb{Z}_p^*$$

S638
$$\beta_n \overset{R}{\leftarrow} \mathbb{Z}_p^*$$

S639
$$a'_n \leftarrow g_2^{\alpha_n}$$

S640
$$b'_n \leftarrow g_2^{\beta_n}$$

S641
$$l \leftarrow 0$$

S642
$$\theta_{n,l} \overset{R}{\leftarrow} \mathbb{Z}_p^*$$

S643
$$a_{n,l} \leftarrow g_1^{\alpha_n \cdot \theta_{n,l}}$$

S644
$$b_{n,l} \leftarrow g_1^{\beta_n \cdot \theta_{n,l}}$$

S645
$$y'_{n,l} \leftarrow g_2^{\alpha_n \cdot \beta_n \cdot \theta_{n,l}}$$

S646
$$l \leftarrow l + 1$$

S647
$$l \; : \; D$$
$\leq$    $>$

S648
$$n \leftarrow n + 1$$

S649
$$n \; : \; D + 1$$
$\leq$    $>$

END

# Fig. 8

# Fig. 9

USER SECRET KEY GENERATION PROCESS $\underline{S660}$

S661
$$k_0 \leftarrow w'$$

S662
$$f_{m,0} \leftarrow 1$$

S663
$$\lambda \leftarrow L + 1$$

S664
$$h_\lambda \leftarrow 1$$

S665
$$m \leftarrow 0$$

S666
$$h_{m,\lambda} \leftarrow 1$$

S667
$$m \leftarrow m + 1$$

S668
$$m : D + 1$$
$\leq$ $>$

S669
$$\lambda \leftarrow \lambda + 1$$

S670
$$\lambda : D'$$
$\leq$ $>$

S671
$$n \leftarrow 0$$

S672
$$\Pi_{Y,n} \leftarrow y'_{n,0}$$

S673
$$i \leftarrow 1$$

S674
$$\Pi_{Y,n} \leftarrow \Pi_{Y,n} \cdot y'_{n,i}{}^{I_i}$$

S675
$$i \leftarrow i + 1$$

S676
$$i : L$$
$\leq$ $>$

S677
$$\rho_n \xleftarrow{R} \mathbb{Z}_p$$

S678
$$k_{n,(a)} \leftarrow a'_n{}^{-\rho_n}$$

S679
$$k_{n,(b)} \leftarrow b'_n{}^{-\rho_n}$$

S680
$$k_0 \leftarrow k_0 \cdot \Pi_{Y,n}{}^{\rho_n}$$

S681
$$\lambda \leftarrow L + 1$$

S682
$$h_\lambda \leftarrow h_\lambda \cdot y'_{n,\lambda}{}^{\rho_n}$$

S683
$$\lambda \leftarrow \lambda + 1$$

S684
$$\lambda : D'$$
$\leq$ $>$

S685
$$m \leftarrow 0$$

S686
$$\rho_{n,m} \xleftarrow{R} \mathbb{Z}_p$$

S687
$$f_{m,n,(a)} \leftarrow a'_n{}^{-\rho_{n,m}}$$

S688
$$f_{m,n,(b)} \leftarrow b'_n{}^{-\rho_{n,m}}$$

S689
$$f_{m,0} \leftarrow f_{m,0} \cdot \Pi_{Y,n}{}^{\rho_{n,m}}$$

S690
$$\lambda \leftarrow L + 1$$

S691
$$h_{m,\lambda} \leftarrow h_{m,\lambda} \cdot y'_{n,\lambda}{}^{\rho_{n,m}}$$

S692
$$\lambda \leftarrow \lambda + 1$$

S693
$$\lambda : D'$$
$\leq$ $>$

S694
$$m \leftarrow m + 1$$

S695
$$m : D + 1$$
$\leq$ $>$

S696
$$n \leftarrow n + 1$$

S697
$$n : D + 1$$
$\leq$ $>$

END

# Fig.10

300

USER SECRET KEY STORAGE UNIT
320

USER SECRET KEY INPUT UNIT
313

USER SECRET KEY REQUEST OUTPUT UNIT
312

COMMON PROCESSING UNIT
330

$I_i$ ×L
311

CHILD USER SECRET KEY GENERATION UNIT
370

$I_{L+1}$ ×1
362

QUERY GENERATION UNIT
350

QUERY OUTPUT UNIT
343

CHILD USER IDENTIFIER INPUT UNIT
361

CHILD USER SECRET KEY OUTPUT UNIT
363

$W$ ×1
342

RESULT INPUT UNIT
344

SEARCH KEYWORD INPUT UNIT
341

RESULT OUTPUT UNIT
345

# Fig.11

# Fig.12

COMMON PROCESS

S711 $\quad \Pi_F \leftarrow 1$

S712 $\quad \Pi_H \leftarrow h_{L+1}$

S713 $\quad m \leftarrow 0$

S714 $\quad \pi_m \xleftarrow{\text{R}} \mathbb{Z}_p$

S715 $\quad \Pi_F \leftarrow \Pi_F \cdot f_{m,0}{}^{\pi_m}$

S716 $\quad \Pi_H \leftarrow \Pi_H \cdot h_{m,L+1}{}^{\pi_m}$

S717 $\quad m \leftarrow m + 1$

S718 $\quad m : D + 1$ $\quad \leq$

S719 $\quad > \quad n \leftarrow 0$

S710

S720 $\quad k'_{n,(a)} \leftarrow k_{n,(a)}$

S721 $\quad k'_{n,(b)} \leftarrow k_{n,(b)}$

S722 $\quad m \leftarrow 0$

S723 $\quad k'_{n,(a)} \leftarrow k'_{n,(a)} \cdot f_{m,n,(a)}{}^{\pi_m}$

S724 $\quad k'_{n,(b)} \leftarrow k'_{n,(b)} f_{m,n,(b)}{}^{\pi_m}$

S725 $\quad m \leftarrow m + 1$

S726 $\quad m : D + 1$ $\quad \leq$

S727 $\quad > \quad n \leftarrow n + 1$

S728 $\quad n : D + 1$ $\quad \leq$

$> \quad$ END

# Fig. 13

QUERY GENERATION PROCESS

S730

S731 $\quad k'_0 \leftarrow k_0 \, \Pi_F \, \Pi_H{}^W$

END

# Fig.14

$\underline{300}$

330

334

363

$k'_{n,(a)}$
$\times (D+2)$

362

$I_{L+1}$
$\times 1$

332

$\Pi_F$
$\times 1$

333

$\Pi_H$
$\times 1$

331

$\pi_m$
$\times (D+2)$

335

$k'_{n,(b)}$
$\times (D+2)$

321

320

372

$k_0$
$\times 1$

$k'_0 \leftarrow k_0\, \Pi_F\, \Pi_H^{\,I_{L+1}}$
$\times 1$

327

378

$h_\lambda$
$\times (D'-L)$

$h'_{\lambda'} \leftarrow h_{\lambda'} \displaystyle\prod_{m\in[D+1]} h_{m,\lambda'}^{\,\pi_m}$
$\times (D''-L-1)$

328

379

$h_{m,\lambda}$
$\times (D+2)\times(D'-L)$

$h'_{m',\lambda'} \leftarrow \displaystyle\prod_{m\in[D+1]} h_{m,\lambda'}^{\,\pi_{m,m'}}$
$\times (D+2)\times(D''-L-1)$

374

$\Pi_{H,m'} \leftarrow \displaystyle\prod_{m\in[D+1]} h_{m,L+1}^{\,\pi_{m,m'}}$
$\times (D+2)$

375

$f'_{m',0} \leftarrow \Pi_{F,m'}\, \Pi_{H,m'}^{\,I_{L+1}}$
$\times (D+2)$

324

373

$f_{m,0}$
$\times (D+2)$

$\Pi_{F,m'} \leftarrow \displaystyle\prod_{m\in[D+1]} f_{m,0}^{\,\pi_{m,m'}}$
$\times (D+2)$

325

376

$f_{m,n,(a)}$
$\times (D+2)\times(D+2)$

$f'_{m',n,(a)} \leftarrow \displaystyle\prod_{m\in[D+1]} f_{m,n,(a)}^{\,\pi_{m,m'}}$
$\times (D+2)\times(D+2)$

326

377

$f_{m,n,(b)}$
$\times (D+2)\times(D+2)$

$f'_{m',n,(b)} \leftarrow \displaystyle\prod_{m\in[D+1]} f_{m,n,(b)}^{\,\pi_{m,m'}}$
$\times (D+2)\times(D+2)$

371

$\pi_{m,m'}$
$\times (D+2)\times(D+2)$

370

CHILD
USER
SECRET
KEY
OUTPUT
UNIT

# Fig.15

CHILD USER SECRET KEY
GENERATION PROCESS

S740

S741
$$k_0' \leftarrow k_0 \, \Pi_{\mathrm{F}} \, \Pi_{\mathrm{H}}{}^{I_{L+1}}$$

S742
$$\lambda' \leftarrow L + 2$$

S743
$$h_{\lambda'}' \leftarrow h_{\lambda'}$$

S749
$$\lambda' \ : \ D'' \quad >$$
$\leq$

S744
$$m \leftarrow 0$$

S745
$$h_{\lambda'}' \leftarrow h_{\lambda'}' \cdot h_{m,\lambda'}{}^{\pi_m}$$

S746
$$m \leftarrow m + 1$$

S747
$$m \ : \ D + 1$$
$\leq$

S748  >
$$\lambda' \leftarrow \lambda' + 1$$

S750
$$m' \leftarrow 0$$

S751
$$\Pi_{\mathrm{F},m'} \leftarrow 1$$
$\leq$

S752
$$\Pi_{\mathrm{H},m'} \leftarrow 1$$

S753
$$\lambda' \leftarrow L + 2$$

S754
$$h_{m',\lambda'}' \leftarrow 1$$
$\leq$

S755
$$\lambda' \leftarrow \lambda' + 1$$

S756
$$\lambda' \ : \ D''$$
$>$

S757
$$n \leftarrow 0$$

S758
$$f_{m',n,(a)}' \leftarrow 1$$

S759
$$f_{m',n,(b)}' \leftarrow 1$$

S760
$$n \leftarrow n + 1$$

S761
$$n \ : \ D + 1$$
$\leq$   $>$

S762
$$m \leftarrow 0$$

S763
$$\pi_{m,m'} \xleftarrow{\mathrm{R}} \mathbb{Z}_p$$

S764
$$\Pi_{\mathrm{F},m'} \leftarrow \Pi_{\mathrm{F},m'} \cdot f_{m,0}{}^{\pi_{m,m'}}$$

S765
$$\Pi_{\mathrm{H},m'} \leftarrow \Pi_{\mathrm{H},m'} \cdot h_{m,L+1}{}^{\pi_{m,m'}}$$

S766
$$\lambda' \leftarrow L + 2$$

S767
$$h_{m',\lambda'}' \leftarrow h_{m',\lambda'}' \cdot h_{m,\lambda'}{}^{\pi_{m,m'}}$$

S769
$$\lambda' \ : \ D''$$
$\leq$   $>$

S768
$$\lambda' \leftarrow \lambda' + 1$$

S770
$$n \leftarrow 0$$

S771
$$f_{m',n,(a)}' \leftarrow f_{m',n,(a)}' \cdot f_{m,n,(a)}{}^{\pi_{m,m'}}$$

S772
$$f_{m',n,(b)}' \leftarrow f_{m',n,(b)}' \cdot f_{m,n,(b)}{}^{\pi_{m,m'}}$$

S773
$$n \leftarrow n + 1$$

S774  >
$$n \ : \ D + 1$$
$\leq$

S775
$$m \leftarrow m + 1$$

S776  >
$$m \ : \ D + 1$$
$\leq$

S777
$$f_{m',0}' \leftarrow \Pi_{\mathrm{F},m'} \, \Pi_{\mathrm{H},m'}{}^{I_{L+1}}$$

S778
$$m' \leftarrow m' + 1$$

S779  >
$$m' \ : \ D + 1$$
$\leq$

END

121

# Fig.16

400

| 411 | 412 | 413 |
|---|---|---|
| PUBLIC PARAMETER INPUT UNIT | AUTHORIZATION RANGE INPUT UNIT | EMBEDDED KEYWORD INPUT UNIT |

420 PUBLIC PARAMETER STORAGE UNIT

430 AUTHORIZATION RANGE STORAGE UNIT

441 $W'$ ×1

450 CIPHERTEXT GENERATION UNIT

414 CIPHERTEXT OUTPUT UNIT

# Fig.17

# Fig.18

```
     ┌──────────────────────┐
     │     CIPHERTEXT       │   S856                              S850
     │ GENERATION PROCESS   │    ┌────────────────────────────┐
     └──────────────────────┘    │ Π_{A,n} ← a_{n,0} a_{n,L'+1}^{W'} │
             │ S851              └────────────────────────────┘
     ┌───────────────┐            S857       │
     │  r ←^R ℤ_p    │           ┌────────────────────────────┐
     └───────────────┘           │ Π_{B,n} ← b_{n,0} b_{n,L'+1}^{W'} │
             │ S852              └────────────────────────────┘
     ┌───────────────┐            S858       │
     │  R ←^R 𝔾_3    │           ┌───────────────┐
     └───────────────┘           │  r_n ←^R ℤ_p  │
             │ S853              └───────────────┘
     ┌───────────────┐            S859       │
     │  c_0 ← g_1^r  │           ┌───────────────┐
     └───────────────┘           │    j ← 1      │
             │ S854              └───────────────┘
     ┌───────────────┐            S860       │          S861
     │ E ← R Ω^{-r}  │           ┌───────────┐ ∉  ┌────────────────────────────┐
     └───────────────┘           │   j : A   ├───→│ Π_{A,n} ← Π_{A,n} · a_{n,j}^{I'_j} │
             │ S855              └───────────┘    └────────────────────────────┘
     ┌───────────────┐            S863   │ ∈        S862       │
     │    n ← 0      ├──────┐  ┌────────────────────┐  ┌────────────────────────────┐
     └───────────────┘      │  │ c_{n,j,(a)} ← b_{n,j}^{r_n} │  │ Π_{B,n} ← Π_{B,n} · b_{n,j}^{I'_j} │
                            │  └────────────────────┘  └────────────────────────────┘
                            │   S864   │                S865       │
                            │  ┌────────────────────┐  ┌───────────────┐
                            │  │ c_{n,j,(b)} ← a_{n,j}^{r-r_n} ├→│  j ← j + 1    │
                            │  └────────────────────┘  └───────────────┘
                            │                     S866   │
                            │              ≤     ┌───────────────┐
                            │          ┌─────────┤    j : L'     │
                            │          │         └───────────────┘
                            │          │          S867   │ >
                            │          │         ┌────────────────────┐
                            │          │         │ c_{n,(a)} ← Π_{B,n}^{r_n} │
                            │          │         └────────────────────┘
  S870       ≤    S869      │ S868                        │
┌───────────────┐ ┌───────────────┐  ┌────────────────────┐
│  n : D + 1    │←│  n ← n + 1    │←─│ c_{n,(b)} ← Π_{A,n}^{r-r_n} │
└───────────────┘ └───────────────┘  └────────────────────┘
        │ >
   ┌─────────┐
   │   END   │
   └─────────┘
```

# Fig. 19

```
500                    521                 540                        511
 │    ┌───────────────┐   ┌───────────────┐        ┌───────────────┐
 └──→ │ QUERY INPUT   │──→│    QUERY      │        │  CIPHERTEXT   │←──
      │    UNIT       │   │   STORAGE     │        │  INPUT UNIT   │
      └───────────────┘   │    UNIT       │        └───────────────┘
                    522   └───────────────┘                │
      ┌───────────────┐          │ 550                     │ 530
      │   SEARCH      │   ┌───────────────┐        ┌───────────────┐
  ←───│   RESULT      │←──│   SEARCH      │←───────│  CIPHERTEXT   │
      │ OUTPUT UNIT   │   │    UNIT       │        │   STORAGE     │
      └───────────────┘   └───────────────┘        │    UNIT       │
                                                   └───────────────┘
```

# Fig.20

# Fig.21

COMPARISON ELEMENT GENERATION PROCESS

S880

S881 $e_0 \leftarrow e(c_0, k'_0)$

S882 $R' \leftarrow E \cdot e_0$

S883 $n \leftarrow 0$

S885 $\Pi_{B',n} \leftarrow c_{n,(b)}$

S884 $\Pi_{A',n} \leftarrow c_{n,(a)}$

S886 $i \leftarrow 1$

S887 $i : A$

S888 $\Pi_{A',n} \leftarrow \Pi_{A',n} \cdot c_{n,i,(a)}{}^{I_i}$

S889 $\Pi_{B',n} \leftarrow \Pi_{B',n} \cdot c_{n,i,(b)}{}^{I_i}$

S890 $i \leftarrow i + 1$

S891 $i : L$

S896 $n : D + 1$

END

S895 $n \leftarrow n + 1$

S894 $R' \leftarrow R' \cdot e_{A,n} \cdot e_{B,n}$

S893 $e_{B,n} \leftarrow e(\Pi_{B',n}, k'_{n,(b)})$

S892 $e_{A,n} \leftarrow e(\Pi_{A',n}, k'_{n,(a)})$

# Fig. 22

800
810
200
100

USER SECRET KEY GENERATION DEVICE

PUBLIC PARAMETER GENERATION DEVICE

820 KEYWORD STORAGE DEVICE

400 ENCRYPTION DEVICE

830

300a 300b 300c

500 SEARCH DEVICE

126

## Fig.23

300

| 320 | | 313 | | 312 |
|-----|---|-----|---|-----|

USER SECRET
KEY STORAGE
UNIT

USER SECRET
KEY INPUT
UNIT

USER SECRET
KEY REQUEST
OUTPUT UNIT

311

$$I_1 \atop {\times 1}$$

330

COMMON
PROCESSING
UNIT

350

QUERY
GENERATION
UNIT

343

QUERY OUTPUT
UNIT

342

$$W \atop {\times 1}$$

344

RESULT INPUT
UNIT

341

SEARCH
KEYWORD
INPUT UNIT

345

RESULT
OUTPUT UNIT

## Fig. 24

400

411

PUBLIC
PARAMETER
INPUT UNIT

413

EMBEDDED
KEYWORD
INPUT UNIT

420

PUBLIC
PARAMETER
STORAGE UNIT

450

CIPHERTEXT
GENERATION
UNIT

441

$$W' \atop {\times 1}$$

414

CIPHERTEXT
OUTPUT UNIT

# Fig.25

$$\Pi_{A,n} \leftarrow a_{n,0} \, a_{n,2}^{W'}$$
$\times (D+2)$

$$\Pi_{B,n} \leftarrow b_{n,0} \, b_{n,2}^{W'}$$
$\times (D+2)$

$$c_{n,(b)} \leftarrow \Pi_{A,n}^{r-r_n}$$
$\times (D+2)$

$$c_{n,(a)} \leftarrow \Pi_{B,n}^{r_n}$$
$\times (D+2)$

$$r_n$$
$\times (D+2)$

$$c_{n,1,(a)} \leftarrow b_{n,1}^{r_n}$$
$\times (D+2)$

$$c_{n,1,(b)} \leftarrow a_{n,1}^{r-r_n}$$
$\times (D+2)$

$$c_0 \leftarrow g_1^{r}$$
$\times 1$

$$E \leftarrow R \, \Omega^{-r}$$
$\times 1$

$$W'$$
$\times 1$

$$b_{n,l}$$
$\times (D+2) \times (D+1)$

$$a_{n,l}$$
$\times (D+2) \times (D+1)$

$$r$$
$\times 1$

$$g_1$$
$\times 1$

$$\Omega$$
$\times 1$

$$R$$
$\times 1$

CIPHERTEXT OUTPUT UNIT

# Fig.26

## INTERNATIONAL SEARCH REPORT

| | International application No. |
|---|---|
| | PCT/JP2010/050249 |

A. CLASSIFICATION OF SUBJECT MATTER
*G09C1/00*(2006.01)i, *G06F17/30*(2006.01)i, *G06F21/24*(2006.01)i

According to International Patent Classification (IPC) or to both national classification and IPC

B. FIELDS SEARCHED

Minimum documentation searched (classification system followed by classification symbols)
G09C1/00, G06F17/30, G06F21/24

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | J. Birkett, A. W. Dent, G. Neven and J. Schuldt, Efficient Chosen-Ciphertext Secure Identity-Based Encryption with Wildcards, [online], 2007.05.16, Cryptology ePrint Archive, Report 2006/377 [retrieved on 2010.02.18]. Retrieved from the Internet: <URL: http://eprint.iacr.org/2006/377> | 1-14 |
| A | M. Abdalla, D. Catalano, A. W. Dent, J. Malone-Lee, G. Neven and N. P. Smart, Identity-Based Encryption Gone Wild, [online], 2006.12.09, Cryptology ePrint Archive, Report 2006/304 [retrieved on 2010.02.18]. Retrieved from the Internet: <URL: http://eprint.iacr.org/2006/304> | 1-14 |

| ☒ Further documents are listed in the continuation of Box C. | ☐ See patent family annex. |
|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 February, 2010 (18.02.10) | 02 March, 2010 (02.03.10) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.

PCT/JP2010/050249

C (Continuation).    DOCUMENTS CONSIDERED TO BE RELEVANT

| Category* | Citation of document, with indication, where appropriate, of the relevant passages | Relevant to claim No. |
|---|---|---|
| A | M. Abdalla, M. Bellare, D. Catalano, E. Kiltz, T. Kohno, T. Lange, J. Malone-Lee, G. Neven, P. Paillier and H. Shi, Searchable Encryption Revisited: Consistency Properties, Relation to Anonymous IBE, and Extensions, [online], 2005.08.08, Cryptology ePrint Archive, Report 2005/254 [retrieved on 2010.02.18]. Retreived from the Internet: <URL: http://eprint.iacr.org/2005/254> | 1-14 |
| A | M. Hattori, T. Ito, N. Matsuda, T. Yoneda and K. Ohta, Public-key Encryption with Fuzzy Keyword Search, Proceedings of The 2009 Symposium on Cryptography and Information Security, 2009.01.20, 3C1-4 | 1-14 |
| A | WO 2008/099831 A1  (NEC Corp.), 21 August 2008 (21.08.2008), paragraphs [0019] to [0021] (Family: none) | 1-14 |
| A | JP 2007-52698 A  (KDDI Corp.), 01 March 2007 (01.03.2007), entire text; all drawings (Family: none) | 1-14 |
| T,A | M. Hattori, T. Mori, T. Ito, N. Matsuda, T. Yoneda and K. Ohta, Anonymous HIBE With Wildcards and Its Application to Secure Keyword Search for Group-Oriented Multi-User System, Proceedings of The 2010 Symposium on Cryptography and Information Security, 2010.01.19, 3A4-2 | 1-14 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4405829 A

**Non-patent literature cited in the description**

- **D. BONEH ; G. D. CRESCENZO ; R. OSTROVSKY ; G. PERSIANO.** Public Key Encryption with Keyword Search. *Eurocrypt 2004,* 2004, 506-522
- **Y. H. HWANG ; P. J. LEE.** Public Key Encryption with Conjunctive Keyword Search And Its Extension to a Multi-user System. *Pairing 2007,* 2007, 2-22
- **J. BIRKETT ; A. W. DENT ; G. NEVEN ; J. C. N. SCHULDT.** Efficient Chosen-Ciphertext Secure Identify-Based Encryption with Wildcards. *ACISP 2007, LNCS4586,* 2007, 274-292